(19) **Europäisches Patentamt / European Patent Office / Office européen des brevets**

(11) **EP 2 154 802 A1**

(12) # EUROPEAN PATENT APPLICATION
published in accordance with Art. 153(4) EPC

(43) Date of publication:
**17.02.2010 Bulletin 2010/07**

(51) Int Cl.:
**H04J 15/00** *(0000.00)*     **H04B 7/04** *(2006.01)*

(21) Application number: **08703071.4**

(86) International application number:
**PCT/JP2008/050207**

(22) Date of filing: **10.01.2008**

(87) International publication number:
**WO 2008/146494 (04.12.2008 Gazette 2008/49)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.05.2007   JP 2007142441**

(71) Applicant: **Mitsubishi Electric Corporation**
**Chiyoda-ku**
**Tokyo 100-8310 (JP)**

(72) Inventors:
• **HARA, Yoshitaka**
**Tokyo 100-8310 (JP)**

• **TAIRA, Akinori**
**Tokyo 100-8310 (JP)**
• **TAJIMA, Kenichi**
**Tokyo 100-8310 (JP)**
• **KIHIRA, Kazunari**
**Tokyo 100-8310 (JP)**
• **TAKANO, Michiaki**
**Tokyo 100-8310 (JP)**
• **ISHIOKA, Kazuaki**
**Tokyo 100-8310 (JP)**
• **NOUDA, Yasunori**
**Tokyo 100-8310 (JP)**

(74) Representative: **Pfenning, Meinig & Partner GbR**
**Patent- und Rechtsanwälte**
**Theresienhöhe 13**
**80339 München (DE)**

(54) **CALIBRATION METHOD, COMMUNICATION SYSTEM, FREQUENCY CONTROL METHOD, AND COMMUNICATION DEVICE**

(57)     A calibration method according to the present invention includes a step of first channel estimating for transmitting a pilot signal from a first antenna and receiving the pilot signal at a second antenna different from the first antenna to calculate a first channel estimation value; a step of second channel estimating for transmitting a plot signal from the second antenna and receiving the pilot signal at the first antenna to calculate a second channel estimation value; and a step of correction coefficient calculating for calculating, by using the first and second channel estimation values, a correction coefficient.

FIG.4

**Description**

TECHNICAL FIELD

The present invention relates to a digital processing for smoothly transmitting and receiving signals in wireless communications.

BACKGROUND ART

Demands for high-speed wireless communications are increasing, and transmission technologies for high-speed wireless communications are in need. Accordingly, in these days, a technology in which transmitters and receivers that can perform high-speed signal transmission by using a plurality of antennas has been widely studied. In future mobile communications, an environment where a base station performs simultaneous spatial multiplexing on a plurality of terminals by using a transmission beam may become available. Reduction in transmission power required for communications at a terminal can be achieved by performing appropriate transmission beamforming. Consequently, how to perform a highly accurate transmission beamforming is an important issue in the future.

The same frequency is alternately used in the uplink and the downlink in Time Division Duplex (TDD) system. Therefore, great hopes are placed on the transmission beamforming in TDD system where channel reciprocity can be used advantageously. In general, a transmitter requires channel information to appropriately control a transmission beam. If it is assumed that ideal channel reciprocity is obtained in the TDD system, a channel state from a transmitter to a receiver can be easily grasped at the transmitter. This can be done by transmitting a pilot signal to the transmitter from the receiver, and measuring the channel.

However, in real life, even if reciprocity is satisfied in actual channels from an antenna end of the transmitter to an antenna end of the receiver, due to the characteristics difference between analog devices in the transmitter and receiver circuits, complete reciprocity is not established in a channel measured in a digital domain (hereinafter, referred to as a measurement channel). Accordingly, even if a channel is measured with a wireless device in the digital domain, the analog characteristics difference between the transmitter and the receiver needs to be compensated, to make use of the reciprocity. Consequently, in general, calibration to maintain the reciprocity of the measurement channel needs to be performed.

For example, the following Non-Patent Document 1 discloses a technology related to such calibration. In the technology disclosed in the following Non-Patent Document 1, as shown in Fig. 59, a function (configuration) to switch pathways is provided in an analog domain, and a signal before transmitting from an antenna #1 is branched in the analog domain. The branched signal is then supplied to an analog circuit corresponding to another antenna #2, thereby measuring the analog characteristics. More specifically, as shown in the figure, the characteristics of a pathway A is measured, by transmitting the branched signal to the receiving side ($R_2$) of the antenna #2 from the transmitting side ($T_1$) of the antenna #1. The characteristics of a pathway B are measured, by transmitting the branched signal to the receiving side ($R_1$) of the antenna #1 from the transmitting side ($T_2$) of the antenna #2. Based on the characteristics (measured result), the analog characteristics difference between the antennas 1 and 2 is compensated. Although calibration may be performed on two antennas, in this case, calibration is performed by transmitting signals in the analog domain before the signals are transmitted from the antenna, not by the signals transmitted from the antenna.

The following Patent Document 1 discloses another conventional technology. In the technology disclosed in Patent Document 1, in a configuration shown in Fig. 60, signals are transmitted from signal transmitting units corresponding to an antenna #1 and an antenna #2, and received by a receiving unit with a different antenna #0. Then, a phase difference between a signal from the signal transmitting unit with the antenna #1 and a signal from the signal transmitting unit with the antenna #2 is measured. The phases at the signal transmitting units with the antennas #1 and #2 are adjusted, so that the phase difference is matched to a phase difference generated between a distance $d_1$ from the antenna #1 to the antenna #0, and a distance $d_2$ from the antenna #2 to the antenna #0. With this processing, the phases at the signal transmission are matched, by taking the analog characteristics of the antennas #1 and #2 into consideration. Similarly, signals could be transmitted from the antenna #1 and the antenna #0, and received by the antenna #2 and the transmitted phases of the antenna #1 and the antenna #0 can be matched. The phases can similarly be adjusted also for the received analog characteristics.

However, in the above technology, the phase difference between the antennas needs to be measured by the third antenna, thereby requiring at least three antennas. Data on the phase difference generated by the distances $d_1$ and $d_2$ between the antennas also needs to be obtained in advance. In the above technology, the distances $d_1$ and $d_2$ between the antennas are directly converted to a phase difference. However, whether the distance can be directly converted into the phase difference actually depends on the surrounding environment. In general, the distance can be directly converted into a phase difference in a free space channel. However, when the surrounding propagation environment of a wireless terminal changes, various reflections can occur due to the influence of multipath channels from the surroundings. In such an environment, the phase difference between two locations with a distance depends on the surrounding environment, and it is considered difficult to easily obtain the phase difference just from the distance.

The following Non-Patent Document 2 discloses another conventional technology different from the above. More specifically, the section 20.3.11.1 in the following Non-Patent Document 2 discloses a method, in which a wireless device A having a plurality of antennas and a wireless device B having a plurality of antennas perform calibration in a Multi Input Multi Output (MIMO) channel. When performing the calibration, the wireless device A transmits a pilot signal, and the wireless device B measures the MIMO channel and notifies the wireless device A of the measured information. The wireless device B also transmits a pilot signal, and the wireless device A measures the MIMO channel. By using the MIMO channel information notified from the wireless device B and the measured MIMO channel information, the wireless device A performs setting so that the two pieces of MIMO channel information are in complex multiple relationships (however, the specific setting method is not disclosed in Non-Patent Document 2).

Conventionally, in general wireless communications, an operation in which a transmitting side adjusts the absolute phase of a receiver is not performed during communications. In other words, if a transmitter transmits an unmodulated signal (carrier), the signal reaches a receiver via the wireless channel; however, an operation in which the transmitter controls the phase of the carrier (hereinafter, referred to as a carrier phase) at the receiver, so as to be a specific value, is conventionally not performed. The reason being that, even if such control is not performed, if the receiver performs channel estimation by using a pilot signal transmitted from the transmitter, the signal can be received by using the phase of the channel estimation as a reference phase. Accordingly, the transmitter need not control the carrier phase of the transmitted carrier. Although the transmitted signal reaches the receiver via the wireless channel, because the wireless channel tends to fluctuate, it has been considered that various control costs are required to fix and control the carrier phase. Consequently, in the conventional wireless communications, if the carrier phase at the receiver is rotated by the channel fluctuation, the reference phase is generally adjusted by compensating the rotated phase at the receiver using the channel estimation. Accordingly, the transmitter does not control to adjust the carrier phase so as to fix the carrier phase at the receiver.

In addition, in the conventional wireless communications, when two transmitters A and B simultaneously transmit signals a and b to one receiver, the relative carrier phase of the signals a and b at the receiver was not an issue. The reason being that, the signals a and b can be transmitted and received without any problem when the receiver performs channel estimation for each signal and receives the signal while identifying the carrier phase of the individual signal.

[Patent Document 1] Japanese Patent Application Laid-open No. 2006-279668
[Non-Patent Document 1] K. Nishimori, K. Cho, Y. Takatori, T. Hori "A novel configuration for realizing automatic calibration of adaptive array using dispersed SPDT switches for TDD systems", IEICE Trans. on Commun., Vol.E84-B, No.9, pp.2516-2522, Sept. 2001.
[Non-Patent Document 2] IEEE P802.11n/D2.00, "Draft standard for information technology telecommunications and information exchange between systems-local and metropolitan area networks-specific requirements-Part 11: Wireless LAN medium access control (MAC) and physical layer (PHY) specifications", Feb. 2007.

DISCLOSURE OF INVENTION

PROBLEM TO BE SOLVED BY THE INVENTION

However, in the conventional technologies, there are following problems that need to be solved. First, in the technology disclosed in Non-Patent Document 1, a switching function needs to be provided in the analog domain, which leads to increase in the cost. In particular, it is important to reduce cost, if a calibration function is to be provided in a terminal and the like. Accordingly, a simpler (low-cost configuration) and highly efficient calibration method is required.

To achieve the technology disclosed in Patent Document 1, at least three or more antennas are required. Accordingly, this technology cannot be applied to a terminal having only two antennas. In addition, information about distance between the antennas needs to be obtained in advance, thereby requiring an operation to store different data in a memory and the like, of each device. Because whether the distance between the antennas can be directly converted into a phase difference depends on the surrounding environment, there is a problem that calibration accuracy may not be guaranteed particularly in a multipath environment.

In addition, in the technology disclosed in Patent Document 1, calibration signals (pilot signals) need to be transmitted twice, to match the phases transmitted from all the antennas. To match the phases received by all the antennas, calibration signals need to be transmitted two more times. In the technology disclosed in Non-Patent Document 1, calibration is performed between the adjacent antennas. However, an increase in the number of antennas leads to a problem that the transmission and reception of signals need to be repeated many times for calibration. In this manner, in the conventional technologies, calibration signals need to be transmitted in a large number. Accordingly, a technology that allows to perform calibration with less number of signals has been desired.

In the technology disclosed in Non-Patent Document 2, the signal required for calibration to maintain the reciprocity of the MIMO channel between the transmitter and the receiver having the plurality of antennas is disclosed. However, a large amount of control information is required to feedback the MIMO channel information. Because the channel information is expressed by complex numbers, the total amount of control information is very large. For example, in a MIMO system including a transmitter with N antennas and a receiver with M antennas, $N \times M$ pieces of complex channel information need to be notified. Accordingly, to perform calibration between the transmitter and the receiver in the MIMO channel, a method that can perform calibration with a small amount of feedback information has been desired.

Conventionally, the transmitter (communication device at the transmitting side) did not control the carrier phase at the receiver (communication device at the receiving side). Accordingly, in a high-speed mobile environment, a process to follow the high-speed phase variation is required at the receiving side. However, if the transmitter can control the carrier phase at the receiver in advance, the phase variation at the receiver can be reduced. Accordingly, the receiver can receive a signal easier than the conventional one. Consequently, a configuration in which the transmitter can control the carrier phase at the receiver is also desired.

Conventionally, the relative carrier phases of a plurality of signals transmitted from a plurality of transmitters have not been controlled at a receiver. However, for example, as can be seen in a relay transmission, when a plurality of relay transmitters transmits the same signals to one receiver, the receiver can receive the signals with high reception power, if the signals are transmitted so that the received phases become the same. To achieve such a new wireless transmission, a method to control the relative carrier phases of the plurality of signals at the receiver is required, but is not available.

When a plurality of transmitters simultaneously transmits signals while being set so that the carrier phases at the receiver become the same, it is important that the transmitters perform appropriate signal transmission and transmission power control, but such technology is not available.

The present invention has been made in view of the above circumstances, and it is an object thereof to prevent the device configuration from becoming too complicated, and to obtain a calibration method that can achieve simple and highly efficient calibration.

Another object thereof is to obtain a calibration method that can achieve highly efficient calibration, with a small number of antennas and in a multipath environment.

Another object thereof is to obtain a calibration method that can match the transmitted phases and the received phases of the signals transmitted from a plurality of antennas, with a small number of procedures, regardless of the number of antennas.

Another object thereof is to obtain a calibration method that, when calibration is performed between the transmitter and the receiver in the MIMO channel, can perform calibration with a small amount of feedback information.

Another object thereof is to obtain a communication system in which the transmitter can control the carrier phase at the receiver.

Another object thereof is to obtain a communication system in which, when a plurality of transmitters simultaneously transmits signals while being set so that the carrier phases at the receiver become the same, the transmitters perform appropriate carrier phase setting and transmission power control.

MEANS FOR SOLVING PROBLEM

To solve the above problems and to achieve the above objects, according to an aspect of the present invention there is provided a calibration method used with a communication device that includes a plurality of antennas carrying out communications in a TDD system to perform calibration on the antennas. The calibration method includes a step of first channel estimating for transmitting a pilot signal from a first antenna that is any one of the plurality of antennas and receiving the pilot signal at a second antenna different from the first antenna to calculate a first channel estimation value; a step of second channel estimating for transmitting a plot signal from the second antenna and receiving the pilot signal at the first antenna to calculate a second channel estimation value; and a step of correction coefficient calculating for calculating, by using the first and second channel estimation values, a correction coefficient to adjust a signal transmitted and received between the first antenna and the second antenna.

EFFECT OF THE INVENTION

With the invention, on performing a self-calibration in which calibration is performed without communicating with another device, the calibration can be executed by simple digital processing without requiring an exclusive addition circuit. Accordingly, the wireless communication device can be significantly simplified.

BRIEF DESCRIPTION OF DRAWINGS

[Fig. 1] Fig. 1 is a schematic of a transmission model between an antenna of a base station and an antenna m of a terminal in a communication system to which the TDD system is applied.

[Fig. 2] Fig. 2 is a configuration example of a terminal in which calibration is performed on a plurality of antennas.

[Fig. 3-1] Fig. 3-1 is a schematic of a signal transmission model, when calibration is performed on the plurality of antennas of the terminal.

[Fig. 3-2] Fig. 3-2 is a schematic of a signal transmission model, when calibration is performed on the plurality of antennas of the terminal.

[Fig. 4] Fig. 4 is a flowchart of an example of a calibration procedure according to a first embodiment.

[Fig. 5] Fig. 5 is a schematic of a signal transmission model, when calibration is performed on the plurality of antennas of the terminal.

[Fig. 6] Fig. 6 is a configuration example of a terminal and a base station according to a fourth embodiment.

[Fig. 7] Fig. 7 is a flowchart of an example of a calibration procedure according to the fourth embodiment.

[Fig. 8] Fig. 8 is a configuration example of control information bits.

[Fig. 9] Fig. 9 is a configuration example of control information bits.

[Fig. 10] Fig. 10 is a flowchart of an example of a calibration procedure according to a fifth embodiment.

[Fig. 11-1] Fig. 11-1 is a schematic of an example of a notification format of phase information.

[Fig. 11-2] Fig. 11-2 is a schematic of a control signal by which phase information is notified to the base station from the terminal.

[Fig. 11-3] Fig. 11-3 is a schematic of a control signal by which phase and amplitude information is notified to the terminal from the base station.

[Fig. 12-1] Fig. 12-1 is a schematic of an example of a transmission format of a pilot signal.

[Fig. 12-2] Fig. 12-2 is a schematic of an example of a transmission format of a pilot signal.

[Fig. 12-3] Fig. 12-3 is a schematic of an example of a transmission format of a pilot signal.

[Fig. 12-4] Fig. 12-4 is a schematic of an example of a transmission format of a pilot signal.

[Fig. 13] Fig. 13 is a schematic of an example of a calibration procedure.

[Fig. 14] Fig. 14 is a schematic of an example of a calibration procedure.

[Fig. 15] Fig. 15 is a schematic of an example of a calibration procedure.

[Fig. 16] Fig. 16 is a schematic of an example of a calibration procedure.

[Fig. 17] Fig. 17 is a schematic of an example of an information format used to notify a usable sub-band.

[Fig. 18-1] Fig. 18-1 is a schematic of an example of an information format used to notify the number of transmitted pilot signals.

[Fig. 18-2] Fig. 18-2 is a schematic of a control signal by which an ID of a sub-band to which antennas transmit pilot signals is notified to the base station from the terminal.

[Fig. 18-3] Fig. 18-3 is a schematic of an example of a measurement procedure of a channel in an eighth C embodiment.

[Fig. 18-4] Fig. 18-4 is a schematic of an example of an Orthogonal Frequency Division Multiple Access (OFDMA) frequency used for calibration in the eighth C embodiment.

[Fig. 18-5] Fig. 18-5 is a schematic of an example of a calibration operation performed in an eighth D embodiment.

[Fig. 18-6] Fig. 18-6 is a schematic of performance evaluation results of a wireless device to which calibration according to the eighth D embodiment is applied.

[Fig. 18-7] Fig. 18-7 is a schematic of an example of a notification format by which an antenna number that transmits a pilot signal is notified to the base station from the terminal.

[Fig. 18-8] Fig. 18-8 is a schematic of an example of a calibration control according an eighth E embodiment.

[Fig. 18-9] Fig. 18-9 is a schematic of an example of a CAL support request signal transmitted from a base station using the calibration control in the eighth E embodiment.

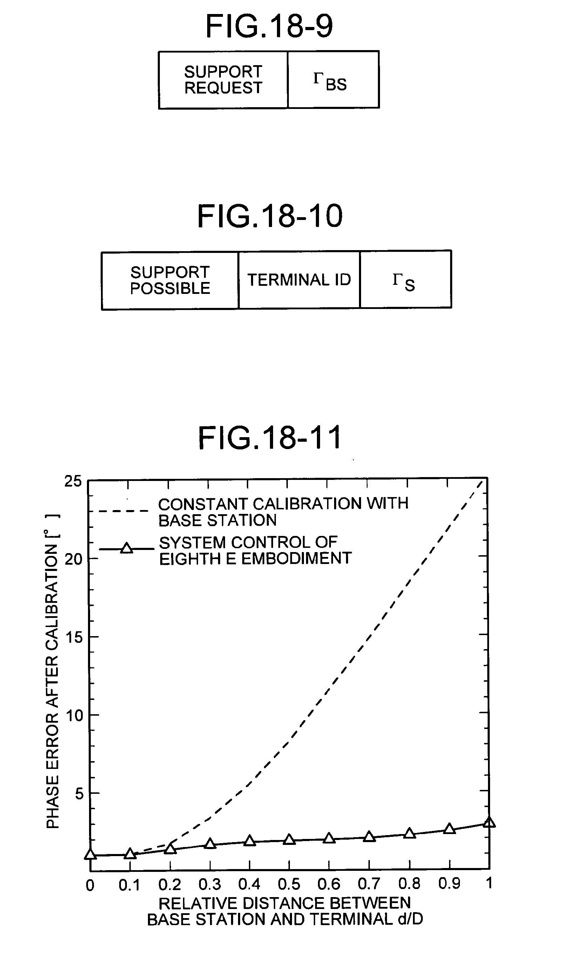

[Fig. 18-10] Fig. 18-10 is a schematic of an example of a CAL supportable signal transmitted from a wireless device that has received the CAL support request signal.

[Fig. 18-11] Fig. 18-11 is a schematic of performance evaluation results of a terminal to which the calibration according to the eighth E embodiment is applied.

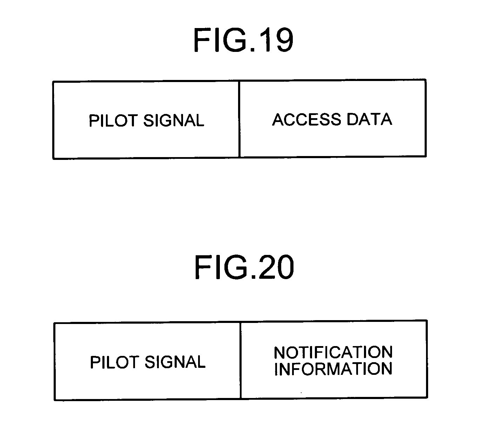

[Fig. 19] Fig. 19 is a schematic of an example of a signal format used to access a random access channel.

[Fig. 20] Fig. 20 is a schematic of an example of a format of a downlink notification signal.

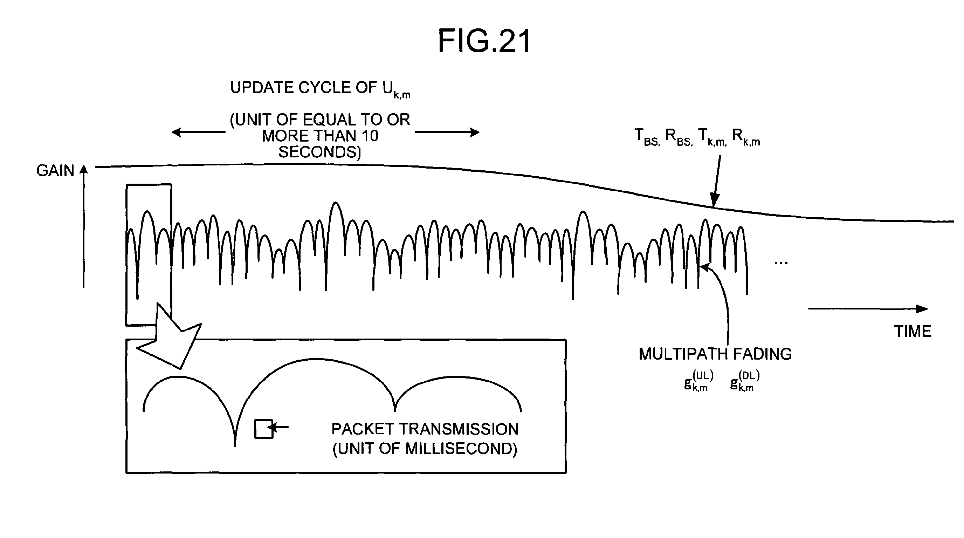

[Fig. 21] Fig. 21 is a schematic of relationships among a time unit for packet transmission, a time unit for channel variation, and a time unit for analog device characteristics variation.

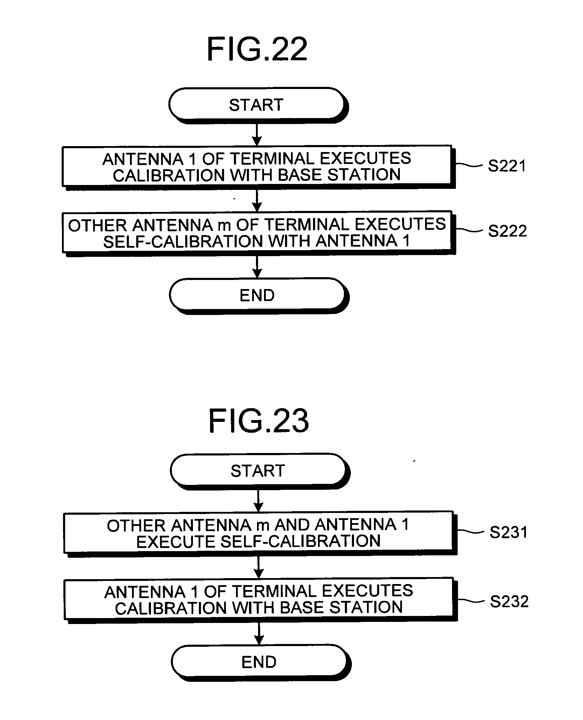

[Fig. 22] Fig. 22 is a flowchart of a calibration procedure according to an eleventh embodiment.

[Fig. 23] Fig. 23 is a flowchart of a calibration procedure according to a twelfth embodiment.

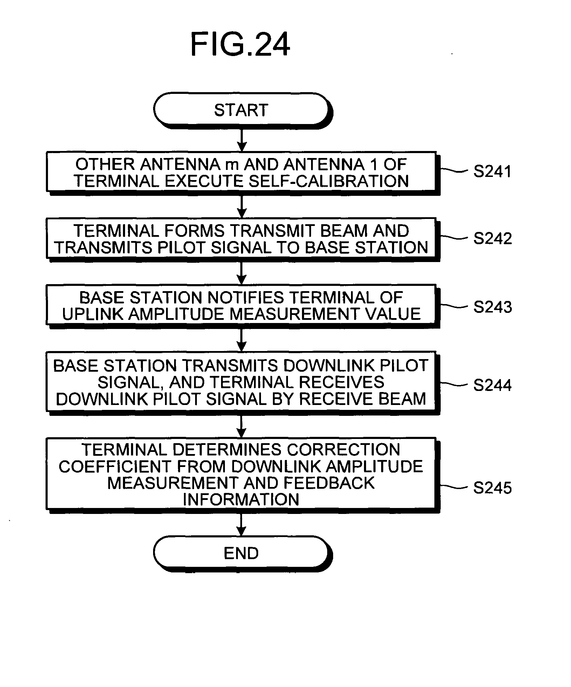

[Fig. 24] Fig. 24 is a flowchart of a calibration procedure according to a thirteenth embodiment.

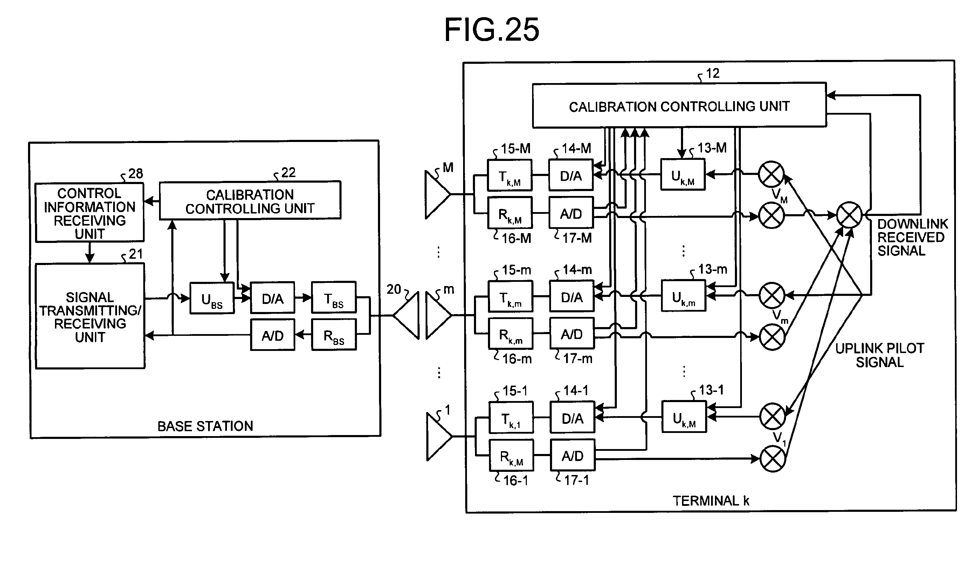

[Fig. 25] Fig. 25 is a configuration example of a terminal and a base station according to the thirteenth embodiment.

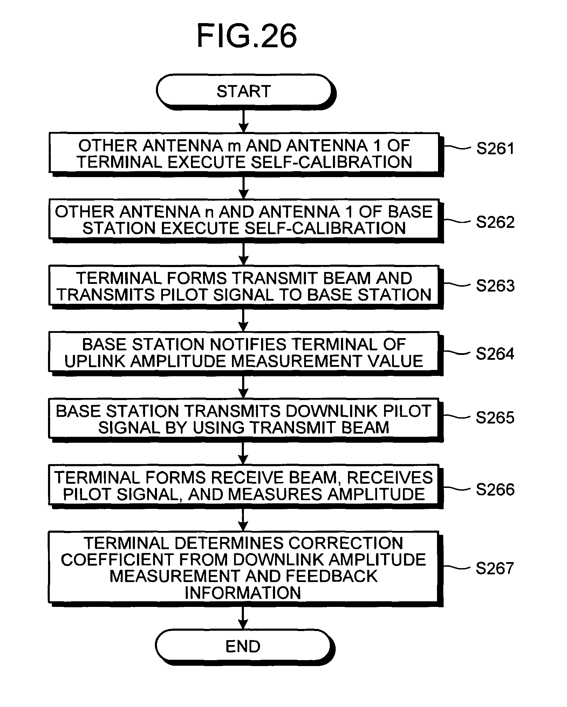

[Fig. 26] Fig. 26 is a flowchart of a calibration procedure according to a fourteenth embodiment.

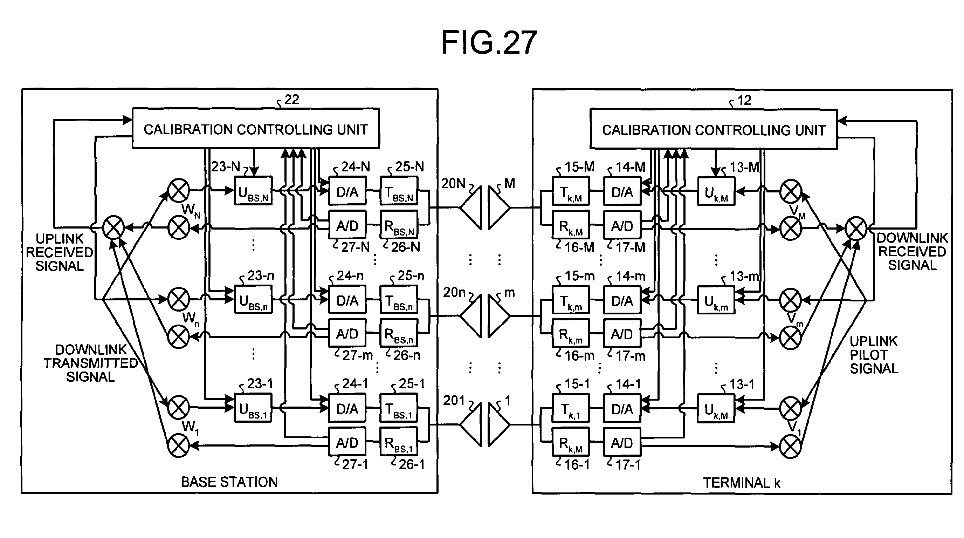

[Fig. 27] Fig. 27 is a configuration example of a terminal and a base station according to the fourteenth embodiment.

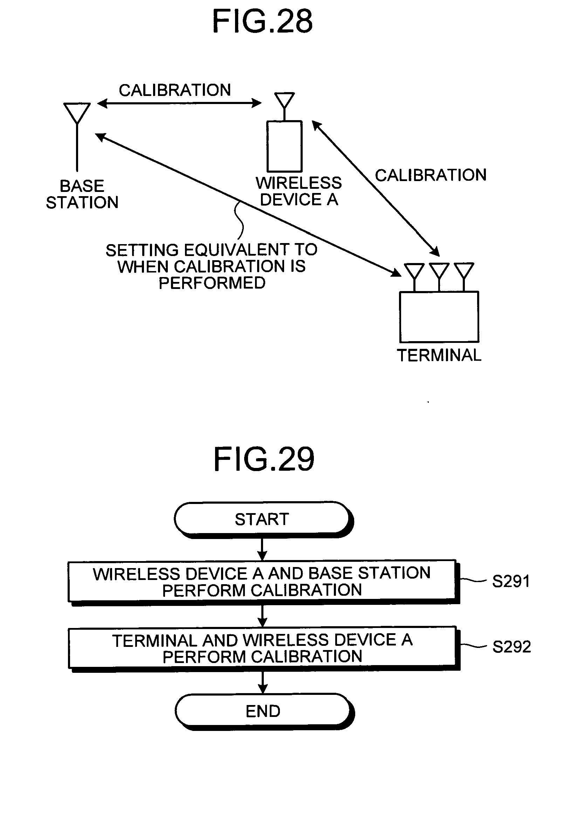

[Fig. 28] Fig. 28 is an outline schematic of calibration performed in a fifteenth embodiment.

[Fig. 29] Fig. 29 is a flowchart of a calibration procedure according to the fifteenth embodiment.

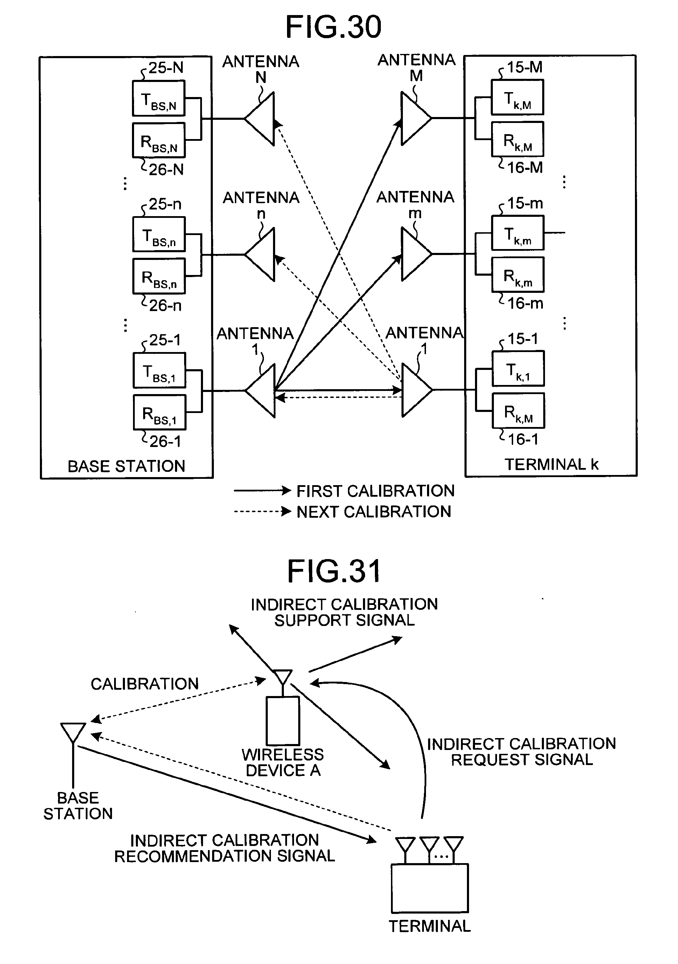

[Fig. 30] Fig. 30 is a schematic of pathways between antennas of a base station and a terminal in a calibration operation performed in a sixteenth embodiment.

[Fig. 31] Fig. 31 is an outline schematic of a calibration operation performed in an eighteenth embodiment.

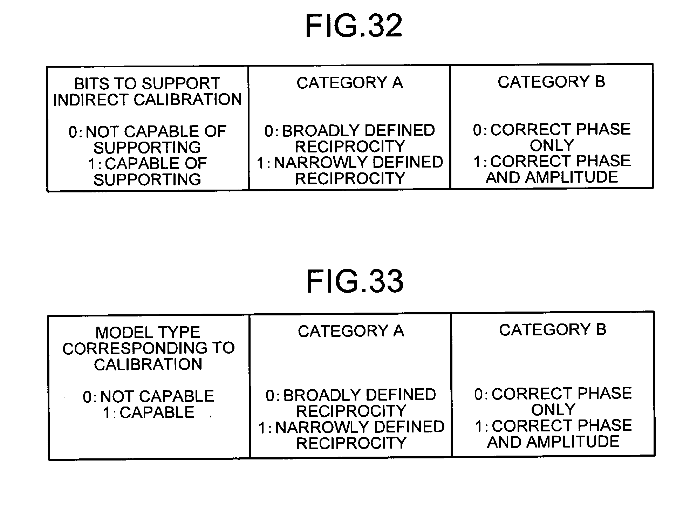

[Fig. 32] Fig. 32 is a schematic of an example of an "indirect calibration support signal".

[Fig. 33] Fig. 33 is a schematic of an example of a format of a calibration signal notified to a terminal from a base station.

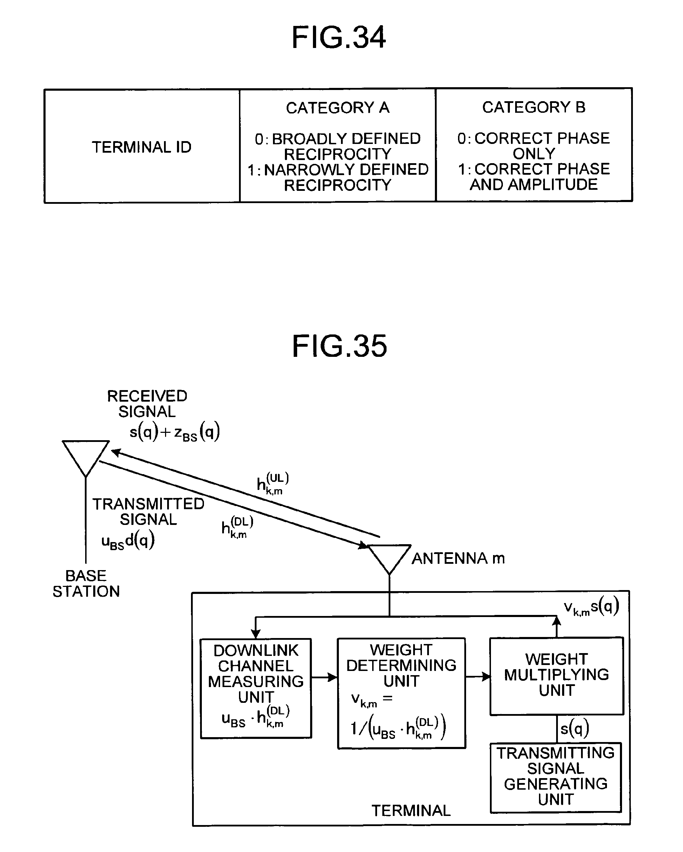

[Fig. 34] Fig. 34 is a schematic of an example of a format of an indirect calibration request signal transmitted to a wireless device A from a terminal.

[Fig. 35] Fig. 35 is a configuration example of a terminal that performs calibration according to a nineteenth embodiment.

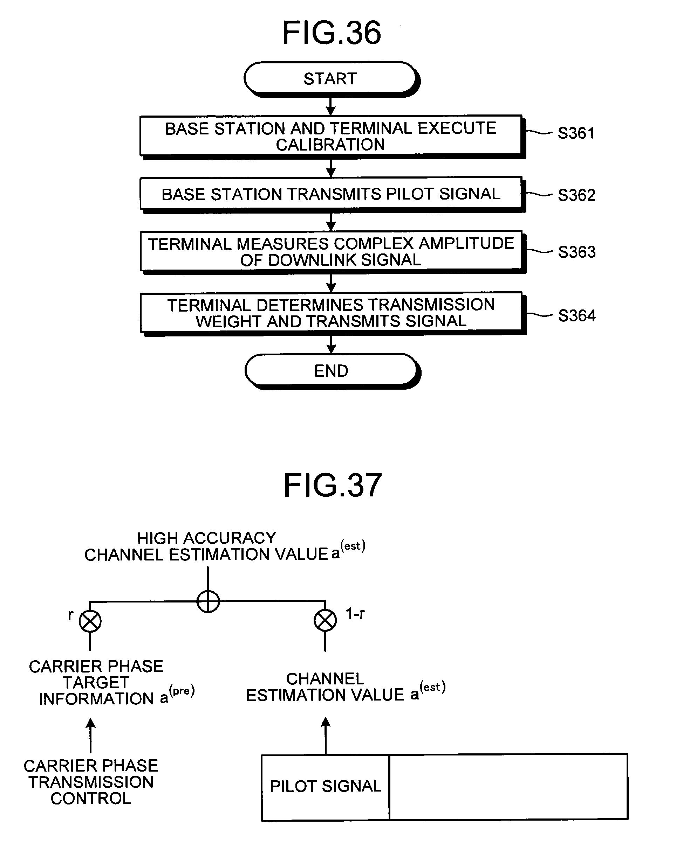

[Fig. 36] Fig. 36 is a flowchart of a phase transfer control according to the nineteenth embodiment.

[Fig. 37] Fig. 37 is a schematic of a process for improving channel estimation accuracy.

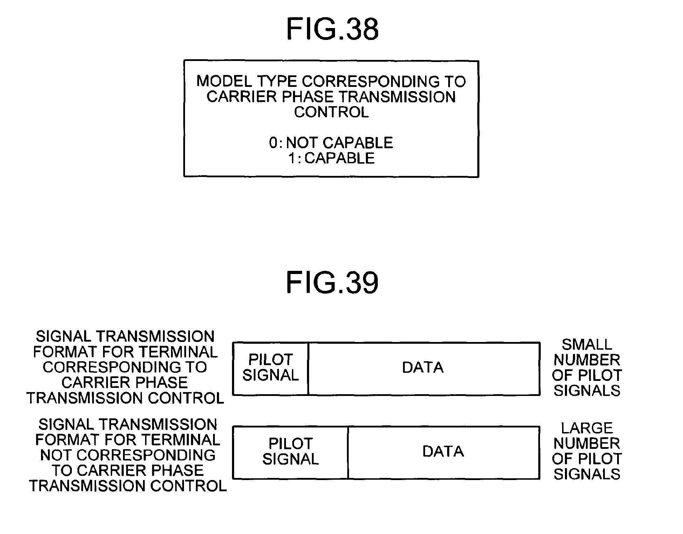

[Fig. 38] Fig. 38 is a schematic of an example of a signal format used to notify whether a model type corresponds to a carrier phase transmission control.

[Fig. 39] Fig. 39 is a schematic of an example of a signal transmission format used in the nineteenth embodiment.

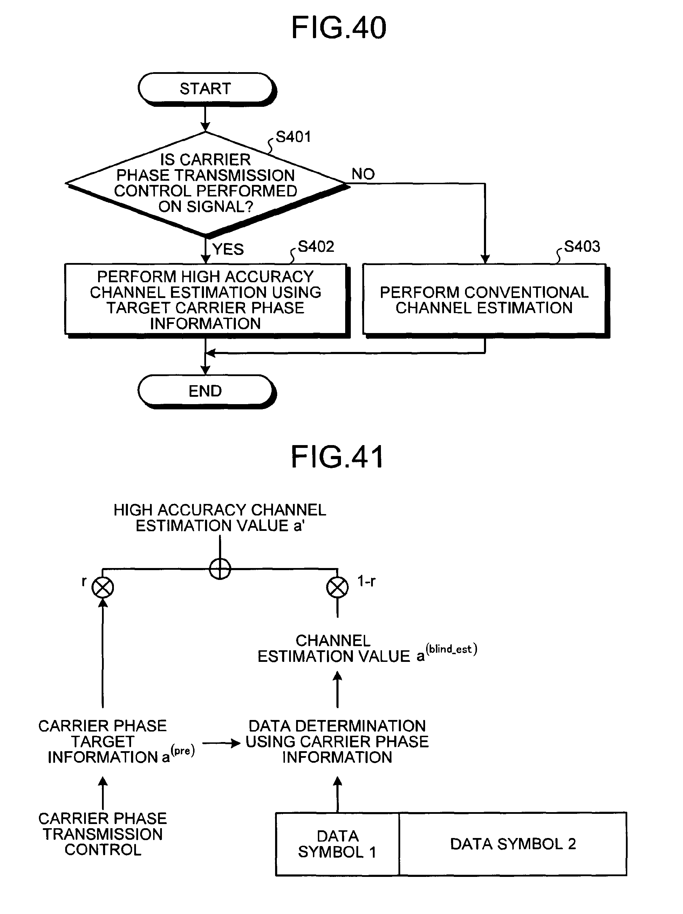

[Fig. 40] Fig. 40 is a flowchart of an example of a determination procedure of a channel estimation operation performed in the base station.

[Fig. 41] Fig. 41 is a schematic of a format of an uplink signal.

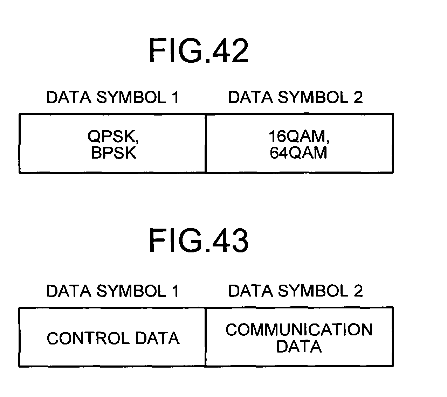

[Fig. 42] Fig. 42 is a schematic of an example of a signal format used in the nineteenth embodiment.

[Fig. 43] Fig. 43 is a schematic of an example of a signal format used in the nineteenth embodiment.

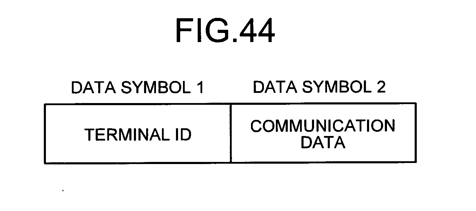

[Fig. 44] Fig. 44 is a schematic of an example of a signal format used in the nineteenth embodiment.

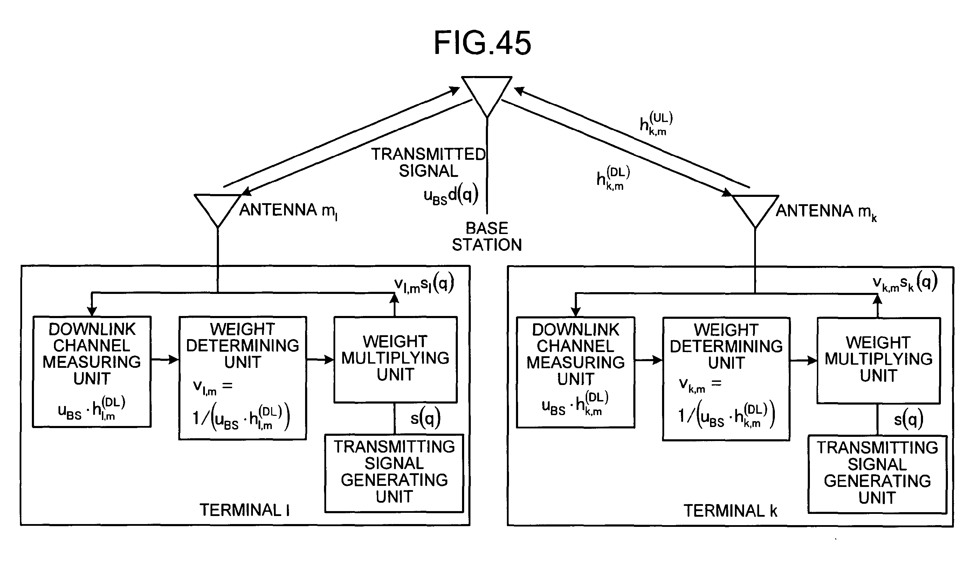

[Fig. 45] Fig. 45 is a configuration example of terminals that perform calibration according to the nineteenth embodiment.

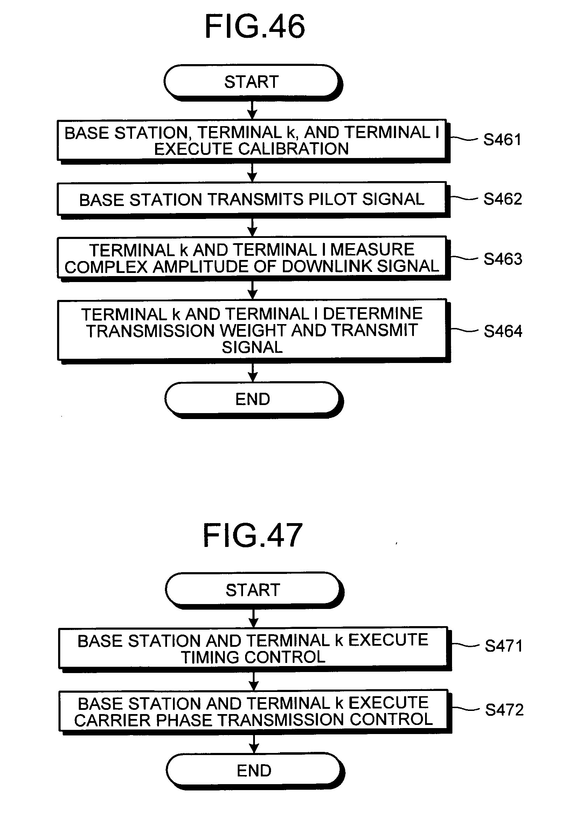

[Fig. 46] Fig. 46 is a flowchart of a calibration procedure according to the nineteenth embodiment.

[Fig. 47] Fig. 47 is a flowchart of a timing control procedure and an execution procedure of a carrier phase transmission control.

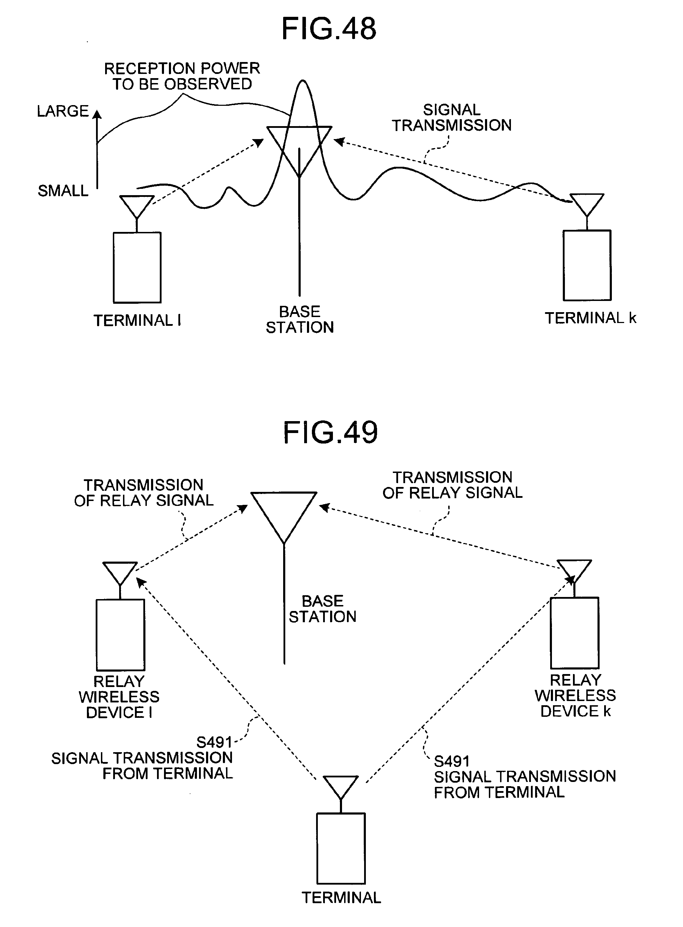

[Fig. 48] Fig. 48 is a schematic of a state when a plurality of terminals simultaneously transmits signals to a base station.

[Fig. 49] Fig. 49 is a schematic for explaining a control operation according to a twenty-second embodiment.

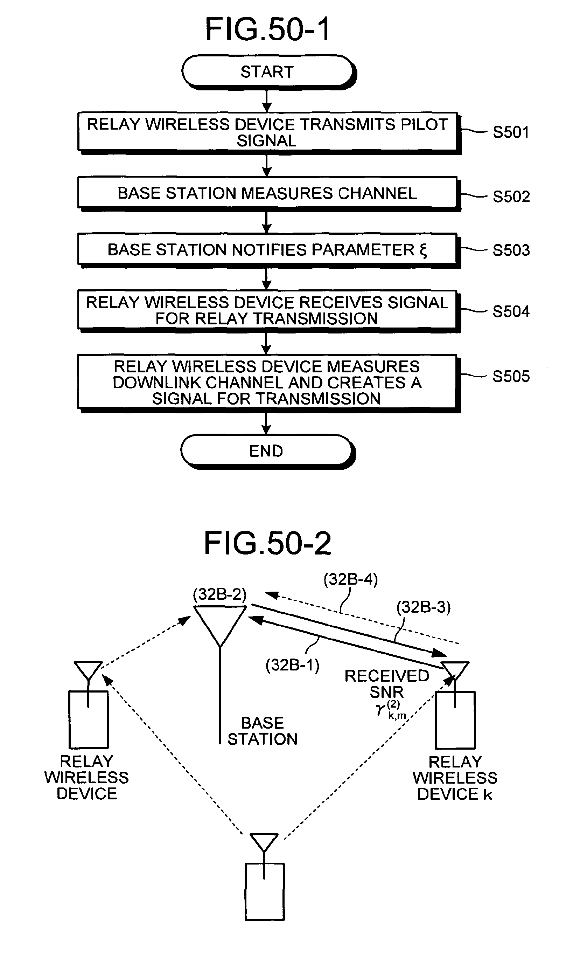

[Fig. 50-1] Fig. 50-1 is a flowchart of an example of a control operation according to a twenty-third A embodiment.

[Fig. 50-2] Fig. 50-2 is a schematic of an example of a transmission control procedure according to a twenty-third B embodiment.

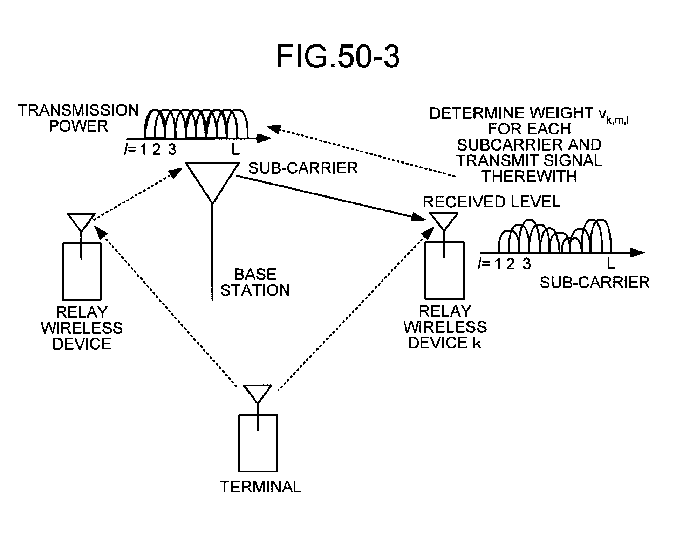

[Fig. 50-3] Fig. 50-3 is an example of a cooperative transmit beam control procedure according to a twenty-third C embodiment.

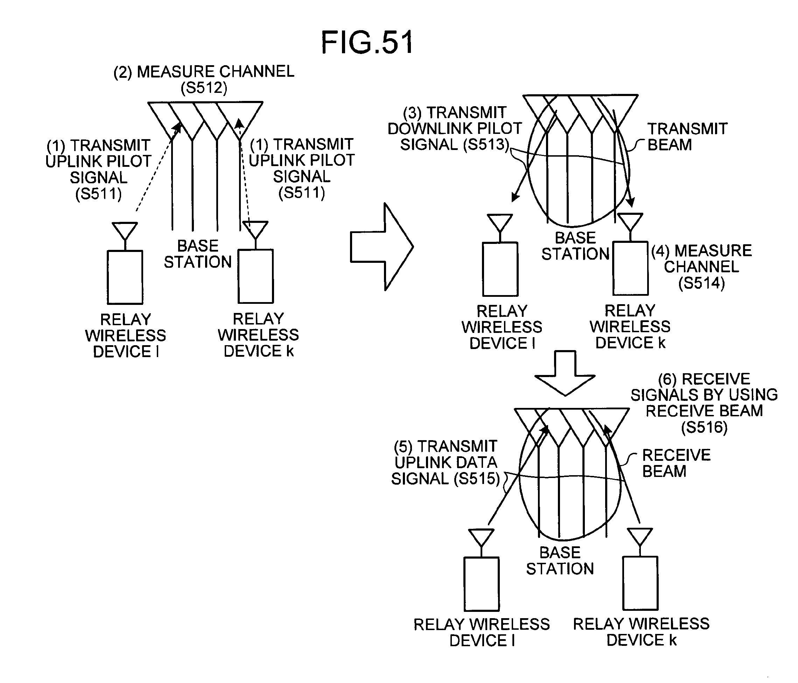

[Fig. 51] Fig. 51 is a schematic for explaining a control operation according to a twenty-fourth embodiment.

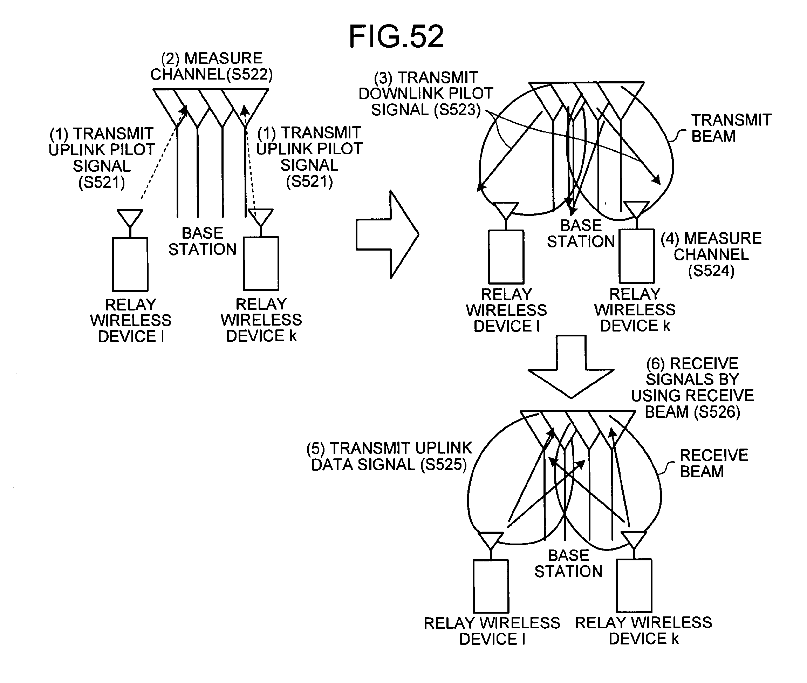

[Fig. 52] Fig. 52 is a schematic for explaining a control operation according to a twenty-fifth embodiment.

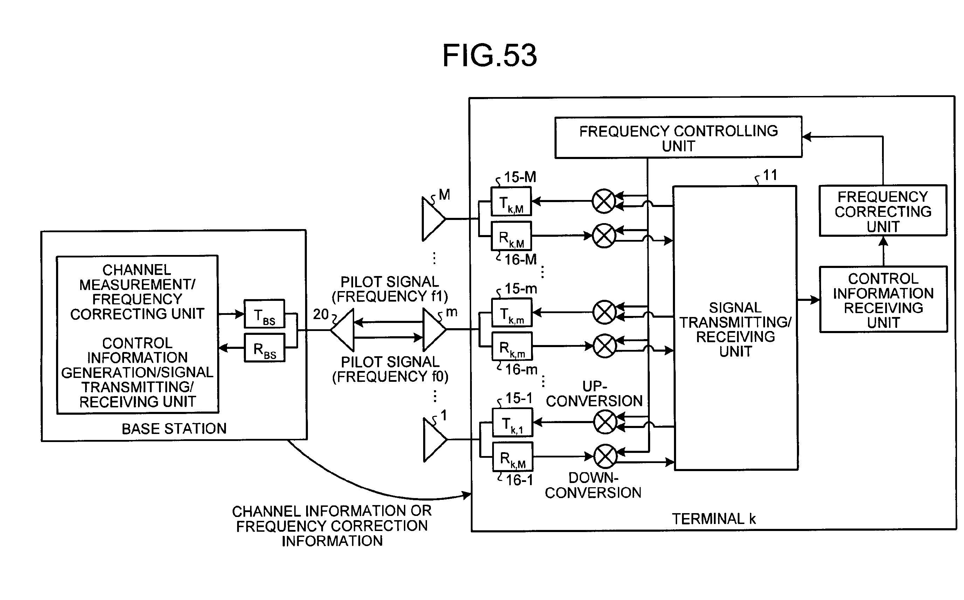

[Fig. 53] Fig. 53 is a configuration example of a terminal and a base station according to a twenty-seventh embodiment.

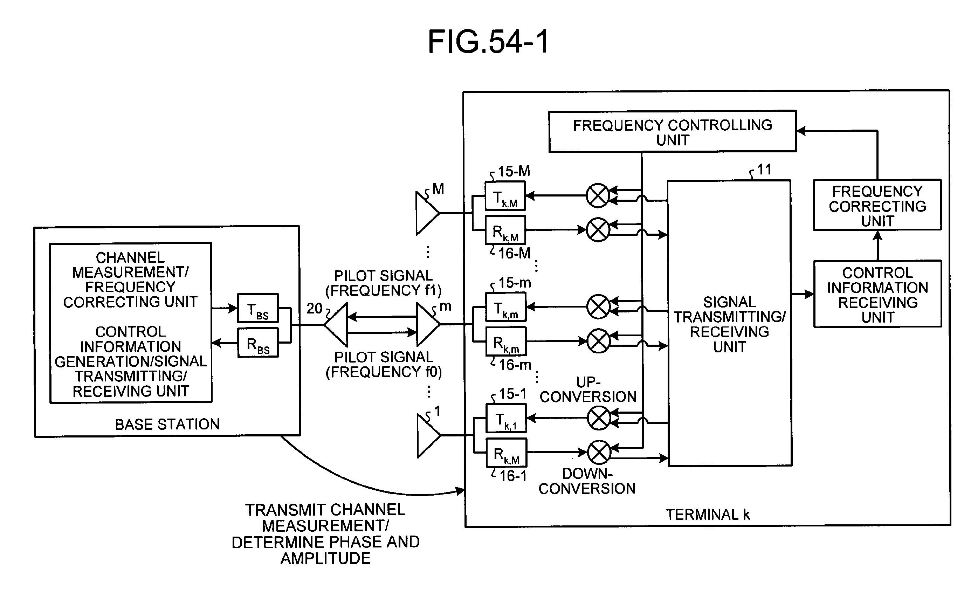

[Fig. 54-1] Fig. 54-1 is a configuration example of the terminal and the base station according to the twenty-seventh embodiment.

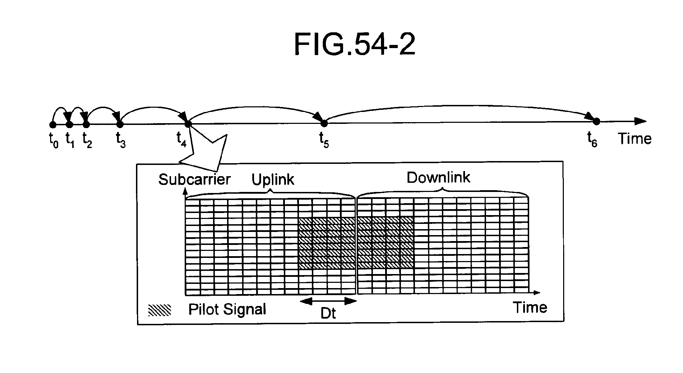

[Fig. 54-2] Fig. 54-2 is a configuration example of an example of a transmission format of a pilot signal used in a twenty-ninth A embodiment.

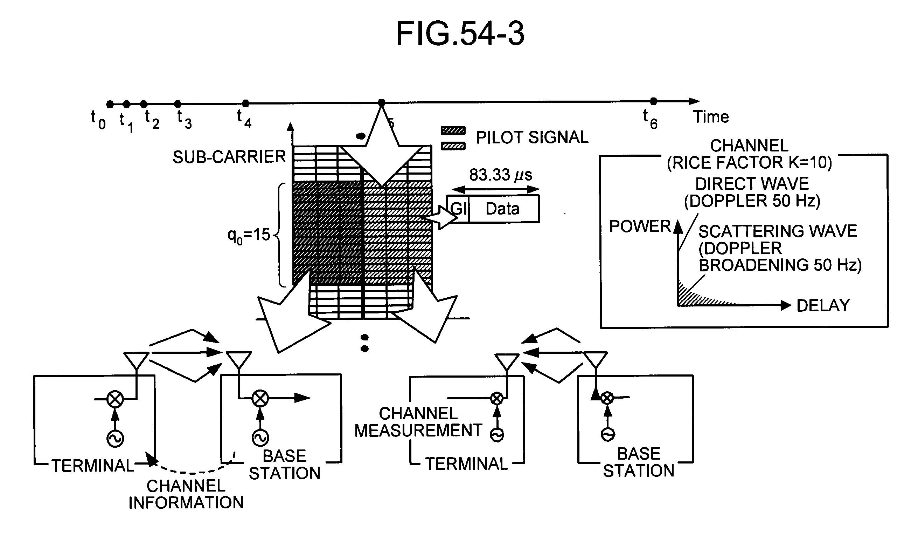

[Fig. 54-3] Fig. 54-3 is a schematic of an evaluation environment used to evaluate performance of a system to which a frequency correction method according to the twenty-ninth A embodiment is applied.

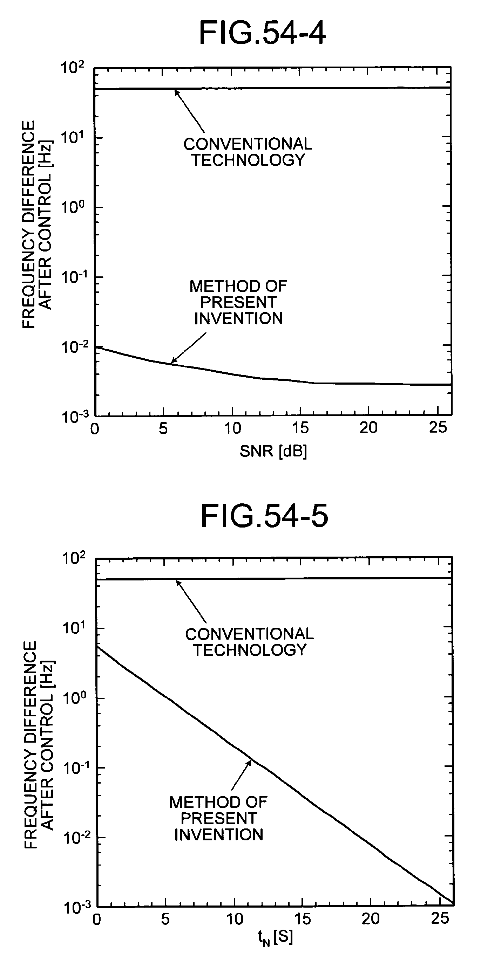

[Fig. 54-4] Fig. 54-4 is a schematic of a relationship between a carrier frequency error and a signal to noise ratio (SNR), when carrier frequency control is performed by a method according to the twenty-ninth A embodiment and by the conventional method.

[Fig. 54-5] Fig. 54-5 is a schematic of a relationship between the carrier frequency error and a control time, when the method according to the twenty-ninth A embodiment is applied.

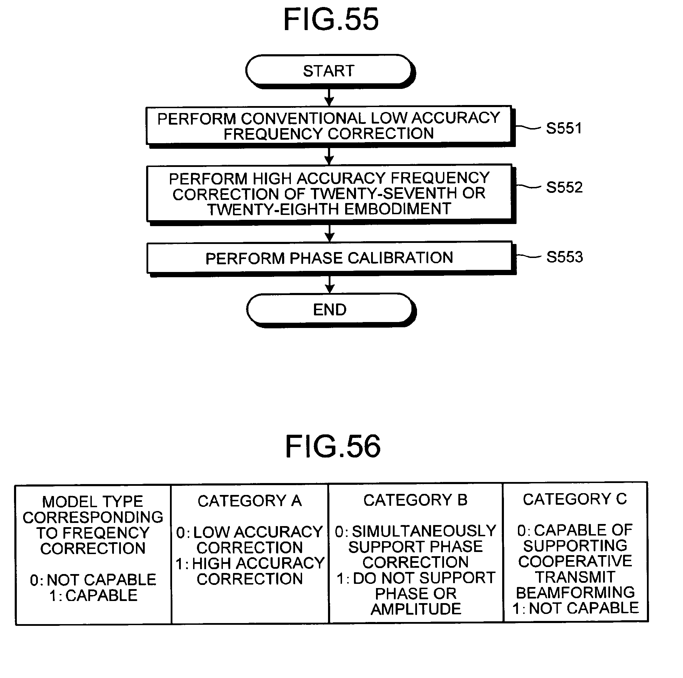

[Fig. 55] Fig. 55 is a flowchart of an example of a frequency control procedure.

[Fig. 56] Fig. 56 is a schematic of an information format used to notify various types of information in a thirtieth embodiment.

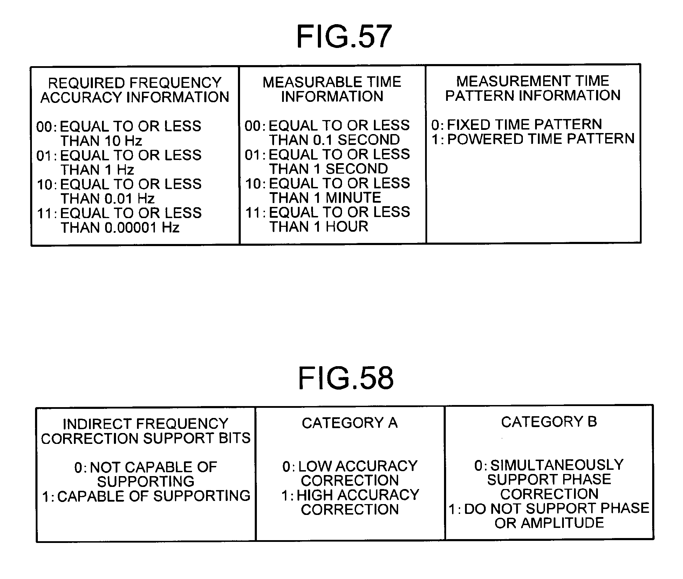

[Fig. 57] Fig. 57 is a schematic of an information format used to notify various types of information in the thirtieth embodiment.

[Fig. 58] Fig. 58 is a schematic of an information format used to notify various types of information in the thirtieth embodiment.

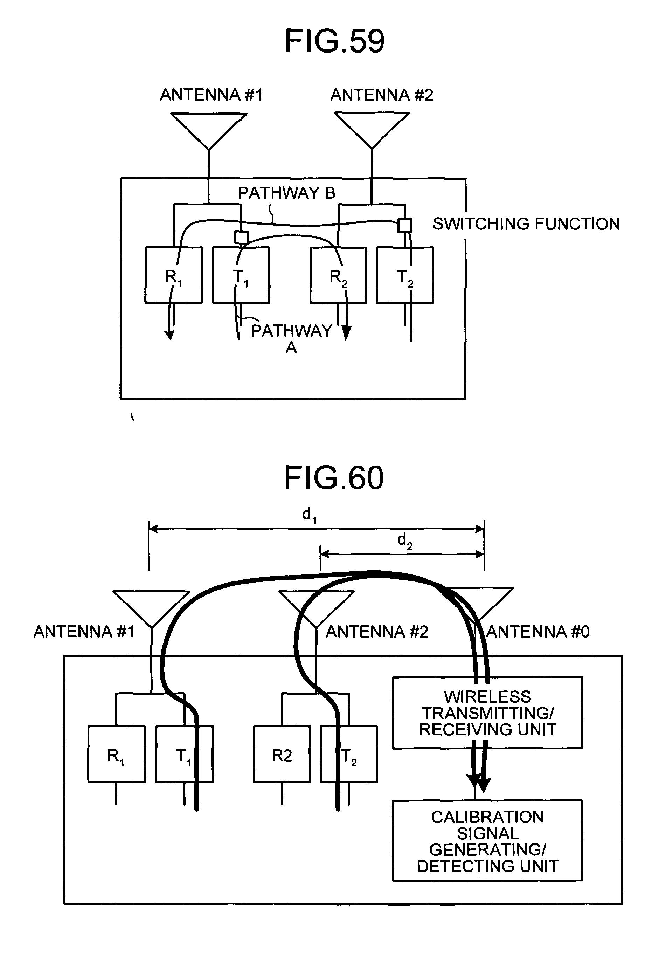

[Fig. 59] Fig. 59 is a schematic for explaining a conventional technology.

[Fig. 60] Fig. 60 is a schematic for explaining another conventional technology.

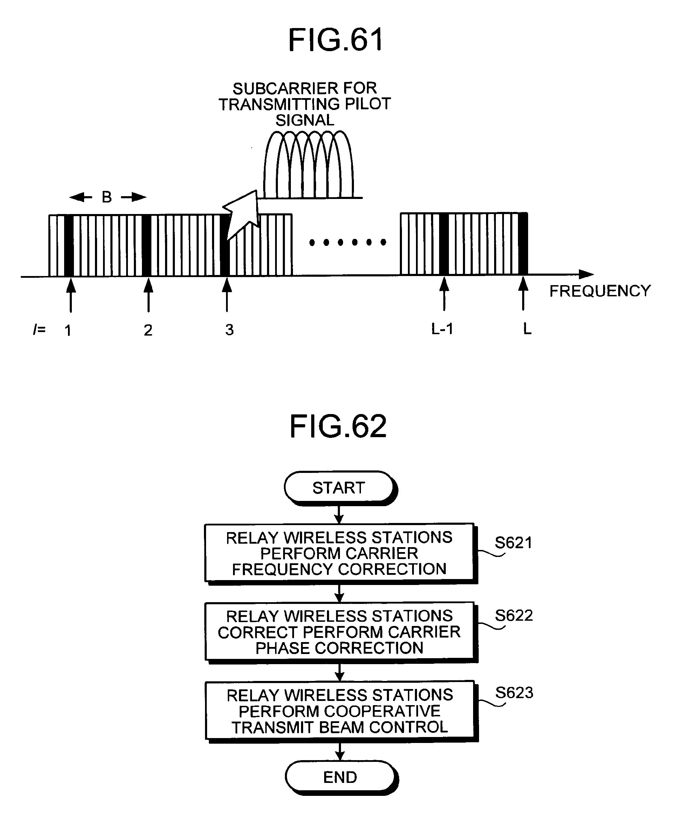

[Fig. 61] Fig. 61 is a schematic of a sub-band in which channel measurement is performed in OFDMA/TDD.

[Fig. 62] Fig. 62 is a schematic of an example of a control procedure, when a plurality of relay wireless devices with different carrier frequencies performs cooperative transmit beamforming.

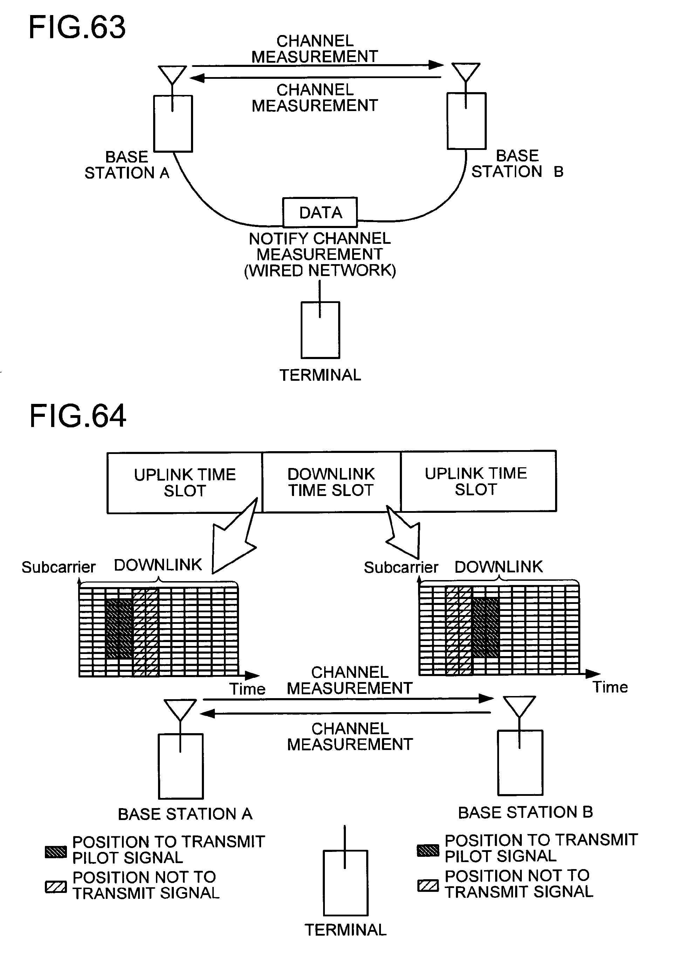

[Fig. 63] Fig. 63 is a schematic of an example of a system configuration according to a thirty-fourth embodiment.

[Fig. 64] Fig. 64 is a schematic of a transmission frame of a pilot signal for channel measurement, used in a calibration method according to a thirty-fifth A embodiment.

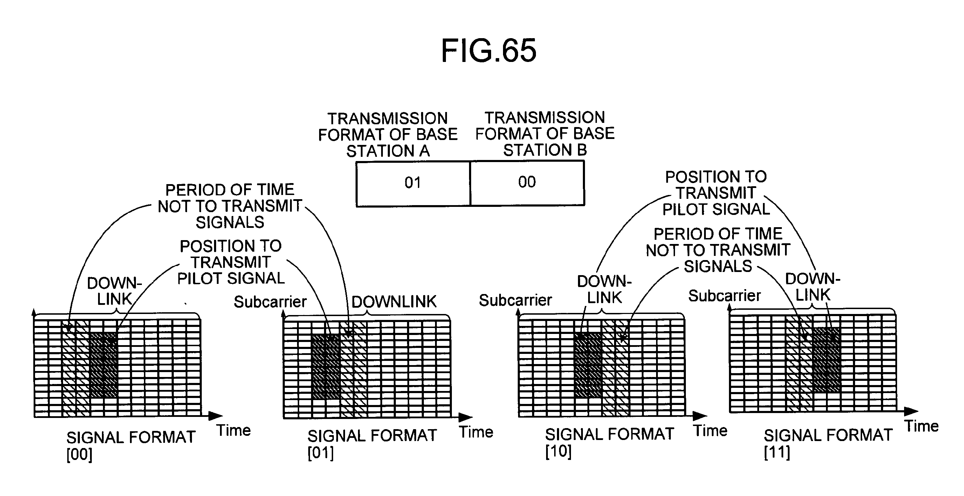

[Fig. 65] Fig. 65 is a schematic of an example of a signal format and a structure of a control signal used in the calibration method according to the thirty-fifth A embodiment.

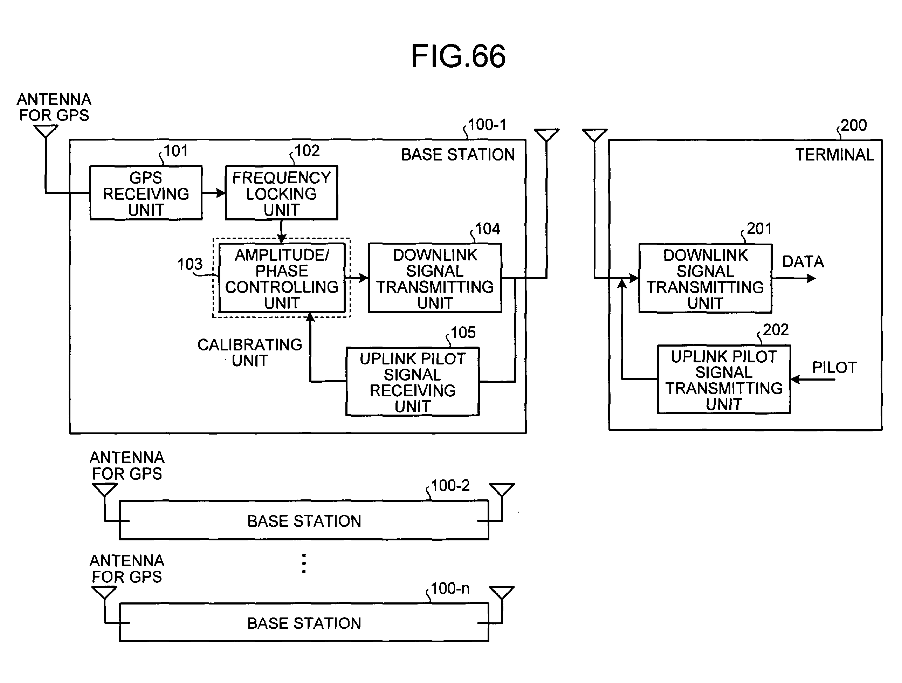

[Fig. 66] Fig. 66 is a configuration example of a base station and a terminal according to a thirty-fifth B embodiment.

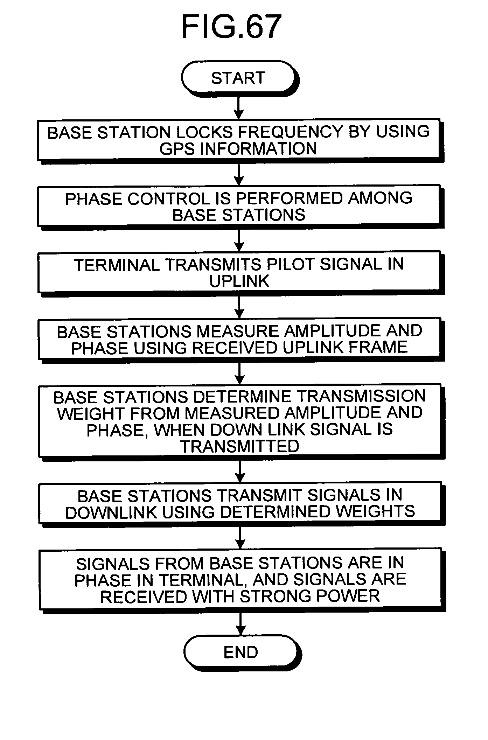

[Fig. 67] Fig. 67 is a flowchart of an example of a calibration operation performed in the thirty-fifth B embodiment.

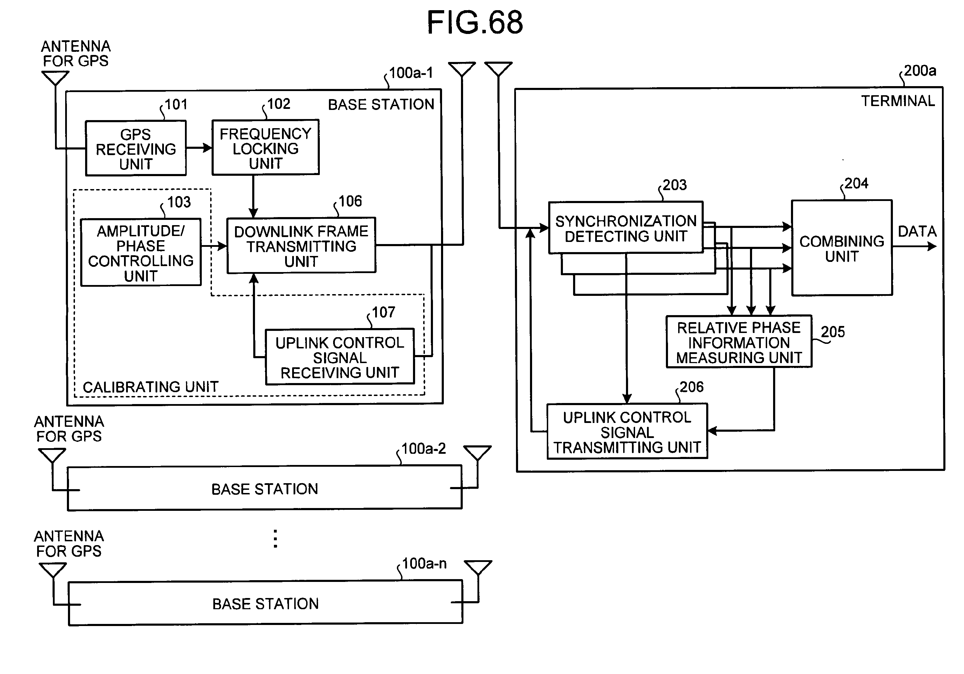

[Fig. 68] Fig. 68 is a configuration example of a base station and a terminal according to a thirty-fifth C embodiment.

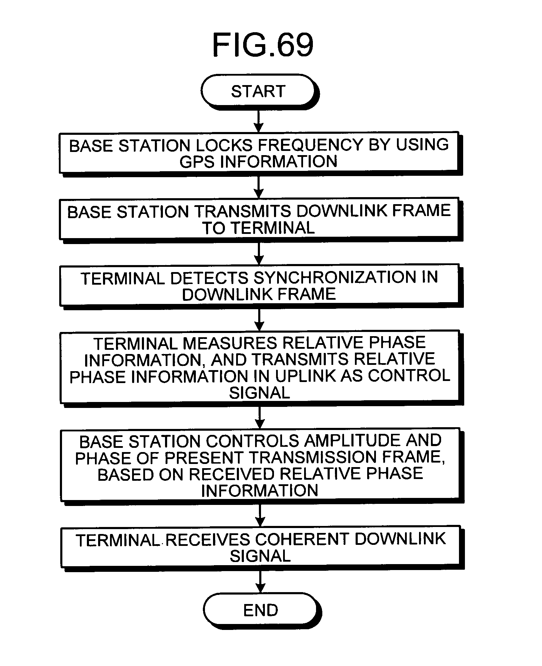

[Fig. 69] Fig. 69 is a flowchart of an example of a calibration operation performed in the thirty-fifth C embodiment.

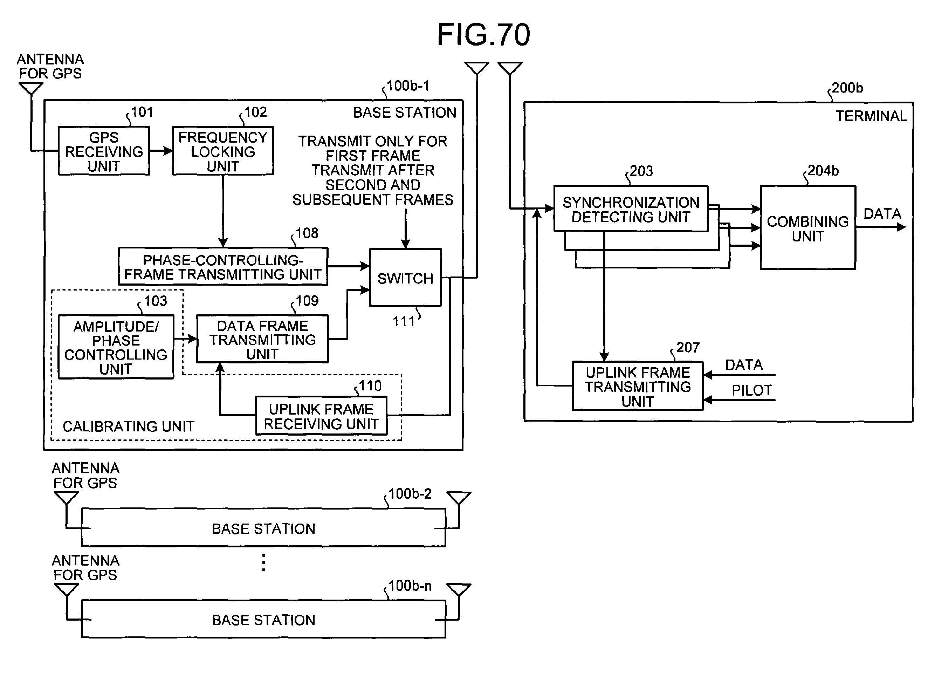

[Fig. 70] Fig. 70 is a configuration example of a base station and a terminal according to a thirty-fifth E embodiment.

EXPLANATIONS OF LETTERS OR NUMERALS

| | |
|---|---|
| 1, 2, 3, 20 | antenna |
| 11, 21 | signal transmitting/receiving unit |
| 12, 22 | calibration controlling unit |
| 13-1 to 13-M, 23 | signal correcting unit |
| 14-1 to 14-M, 24 | D/A converter |
| 15-1 to 15-M, 25 | transmitting signal amplifier |
| 16-1 to 16-M, 26 | received signal amplifier |
| 17-1 to 17-M, 27 | A/D converter |
| 18 | control information receiving unit |
| 28 | control information generating unit |
| 100-1 to 100-n, 100a-1 to 100a-n, 100b-1 to 100b-n | base station |
| 101 | GPS receiving unit |
| 102 | frequency locking unit |
| 103 | amplitude/phase controlling unit |
| 104 | downlink signal transmitting unit |
| 105 | uplink pilot signal receiving unit |
| 106 | downlink frame transmitting unit |
| 107 | uplink control signal receiving unit |
| 108 | phase-controlling-frame transmitting unit |
| 109 | data frame transmitting unit |
| 110 | uplink frame receiving unit |
| 111 | switch |
| 200, 200a, 200b | terminal |
| 201 | downlink signal receiving unit |
| 202 | uplink pilot signal transmitting unit |
| 203 | synchronization detecting unit |
| 204, 204b | combining unit |
| 205 | relative phase information measuring unit |
| 206 | uplink control signal transmitting unit |
| 207 | uplink frame transmitting unit |

BEST MODE(S) FOR CARRYING OUT THE INVENTION

Exemplary embodiments of a calibration method according to the present invention are described in detail below with reference to the accompanying drawings. However, it is to be understood that the present invention is not limited to the embodiments.

Before beginning the explanation of the embodiments, theoretical development related to a channel reciprocity condition, which is important in the present invention, will be described. The present theoretical development is not conventional, but is performed by the present invention, and is the basic concept of the invention.

(Transmission Model)

In wireless communication devices, a state of a channel measured in a digital domain (measurement channel) differs by analog device characteristics between an antenna and an A/D converter (or D/A converter). In general, when only the digital signals are used, the analog device characteristics and an actual channel are both referred to as a "measurement channel". However, in the explanations of the following embodiments, to discuss the analog characteristics, the measurement channel is sometimes divided for descriptive purpose into the actual channel and the analog characteristics. Accordingly, a complex gain of an analog device in a transmission system or a reception system of a wireless device is set as T or R, respectively.

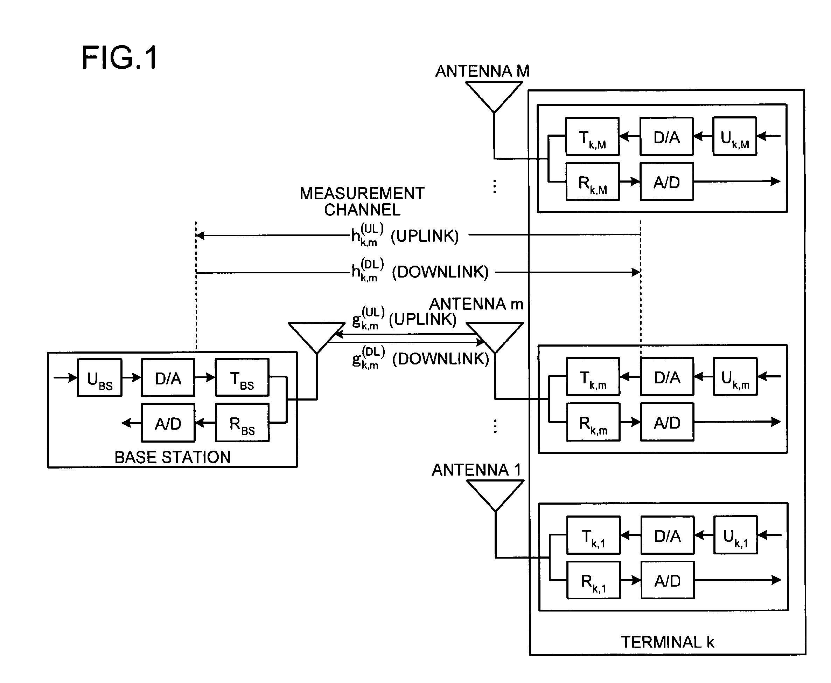

Fig. 1 is a schematic of a transmission model between one antenna of a base station and an antenna m of a terminal k in the TDD system. Transmitting analog gains of the base station and the antenna m of the terminal k are denoted as $T_{BS}$ and $T_{k,m}$, respectively, and receiving analog gains thereof are denoted as $R_{BS}$ and $R_{k,m}$, respectively. In general, in a wireless communication system, $T_{BS}$, $T_{k,m}$, $R_{BS}$, and $R_{k,m}$ are often almost constant in a transmission band, and they change depending on the temperature characteristics of the analog device at a time unit $t_{RF}$ (for example, equal to or more than 10 seconds), much longer than packet transmission or fading cycles.

A gain $h_{k,m}^{(UL)}$ of an uplink measurement channel and a gain $h_{k,m}^{(DL)}$ of a downlink measurement channel, measured in the digital domain between the base station and the antenna m of the terminal k are expressed by Equation (1), respectively:

$$h_{k,m}^{(UL)} = T_{k,m} \cdot g_{k,m}^{(UL)} = R_{BS}$$

$$h_{k,m}^{(DL)} = T_{BS} \cdot g_{k,m}^{(DL)} \cdot R_{k,m} \tag{1}$$

$g_{k,m}^{(UL)}$ and $g_{k,m}^{(DL)}$ are gains of the actual channel between the base station and the antenna m of the terminal k, in the uplink and the downlink, respectively.

According to the radio wave propagation theory, reciprocity is satisfied in actual channels that does not vary, i.e., $g_{k,m}^{(UL)} = g_{k,m}^{(DL)}$. This relationship is satisfied in a wireless communication environment where antennas are coupled and multiple reflections occur. However, because $T_{BS}$, $T_{k,m}$, $R_{BS}$, and $R_{k,m}$ vary independently from one another at long cycle length, the measured gain is, in general, $h_{k,m}^{(UL)} \neq h_{k,m}^{(DL)}$. That is, in the measurement channel, reciprocity can not be achieved if appropriate correction is not performed.

[Condition of Channel Reciprocity in TDD System]

Calibration needs to be performed to satisfy the reciprocity of the channel measured in the TDD system. For example, in a first embodiment, which will be described later, as shown in Fig. 1, calibration is performed by multiplying a digital transmitting unit of the base station and a digital transmitting unit of the antenna m of the terminal k (digital transmitting unit corresponding to each antenna of the terminal k), by complex correction coefficients $u_{BS}$ and $u_{k,m}$ (m=1, ..., M), respectively. In this case, the uplink measurement channel being corrected between the base station and the antenna m of the terminal k, is expressed by $u_{k,m} h_{k,m}^{(UL)}$, and the downlink measurement channel being corrected is expressed by $u_{BS} h_{k,m}^{(DL)}$. Accordingly, to maintain reciprocity between the antenna m (m=1, ..., M) of the terminal k and the base station, the condition of Equation (2) needs to be met:

[Expression 1]

$$\frac{u_{k,1} h_{k,1}^{(UL)}}{u_{BS} h_{k,1}^{(DL)}} = \cdots = \frac{u_{k,1} h_{k,M}^{(UL)}}{u_{BS} h_{k,M}^{(DL)}} = \eta \tag{2}$$

$\eta$ is a complex coefficient, and hereinafter, if $\eta=1$, it is called a "narrowly defined reciprocity", and if $\eta \neq 1$, it is called a "broadly defined reciprocity". Even when the broadly defined reciprocity is used, if the measurement gains in the uplink and the downlink have a proportional relationship, transmit beamforming and the like can be practically and advantageously performed. However, as explained in the following embodiments, the narrowly defined reciprocity ($\neq=1$) has far more advantages. By using Equation (1), Equation (2) can be written in the form of Equation (3):

[Expression 2]

$$\frac{u_{k,1}T_{k,1}}{R_{k,1}} = \ldots = \frac{u_{k,M}T_{k,M}}{R_{k,M}} = \eta\frac{u_{BS}T_{BS}}{R_{BS}} \tag{3}$$

As can be seen from the result, the coefficient $u_{k,m}$ depends only on $T_{BS}$, $T_{k,m}$, $R_{BS}$, and $R_{k,m}$, and does not depend on the gains $g_{k,m}^{(UL)}$ and $g_{k,m}^{(DL)}$ of the actual channel. Accordingly, if $u_{k,m}$ that satisfies Equation (3) is once set, even if the gains $g_{k,m}^{(UL)}$ and $g_{k,m}^{(DL)}$ of the actual channel vary, the reciprocity of the measurement channel in Equation (2) is maintained. Consequently, it is to be understood that $u_{k,m}$ may only be updated in a long time unit, depending on the variation of analog characteristics. As a result, in the calibration, it is important to obtain the correction coefficient $u_{k,m}$ used to calculate Equation (2) in a simple method. In particular, a simple calibration that even allows an inexpensive terminal to use reciprocity is desired.

The basic theory that is important to establish the calibration technology and derived from the present invention is described above. In view of the theoretical relationship, a calibration technology according to the present invention will be described in detail below. In the embodiments, to simplify expressions, one of the two wireless devices is referred to as a "base station" and the other is referred to as a "terminal k", on the assumption of a cellular system. However, in the real environment, the "base station" and the "terminal k" described here may be any wireless device including a base station, a relay device, and a terminal.

In the embodiments, calibration to satisfy the broadly defined reciprocity condition ($\eta\neq1$) and calibration to satisfy the narrowly defined reciprocity condition ($\eta=1$) are both used. Between them, in a first embodiment, a self-calibration that satisfies the broadly defined reciprocity condition ($\eta\neq1$) in the terminal k including a plurality of antennas will be explained first.

In the subsequent explanations, various embodiments will be described. All the embodiments represent a series of inventions performed based on the common concept of "using the principle that reciprocity ($g_{k,m}^{(UL)}=g_{k,m}^{(DL)}$) is satisfied in actual channels" and embodiments derived from the inventions, and embody a basic invention. To the inventors' knowledge, a technology to use the reciprocity of the actual channels, when a wireless device including a plurality of antennas individually performs calibration (phase correction, and phase and amplitude correction), which will be described in first to third embodiments, has not been present until now. To the inventors' knowledge, a technology to maintain narrowly defined reciprocity by using the reciprocity of the actual channels, while one wireless device performs calibration with another wireless device, which will be described after a fourth and subsequent embodiments, has not been present until now. After twenty-seventh and subsequent embodiments, frequency correction is described. Similarly, frequency correction using the reciprocity of the actual channels has not been present until now. In all the embodiments, methods to allow more effective control than that of the conventional technology, by using the reciprocity of the actual channels, are disclosed. In the present specification, by using the fact that the reciprocity is satisfied in actual channels, technologies of phase correction, phase and amplitude correction, and frequency correction can be dramatically advanced, compared with the conventional technology, will be described. It is also described that the technology is a major breakthrough not only in wireless transmission technologies but also in wireless systems.

First Embodiment.

In the present embodiment, a calibration method of correcting a signal so that the reciprocity is satisfied in a channel measured in a digital unit in the TDD system, will be explained.

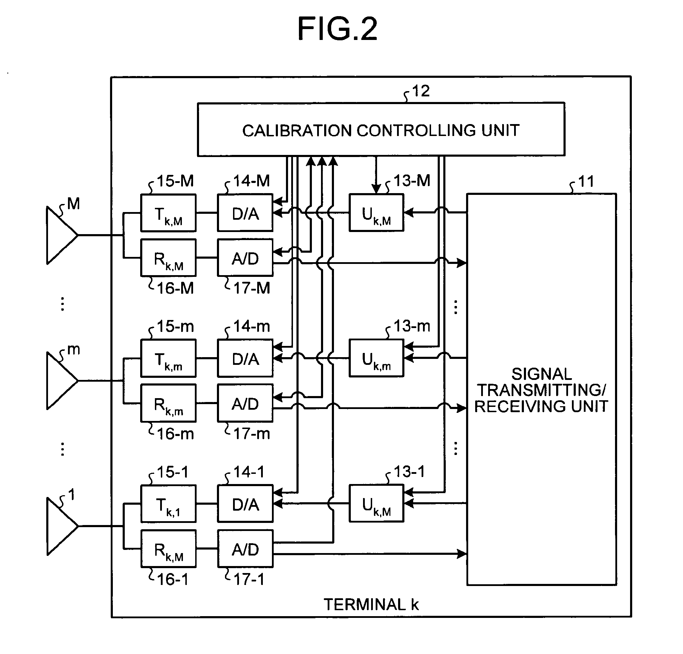

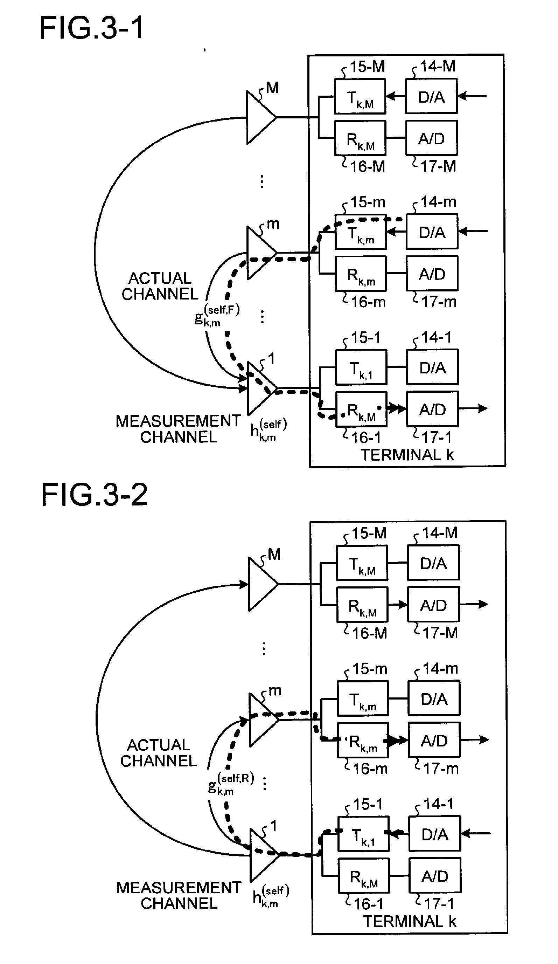

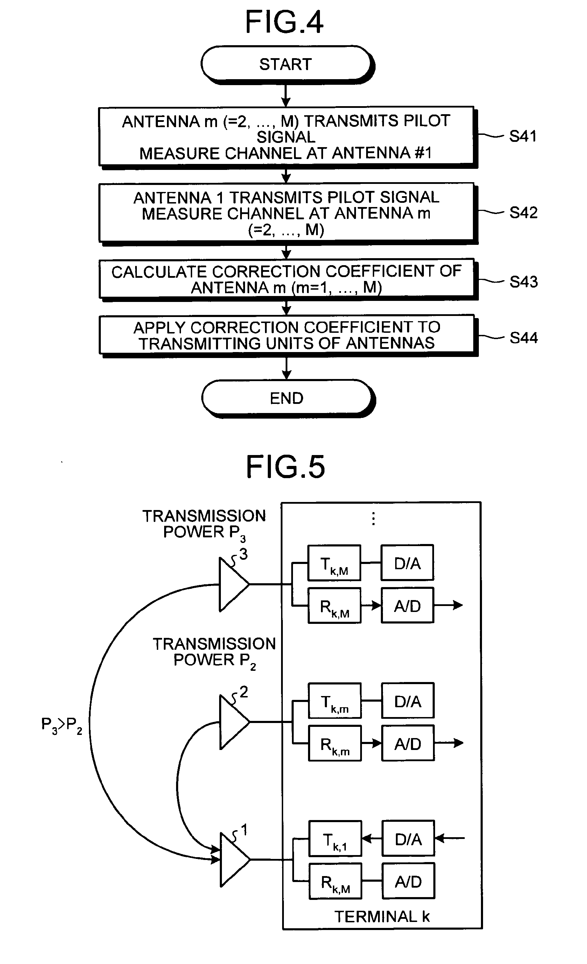

Fig. 2 is a configuration example of a terminal device that performs calibration on a plurality of antennas. Fig. 3 is a schematic of a signal transmission model, when calibration is performed on the plurality of antennas of the terminal. Fig. 4 is a flowchart of an example of a calibration procedure according to the first embodiment.

The terminal k, as shown in Fig. 2, includes a plurality of antennas m (m=1, ..., M), a signal transmitting/receiving unit 11, a calibration controlling unit 12 that controls and acquires a calibration method according to the present invention, a plurality of signal correcting units ($u_{k,m}$) 13-m (m=1, ..., M) that corresponds to each of the antennas on one-to-one basis and cancels a phase deviation and an amplitude deviation included in a digital signal transmitted from the signal transmitting/receiving unit 11 by using a complex correction coefficient, a plurality of D/A converters (D/A) 14-m that converts the output signals from the signal correcting units 13-m to analog signals, a plurality of transmitting signal amplifiers ($T_{k,m}$) 15-m that multiplies the output signals from the D/A converters 14-m by a transmitting analog gain, a plurality of received signal amplifiers ($R_{k,m}$) 16-m that multiplies the signals received by the corresponding antennas by a receiving analog gain, and a plurality of A/D converters (A/D) 17-m that converts the output signals output from the received signal amplifiers 16-m to digital signals.

A calibration operation executed by a terminal (communication device) according to the present embodiment will now be described with reference to Figs. 2 to 4. In the present embodiment, calibration is performed by the control procedure described below.

(1-1) The terminal k transmits a pilot signal from each of the antennas m, receives the pilot signal by the antenna 1, and measures a channel $h_{k,m}^{self,F}$ corresponding to the pilot signal transmitted from the antenna m (m=2, ..., M) by using the received pilot signal. More specifically, the calibration controlling unit 12 feeds a pilot signal to each D/A converter corresponding to the antenna m (m=2, ..., M), and transmits the pilot signal from the antenna m. The pilot signal is received by the antenna 1, and the calibration controlling unit 12 measures each $h_{k,m}^{self,F}$, by using an output signal from the A/D converter 17-1 corresponding to the antenna 1 (Fig. 4, Step S41). In this case, the pilot signals transmitted from the antenna m may be transmitted at different times or frequencies, or pilot signals perpendicular to each other may be transmitted at the same time and the same frequency. If the pilot signals perpendicular to each other are transmitted at the same time and the same frequency, the signals can be particularly and advantageously transmitted in a small time frequency domain.

(1-2) The terminal k transmits a pilot signal from the antenna 1, and receives the pilot signal by the antenna m (m=2, ..., M), and measures each channel $h_{k,m}^{self,R}$ corresponding to the pilot signal transmitted from the antenna 1, by using the received pilot signal. More specifically, the calibration controlling unit 12 feeds a pilot signal to the D/A converter (in this case, the D/A converter 14-1) corresponding to the antenna 1, and transmits the pilot signal from the antenna 1. The pilot signal is received by the antennas m, and the calibration controlling unit 12 measures $h_{k,m}^{self,R}$, by using the output signal transmitted from the A/D converter 17-m corresponding to the antenna m (Step S42).

(1-3) The calibration controlling unit 12 calculates a correction coefficient $u_{k,m}=u_{k,1}(h_{k,m}^{self,R}/h_{x,m}^{self,F})$ of the antenna m, by using the measurement channel information $h_{k,m}^{self,F}$ and $h_{k,m}^{self,R}$ (m=2, ..., M) obtained by executing the above procedures (1-1) and (1-2) (Step S43). $u_{k,1}$ may be set to any value.

(1-4) The terminal k applies the correction coefficient $u_{k,m}$ obtained in the above procedures to a transmitting unit (equivalent to a system from the signal transmitting unit 11 to the antenna m, via the signal correcting unit 13-m, the D/A converter 14-m, and the transmitting signal amplifier 15-m) corresponding to the antenna m (m=1, ..., M) (Step S44). The calibration controlling unit 12 carries out the control.

The measurement channel information $h_{k,m}^{self,F}$ indicates a measurement channel gain at a pathway from the antenna m to the antenna 1 (reference antenna) of the terminal k. On the other hand, the measurement channel information $h_{k,m}^{self,R}$ indicates a measurement channel gain at a pathway from the antenna 1 to the antenna m. The order of the above procedures (1-1) and (1-2) may be switched.

Figs. 3-1 and 3-2 are schematics of a signal transmission model, when calibration is performed on the plurality of antennas of the terminal, and indicates the relationship between the measurement channel and the actual channel. The measurement channel includes analog device characteristics of transmission/reception systems, in addition to the actual channel. With the procedures according to the present embodiment, the broadly defined reciprocity is satisfied in the measurement channel measured in the digital domain. As a result, signal transmission/reception and transmission control can be performed in the signal transmitting/receiving unit 11, under the fact that the broadly defined reciprocity is satisfied in the measurement channel. Fig. 3-1 corresponds to the process at Step S41 (equivalent to the procedure (1-1)), and Fig. 3-2 corresponds to the process at Step S4-2 (equivalent to the procedure (1-2)).

The reason why the broadly defined reciprocity is satisfied in the measurement channel by the calibration according to the present embodiment will now be described. As shown in Figs. 3-1 and 3-2, the measurement channel gains $h_{k,m}^{self,F}$ and $h_{k,m}^{self,R}$ are expressed by Equations (4) and (5), respectively:

$$h_{k,m}^{self,F}=T_{k,m}\cdot g_{k,m}^{self,F}\cdot R_{k,1} \qquad (4)$$

$$h_{k,m}^{self,R}=T_{k,1}\cdot g_{k,m}^{self,R}\cdot R_{k,m} \qquad (5)$$

In these Equations, $g_{k,m}^{self,F}$ is the actual channel gain to the antenna 1 from the antenna m of the terminal k, and $g_{k,m}^{self,R}$ is the actual channel gain to the antenna m from the antenna 1 of the terminal k. Accordingly, in the actual channel, the reciprocity ($g_{k,m}^{self,R}=g_{k,m}^{self,F}$) is satisfied.

To satisfy the broadly defined reciprocity in the measurement channel, Equation (6) needs to be satisfied by Equation (2):

[Expression 3]

$$\frac{u_{k,1}T_{k,1}}{R_{k,1}} = \ldots = \frac{u_{k,M}T_{k,M}}{R_{k,M}} \tag{6}$$

Equation (7) in relation to the correction coefficient $u_{k,m}$ is satisfied, by Equations (4), (5), and (6):

[Expression 4]

$$\frac{u_{k,m}}{u_{k,1}} = \frac{T_{k,1}/R_{k,1}}{T_{k,m}/R_{k,m}} = \frac{h_{k,m}^{self,R}}{h_{k,m}^{self,F}} \tag{7}$$

In Equation (6), there are M-1 pieces of conditional expressions for M pieces of variables $u_{k,1}$, ..., $u_{k,M}$, and $u_{k,1}$, ..., $u_{k,M}$ have a freedom of scalar multiplication. Accordingly, $u_{k,1}$ may be set to any non-zero value. For example, if it is set to $u_{k,1}=1$, $u_{k,m}$ is given by Equation (8):

[Expression 5]

$$u_{k,m} = \frac{h_{k,m}^{self,R}}{h_{k,m}^{self,F}} \tag{8}$$

Accordingly, if it is set to $u_{k,1}=1$ and $u_{k,m}=h_{k,m}^{self,R}/h_{k,m}^{self,F}$ (m=2, ..., M), the broadly defined reciprocity is satisfied in the measurement channel.

In this manner, the calibration controlling unit 12 transmits a signal from a specific antenna and measures the channel by the m-th antenna, and then transmits a signal from the m-th antenna and measures the channel by the specific antenna, thereby correcting the amplitude/phase (amplitude and phase) or the phase of the transmitted signal or the received signal, by using the ratio between two of the channel measurements. Accordingly, reciprocity is maintained in the measurement channel.

In the calibration method described in the present embodiment, the correction coefficient $u_{k,m}$ can easily be calculated, by just using a parameter obtained in the digital domain. In the derivation procedure (a procedure to derive Equation (7) from Equations (4), (5), and (6)), $g_{k,m}^{self,F}$ and $g_{k,m}^{self,R}$ are canceled by each other by the denominator and the numerator in Equation (7), by using the fact that the actual channel gains $g_{k,m}^{self,F}$ and $g_{k,m}^{self,R}$ included in $h_{k,m}^{self,F}$ shown in Equation (4), and $h_{k,m}^{self,R}$ shown in Equation 5 are reciprocal ($g_{k,m}^{self,F}= g_{k,m}^{self,R}$). In this manner, by focusing on the point that the actual channel is reciprocal, a theoretically required parameter $u_{k,m}$ can be calculated by a simple structure of only a digital processing. As is evident from Equation (7), in the equation to calculate the parameter $u_{k,m}$, distance information between the antennas and the like is not required at all.

The signal transmitted from the terminal k is adjusted by the correction coefficient $u_{k,m}$. Alternatively, the reciprocity may also be maintained by correcting the received signal. For example, if the signal received by the antenna m (m=1, ..., M) is corrected by the correction coefficient $u_{k,m}$, the relationship of Equation (9) is required to satisfy reciprocity:

[Expression 6]

$$\frac{T_{k,1}}{u'_{k,1}\ R_{k,1}} = \cdots = \frac{T_{k,M}}{u'_{k,M}\ R_{k,M}} \qquad (9)$$

By comparing Equation (6) with Equation (9), it is understood that $u'_{k,m}=1/u_{k,m}$ may be set to correct the received signal. In this manner, the present embodiment is also applicable to correct both the transmitting signal and the received signal. Similarly, in all the subsequent embodiments, the correction on the transmitting signal is explained as an example. However, the correction on the transmitting signal can be replaced by the correction on the received signal. Accordingly, all the embodiments are also applicable for correcting the received signal.

In the present embodiment, everything is digitally processed. However, the above-described correction process may be replaced with an equivalent process in the analog domain. In other words, the present invention is **characterized in that** a signal is emitted from an antenna, and the fact that the actual channel gains $g_{k,m}^{self,F}$ and $g_{k,m}^{self,R}$ are reciprocal ($g_{k,m}^{self,F}=g_{k,m}^{self,R}$). By using these properties, a simpler structure than that of the conventional technology can be obtained, both in the digital processing and the analog processing.

To use the technology disclosed in Non-Patent Document 1, an analog addition circuit with a switching function and the like is required. However, in the configuration of the present embodiment, an addition circuit with a switching function and the like is not required. The present embodiment is different from the technology disclosed in Non-Patent Document 1, in measuring the channel by using a pilot signal actually transmitted from the antenna. The technology disclosed in the above Patent Document 1 can only be used when the number of antennas is equal to or more than three. However, the present embodiment can be applied in an environment with two antennas. In the technology disclosed in Patent Document 1, the distance data between antennas needs to be obtained in advance. However, such data is not required in the present embodiment. In addition, in the present embodiment, $g_{k,m}^{self,F}$ and $g_{k,m}^{self,R}$ included in $h_{k,m}^{self,F}$ and $h_{k,m}^{self,R}$ are cancelled by using the reciprocity of actual channels. Accordingly, the present embodiment is applicable to any channel. In particular, accurate calibration can be performed, for example, even in a multipath environment and in a terminal where the surrounding environment tends to change. Even if the number of antennas M is increased, calibration can be performed while suppressing the number of signals used for channel measurement, compared with that of the conventional technology.

As an important advantage, the method of the present embodiment can easily be carried out only by the digital processing, thereby not requiring any other additional analog functions. As a result, highly accurate calibration can be performed at an extremely low cost, if the digital processing is integrated into a chip with other digital functions to be mass-produced. This is very important to commercialize wireless communication devices. When the switching function or the like is added, as described in the above Non-Patent Document 1, a design corresponding to an extra analog processing and the wireless device is required. Accordingly, it is difficult to achieve low cost. In the method of the above Patent Document 1, the distance data and the like needs to be measured at shipping. Because the distance data and the like needs to be measured for each wireless device, the cost will be increased. On the other hand, the present technology does not require any analog addition circuit, the distance data, or the like at all, thereby significantly cutting the cost to the level that can be used in the market, by integrating the digital processing into a chip. The advantages of reducing cost provide a significant benefit in terms of actual operation.

In the conventional wireless communications, an expensive calibration is performed to maintain the reciprocity in the TDD system. As a result, wireless devices with calibration have not been commercially popular. However, by using the method according to the present embodiment, channel reciprocity can easily be performed by a simple digital processing, thereby reducing the power consumption of the wireless device. Accordingly, application of the present calibration technology can significantly simplify the TDD wireless communication device.

Second Embodiment.

A second embodiment will now be described. In the present embodiment, setting of transmission power of a pilot signal for channel measurement will be explained.

In the procedures (1-1) to (1-4) described in the first embodiment, in other words, in the processes at Steps S41 to S44 shown in Fig. 4, a stable and accurate channel measurement is required to achieve high calibration accuracy. Accordingly, in the present embodiment, a method of stabilizing the channel estimation accuracy, by changing the transmission power of the pilot signal for channel measurement depending on the antenna, will be explained. The structure of a terminal device that performs calibration is the same as that in the first embodiment (see Fig. 2).

As shown in Fig. 5, for example, as for antennas 1 to 3, a channel gain ($h_{k,3}^{self,F}$ or $h_{k,3}^{self,R}$) between the antennas 1 and 3 is inevitably smaller than a channel gain ($h_{k,2}^{self,F}$ or $h_{k,2}^{self,R}$) between the antennas 1 and 2. To perform channel measurement at stable accuracy, the calibration controlling unit 12 sets a pilot signal transmitted from the antenna 3, so as to have stronger transmission power than that of a pilot signal transmitted from the antenna 2, while the pilot signal is transmitted at Step S41. In other words, if the pilot signals transmitted from the antennas 2 and 3 are $P_2$ and $P_3$, respectively, the transmission power is set to have a relationship of $P_3 > P_2$.

An operation performed in this case will now be described. If a pilot signal for channel measurement of a $q_0$ symbol transmitted from the antenna m is $s_m(q)$ ($q=1, ..., q_0$), and the transmission power is $P_m$, a signal $x(q)$ received by a receiving unit of the antenna 1 (equivalent to a system from the antenna 1 to the calibration controlling unit 12, via the received signal amplifier 16-1 and the A/D converter 17-1) is expressed by Equation (10):

[Expression 7]

$$x(q) = \sum_{m=2}^{M} \sqrt{P_m} s_m(q) + z_1(q) \tag{10}$$

In Equation (10), $z_1(q)$ is a noise component at the receiving unit of the antenna 1. The calibration controlling unit 12 measures a channel gain of the antenna 1, based on Equation (11-1):

[Expression 8-1]

$$h_{k,m}^{'self,F} = \frac{1}{\sqrt{P_m}} \frac{1}{q_0} \sum_{q=1}^{q_0} x(q) s_m(q)^*$$
$$= h_{k,m}^{self,F} + \frac{1}{\sqrt{P_m}} \frac{1}{q_0} \sum_{q=1}^{q_0} z_1(q) s_m(q)^* \tag{11-1}$$

In Equation (11-1), $h_{k,m}^{'self,F}$ is a measurement including a measurement error and * is a complex conjugate. In the modification in Equation (11-1), the signals transmitted from the different antennas are in a perpendicular relationship. The first term after being modified is a measurement, the second term is a measurement error, and the measurement accuracy is determined by the power ratio between the first term and the second term. Because the channel gain $h_{k,3}^{self,F}$ of the antenna 3 (first term) is smaller than the channel gain $h_{k,2}^{self,F}$ of the antenna 2 (first term), the measurement error of the antenna 3 (second term) needs to be reduced, to obtain the similar measurement accuracy. Accordingly, as shown in Fig. 5, the measurement error of the antenna 3 is reduced, by increasing the transmission power $P_3$ transmitted from the antenna 3 more than the transmission power $P_2$ transmitted from the antenna 2. In this manner, by increasing the transmission power of the pilot signal transmitted from the antenna that is away from the antenna 1, the channel measurement by all the antennas m (m=2, ..., M) can be performed with the similar measurement accuracy. Accordingly, stable calibration can be performed.

In the above explanation, the pilot signal for channel measurement is transmitted to the antenna 1 from the antenna m. Similarly, the signal transmitted to the antenna placed far is increased, when a pilot signal for channel measurement is transmitted to the antenna m from the antenna 1, at Step S42 in the first embodiment.

In this manner, by adjusting the transmission power of the pilot signal for channel measurement based on the position of the antenna, stable calibration can be preformed.

Third A Embodiment.

A third A embodiment will now be described. In the calibration procedure in the first embodiment, the phase and the amplitude are corrected at the same time. However, in the present embodiment, a calibration procedure that only corrects the phase will be explained.

In real life, the analog characteristics $T_{k,m}$ and $R_{k,m}$ of the antennas vary with temperature, but in general, the amplitude characteristics of antennas are similar to each other. On the contrary, the phase characteristics vary largely and affect the communication quality. Accordingly, in the calibration, the correction of the phase characteristics is especially important. Because the phase itself can be corrected by using only a phase shifter, it will be much simpler, hardware-wise.

In the present embodiment, a self calibration procedure that only corrects the phase by the following control will be described. The structure of a terminal device that performs calibration is the same as that in the first embodiment (see Fig. 2).

(3-1) The terminal k transmits a pilot signal from each of the antenna m, receives the pilot signal by the antenna 1, and measures a channel $h_{k,m}^{self,F}$ corresponding to the pilot signal transmitted from the antenna m (m=2, ..., M), by using the received pilot signal. The procedure is the same as the procedure (1-1) explained in the first embodiment.

(3-2) The terminal k transmits a pilot signal from the antenna 1, receives the pilot signal by the antenna m (=2, ..., M), and measures a channel $h_{k,m}^{self,R}$ corresponding to the pilot signal transmitted from the antenna 1, by using the received pilot signal. The procedure is the same as the procedure (1-2) explained in the first embodiment.

(3-3) The calibration controlling unit 12 calculates a correction coefficient $u^{k,m}=(h_{k,m}^{self,R}/h_{k,m}^{self,F})/|h_{k,m}^{self,R}/h_{k,m}^{self,F}|$ of the antenna m, on the assumption that the correction coefficient of the antenna 1 is $u_{k,1}=1$, by using the measurement channel information $h_{k,m}^{self,F}$ and $h_{k,m}^{self,R}$ (m=2, ..., M).

(3-4) The terminal k (i.e., calibration controlling unit 12 of the terminal k) applies the correction coefficient $u_{k,m}$ calculated by executing the procedures, to the transmitting unit corresponding to each of the antennas m (m=1, ..., M).

In this manner, in the calibration procedure according to the present embodiment, the equation to calculate the correction coefficient of the antenna m used in the procedure (3-3) is different from the first embodiment. In this case, it is always $|u_{k,1}|=1$, and only the phase correction is performed in the transmitting unit of each antenna. Accordingly, the phase deviation of the analog device can be corrected, thereby further simplifying the correction process than when the amplitude correction is performed.

Third B Embodiment.

In the present embodiment, a calibration operation performed when a carrier frequency $f_{BS}$ of the base station and a carrier frequency $f_{MT}$ of the terminal do not exactly agree with each other will be explained. In the real environment, $f_{BS}$ and $f_{MT}$ sometimes do not exactly agree with each other. However, at present, a general technology allows the difference between $f_{BS}$ and $f_{MT}$ to be reduced, to the extent that gains of the analog device and the actual channel can be regarded as the same, by frequency pull-in and the like.

If the base station transmits a pilot signal at a carrier frequency $f_{BS}$ in the downlink, and the pilot signal is down-converted by a frequency $f_{MT}$ in the terminal, the measurement channel gain is $h_{k,m}^{(DL)}\exp\{j2\pi(f_{BS}-f_{MT})t+\phi_{DL}\}$. If the terminal transmits a pilot signal at a carrier frequency $f_{MT}$ in the uplink, and the pilot signal is down-converted by a frequency $f_{BS}'$ in the base station, the measurement channel gain is $h_{k,m}^{(UL)}\exp\{j2\pi(f_{MT}-f_{BS}')t+\phi_{UL}\}$. Here, $\phi_{DL}$ and $\phi_{UL}$ are initial phases. The base station may determine the frequency $f_{BS}'$ by performing frequency pull-in of the uplink signal, and $f_{BS}'$ and $f_{BS}$ may vary.

Calibration to maintain the reciprocity of the measurement channel in the TDD/MIMO system where the base station has N antennas and the terminal has M antennas will now be studied. Here, correction is performed by multiplying the digital transmitting units of the antenna n (=1, ..., N) of the base station and the antenna m (=1, ..., M) of the terminal, by the complex coefficients $u_{BS,n}$ and $u_{k,m}$, respectively. In this case, channel measurements in the uplink and the downlink between the n-th antenna of the base station and the m-th antenna of the terminal k are expressed by $a_{k,m,n}^{(UL)}=u_{k,m}h_{k,m,n}^{(UL)}\exp\{j2\pi(f_{MT}-f_{BS}')t+\phi_{UL}\}$ and $a_{k,m,n}^{(DL)}=u_{BS,n}h_{k,m,n}^{(DL)}\exp\{j2\pi(f_{BS}-f_{MT})t+\phi_{DL}\}$, respectively. Accordingly, the condition that the measurement channel maintains the broadly defined reciprocity at N×M MIMO channels is expressed by Equation (11-2):

[Expression 8-2]

$$\eta(t)=\frac{a_{k,1,1}^{(UL)}}{a_{k,1,1}^{(DL)}}=\cdots=\frac{a_{k,M,1}^{(UL)}}{a_{k,M,1}^{(DL)}}=\frac{a_{k,1,2}^{(UL)}}{a_{k,1,2}^{(DL)}}=\cdots=\frac{a_{k,M,2}^{(UL)}}{a_{k,M,2}^{(DL)}}=\cdots\cdots=\frac{a_{k,1,N}^{(UL)}}{a_{k,1,N}^{(DL)}}=\cdots=\frac{a_{k,M,N}^{(UL)}}{a_{k,M,N}^{(DL)}}$$

$$(11-2)$$

According to Equation (11-2), the ratio $\eta(t)$ of the measurement channels in the uplink and the downlink are the same in each pathway, but matching of the phases in the uplink and the downlink is not questioned. $\eta(t)$ may be phase rotated temporally. If $\eta(t)$ is phase rotated, frequency and phase offsets occur in the base station for the signal transmitted from the terminal. However, the influence can be corrected by the frequency pull-in and phase synchronization. Accordingly, even when a frequency offset is present between the terminal and the base station, if Equation (11-2) is satisfied, the relative phase relationships among the plurality of antennas of the terminal can be maintained. Consequently, transmit beamforming can be performed.

If Equation (1) is used, Equation (11-2) becomes equivalent to Equations (11-3) and (11-4):

[Expression 8-3]

$$\frac{u_{k,1}T_{k,1}}{R_{k,1}} = \frac{u_{k,2}T_{k,2}}{R_{k,2}} = \cdots = \frac{u_{k,M}T_{k,M}}{R_{k,M}} \qquad (11\text{-}3)$$

[Expression 8-4]

$$\frac{u_{BS,1}T_{BS,1}}{R_{BS,1}} = \frac{u_{BS,2}T_{BS,2}}{R_{BS,2}} = \cdots = \frac{u_{BS,M}T_{BS,M}}{R_{BS,M}} \qquad (11\text{-}4)$$

Equation (11-3) is the same as Equation (6), and it is possible to calculate $u_{k,m}$ (m=1, ..., M) that satisfies (11-3), by the calibration according to the first to the third embodiments. Similarly, if the calibration according to the first to the third embodiments is also performed in the base station, the state of Equation (11-4) can also be established. In this manner, in the MIMO channel, the broadly defined reciprocity can be maintained, because the base station and the terminal perform the calibration according to the first to the third embodiments, independently. Accordingly, by applying the first to the third embodiments, the broadly defined channel reciprocity can be maintained, even in an environment where the carrier frequencies $f_{BS}$ and $f_{MT}$ of the base station and the terminal do not exactly agree with each other.

From another point of view, Equation (11-3) is equivalent to the reciprocity condition between one antenna of the base station and the M antennas of the terminal shown in Equation (11-5), and Equation (11-4) is equivalent to the reciprocity condition between the N antennas of the base station and one antenna of the terminal shown in Equation (11-6):

[Expression 8-5]

$$\frac{a_{k,1,1}^{(UL)}}{a_{k,1,1}^{(DL)}} = \cdots = \frac{a_{k,M,1}^{(UL)}}{a_{k,M,1}^{(DL)}} \qquad (11\text{-}5)$$

[Expression 8-6]

$$\frac{a_{k,1,1}^{(UL)}}{a_{k,1,1}^{(DL)}} = \cdots = \frac{a_{k,1,N}^{(UL)}}{a_{k,1,N}^{(DL)}} \qquad (11\text{-}6)$$

From the relationships, it is understood that the reciprocity condition in the MIMO channel can be achieved, if the plurality of antennas of the base station and the terminal individually satisfies Equations (11-5) and (11-6) of the reciprocity condition in the Multi-Input Single Output (MISO) channel. Accordingly, although N×M pieces of complex channel information are fed back in Non-Patent Document 2, calibration can be performed in the terminal (or base station) by feeding back only N×1 (or M×1) pieces of MISO channel information. Consequently, it is possible to reduce the feedback control amount. Equation (11-5) shows that the broadly defined reciprocity can still be maintained, by matching the channel measurements in the uplink and the downlink, even if the carrier frequencies $f_{BS}$ and $f_{MT}$ of the base station and the terminal do not exactly agree with each other.

In this manner, according to the present embodiment, the broadly defined channel reciprocity can still be maintained in an environment where the carrier frequencies between the base station and the terminal do not exactly agree with each other. The theoretical conditions are also clarified.

Fourth Embodiment.

A fourth embodiment will now be described. In the present embodiment, unlike the first to the third embodiments, a method of performing calibration by transmitting signals with another wireless device will be explained.

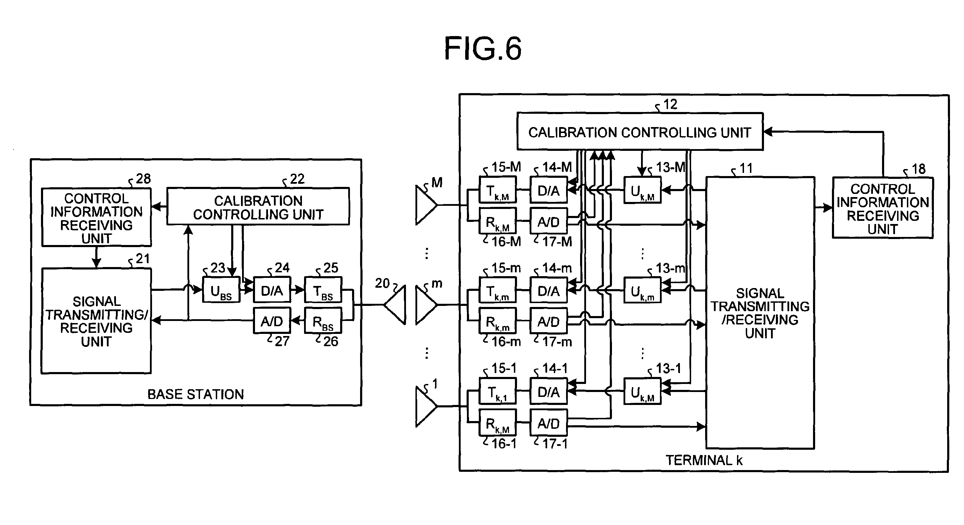

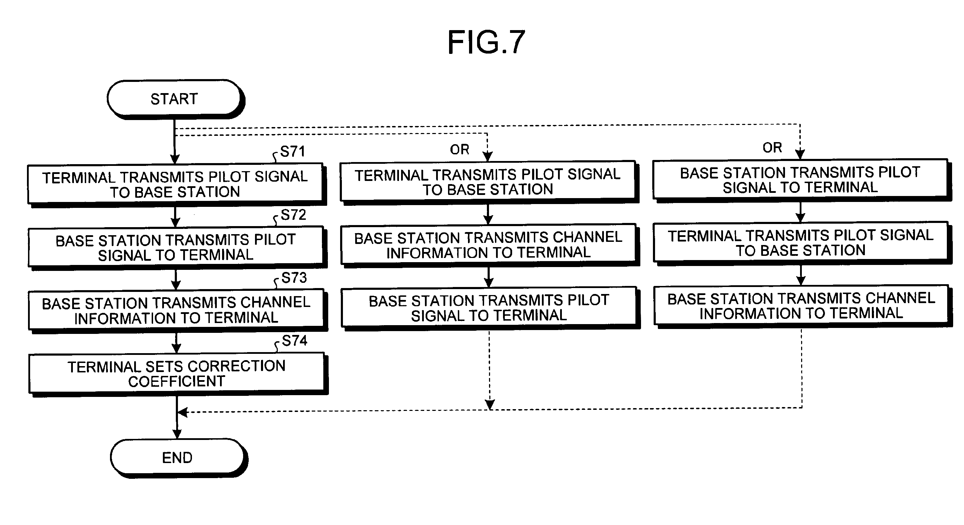

As described in the third B embodiment, the antennas of the base station and the terminal may perform calibration individually. In the present embodiment, the MISO channel between a reference antenna (n=1) of the base station and the M antennas of the terminal is given as an example, to shown the calibration to maintain the broadly defined reciprocity. Fig. 6 is a configuration example of a terminal k and a base station according to the fourth embodiment. Fig. 7 is a flowchart of an example of a calibration procedure according to the fourth embodiment.

The base station, as shown in Fig. 6, includes an antenna 20, a signal transmitting/receiving unit 21, a calibration controlling unit 22 that controls to obtain a calibration method according to the present embodiment, a signal correcting unit ($u_{BS}$) 23 that cancels a phase deviation and an amplitude deviation included in a digital signal transmitted from the signal transmitting/receiving unit 21 by using a complex correction coefficient, a D/A converter (D/A) 24 that converts an output signal output from the signal correcting unit 23 to an analog signal, a transmitting signal amplifier ($T_{BS}$) 25 that multiplies the output signal output from the D/A converter 24 by a transmitting analog gain, a received signal amplifier ($R_{BS}$) 26 that multiplies the signal received by the antenna 20 by a receiving analog gain, an A/D converter (A/D) 27 that converts the output signal output from the received signal amplifier 26 to a digital signal, and a control information generating unit 28. On the other hand, the terminal k has a configuration in which a control information receiving unit 18 is added to configuration of the terminal k according to the first embodiment (see Fig. 2).

It is assumed that a correction coefficient $u_{BS}$ at the reference antenna of the base station has been determined beforehand (this may be any value). In this case, in the present embodiment, the correction coefficient $u_{k,m}$ (m=1, ..., M) at the antenna m of the terminal k is set according to the following control procedure.

(4-1) The terminal k transmits a pilot signal from the antenna m (m=1, ..., M). More specifically, the calibration controlling unit 12 transmits a pilot signal fed into an input end of the D/A converter 14-m corresponding to the antenna m (m=1, ..., M) from the antenna m. The base station receives the pilot signal from the terminal k, and measures a channel $h_{k,m}^{(UL)}$ (m=1, ..., M). More specifically, the calibration controlling unit 22 measures $a'_{k,m}^{(UL)} = h_{k,m}^{(UL)}$ by using the received pilot signal output from the A/D converter 27 (Fig. 7, Step S71). Here, $a'_{k,m}^{(UL)}$ is a channel measurement before the correction coefficient $u_{k,m}$ is applied.

(4-2) The base station transmits a pilot signal $u_{BS}s(q)$. More specifically, the calibration controlling unit 22 transmits a pilot signal fed into an input end of the D/A converter 24 from the antenna 20. The terminal k then measures a channel gain $a_{k,m}^{(DL)}=u_{BS}h_{k,m}^{(DL)}$ (m=1, ..., M) by detecting the correlation between the pilot signal transmitted from the base station and a known signal s(q). More specifically, the terminal k receives the pilot signal by the antenna m, and the calibration controlling unit 12 measures $a_{k,m}^{(DL)}=u_{BS}h_{k,m}^{(DL)}$ by detecting the correlation between the received pilot signal output from the A/D converter 17-m and the known pilot signal (Step S72).

(4-3) The base station notifies the terminal k of a measured result $a'_{k,m}^{(UL)}$ (m=1, ..., M) in the procedure (4-1). More specifically, based on a format generated by the control information generating unit 28, the signal transmitting/receiving unit transmits $a'_{k,m}^{(UL)}$, and the control information receiving unit 18 of the terminal k receives $a'_{k,m}^{(UL)}$ transmitted from the base station (Step S73).

(4-4) The terminal k sets a correction coefficient $u_{k,m}=a_{k,m}^{(DL)}/a'_{k,m}^{(UL)}$ (m=1, ..., M) by the calibration controlling unit 12 (Step S74).

The procedures (4-1) and (4-2) should be performed in a short period of time with small channel variation. As shown in Fig. 7, the procedures (4-1) and (4-2) may be reversed. The procedures (4-2) and (4-3) may also be reversed.

When the present control is performed, the relationship of Equation (11-5) is satisfied, and the broadly defined reciprocity in the measurement channel can be maintained. For simple explanation, the carrier frequencies of the base station and the terminal are made equal. However, as described in the third B embodiment, the present embodiment is also applicable in an environment where the carrier frequencies between the base station and the terminal do not exactly agree with each other.

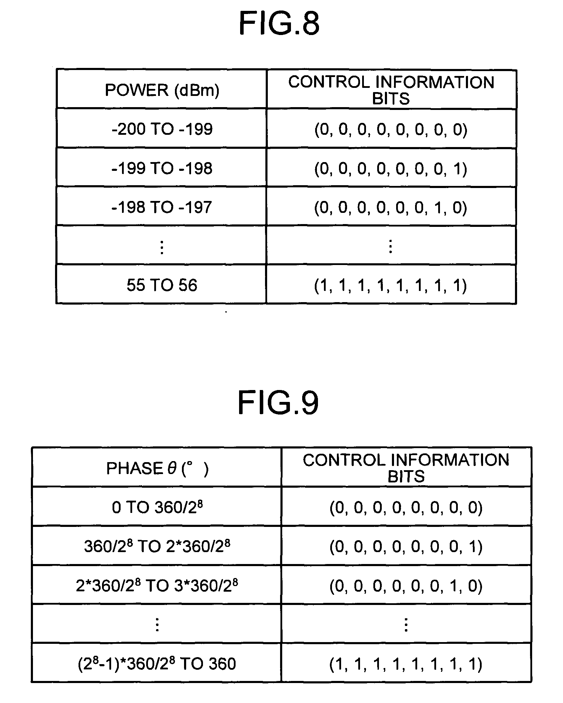

In the above procedure (4-3), the complex amplitude $h_{k,m}^{(UL)}$ is notified to the terminal k from the base station. However, as shown in Figs. 8 and 9, the complex amplitude $h_{k,m}^{(UL)}$ can be separated into power $|h_{k,m}^{(UL)}|^2$ and a phase $\ln(h_{k,m}^{(UL)}/|h_{k,m}^{(UL)}|)/j$ (j is a unit imaginary number) to perform bit operation. For example, as shown in Figs. 8 and 9, if 8 bits are individually used for the power information and the phase information, 16 bits are required. However, if the notification cycle is equal to or more than 10 seconds, which is long, the control amount does not become large if only one complex number $h_{k,m}^{(UL)}$ is used.

In the above Non-Patent Document 2, N×M pieces of complex channel information are fed back in the N×M MIMO channels. However, in the present embodiment, the calibration on the terminal can be performed, by selecting only one antenna from the plurality of antennas of the base station, and feeding back M×1 pieces of MISO channel information. As a result, the feedback control amount can be reduced to M pieces from N×M pieces. For example, when the present embodiment is used, it is possible to perform calibration on the terminal by using only the reference antenna of the base station, and the terminal can then perform appropriate uplink transmit beamforming, based on the channel measurement of the downlink MIMO channel corresponding to the plurality of antennas of the base station.

In this manner, in the calibration according to the present embodiment, the control amount is reduced by performing calibration only on the reference antenna of the base station, and during transmit beamforming, the system is optimized by performing calibration on the plurality of antennas of the base station. As a result, it is possible to achieve the configuration by which the reciprocity of the MIMO channel can be effectively utilized, while reducing the feedback control amount of the calibration.

Fifth Embodiment.

A fifth embodiment will now be described. In the present embodiment, a method of performing calibration by transmitting signals with another wireless device, but a calibration method performed by different procedures from those in the fourth embodiment will be described. The structures of the terminal k and the base station according to the present embodiment are the same as those in the fourth embodiment (see Fig. 6).

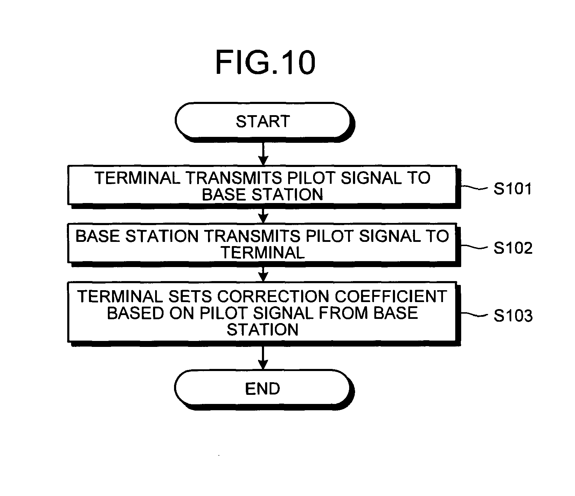

A calibration procedure according to the present embodiment will now be described with reference to Fig. 10. Fig. 10 is a flowchart of an example of the calibration procedure according to the fifth embodiment.

(5-1) The terminal k transmits a pilot signal from an antenna m (m=1, ..., M), and the base station receives the pilot signal transmitted from the terminal k, and measures a channel $a'_{k,m}{}^{(UL)}=h_{k,m}{}^{(UL)}$ (Step S101). The procedure is the same as the procedure (4-1) described in the fourth embodiment.

(5-2) The base station, by using the measurement result of $h_{k,m}{}^{(UL)}$, transmits a pilot signal $(u_{BS}/a'_{k,m}{}^{(UL)})s(q)$ or $u_{BS}a'_{k,m}{}^{(UL)*}/|a'_{k,m}{}^{(UL)}|^2 s(q)$, weighted by $u_{BS}/a'_{k,m}{}^{(UL)}$ or $u_{BS}a'_{k,m}{}^{(UL)*}/|a'_{k,m}{}^{(UL)}|^2$, to the terminal k (Step S102). Here, $s(q)$ is a reference pilot signal that satisfies $E[|s(q)|^2]=1$, and $*$ is a complex conjugate. The weighting is performed by the calibration controlling unit 22, and the pilot signal is fed into the input end of the D/A converter 24 from the calibration controlling unit 22.

(5-3) The terminal k (i.e., the calibration controlling unit 12 of the terminal k), by using the pilot signal received from the base station and the known pilot signal $s(q)$, measures a complex amplitude $(u_{BS}/a'_{k}m^{(UL)})$ $\cdot h_{k,m}{}^{(DL)}=u_{BS}h_{k,m}{}^{(DL)}/a'_{k,m}{}^{(UL)}$ of the pilot signal, and sets as $u_{k,m}=u_{BS}h_{k,m}{}^{(DL)}/h_{k,m}{}^{(UL)}=a_{k,m}{}^{(DL)}/a'_{k,m}{}^{(UL)}$ (m=1, ..., M) (Step S103).

The procedures (5-1) and (5-2) are performed in a short period of time so that there is hardly any channel variation.

Similarly to the fourth embodiment, it is possible to set as $u_{k,m}=u_{BS}h_{k,m}{}^{(DL)}/h_{k,m}{}^{(UL)}$, by using the present embodiment. To simplify the explanation, the carrier frequencies of the base station and the terminal are made equal. However, as described in the third B embodiment, the present embodiment is also applicable in an environment where the carrier frequencies between the base station and the terminal do not exactly agree with each other. In the present embodiment, the pilot signals need to be transmitted individually to the antenna m (m=1, ..., M) from the base station, but there is no need to feedback the information $h_{k,m}{}^{(UL)}$ performed in the procedure (4-3) in the fourth embodiment.

In the procedure (4-3), a quantization error occurs because $a'_{k,m}{}^{(UL)}$ is converted into information bits. However, in the present embodiment, a quantization error does not occur, because the pilot signal weighted by $u_{BS}/a'_{k,m}{}^{(UL)}$ in the procedure (5-2) is transmitted. In this manner, with the present embodiment, calibration can be performed only by transmitting and receiving pilot signals, and there is no need to feedback information bits.

In this manner, by applying the present embodiment to the terminal, the terminal can perform calibration by only transmitting and receiving pilot signals with the base station.

Sixth Embodiment.

A sixth embodiment will now be described. Similarly to the fourth and the fifth embodiments, the present embodiment relates to a method of performing calibration by transmitting signals with another wireless device, and particularly relates to calibration that only corrects the phase. The structures of the terminal k and the base station according to the present embodiment are the same as those in the fourth embodiment.

As described in the third A embodiment, with respect to the analog characteristics $T_{k,m}$ and $R_{k,m}$ of the antennas, the amplitude characteristics are similar to each other even if temperature varies, but the phase characteristics vary largely with temperature variation and affect communication quality. Accordingly, if a simple phase shifter can correct the phase, it is effective from both the hardware and performance perspectives.

In the present embodiment, calibration that only corrects the phase by transmitting signals with another wireless device will be explained. In the present embodiment, it is assumed that the correction coefficient $u_{BS}$ of the base station is already determined (may be any value), and a correction coefficient $u_{k,m}$ (m=1, ..., M) at the antenna m of the terminal k is set by the following procedure.

(6-1) The terminal k individually transmits a pilot signal from the antenna m, and the base station measures a channel $a'_{k,m}{}^{(UL)}=h_{k,m}{}^{(UL)}$ (m=1, ..., M) from the received pilot signal. The procedure is the same as the procedure (4-1) in the fourth embodiment.

(6-2) The base station transmits a pilot signal $u_{BS}s(q)$, and the terminal k measures a complex amplitude $a_{k,m}{}^{(DL)}=u_{BS}h_{k,m}{}^{(DL)}$ (m=1, ..., M) from the pilot signal received by the antenna m. The procedure is the same as the procedure (4-2) in the fourth embodiment.

(6-3) The base station notifies the terminal k of phase information $a'_{k,m}{}^{(UL)}/|a'_{k,m}{}^{(UL)}|$ (m=1, ..., M) of $a'_{k,m}{}^{(UL)}$.

(6-4) The terminal k sets $u_{k,m}=(a_{k,m}{}^{(DL)}/|a_{k,m}{}^{(DL)}|)(a'_{k,m}{}^{(UL)}/|a'_{k,m}{}^{(UL)}|)$ (m=1, ..., M).

The procedures (6-1) and (6-2) should be performed in a short period of time so that there is hardly any channel variation. The procedures (6-1) and (6-2) may be reversed. The procedures (6-2) and (6-3) may also be reversed.

The phase can be corrected by executing the above control. In the calibration according to the present embodiment, amplitude correction is not performed. However, if the amplitude characteristics of the analog devices at the antennas of the terminal are similar, the state close to the broadly defined reciprocity can be achieved. In reality, the phase variation of the analog device with a temperature change is more problematic than the amplitude variation. The present embodiment can correct the phase error of the antenna, which is a main problem. Because the feedback information in the procedure (6-3) is only phase information, the amount of control information can be reduced to be less than that of the fourth embodiment.

In this manner, in the present embodiment, the correction is performed only on the phase, by setting the amplitude correction value to 1($|u_{k,m}|$=1), so that the phases of a channel measured in the digital domain to the base station from the terminal and a channel measured in the digital domain to the terminal from the base station are the same. As a result, the phases of the antennas of the terminal can be corrected, while suppressing the amount of feedback information.

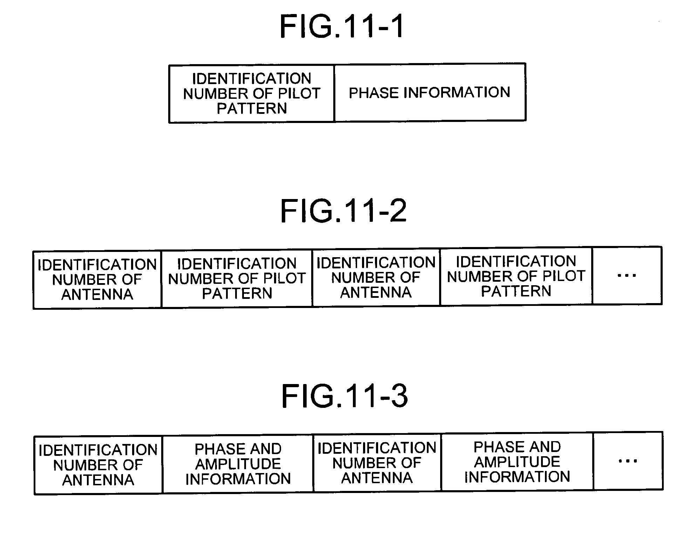

Fig. 11-1 is a schematic of an example of a notification format of phase information to be fed back in the procedure (6-3). In the present format, a pattern identification number of a pilot signal received by the base station, and the phase information are notified in the downlink. In this case, the base station identifies the arrived pilot pattern and notifies the identification number of the pilot pattern and the phase information in the downlink, even if the base station does not recognize which antenna (m) of which terminal (k) has transmitted the pilot signal in the procedure (6-1). The terminal that has transmitted the pilot signal in the procedure (6-1) can recognize the transmitted pilot signal pattern and receive the phase information. In this manner, the base station can notify the phase information, even if the base station does not recognize which antenna (m) of which terminal (k) has transmitted the pilot signal.

Alternatively, the phase information may be notified, while recognizing which antenna of the terminal has transmitted the pilot signal. For example, when a control signal shown in Fig. 11-2 is transmitted to the base station from the terminal will be described. In the diagram, the terminal notifies the base station of an identification number of the pilot signal pattern to be used for each antenna as a control signal. The base station, by using a control signal format shown in Fig. 11-3, notifies the terminal of the identification number of each antenna, and the phase and amplitude information of the channel measured by the pilot signal pattern corresponding to the identification number in the downlink. The measurement channel information can also be notified to the terminal from the base station, by using such a format.

Seventh Embodiment.

A seventh embodiment will now be described. In the present embodiment, a transmission method of a pilot signal used for calibration will be explained.

In the calibrations described in the fourth to the sixth embodiments, it is important to transmit a pilot signal from the terminal (for example, procedures (4-1), (5-1), and (6-1)) and to transmit a pilot from the base station (for example, procedures (4-2), (5-2), and (6-2)) in a short period of time so that there is hardly any channel variation. The reason being that, if the procedures described in the fourth to the sixth embodiments are executed in an environment where actual channels in the uplink and the downlink do not vary, it is possible to obtain $u_{k,m}$ to satisfy Equations (2) and (3).

Accordingly, in the present embodiment, a method of transmitting two pilot signals in a short period of time will be described. The structures of the terminal k and the base station are the same as those in the fourth embodiment.

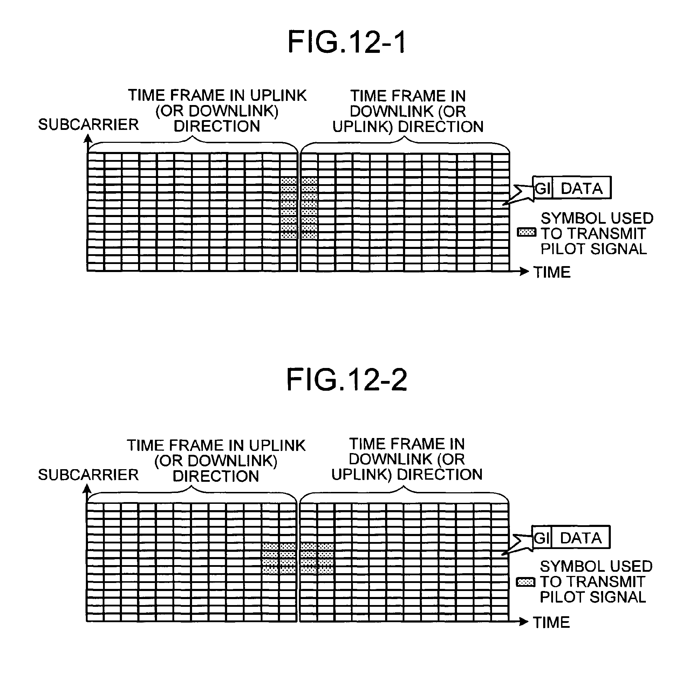

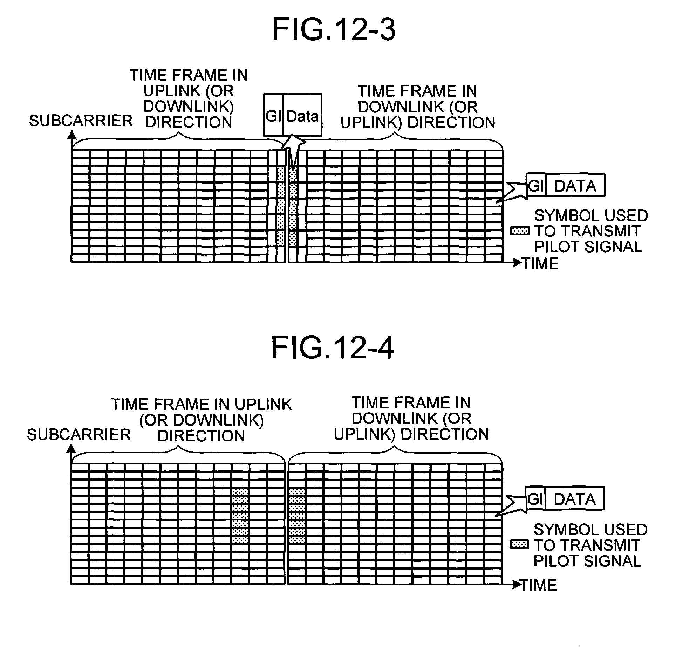

Figs. 12-1 to 12-3 are schematics of transmission formats of a pilot signal, when it is assumed that a multi-carrier transmission such as Orthogonal Frequency Division Multiplexing (OFDM) and Orthogonal Frequency Division Multiple Access (OFDMA) is used. A pilot signal is transmitted from the terminal to the base station in the uplink (upward direction), and from the base station to the terminal in the downlink. As shown in Figs. 12-1 to 12-3, in a frame of the TDD system, pilot signals can be transmitted in the uplink and the downlink in a short period of time, by transmitting a pilot signal by using symbols immediately before and after the uplink and the downlink are switched. As a result, the change in the channel generated while the pilot signals are transmitted in the uplink and the downlink, can be suppressed to an extremely small amount.

In the fourth to the sixth embodiments, a pilot signal is transmitted in the uplink, and then transmitted in the downlink. It has already been described that, in the fourth and the sixth embodiments, the procedure (4-1) and the procedure (4-2), and the procedure (6-1) and the procedure (6-2) may be switched, respectively. In other words, in the embodiments, a pilot signal may be transmitted in the downlink first, and then transmitted in the uplink. In this case, the change in the channel can be suppressed to a very small amount, by transmitting the pilot signals in the downlink and the uplink, using a symbol immediately before and a symbol immediately after the downlink to the uplink is switched.

If the traveling speed of the terminal is slow, the variation of the channel is small, if the pilot signals are transmitted in the successive uplink and downlink slots, instead of using the symbols immediately before and after the uplink and the downlink are switched. Accordingly, as shown in Fig. 12-2, the pilot signals may be transmitted in the uplink and the downlink, at an appropriate position where the successive uplink and downlink are given.

In the OFDM and OFDMA, the length of a time symbol may be changed for each symbol. Accordingly, to transmit pilots in the uplink and the downlink in a shorter period of time, as shown in Fig. 12-3, the pilot signals are transmitted, by shortening the duration of the symbols immediately before and after the uplink and the downlink are switched. The present configuration is particularly advantageous when the traveling speed of the terminal is fast, because the channel variation is suppressed to the minimum during the pilot transmission in the uplink and the downlink.

As shown in Fig. 12-4, even if only one symbol immediately before or immediately after the uplink and the downlink are switched is used, the channel variation can be reduced to be less than in pilot signal transmission without using both symbols immediately before and immediately after the links that are switched.

Eighth A Embodiment.

An eighth A embodiment will now be described. In the present embodiment, a transmission method of a pilot signal different from the transmission method of the pilot signal according to the seventh embodiment will be described. The structures of the terminal k and the base station according to the present embodiment are the same as those in the fourth embodiment.

In the uplink and downlink pilot transmissions according to the fourth to the sixth embodiments, the channel in the same pathway is required to have a small variation. If the carrier frequencies of the base station and the terminal can be regarded as the same, channels in the different pathways may be measured in the different environments. An environment where the carrier frequencies of the base station and the terminal are the same is achieved, by using a highly accurate frequency oscillator such as a rubidium oscillator, or by performing an ultra accurate carrier frequency control, which will be described in the embodiment below. In this case, to obtain $u_{k,m}$ that satisfies Equations (2) and (3), the difference between the uplink and downlink channels between the base station and the antenna m of the terminal k needs to be reduced. However, a channel between the base station and the antenna m of the terminal k, and a channel between the base station and an antenna m+1 of the terminal k (such as a channel between the base station and the antenna 1, and a channel between the base station and the antenna 2) may be measured at the completely different times and frequencies. This is because Equations (2) and (3) are individually defined for each pathway.

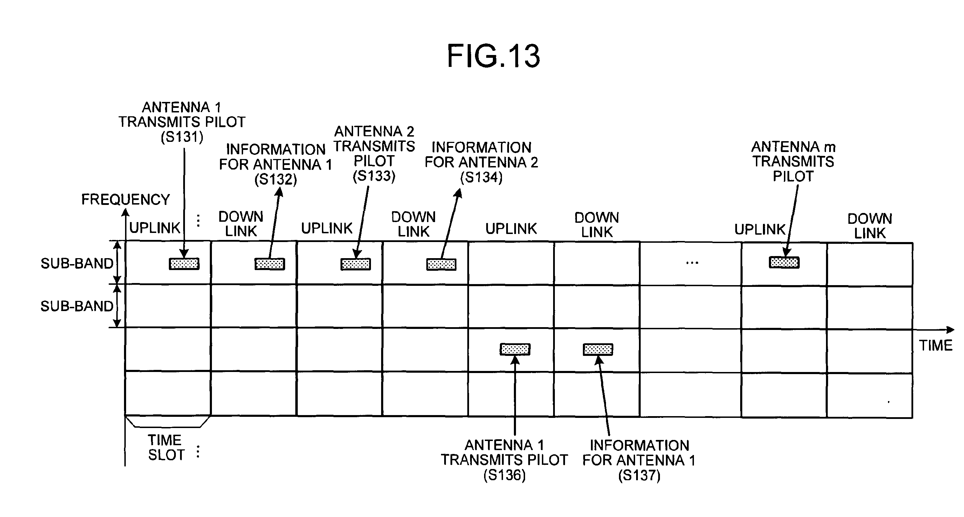

Accordingly, as shown in Fig. 13, calibration can also be performed by transmitting a pilot signal in the uplink in a domain where calibration is to be performed at different times and frequencies for each antenna.

In an example shown in Fig. 13, the terminal k transmits a pilot signal from the antenna 1 in the uplink (Step S131), and the base station notifies the terminal k of information required for performing calibration (amplitude and phase information or pilot signal) on the antenna 1 in the next downlink (Step S132). Based on the result, the terminal k updates the correction coefficient $u_{k,1}$ of the antenna 1. The terminal k also individually calibrates the other antenna (in this case, antenna 2) in the next time slot (Steps S133 and S134). In this manner, calibration may be performed on each of the antennas in different time slots.

Similarly, as shown at Steps S136 and S137, calibration may be performed in different frequency bands. In general, analog characteristics have uniform characteristics in a transmission bandwidth within a certain area of a wireless system. Accordingly, even if calibration is performed on each antenna at different frequencies in the system, it is possible similarly to compensate the difference in analog characteristics between the transmission and the reception.

When calibrations are performed continuously at different times and frequencies, the order of the antennas to perform calibration need not be fixed. For example, the terminal can select one antenna at random in each time slot, and perform calibration on the antenna by transmitting a specific pilot signal pattern from the selected antenna. As described in the latter part of the sixth embodiment, even if the base station cannot identify from which antenna of which terminal the pilot signal is transmitted, the base station can notify the information required for calibration in the downlink, by corresponding to the pilot signal pattern. Accordingly, even if the pilot signals are transmitted from the antenna selected at random for each time slot, the terminal can receive appropriate information on calibration in the downlink, and determine a correction coefficient for the selected antenna.

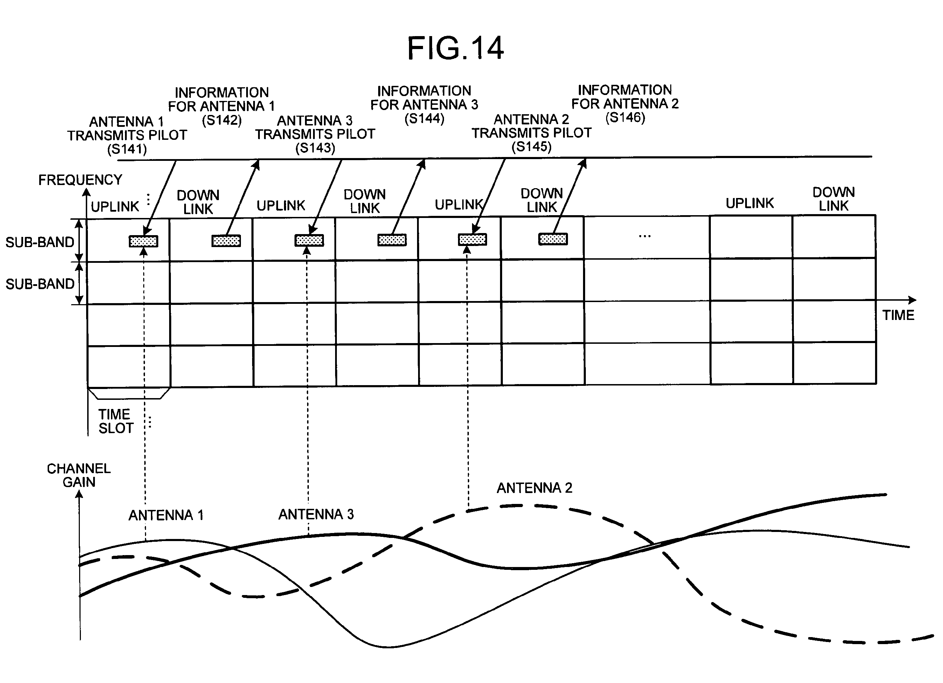

As shown in Fig. 14, the terminal can also measure the channel state of each antenna from the downlink pilot signal, and perform calibration on the antenna having a good channel state in the next time slot. In this case, if the pilot signal is transmitted from the selected antenna, the good channel can be obtained. Accordingly, the base station can receive the pilot signal with strong power. As a result, the channel measurement can be performed at high accuracy. In an example shown in Fig. 14, the antenna 1 with a high channel gain performs calibration at first (Steps S141 and S142), and the antenna 3 with a high channel gain then performs calibration in the next time slot (Steps S143 and S144). In a further next time slot, the antenna 2 performs calibration (Steps S145 and S146). As the accuracy of channel measurement is improved, the correction coefficient for calibration can be set more correctly. Accordingly, it is possible to set a highly accurate correction coefficient by selecting an antenna having a good channel state, and performing calibration at the time slot.

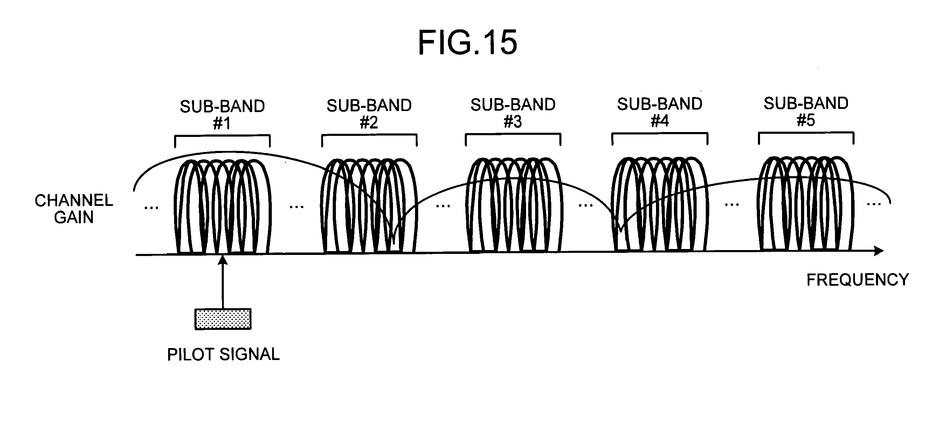

As shown in Fig. 15, the terminal can also obtain a plurality of uplink sub-bands (sub-frequency bands) #1 to #5 for transmitting pilots, and transmit a pilot signal for channel measurement in the sub-band with a good downlink channel state (propagation state). In this case, various methods to determine an antenna for transmitting pilot signals (to perform calibration) are conceivable, and any of these methods may be used. The base station identifies whether a pilot signal has arrived in each sub-band, by detecting the reception amplitude, and executes calibration procedure in the sub-band in which the arrival of the pilot signal is detected. More specifically, there is a method of notifying information required for calibration in the downlink, in the sub-band that has the reception amplitude equal to or more than a threshold, and the like. In this case also, a highly accurate correction coefficient can be set, because the terminal selects a sub-band having a good channel state, and performs calibration at the time slot.

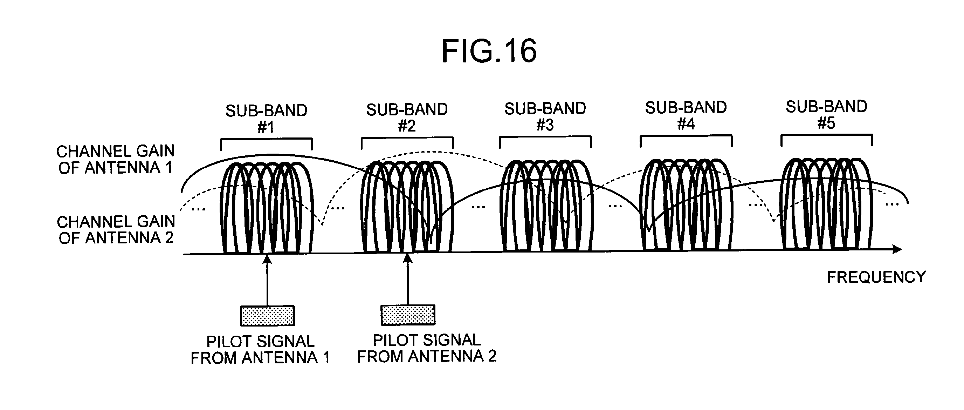

As shown in Fig. 16, the terminal with a plurality of antennas may obtain a plurality of uplink sub-bands (sub-frequency bands) #1 to #5 for transmitting pilots in advance, and the plurality of antennas may alternately transmit pilot signals in the downlink sub-bands having good channel states.

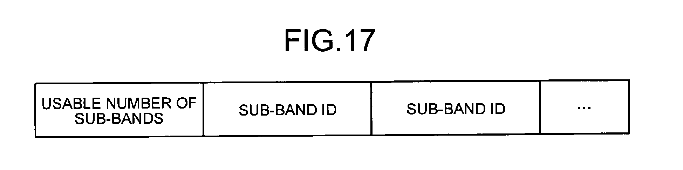

When pilot signals are transmitted in such a manner, the base station and the terminal recognize in advance usable sub-bands therebetween. For example, by notifying the usable number of sub-bands and sub-band IDs in a format shown in Fig. 17 from the base station to the terminal in advance, the usable sub-bands are recognized by both the base station and the terminal. The terminal selects a sub-band having a good propagation state from the usable sub-bands, and transmits pilot signals. There are various methods to select sub-bands having a good propagation state. For example, the channel states in the downlink are measured by using the antennas, and the optimum sub-band for the antenna 1 is selected, and then the optimum sub-band for the antenna 2 may be selected from the remaining sub-bands.

In this manner, the antenna m (m=1, ..., M) sequentially selects a sub-band suitable for transmitting pilots. The sub-band selecting method is an example, and the selecting method is not limited thereto. There are a number of methods to schedule the correspondence between the antenna and the sub-band to be used. The base station may simply corresponds to the arrived pilot pattern, and notify the terminal of the information required for calibration, even if the base station does not know which sub-band of which antenna transmits the pilot signal. In other words, in the base station, the arrival of the pilot signal is detected from the reception amplitude in each sub-band, and the sub-band at which the pilot signal has arrived notifies the terminal of the amplitude and phase information required for calibration.

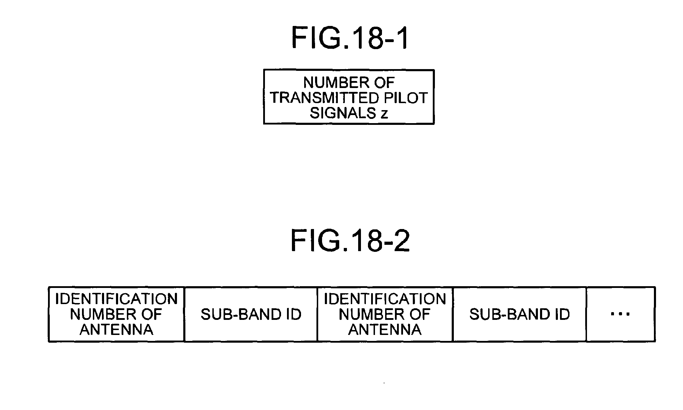

If the base station recognizes the number of pilot signals to be transmitted Z in advance, there is also a method of determining the arrival of the pilot signal at the Z pieces of sub-bands with a large reception amplitude, by calculating the reception amplitude of the pilot signal for all the sub-bands to which the pilot signals may be transmitted. To let the base station recognize the number of pilot signals to be transmitted Z in advance, for example, the terminal may also notify the base station of the number of pilot signals to be transmitted Z , by using a format shown in Fig. 18-1. Alternatively, the base station may indicate the number of pilot signals to be transmitted to the terminal in advance, by using the format shown in Fig. 18-1. In this manner, the highly accurate channel measurement and the setting of correction coefficient are possible, because the antennas alternately select and transmit a sub-band having a good propagation state.

As shown in Fig. 18-2, a method of identifying a sub-band to which each antenna of the base station transmits a pilot signal, by making each antenna notify a sub-band ID to transmit a pilot signal to the base station from the terminal as a control signal may be used.

As described above, to execute calibration, the terminal can perform calibration by selecting an antenna for each time or frequency. The terminal can also determine an antenna to be selected, based on the channel state. In addition, the terminal can transmit a pilot signal for channel measurement used for calibration, by selecting a sub-band having a good propagation state from a plurality of sub-bands. The terminal can also transmit a pilot signal for channel measurement used for calibration, by alternately selecting sub-bands having good propagation states, for a plurality of antennas.

Eighth B Embodiment.

An eighth B embodiment will now be described. In the present embodiment, a transmission method of a pilot signal different from the transmission method of the pilot signal according to the eighth A embodiment will be described. The structures of the terminal k and the base station according to the present embodiment are the same as those in the fourth embodiment.

Unlike the eighth A embodiment, if a channel is measured at different times, while the carrier frequencies between the base station and the terminal are different, the phase rotation corresponding to the carrier frequency offset is added to the channel measurement. As a result, the channel measurement and the correction value $u_{k,m}$ calculated based on the channel measurement include different phase offsets, corresponding to the time. Accordingly, if the channel is measured at different times for each antenna, the relative phase relationship between the antennas is not corrected appropriately.

To prevent such a phenomenon, it is preferable to measure the channel corresponding to all the antennas of the terminal at the same time. If the channel is measured at the same time, the channel measurements corresponding to all the antennas include the same phase offset. Accordingly, the relative relationship of the correction value $u_{k,m}$ between the antennas will not be affected at all. In a real wireless device, in addition to the frequency offset, a phase noise that changes momentarily may sometimes be included, but because the simultaneously measured channel measurements are all affected by the same phase error, there is an advantage that the relative relationship of the correction value $u_{k,m}$ between the antennas will not be affected at all.

To measure such channels corresponding to all the antennas at the same time, the pilot signals perpendicular to each other may be code multiplexed in the same time-frequency domain, towards the base station from the antennas of the terminal. By using the present configuration, the channels can be measured at the same time by using the perpendicular pilot signals, without interfering with each other. It will not be influenced by frequency offset, either.

When the antennas transmit pilot signals by using different sub-bands or frequencies in the OFDM, if the transmission time is the same, it means that they are driven by the same oscillator. Accordingly, the influence on the frequency offset and the phase noise are the same. Consequently, if the transmission time of the pilot signals is the same in the eighth A embodiment, even if the antennas transmit pilot signals by using the different frequencies, the influence on the carrier frequency and the phase errors between the base station and the terminal can be advantageously eliminated. In this manner, if the channel measurements of the antennas are performed at the same time, the influence on the carrier frequency and phase errors can be particularly and advantageously suppressed.

Eighth C Embodiment.

An eighth C embodiment will now be described. In the present embodiment, a transmission method of a pilot signal different from the transmission methods of a pilot signal according to the eighth A and the eighth B embodiments will be described. The structures of the terminal k and the base station according to the present embodiment are the same as those in the fourth embodiment.

As described in the eighth B embodiment, if the channels are measured at different times, while the carrier frequencies between the base station and the terminal are different, the phase rotation corresponding to the carrier frequency offset is added to the channel measurement. As a result, if the channel corresponding to the different antenna is measured at different times, the correction values $u_{k,m}$ include different phase offsets based on the channel measurement time, and the relative phase relationship between the antennas is not appropriately corrected. However, as explained in the eighth B embodiment, if the transmission time of the pilot signals is the same, even if the antennas transmit pilot signals by using the different frequencies, the influence of the carrier frequencies between the base station and the terminal can be eliminated.

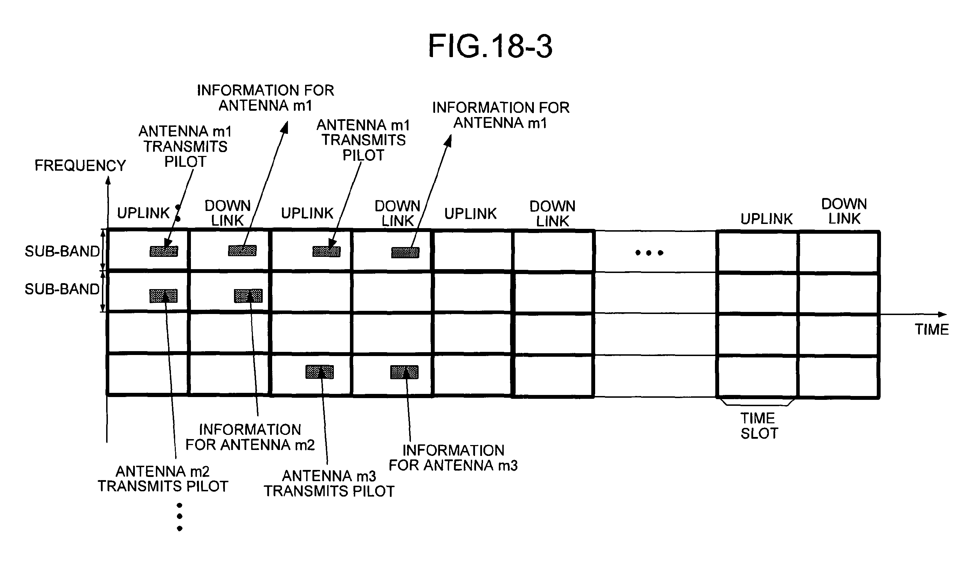

A method that has developed the relationship will now be described. As shown in Fig. 18-3, pilot signals are transmitted from two antennas (such as antennas m1 and m2) of the terminal at a predetermined time t, and the channel is measured at the base station. Correction values $u_{k,m1}(t)$ and $u_{k,m2}(t)$ for the antennas m1 and m2 are calculated, after the channel is also measured in the downlink. Then at a different time t', by using the similar procedure, correction values $u_{k,m1}(t')$ and $u_{k,m3}(t')$ corresponding to the antennas m1 and m3 are calculated. In this case, due to the influence of the frequency offset, an unknown phase rotation occurs between $u_{k,m1}(t)$ and $u_{k,m1}(t')$. However, the ratio between $u_{k,m1}(t)$ and $u_{k,m2}(t)$ or the ratio between $u_{k,mq}(t')$ and $u_{k,m3}(t')$ are constant regardless of time. This is because $u_{k,m1}(t)$ and $u_{k,m2}(t)$ or $u_{k,m1}(t')$ and $u_{k,m3}(t')$ receive the same frequency offset and the phase error.

By using the relationship, as shown in Fig. 18-3, an operation of executing calibration on at least two or more antennas of the terminal at a predetermined time, and deriving a correction coefficient between the obtained two antennas is repeated for every two antennas. If the procedure is repeated at different times by selecting two or more antennas, the ratios of the correction coefficients corresponding to all the antennas can be obtained. More specifically, the calibration on the antennas 1 and 2 may be performed at the same time t by using the channel measurement, and the calibration on the antennas 2 and 3 may be performed at the different time t' by using the channel measurement. As a result, the ratio of the correction coefficients of the antennas 1 and 2 can be calculated from the calibration performed at the time t, and the ratio of the correction coefficients between the antennas 2 and 3 can be calculated from the calibration performed at the time t'. Accordingly, the ratio of the correction coefficients among the antennas 1, 2, and 3 can be derived.

Based on the present embodiment, even if calibration is performed at different times on different antennas, the correction coefficient is not affected by the frequency offset. In this manner, by calculating the ratio of the correction coefficients between two or more antennas at a predetermined time, and repeating the operation at different times, the calibration can be performed by selecting an antenna having a good propagation state in the time domain, without being affected by the frequency offset.

Eighth D Embodiment.

In the present embodiment, a frequency selective calibration in a broadband OFMDA/TDD system will be described. The structures of the terminal k and the base station according to the present embodiment are the same as those in the fourth embodiment.

In the broadband OFDMA/TDD, the analog characteristics $T_{k,m}$, $R_{k,m}$, $T_{BS,n}$, and $R_{BS,n}$ change gradually based on the frequency of a signal. In this case, to satisfy the reciprocity condition by a subcarrier corresponding to the frequency f, a correction coefficient $u_{k,m}(f)$ (m=1, ..., M) shown in Equation (11-7) needs to be obtained:

[Expression 8-7]

$$u_{k,m}(f) = \frac{a_{k,m}^{(DL)}(f)}{a'^{(UL)}_{k,m}(f)} = \left| \frac{T_{BS,n}(f)/R_{BS,n}(f)}{T_{k,m}(f)/R_{k,m}(f)} \right| \cdot e^{j\theta(f)} \cdot \xi(t)$$

$$\theta(f) = \angle T_{BS,n}(f) - \angle R_{BS,n}(f) - \angle T_{k,m}(f) + \angle R_{k,m}(f) \quad (11-7)$$

$$\xi(t) = \frac{e^{j2\pi(f_0-f_1)t+\phi_{DL}}}{e^{j2\pi(f_1-f_0')t+\phi_{UL}}}$$

In Equation (11-7), Zx is a phase of a complex number x, and $a_{k,m}^{(DL)}(f)$ $a'^{(UL)}_{k,m}(f)$, $T_{k,m}(f)$, $R_{k,m}(f)$, $T_{BS,n}(f)$, and $R_{BS}(f)$ are $a_{k,m}^{(DL)}$, $a'^{(DL)}_{k,m}$, $T_{k,m}$, $R_{k,m}$, $T_{BS,n}$, and $R_{BS,n}$ in the frequency f. $\zeta(t)$ does not include f and becomes the same in all the subcarriers. In Equation (11-7), the fact that $a'^{(UL)}_{k,m}(f)=h_{k,m}^{(UL)}\exp\{j2\pi(f_{MT}-f_{BS}')t+\phi UL\}$ and $a_{k,m}^{(DL)}=u_{BS,m}h_{k,m}^{(DL)}\exp\{j2\pi(f_{BS}-f_{MT})t+\phi_{DL}\}$ are satisfied in the third B embodiment is used.

The analog characteristics $T_{k,m}(f)$, $R_{k,m}(f)$, $T_{Bs,n}(f)$, and $R_{BS,n}(f)$ change by the carrier frequencies. However, if a fractional bandwidth (=transmission bandwidth/carrier frequency) is small, the analog characteristics normally change very slowly, corresponding to the frequency. In this case, the analog path delay becomes a dominant factor for changing the characteristics in the frequency domain. Accordingly, only the phase $\theta(f)$ changes in proportion to the frequency f, while the amplitude ratio $|(T_{Bs,n}(f)/R_{Bs,n}(f))/(T_{k,m}(f)/R_{k,m}(f))|$ remains substantially constant. If an RF path length difference of the transmission/reception systems of the base station and the terminal is small, the phase $\theta(f)$ changes quite moderately, and $u_{k,m}(f)$ in Equation (11-7) has a correlation in broadband. In this case, even if calibration is not performed on all the frequencies, $u_{k,m}(f)$ in the entire transmission bandwidth can be determined, by performing calibration by selecting discrete L pieces of frequencies $f_m^{(l)}$ (l=1, ..., L), and interpolating by using the obtained $u_{k,m}(f_m^{(l)})$ (l=1, ..., L).

Based on the new concept, calibration for the OFDMA/TDD will now be disclosed.

[Calibration for OFDMA/TDD]

(8D-1) L pieces of frequencies $f_m^{(1)}$, $f_m^{(2)}$, ..., $f_m^{(L)}$ ($fm^{(1)}<f_m^{(1+1)}$) used for calibration are selected for each of the antennas m (=1, ..., M).

(8D-2) The terminal k executes relative calibration at a frequency selected for each antenna, and obtains correction coefficients $u_{k,m}(f_m^{(1)})$, $u_{k,m}(f_m^{(2)})$, ..., $u_{k,m}(f_m^{(L)})$ (m=1, ..., M) for the antennas m.

(8D-3) By interpolating the correction coefficients in the frequency domain, $u_{k,m}(f_m)$ in the entire transmission bandwidth is determined.

(8D-4) The procedures (8D-1) to (8D-3) are repeated for T times at different times in which the analog characteristics can be regarded as the same, and improve the accuracy of the correction coefficient, by using T pieces of correction coefficients $u_{k,m}(f_m)$.

With the above control, the state in which channel reciprocity can be used in the entire transmission bandwidth can be maintained. The details of the procedures (8D-1), (8D-3), and (8D-4) will further be explained below.

In the procedure (8D-1), examples of two methods of selecting the frequency $f_m^{(1)}$ are shown below as a CAL1 and a CAL2.

<Selection Method (CAL1)>

In the selection method (CAL1), equally spaced frequencies $f_m^{(l)}$ (l=1, ..., L) are selected for each antenna m, based on Equation (11-8):

$$f_m^{(1)} = F_0 + (1-1)MB + (m-1)B \quad (1=1, \ldots, L) \qquad (11-8)$$

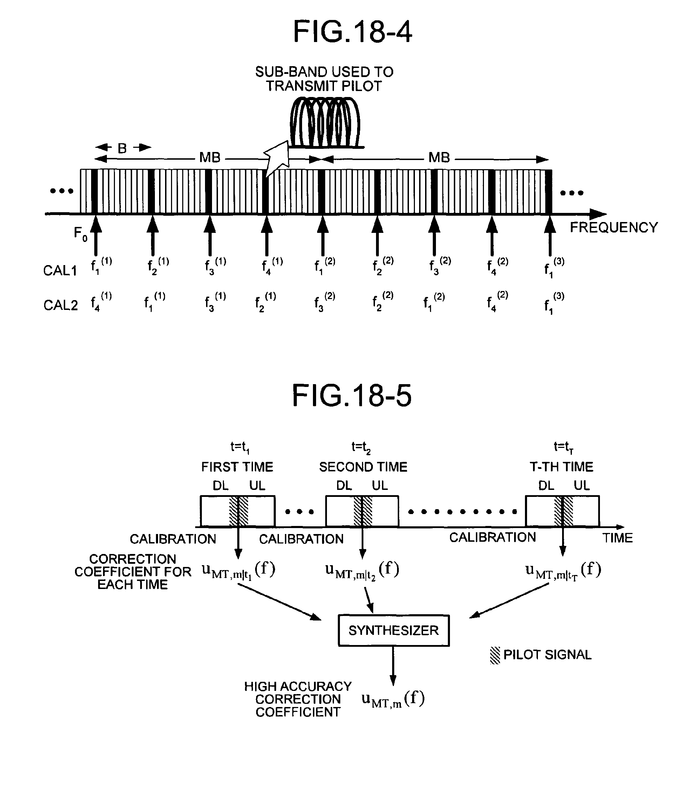

In Equation (11-8), $F_0$ is a frequency at which the antenna m=1 starts calibration, and B is a reference bandwidth. Fig. 18-4 is a frequency of OFDMA used in the CAL1. L is set so as to cover the transmission bandwidth.

<Selection Method (CAL2)>

In the CAL1, the frequency in a bad fading state may deteriorate the accuracy of the channel measurement. Accordingly, in the CAL2, to improve the propagation state at each antenna, one frequency from M pieces of frequencies shown in Equation (11-9) is allocated to each of $f_1^{(l)}$, $f_2^{(l)}$, ..., $f_M^{(l)}$:

$$C^{(1)} = \{ F_0 + (1-1)MB, \ F_0 + (1-1)MB + B, \ \ldots, \ F_0 + (1+1)MB + (M-1)B \}$$

$$(11-9)$$

More specifically, the terminal observes a channel $a_{k,m}^{(DL)}(f)$ of each antenna by the entire frequencies f included in $C^{(l)}$, by using a downlink common pilot signal. Among combinations of M! ways to allocate M pieces of frequencies $f \in C^{(l)}$ to $f_1^{(l)}$, $f_2^{(l)}$, ..., $f_M^{(l)}$, a combination by which evaluation functions $J_1$, $J_2$ or $J_3$ of Equation (11-10) become maximum is selected:

[Expression 8-8]

$$J_1 = \sum_{m=1}^{M} \left| \log_{10}(a_{k,m}^{(DL)}(f_m^{(1)})) \right|$$

$$J_2 = \sum_{m=1}^{M} \left| a_{k,m}^{(DL)}(f_m^{(1)}) \right| \qquad (11-10)$$

$$J_3 = \sum_{m=1}^{M} \left| a_{k,m}^{(DL)}(f_m^{(1)}) \right|^2$$

Because the evaluation functions $J_1$, $J_2$ and $J_3$ give a high evaluation when the amplitude $|a_{k,m}^{(DL)}(f_m^{(l)})|$ is high, a combination of frequencies with a good propagation environment is selected for each antenna. The three types of evaluation functions $J_1$, $J_2$ and $J_3$ are shown here, but various other evaluation functions J that give a high evaluation when the amplitude $|a_{k,m}^{(DL)}(f_m^{(l)})|$ is high are conceivable. In this manner, by implementing the evaluation function corresponding to the amplitude, it is possible to perform calibration by selecting a frequency having a good channel.

In the procedure (8D-3), specific interpolation methods in the following three frequency domains will be described.

<Interpolation Method I>

By using Equation (11-11), a linear interpolation is performed on a complex number:

[Expression 8-9]

$$u_{k,m}(f) = \frac{(f_m^{(1+1)} - f)\, u_{k,m}(f_m^{(1)}) + (f - f_m^{(1)})\, u_{k,m}(f_m^{(1+1)})}{f_m^{(1+1)} - f_m^{(1)}} \qquad (11-11)$$

Here, l is given by Equation (11-12).

[Expression 8-10]

$$1 = \begin{cases} 1 & \text{if} & f \le f_m^{(2)} \\ d & \text{if} & f_m^{(d)} \le f \le f_m^{(d+1)} \\ L-1 & \text{if} & f_m^{(L-1)} \le f \end{cases} \qquad (11-12)$$

<Interpolation Method II>

By using Equation (11-13), a linear interpolation is performed on a phase:

[Expression 8-11]

$$u_{k,m}(f) = u_{k,m}(f_m^{(1)}) \left( \frac{u_{k,m}(f_m^{(1+1)})}{u_{k,m}(f_m^{(1)})} \right)^{\frac{f - f_m^{(1)}}{f_m^{(1+1)} - f_m^{(1)}}} \qquad (11-13)$$

Here, l is given by Equation (11-12).

<Interpolation Method III>

A linear phase estimation based on a minimum square error reference is performed. More specifically, in the procedure (8D-2), on the assumption that it is $\angle u_{k,m}(f_m) = \alpha f + \beta$, when $\angle u_{k,m}(f_m^{(l)})$, ..., $\angle u_{k,m}(f_m^{(L)})$ ($|\angle u_{k,m}(f_m^{(l-1)}) - \angle u_{k,m}(f_m^{(l)})| < \pi$, l=2, ..., L) is obtained, constants $\alpha$ and $\beta$ are determined based on the minimum square error reference. A correction coefficient in the entire frequency f (including $f_m^{(l)}$) is set to $u_{k,m}(f) = \exp\{j(\alpha f + \beta)\}$.

When the interpolation such as this is performed, it is possible to calculate a correction coefficient $u_{k,m}(f_m^{(l)})$ by performing calibration on a frequency having a good channel, and smoothly obtain correction coefficients at other frequencies, by interpolating the correction coefficients in the frequency domains. In this manner, in the broadband OFDMA/TDD system, it is possible to determine a correction coefficient used for calibration that changes based on the frequency. By selecting a frequency to perform calibration and by interpolating the correction coefficient in the frequency domains, it is possible to efficiently determine the correction coefficient that changes based on the frequency in the entire band.

The details of the control performed in the procedure (8D-4) will now be described. Fig. 18-5 is a schematic of an arrangement of pilot signals transmitted in the uplink and the downlink in the present control, and a mode to improve the accuracy of a correction coefficient by using the arrangement. In the present control, pilot signals are transmitted alternately in the uplink and the downlink between the base station and the terminal, at a plurality (T) of different times t, and the accuracy of the correction coefficient is improved by using a correction coefficient $u_{k,m|t}(f_m)$ (t=$t_1$, $t_2$, ..., $t_T$) obtained at an individual time. In this case, propagation states at times t=$t_1$, $t_2$, ..., $t_T$ may be different from one another. This is because a correction coefficient is individually calculated at each time.

To perform the control, the time to transmit pilots is notified, as control information, from one to the other between the base station and the terminal in advance. For example, there is a method of notifying corresponding control bits to the other, by determining in advance a time pattern used to transmit pilot signals as standards as follows.

| Control Bit | Time Pattern |
|---|---|
| 00 | $t_{i+1}-t_i=5$ milliseconds (i=1, 2, ...) |
| 01 | $t_{i+1}-t_i=10$ milliseconds (i=1, 2, ...) |
| 10 | $t_{i+1}-t_i=50$ milliseconds (i=1, 2, ...) |
| 11 | $t_{i+1}-t_i=100$ milliseconds (i=1, 2, ...) |

Here, pilot signals are transmitted at a predetermined unit of time. However, the pilot signals need not be transmitted at a predetermined time interval. The transmission start time or a frame of the first pilot signal is notified from one to the other between the base station and the terminal, and the number of transmission times (T) of the pilot signals are also notified as a control signal. By notifying the control signal in this manner, the base station and the terminal can mutually recognize the timing to transmit pilot signals.

Based on the present control, a correction coefficient calculated by transmitting pilot signals in the uplink and the downlink at the T number of times, and obtained independently for T times (for example, at a cycle of 10 milliseconds (ms) or 100 ms) is set as $u_{k,m|t}(f_m)$ (t=t$_1$, t$_2$, ...t$_T$). In this case, it is possible to improve the accuracy of the correction coefficient by using Equation (11-14) or (11-15) at the terminal:

[Expression 8-12]

$$\sum_{t=1}^{T} (U_{k|t}(f)^H U_{k|T}(f)) U_{k|t}(f) \rightarrow U_k(f) \qquad (11\text{-}14)$$

Or,
[0191]

[Expression 8-13]

$$eig\left(\frac{1}{T} \sum_{t=1}^{T} U_{k|t}(f) U_{k|t}(f)^H\right) \rightarrow U_k(f) \qquad (11\text{-}15)$$

In Equations (11-14) and (11-15), H is a complex conjugate transpose, eig(X) is an eigenvector corresponding to the maximum eigenvalue of a matrix X. It is also, $u_{k|t}(f)=[u_{k,1|t}(f), ..., u_{k,M|t}(f)]^T$ and $u_k(f)=[u_{k,1}(f), ..., u_{k,M}(f)]^T$. In the vector $u_{k|t}(f)$, a phase rotation due to the carrier frequency difference between the transmitter and the receiver occurs at the different t. However, the relative phase relationship of the elements in the vector does not change, and the accuracy can be improved by using the relationship. In this manner, it is possible to calculate a correction coefficient with a higher accuracy, by performing independent calibration for a number of times, and appropriately combining the correction coefficients obtained at each time.

In the conventional technology, a method of improving the accuracy of correcting calibration, based on transmitting pilots at a plurality of times, is not described. The reason for this is that, at $u_{k|t}(f)$, a phase rotation due to the carrier frequency difference between the transmitter and the receiver occurs at different t, and it was difficult to improve accuracy, by using the correction coefficients at different times. On the contrary, the present embodiment focuses on the fact that the relative phase relationship of elements in the vector does not change, and shows that the accuracy of the correction coefficient can be improved by Equation (11-14) and Equation (11-15) using the principle. With the present configuration, the correction coefficient can be improved, based on the channel measurement at a plurality of times. Particularly, in an environment where a Signal to Noise Power Ratio (SNR) between the base station and the terminal is low, there may be cases where the accuracy of the correction coefficient is not sufficient if the channel measurement is performed only once. However, as shown in the present embodiment, the accuracy of the correction coefficient can be improved by performing channel measurement at a plurality of times. To improve accuracy in this manner, a control signal used to transmit pilot signals at a plurality of times is placed anew for calibration between the base station and the terminal. Accordingly, the accuracy of calibration can be improved by the present control signal. Consequently, a format used to notify the control signal used to transmit pilot signals at a plurality of times, and the number of transmission times T is unique to the present invention.

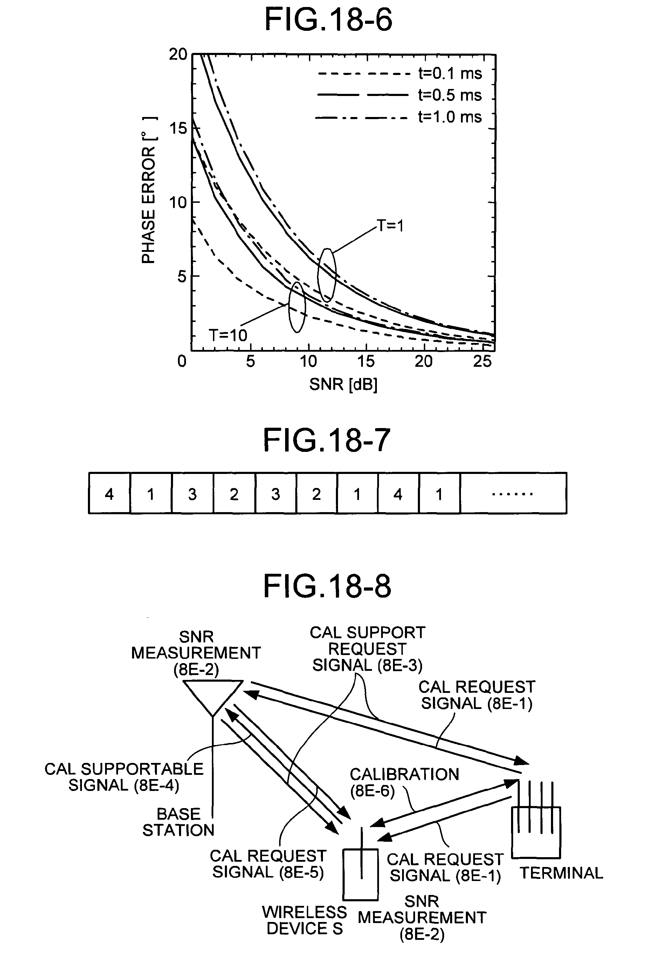

Fig. 18-6 is a schematic of an example of performance evaluation results when calibration is performed by channel measurement at a plurality of times (T=10), and when calibration is performed by performing channel measurement once (T=1) in the OFDMA/TDD. In the diagram, $\tau$ is a delay spread of a channel, the SNR is a Signal to Noise Power Ratio for one symbol, and a vertical axis is a phase error between antennas after calibration is performed (if it is 0, the phases match exactly and ideal reciprocity can be used). As shown in the diagram, the calibration accuracy can be improved greatly, by performing calibration based on the channel measurement at a plurality of times.

When calibration is performed by using the frequency selected by the present embodiment, the base station sometimes requires to identify which antenna is using the frequency. In this case, the terminal notifies the base station of an antenna number that transmits pilot signal at each frequency in advance. Fig. 18-7 is a schematic of an example of the notification method, and a series of numbers of the antennas that transmit pilots at sub-bands is notified in a sequence of sub-band I=1, 2, 3, ... as data, from the terminal to the base station. Here, the series of antenna numbers in Fig. 18-7 indicates the antenna number selected in a sequence of sub-band I=1, 2, 3, ..., in the CAL2 shown in Fig. 18-4. In this manner, effective notification is made possible, by transmitting the antenna number to perform calibration in a format corresponding to each of the sub-bands.

Eighth E Embodiment.

In the present embodiment, cooperative antenna array calibration control to perform highly accurate calibration for a terminal in which the Signal to Noise Power Ratio (SNR) is low while signals are transmitted and received to and from the base station, is disclosed. In the present embodiment, instead of the base station, neighboring wireless devices support the calibration of the terminal. As a result, even if the distance between the terminal and the base station is far, the phase correction on a plurality of antennas can smoothly be performed, by performing calibration with a wireless device at a close distance. A system control to adaptively select a wireless device that supports calibration is also described.

The methods of determining the correction coefficient $u_{k,m}$ by performing calibration have been described above. However, a phase error after the calibration is generally defined by Equation (11-16):

[Expression 8-14]

$$\Delta\phi = \left\langle \left| \angle\left(\frac{a_{k,m1}^{(UL)}(f)}{a_{k,m1}^{(DL)}(f)}\right) - \angle\left(\frac{a_{k,m2}^{(UL)}(f)}{a_{k,m2}^{(DL)}(f)}\right) \right|^2 \right\rangle^{1/2} = \left\langle \left| \angle\left(\frac{u_{k,m1}(f)\, T_{k,m1}(f)\, / R_{k,m1}(f)}{u_{k,m2}(f)\, T_{k,m2}(f)\, / R_{k,m2}(f)}\right) \right|^2 \right\rangle^{1/2}$$

$$(11-16)$$

In Equation (11-16), $<\cdot>$ indicates all the combinations of the antennas $m_1$ and $m_2$, and an average of the entire frequency bands to be calibrated. As the average SNR of the pilot signals for channel measurement is lowered between the base station and the terminal in the OFDMA/TDD, a phase error $\Delta\phi$ is increased. In particular, near a cell boundary far from the base station, many terminals suffer from propagation loss. Accordingly, calibration accuracy tends to decrease.

In the earlier embodiments, the terminal has performed calibration via the base station. However, the terminal can perform the same calibration via another wireless device S that is different from the base station. The other wireless device S may be a fixed station, a neighboring terminal, a neighboring small base station, a relay wireless device, and the like.

In this case, the wireless device S measures a channel $b'_{m|s}(f)$, by using a pilot signal transmitted from the m-th antenna of a terminal at the selected frequency f, without using $u_{k,m}(f)$ (m=1, ..., M), and transmits the channel information to the terminal. Similarly, the terminal measures a channel $b_{m|k}(f)$ by using a pilot signal transmitted from the wireless device S. The wireless device S also notifies the terminal of a measurement $b'_{m|s}(f)$, and the terminal determines a correction coefficient corresponding to the m-th antenna as $u_{k,m}(f)=b_{m|k}(f)/b_{m|s}(f)$. When this calibration is performed, the terminal can maintain the phase error $\Delta\phi$ to a small amount, via the wireless device S that can obtain a better SNR than the base station.

Accordingly, even if calibration is performed with the wireless device S, the terminal can establish the state in which the reciprocity in the uplink and the downlink can be used with the base station. In addition, if the terminal has a better SNR with the wireless device S than the base station, the phase error $\Delta\phi$ will be small. Accordingly, in particular, the calibration accuracy of the terminals placed near the cell boundary can be improved. If the terminal can maintain reciprocity with the wireless device S, the terminal can also maintain reciprocity with the base station. This is because, if Equation (11-17) is satisfied, Equation (11-18) is also satisfied.

[Expression 8-15]

$$\frac{u_{k,1}(f)\,b'_{1|S}(f)}{b_{1|k}(f)} = \frac{u_{k,2}(f)\,b'_{2|S}(f)}{b_{2|k}(f)} = \cdots = \frac{u_{k,M}(f)\,b'_{M|S}(f)}{b_{M|K}(f)} \qquad (11\text{-}17)$$

[Expression 8-16]

$$\frac{u_{k,1}(f)\,a'^{(UL)}_{k,1}(f)}{a^{(DL)}_{k,1}(f)} = \frac{u_{k,2}(f)\,a'^{(UL)}_{k,2}(f)}{a^{(DL)}_{k,2}(f)} = \cdots = \frac{u_{k,M}(f)\,a'^{(UL)}_{k,m}(f)}{a^{(DL)}_{k,M}(f)} \qquad (11\text{-}18)$$

In the present embodiment, a control method by which the terminal selects either direct calibration with the base station or cooperative calibration with a neighboring wireless device S depending on the situation, for effective wireless communication system, is disclosed. Fig. 18-8 is a schematic of an example of a calibration control according the present embodiment. In the present control, direct or cooperative calibration is adaptively performed, based on the states of the terminal and the neighboring wireless device. The control method will now be described.

[System Control for Calibration]

(8E-1) A terminal to be calibrated sends a calibration (CAL) request signal including a pilot signal to the base station from its antennas.

(8E-2) Upon receiving the CAL request signal, the base station measures an average received SNR, $\Gamma_{BS}$, of the signal. The neighboring wireless device S also receives the same CAL request signal and it also measures an average received SNR, $\Gamma_S$.

(8E-3) If $\Gamma_{BS}$ is equal to or less than a predetermined level $\Gamma_{th}$, the base station transmits a CAL support request signal, which is shown in Fig. 18-9, in the downlink. The CAL support request signal contains a bit indicting a support request and $\Gamma_{BS}$.

(8E-4) Upon receiving the support request signal, and if $\Gamma_S > \Gamma_{BS}$, the wireless device S sends a CAL supportable signal, which is shown in Fig. 18-10, to the base station. The CAL supportable signal contains a bit indicating that support is possible, a terminal ID, and $\Gamma_S$.

(8E-5) Upon receiving the CAL supportable signal, the base station specifies wireless resource (time frame and frequency to be used) to the wireless device S that has the maximum $\Gamma_S$, and requests the wireless device S to support the calibration. The wireless device S and the terminal perform calibration by using the specified wireless resource.

(8E-6) In the procedure (8E-5), if the base station does not receive the CAL support signal, calibration is performed between the base station and the terminal.

The wireless device S is a device that can support calibration, although it does not transmit a signal in the time frame. For example, the wireless device S can be a neighboring terminal that intermittently transmits data, a relay wireless device, a small-scale base station, and the like. In (8E-5), calibration can be performed by channel measurement, by using a wireless resource either in the uplink or in the downlink. However, the wireless device S measures SNR $\Gamma_S$ in the uplink. Accordingly, if the terminal and the wireless device S perform bidirectional channel measurement by using the uplink wireless resource, the same channel state as the SNR $\Gamma_S$ measured by the wireless device S in the uplink can be advantageously obtained. Consequently, in (8E-5), the channel measurement can be advantageously performed in a stable channel state, because the terminal and the wireless device S perform bidirectional channel measurement in the uplink.

For an application of the OFDMA system, a timing control is performed in the uplink, so that the arrival times of signals transmitted from the different terminals match in the base station. In this case, it is preferable that the terminal and the wireless device S maintain and control the timing with the base station, so as not to interfere with other communications during calibration. In this case, because the wireless device S is placed differently from the base station, the wireless device S may be interfered with by an uplink signal that uses a different frequency band, due to the timing shift. The wireless device S may be interfered with by other cells. However, the measured SNR $\Gamma_S$ includes the influence, enabling to obtain the SNR $\Gamma_S$ during calibration. Because the terminal is generally placed close to the wireless device S, the similar SNR to that of the wireless device S can be obtained. In addition, in the control performed in the present embodiment, direct or cooperative calibration can be appropriately selected, based on the positions of the terminal and the wireless device S.

Fig. 18-11 is a schematic of results in which phase errors $\Delta\phi$ obtained by performing the method according to the present embodiment and the method of constantly performing calibration with the base station, when a terminal to be calibrated is placed at a distance d from the base station in a cell with radius D, are evaluated.

It is assumed that ten other wireless devices S on an average are present in an area with radius D, based on Poisson occurrence. As shown in this figure, in the method by which calibration is constantly performed with the base station, the average SNR drops as the terminal moves away from the base station, thereby degrading the accuracy of calibration. Alternatively, in the method of the present embodiment, calibration can be performed at high average received SNR, via the wireless device S placed near the terminal. As a result, regardless of the position of the terminal, the phase error can be made equal to or less than 5 degrees, thereby significantly improving the accuracy of calibration.

Ninth Embodiment.

A ninth embodiment will now be described. In the present embodiment, a method of performing calibration by using a signal with which the terminal gains access via a random access channel, will be explained. The structures of the terminal k and the base station according to the present embodiment are the same as those in the fourth embodiment.

The terminal uses a random access channel such as a slotted ALOHA, at the initial access or on accessing the base station without reserving wireless resources. In this case, because the access has not yet completed, calibration is often not performed by the terminal. In the present embodiment, a method of efficiently performing wireless control in which the terminal simultaneously performs random access and calibration at such an event will be explained.

Fig. 19 is a schematic of an example of a signal format (uplink random access signal format) used to access a random access channel. As shown in Fig. 19, the signal (uplink random access signal) transmitted from the terminal includes a pilot signal. Upon receiving a signal transmitted on a random access channel from the terminal, the base station measures a channel gain $a'_{k,m}{}^{(UL)}=h_{k,m}{}^{(UL)}$ by using the pilot signal included in the received signal.

The base station then notifies a process that the terminal should perform next, based on the reception state of the signal transmitted from the terminal. There can be various notification contents, but for example, at the initial access, the contents may be instruction to notify the base station of the detailed terminal information, or allocation of the wireless resources to be communicated next. Fig. 20 is a schematic of an example of a signal format (downlink notification signal format) that can be notified to the terminal from the base station. As shown in Fig. 20, the downlink notification signal includes a pilot signal, and a field (field indicated as notification information) used to carry other information. In the present embodiment, calibration is performed at the same time, by using the notification signal transmitted to the terminal from the base station.

For example, if calibration is performed using the procedure described in the fourth embodiment, the base station transmits a pilot signal $u_{BS}S(q)$ weighted by $U_{BS}$, as a pilot signal for the downlink notification signal. In this case, feedback information $a'_{k,m}{}^{(UL)}=h_{k,m}{}^{(UL)}$ is also transmitted as notification information. The terminal checks the notification information of the received downlink notification signal and identifies the next instruction. At the same time, the terminal measures a channel $a_{k,m}{}^{(DL)}=u_{BS}h_{k,m}{}^{(DL)}$ (m=1, ..., M) by using the pilot signal received by the antenna m of the terminal k, and sets a correction coefficient $u_{k,m}$, by using the feedback information $a'_{k,m}{}^{(UL)}$. In this manner, because calibration is performed by using a part of the signal used in the random access channel, thereby efficiently performing calibration with other controls. In this case, a field to provide the feedback information $a'_{k,m}{}^{(UL)}$ is required in a part of the downlink notification signal transmitted to the terminal from the base station. By changing the feedback information $a'_{k,m}{}^{(UL)}$ to phase information $a'_{k,m}{}^{(UL)}/|a'_{k,m}{}^{(UL)}|$, the similar process can be applied to the sixth embodiment.

If the calibration according to the fifth embodiment is performed on one antenna of the terminal, the calibration can be performed without the feedback information, by transmitting the downlink pilot signal as $(u_{BS}/a'_{k,m}{}^{(UL)})s(q)$.

While assuming an initial access stage, a method of accessing and calibrating at the same time is shown here. However, the above-described method can be applied not only to the random access, but also to the uplink and downlink packet transmissions during communications. In other words, if Fig. 19 is used as an uplink packet, and if Fig. 20 is used as a downlink packet, calibration can also be performed by using the communication packets. This is advantageous in updating the setting of calibration during communications. Accordingly, as described in the present embodiment, calibration can be performed by using a random access signal or a pilot signal included in a communication packet, without using a special pilot signal.

Tenth Embodiment.

A tenth embodiment will now be described. In the present embodiment, the fact that the reciprocity of the measurement channel can be maintained even if the channel is changed, when a correction value set by calibration is used, will be explained. The structures of the terminal k and the base station used in the following explanation are the same as those in the fourth embodiment.

If $h_{k,m}^{(UL)}$, $h_{k,m}^{(DL)}$, $g_{k,m}^{(UL)}$, and $g_{k,m}^{(DL)}$ at a time t are $h_{k,m}^{(UL)}(t)$, $h_{k,m}^{(DL)}(t)$, $g_{k,m}^{(UL)}(t)$, and $g_{k,m}^{(DL)}(t)$, respectively, $h_{k,m}^{(UL)}(t)$ and $h_{k,m}^{(DL)}(t)$ can be expressed by Equation (12):

$$h_{k,m}^{(UL)}(t) = T_{k,m} \cdot g_{k,m}^{(UL)}(t) \cdot R_{BS}$$

$$h_{k,m}^{(DL)}(t) = T_{BS} \cdot g_{k,m}^{(DL)}(t) \cdot R_{k,m} \qquad (12)$$

In Equation (12), $T_{k,m}$ and $T_{BS}$ are transmitting analog gains of the terminal k and the base station, respectively, and $R_{BS}$ and $R_{k,m}$ are receiving analog gains of the base station and the terminal k, respectively.

If calibration is performed using the procedure described in the fourth embodiment and the like, Equation (13) is satisfied in a time range (temporarily set to $0 < t < t_0$) in which the analog characteristics $T_{BS}$, $T_{k,m}$, $R_{BS}$, and $R_{k,m}$ can be regarded as constant:

$$[\text{Expression } 9]$$

$$\frac{u_{k,1} \cdot h_{k,1}^{(UL)}}{u_{BS} \cdot h_{k,1}^{(DL)}} = \eta \qquad (13)$$

The reason being that, even if the channels $h_{k,m}^{(UL)}$ and $h_{k,m}^{(DL)}$ vary, the reciprocity is satisfied ($g_{k,m}^{(UL)}(t) = g_{k,m}^{(DL)}(t)$) between actual channel gains $g_{k,m}^{(UL)}(t)$ and $g_{k,m}^{(DL)}(t)$, which are substantial variation components therein, and the denominator and the numerator of Equation (13) cancel each other out.

By Equation (13), the advantages of calibration are maintained, even if the channel gains $g_{k,m}^{(UL)}(t)$ and $g_{k,m}^{(DL)}(t)$ vary in the time range $0 < t < t_0$. Accordingly, the correction coefficient $u_{k,m}$ of the terminal may only be updated at a long cycle length, based on the temperature characteristics of the analog device. Fig. 21 is a general schematic of relationships among a time unit for packet transmission, a time unit for channel variation (multipath fading), and a time unit for analog device characteristics variation. As shown in Fig. 21, the analog device characteristics vary over a longer period compared with the channel variation (fading cycle). In this manner, calibration may be performed in a time unit longer than a time unit used to control wireless communications or the fading cycle (naturally, calibration can be performed in a shorter time unit). More specifically, if calibration is performed in a time unit longer than the time unit used to control wireless communications or the fading cycle, the transmission cycles of the pilot signal and the channel measurement information used for the calibration between the base station and the terminal, become longer than the time unit of the control or the fading cycle.

As described above, it is possible to perform calibration by transmitting the pilot signal and the channel measurement information in a time unit longer than the time unit to control wireless communications or the fading cycle. By using the characteristics, the amount of signal required for controlling can be reduced.

Eleventh Embodiment.

An eleventh embodiment will now be described. In the present embodiment, a method of efficiently executing calibration, by selectively using the self-calibration described in the first embodiment, and the calibration performed by transmitting signals with another wireless device described in the fourth and the fifth embodiments, will be explained. Here, narrowly defined reciprocity is obtained, on the assumption that the base station and the terminal have the same carrier frequency, based on the highly accurate oscillator such as a rubidium oscillator.

Fig. 22 is a flowchart of a calibration procedure according to the eleventh embodiment. It is assumed that a correction coefficient $u_{BS}$ at the reference antenna of the base station is has been determined beforehand (may be any value). In this case, in the calibration according to the present embodiment, the correction coefficient $u_{k,m}$ (m=1, ..., M) at the antenna m of the terminal k is set by executing the following procedures.

(11-1) The terminal k and the base station execute any one of the calibrations described in the fourth to the sixth embodiments, on the antenna 1 of the terminal k (Fig. 22, Step S221).

(11-2) The terminal k executes any one of the self-calibrations described in the first to the third embodiments, on the antenna m and the antenna 1 (Step S222).

In the above control, if the procedure described in the fourth or the fifth embodiment is executed as the procedure (11-1), Equation (14) is satisfied:

[Expression 10]

$$\frac{u_{k,1} h_{k,1}^{(UL)}}{u_{BS} h_{k,1}^{(DL)}} = \eta = 1 \qquad (14)$$

If the procedure described in the first or the second embodiment is executed as the procedure (11-2), Equation (15) is satisfied:

[Expression 11]

$$\frac{u_{k,1} h_{k,1}^{(UL)}}{u_{BS} h_{k,1}^{(DL)}} = \frac{u_{k,m} h_{k,m}^{(UL)}}{u_{BS} h_{k,m}^{(DL)}} \qquad (15)$$

Accordingly, the state ($\eta$=1) of Equation (2) is obtained, thereby maintaining the narrowly defined channel reciprocity.

As described above, in the calibration procedure according to the present embodiment, the terminal executes calibration (procedure (11-1)) that uses the signal transmission with the base station on only a part of the antennas (in the example, antenna 1). Accordingly, the number of pilot signals used to perform calibration with the base station can be reduced to be less than the number of antennas M. In the procedure (11-2), the self-calibration is performed separately. However, the transmission power emitted during the self-calibration is very small, because the transmission power is set within an allowable range of a reception amplifier. Consequently, the amount of interference on the other neighboring terminals is also small.

In this manner, in the present embodiment, the terminal with M antennas performs self-calibration, after performing calibration using the signal transmission with the base station, by using a part of the antennas. As a result, the number of pilot signals used for calibration with the base station can be reduced to be less than the number of antennas M, thereby reducing the interference power applied to the neighboring wireless devices. At the same time, the narrowly defined reciprocity can be obtained in the measurement channel.

The calibration procedure according to the sixth embodiment can be applied to the procedure (11-1) according to the present embodiment, and similarly, the calibration procedure according to the third A embodiment can be applied to the procedure (11-2). If these are applied, only the phase correction is performed. Accordingly, although the narrowly defined reciprocity is not achieved, the consistency of the phase relationships among the antennas can be maintained. The number of required pilot signals can be reduced to be less than in the case where the calibration procedure according to the sixth embodiment is applied.

Twelfth Embodiment.

A twelfth embodiment will now be described. In the present embodiment, a method of efficiently executing calibration by selectively using the self-calibration described in the first embodiment and the calibration performed by transmitting signals with another wireless device described in the fourth and the fifth embodiments, the method being different from the method described in the eleventh embodiment, will be explained. In the present embodiment, narrowly defined reciprocity is obtained, on the assumption that the base station and the terminal have the same carrier frequency based on the highly accurate oscillator such as a rubidium oscillator.

Fig. 23 is a flowchart of a calibration procedure according to the twelfth embodiment. It is assumed that a correction coefficient $u_{BS}$ at the reference antenna of the base station has been determined beforehand (may be any value). In this case, in the calibration according to the present embodiment, the correction coefficient $u_{k,m}$ (m=1, ..., M) at the antenna m of the terminal k is set by executing the following procedure.

(12-1) The terminal k executes any one of the self-calibrations described in the first to the third embodiments, on the antenna m (m=2, ..., M) and the antenna 1 (Fig. 23, Step S231). In this case, $u_{k,m}$ (m=2, ..., M) becomes a parameter dependent on $u_{k,1}$ (for example, in the first embodiment $u_{k,m}=u_{k,1}$ ($h_{k,m}^{self,R}/h_{k,m}^{self,F}$)).

(12-2) The terminal k and the base station execute any one of the calibrations described in the fourth to the sixth embodiments on the antenna 1 of the terminal k, determine a correction coefficient $u_{k,1}$ of the antenna 1, and determine a correction coefficient $u_{k,m}$ (m=2, ..., M) of the other antenna, from the relationship derived at the procedure (12-1) (Step S232).

In the above control, Equation (15) explained in the eleventh embodiment is satisfied in the procedure (12-1), and Equation (14) is satisfied in the procedure (12-2). Accordingly, when the correction coefficients $u_{k,m}$ (m=1, ..., M) of all the antennas are defined in the procedure (12-2), Equation (16) is satisfied, and the state ($\eta$=1) of Equation (2) is achieved. Consequently, the narrowly defined channel reciprocity is maintained.

[Expression 12]

$$\frac{u_{k,1}h_{k,1}^{(UL)}}{u_{BS}h_{k,1}^{(DL)}} = \frac{u_{k,m}h_{k,m}^{(UL)}}{u_{BS}h_{k,m}^{(DL)}} = \eta = 1 \tag{16}$$

In this manner, in the present embodiment, the terminal with M antennas performs self-calibration, then performs calibration by transmitting signals with the base station, using a part of the antennas. Accordingly, the similar effect as that of the above-described eleventh embodiment can be obtained.

Thirteenth Embodiment.

A thirteenth embodiment will now be described. In the present embodiment, a method of efficiently executing calibration by selectively using the self-calibration and the calibration performed by transmitting signals with another wireless device, the method being different from the methods described in the eleventh and the twelfth embodiments, will be explained. In the present embodiment, narrowly defined reciprocity is obtained, on the assumption that the base station and the terminal have the same carrier frequency based on the highly accurate oscillator such as a rubidium oscillator.

Fig. 24 is a flowchart of a calibration procedure according to the thirteenth embodiment. Fig. 25 is a configuration example of a terminal and the base station according to the thirteenth embodiment. The structure of the base station according to the present embodiment is the same as the base station according to the fourth embodiment shown in Fig. 6. The structure of the terminal is a modification of the terminal according to the fourth embodiment, so that signals are transmitted and received, by forming a transmit beam and a receive beam.

Here, it is assumed that a correction coefficient $u_{BS}$ at the reference antenna of the base station is already determined (may be any value). In this case, in the calibration according to the present embodiment, the correction coefficient $u_{k,m}$ (m=1, ..., M) at the antenna m of the terminal k is set by executing the following procedure.

(13-1) The terminal k executes any one of the self-calibrations described in the first to the third embodiments, on the antenna m (m=2, ..., M) and the antenna 1 (Fig. 24, Step S241). In this case, $u_{k,m}$ (m=2, ..., M) becomes a parameter dependent on $u_{k,1}$ (for example, in the first embodiment, $u_{k,m}=u_{k,1}$ ($h_{k,m}^{self,R}/h_{k,m}^{self,F}$)).

(13-2) The terminal k defines $u_{k,m}$ (m=2, ..., M) by temporally setting any non-zero value to $u_{k,1}$, and transmits a pilot signal by forming a transmit beam for a channel corrected by $u_{k,m}$ (m=1, ..., M). The base station measures a complex amplitude $h_k^{(UL)}$ of the pilot signal received from the terminal k (Step S242).

(13-3) The base station notifies the terminal k of the measurement $h_k^{(UL)}$ in the downlink (Step S243). The base station then transmits a pilot signal, and the terminal k receives the downlink pilot signal from the base station, by forming a receive beam having the same weight as the transmit beam formed in the procedure (13-2). The terminal k then measures a complex amplitude $hk^{(DL)}$ of the received pilot signal (Step S244).

(13-4) The terminal k sets the correction coefficient $u_{k,1}$ of the antenna 1 as $U_{k,1}=h_k^{(DL)}/h_k^{(UL)}$. The terminal k then determines a correction coefficient $u_{k,m}$ (m=2, ..., M) of the other antenna, from the relationship with $u_{k,1}$ derived by executing the procedure (13-1) (Step S245).

By performing the above control, it is possible to set a state in which the broadly defined reciprocity is satisfied in the measurement channel in the procedure (13-1). In other words, Equation (15) is satisfied.

The complex amplitude of the signal received by the base station, when a signal is transmitted from the antenna m (m=1, ..., M) of the terminal k by using any transmission weight $v_m$ (in other words, when a signal is transmitted by using the transmit beam), is expressed by Equation (17):

[Expression 13]

$$h_k^{(UL)} = \sum_{m=1}^{M} v_m u_{BS} h_{k,m}^{(UL)} \qquad (17)$$

If the pilot signal transmitted from the base station is weighted and combined with a reception weight $v_m$ at the antenna m (m=1, ..., M) of the terminal k (in other words, received by the receive beam), the complex amplitude of the received signal is expressed by Equation (18):
[Expression 14]

$$h_k^{(DL)} = \sum_{m=1}^{M} v_m u_{BS} h_{k,m}^{(DL)} \qquad (18)$$

In the procedure (13-4), when the terminal sets a correction coefficient $u_{k,1}$ as $u_{k,1}=h_k^{(DL)}/h_k^{(UL)}$ by using the feedback information, Equation (19) is derived from Equations (15), (17), and (18). Accordingly, the narrowly defined reciprocity is maintained in the measurement channel.
[Expression 15]

$$\frac{u_{k,1}h_{k,1}^{(UL)}}{u_{BS}h_{k,1}^{(DL)}} = \frac{u_{k,m}h_{k,m}^{(UL)}}{u_{BS}h_{k,m}^{(DL)}} = 1 \qquad (19)$$

In the procedures (13-3) and (13-4), the base station notifies the terminal of the channel measurement $h_k^{(UL)}$, and transmits a pilot signal in the downlink. Alternatively, the base station may transmit a pilot signal $(u_{BS}/h_k^{(UL)})s(q)$ weighted by $u_{BS}/h_k^{(UL)}$. In this case, the terminal measures a complex amplitude $h_k^{(DL)}/h_k^{(UL)}$ of the pilot signal. If the value is a correction coefficient for the antenna 1 (in other words, if it is $u_{k,1}=h_k^{(DL)}/h_k^{(UL)}$), the same states as those in the procedures (13-3) and (13-4) can be achieved. In this case, because the feedback information from the base station is not necessary, the control amount can be reduced to be less than that of the procedures (13-3) and (13-4).
The relationship of the present embodiment is satisfied for any transmit and receive beamforming, in other words, for the weight $v_m$. However, if the transmit beam is directed differently from the base station, the reception power of the pilot signal is reduced at the base station, thereby deteriorating the accuracy of channel measurement. Similarly, the reception power at the terminal of the pilot signal transmitted from the base station in the downlink is also reduced, thereby deteriorating the accuracy of channel measurement in the downlink. Accordingly, it is preferable that the transmit beam is directed towards the base station. For example, a method is developed to form a transmit beam of the maximum ratio combining type in the uplink (giving the weight $v_m$ as a complex conjugate of a complex channel gain measured by the antenna m in the downlink).
In this manner, by using an appropriate weight $v_m$, the channel can be measured by using the transmitting and receiving beam gains. As a result, compared with when the pilot signal is only transmitted from the antenna 1, the base station can receive a pilot signal with strong reception power, even if the transmission power is the same. Accordingly, higher accurate channel measurement can be performed, by performing transmit and receive beamforming.
By applying the above-described procedure, highly accurate calibration can be achieved by forming the transmit/receive beams, while the small number of pilot signals are used between the terminal and the base station.

Fourteenth Embodiment.

A fourteenth embodiment will now be described. In the present embodiment, a method of efficiently executing calibration, by selectively using the self-calibration and the calibration performed by transmitting signals with another wireless device, in a Multi-Input Multi Output (MIMO) system where both the terminal and the base station have a plurality of antennas, will be explained. Here, narrowly defined reciprocity is obtained, on the assumption that the base station and the terminal have the same carrier frequency based on the highly accurate oscillator such as a rubidium oscillator.

Fig. 26 is a flowchart of a calibration procedure according to the fourteenth embodiment. Fig. 27 is a configuration example of the terminal and a base station according to the fourteenth embodiment. Here, the base station includes N antennas, and each of the antennas n includes a correction coefficient $u_{BS,n}$ in the transmitting unit, and the correction coefficient $u_{BS,n}$ is set, so that the reciprocity is satisfied in the measurement channel by calibration.

The structure of the terminal k according to the present embodiment is the same as the terminal according to the thirteenth embodiment (see Fig. 25). The base station includes a plurality of antennas, and modified so as to transmit and receive signals, by forming a transmit beam and a receive beam. As is shown in Fig. 27, the configuration thereof is the same as that of the terminal k. The base station according to the present embodiment can also perform self-calibration (calibration described in the first embodiment and the like) as the terminal k.

It is assumed that a correction coefficient $u_{BS,1}$ at the reference antenna (an antenna B1) of the base station is determined in advance(this may be any value). In this case, in the calibration according to the present embodiment, a correction coefficient $u_{BS,n}$ (n=2, ..., N) at the antenna n of the base station and a correction coefficient $u_{k,m}$ (m=1, ..., M) at the antenna m of the terminal k are set by executing the following procedure.

(14-1) The terminal k executes either one of the self-calibrations described in the first and the second embodiments, on the antenna m (m=2, ..., M) and the antenna 1 (Fig. 26, Step S261). In this case, $u_{k,m}$ (m=2, ..., M) becomes a parameter dependent on $u_{k,1}$ (for example, in the first embodiment, $u_{k,m}=u_{k,1}(h_{k,m}^{self,R}/h_{k,m}^{self,F})$).

(14-2) The base station executes the self-calibration on an antenna Bn (n=2, ..., N) and the antenna B1, based on the similar procedure to that of the terminal k, either in the first or the second embodiment (Fig. 26, Step S262). In this case, $u_{BS,n}$ (n=2, ..., N) is determined by depending on $u_{BS,1}$ (for example, in the first embodiment, $u_{BS,n}=u_{BS,1}(h_{BS,n}^{self,R}/h_{BS,n}^{self,F})$).

(14-3) The terminal k defines $u_{k,m}$ (m=2, ..., M) by temporally setting any value for $u_{k,1}$, forms a transmit beam for the channel corrected by $u_{k,m}$ (m=1, ..., M), and transmits a pilot signal. The base station receives the pilot signal transmitted from the terminal k by a receive beam, and measures a complex amplitude $h_k^{(UL)}$ of the received pilot signal (Step S263).

(14-4) The base station notifies the terminal k of a measurement $h_k^{(UL)}$ in the downlink (Step S264). The base station also forms a transmit beam having the same weight as that of the receive beam formed in the procedure (14-3), and transmits a pilot signal (Step S255).

(14-5) The terminal k forms a receive beam having the same weight as that of the transmit beam formed in the procedure (14-3), and receives a downlink pilot signal from the base station and measures a complex amplitude $h_k^{(DL)}$ of the received pilot signal (Step S256).

(14-6) The terminal k sets a correction coefficient $u_{k,1}$ of the antenna 1 to $U_{k,1}=h_k^{(DL)}/h_k^{(UL)}$. The terminal k then determines a correction coefficient $u_{k,m}$ (m=2, ..., M) of the other antenna, from the relationship with $u_{k,1}$ derived by executing the procedure (14-1) (Step S267).

When the above control is applied, the narrowly defined reciprocity is satisfied in any pathway between the antennas of the base station and the antennas of the terminal. The order of the procedures (14-1) and (14-2) may be reversed.

The reason why the narrowly defined reciprocity is satisfied by the above control is described below. When the procedures (14-1) and (14-2) are executed, it is possible to set the state in which the broadly defined reciprocity is satisfied in the entire ($M \times N$ pieces) measurement channels between the terminal and the base station. In other words, Equation (20) is satisfied:

[Expression 16]

$$\frac{u_{k,1}h_{BS,1,k,1}^{(UL)}}{u_{BS,1}h_{BS,1,k,1}^{(DL)}} = \frac{u_{k,m}h_{BS,1,k,m}^{(UL)}}{u_{BS,1}h_{BS,1,k,m}^{(DL)}} = \frac{u_{k,m}h_{BS,n,k,m}^{(UL)}}{u_{BS,n}h_{BS,n,k,m}^{(DL)}} = \eta \qquad (20)$$

In Equation 20, $h_{BS,n,k,m}^{(UL)}$ is a measurement channel gain in the uplink path from the antenna m of the terminal k to the antenna Bn of the base station. $h_{BS,n,k,m}^{(DL)}$ is a measurement channel gain in the downlink path from the antenna Bn of the base station to the antenna m of the terminal k.

When (n,m) element is defined with $N \times M$ matrix $H_{BS,k}^{(UL)}$ and $H_{BS,k}^{(DL)}$ that include $[H_{BS,k}^{(UL)}]_{n,m}=u_{k,m}h_{BS,n,k,m}^{(UL)}$ and $[H_{BS,k}^{(DL)}]_{n,m}=u_{BS,n}h_{BS,n,k,m}^{(DL)}$ Equation (20) is expressed by Equation (21):

$$H_{BS,k}^{(UL)} = \eta \cdot H_{BS,k}^{(DL)} \qquad (21)$$

When the signal is transmitted from the antenna m (=1, ..., M) of the terminal k by using any transmission weight $v_m$ (in other words, signal is transmitted by using the transmit beam), and when the signal is received by the antenna Bn (n=1, ..., N) of the base station by using any weight $w_n$, a channel measurement $h_k^{(UL)}$ of the signal received by a received beam output of the base station, is expressed by Equation (22):
$$h_k^{(UL)} = w^T H_{BS,k}^{(UL)} v \qquad (22)$$

In Equation 22, $v=[v_1,..., v_M]^T$ and $w=[w_1, ..., w_N]^T$, and T is a transpose.
When the base station transmits a pilot signal by using a transmit beam with a weight w, and when the terminal k receives the signal by using a receive beam with a weight v, a channel measurement at the received beam output, is expressed by Equation (23):
$$h_k^{(DL)} = w^T H_{BS,k}^{(DL)} v \qquad (23)$$

When the terminal sets a correction value ($u_{k,1}$) to $u_{k,1}=h_k^{(DL)}/h_k^{(UL)}$ by using the feedback information from the base station, Equation (20) becomes Equation (24), thereby maintaining the narrowly defined reciprocity in the measurement channel. However, the relationship of the narrowly defined reciprocity is satisfied, when the base station and the terminal have the same carrier frequency.
[Expression 17]

$$\frac{u_{k,1} h_{BS,1,k,1}^{(UL)}}{u_{BS,1} h_{BS,1,k,1}^{(DL)}} = \frac{u_{k,m} h_{BS,1,k,m}^{(UL)}}{u_{BS,1} h_{BS,1,k,m}^{(DL)}} = \frac{u_{k,m} h_{BS,n,k,m}^{(UL)}}{u_{BS,n} h_{BS,n,k,m}^{(DL)}} = 1 \qquad (24)$$

In the procedures (14-4), (14-5), and (14-6), the base station notifies the terminal of the channel measurement $h_k^{(UL)}$, and transmits the pilot signal in the downlink. Alternatively, the base station may transmit a pilot signal ($1/h_k^{(UL)}$ s (q) weighted by $1/h_k^{(UL)}$.
As shown in Fig. 27, the base station divides the pilot signal ($1/h_k^{(UL)}$)s(q) into N pieces of antennas by the transmission weight w, and then transmits the signal by multiplying the correction coefficient $u_{BS,n}$ from each of the antennas Bn. In this case, a complex amplitude $h_k^{(DL)}/h_k^{(UL)}$ of a pilot signal s(q) is obtained at the received beam output of the terminal. By setting the measurement directly to a correction coefficient $U_{k,1}=h_k^{(DL)}/h_k^{(UL)}$ of the antenna 1 of the terminal, the same state as those of the procedures (14-4), (14-5), and (14-6) can be achieved. In this case, because the feedback information from the base station is not required, the control amount can further be reduced to be less than in the case where the procedures (14-4), (14-5), and (14-6) are executed.
The relationship of the present embodiment can be satisfied for any transmit and receive beamforming at the terminal and the base station, in other words, for either of weight vectors v and w. However, if the transmit beams of the base station and the terminal are directed differently from the receiver, the reception power of the pilot signal is reduced at the receiving side, thereby deteriorating the accuracy of channel measurement. Accordingly, it is preferable to direct the transmit beam towards the receiver. For example, a method is developed by which a terminal measures a channel in the downlink and forms a unique transmit beam in the uplink. There is also a method by which the base station performs maximum ratio combining or MMSE receive beamforming, by using the response of the pilot signals transmitted by the terminal in the uplink, at the antennas, and the like.
In this manner, if the terminal and the base station use appropriate weight vectors v and w, respectively, the channel can be measured, while using the transmit and receive beam gains in the MIMO channel. As a result, compared with when the pilot signal is transmitted only from the antenna 1, the base station can receive the pilot signal with strong reception power, even if the transmission power is the same. Consequently, more accurate channel measurement can be performed by the transmit/receive beamforming.

Fifteenth Embodiment.

A fifteenth embodiment will now be described. In the present embodiment, a method of performing calibration by transmitting signals with another wireless device, and in particular, a method of performing indirect calibration by using a wireless device other than the base station will be explained. Here, narrowly defined reciprocity is obtained, on the assumption that the base station and the terminal have the same carrier frequency based on the highly accurate oscillator such as a rubidium oscillator.

Fig. 28 is an outline schematic of calibration performed in the fifteenth embodiment. Fig. 29 is a flowchart of a calibration procedure according to the fifteenth embodiment.

When the base station and the terminal can transmit and receive signals directly, the calibration according to the fourth to the sixth embodiments can be used. However, there may be cases where the distance between the base station and the terminal is far, and direct transmission and reception of signals therebetween are difficult. To allow calibration in such an environment by transmitting signals with another wireless device, in the present embodiment, the indirect calibration method by which the base station and the terminal perform calibration by interposing another wireless device (such as a wireless device A) therebetween will be described. A procedure of the indirect calibration is described below.

(15-1) The wireless device A and the base station execute either one of the calibrations described in the fourth and the fifth embodiments, and set a complex correction coefficient $u_A$ for an antenna of the wireless device A (Fig. 29, Step S291).

(15-2) It is assumed that the correction coefficient $u_A$ of the antenna of the wireless device A has been determined beforehand, and the terminal performs calibration with the antenna of the wireless device A, and sets $u_{k,m}$ (Step S292).

The specific calibration method executed in the procedures (15-1) and (15-2) is the same as those described in the fourth and the fifth embodiments. In this case, when the procedure (15-1) is executed, Equation (25) is satisfied as Equation (3):

[Expression 18]

$$\frac{u_A \cdot T_A}{R_A} = \frac{u_{BS} \cdot T_{BS}}{R_{BS}} = 1 \qquad (25)$$

In Equation (25), $T_A$ is a transmitting analog gain, and $R_A$ is a receiving analog gain. When the procedure (15-2) is executed, Equation (26) is satisfied, and Equation (27) is also satisfied by Equation (26) and Equation (25):

[Expression 19]

$$\frac{u_{k,1} \cdot T_{k,1}}{R_{k,1}} = \frac{u_{k,M} \cdot T_{k,M}}{R_{k,M}} = \frac{u_A \cdot T_A}{R_A} = 1 \qquad (26)$$

[Expression 20]

$$\frac{u_{k,1} \cdot T_{k,1}}{R_{k,1}} = \frac{u_{k,M} \cdot T_{k,M}}{R_{k,M}} = \frac{u_{BS} \cdot T_{BS}}{R_{BS}} = 1 \qquad (27)$$

Accordingly, when the above-described indirect calibration is ideally performed, the terminal and the base station are in the same state as when the direct calibration is performed. In this case, as described in the tenth embodiment, the setting of calibration is maintained, even if the channel is varied. Consequently, the procedure (15-2) may be performed after the channel is varied after the procedure (15-1).

In this manner, if the terminal k is placed far from the base station, as shown in Fig. 28, the similar setting to in the case where the terminal k is performed calibration with the base station can be achieved, because the terminal k performs calibration with another wireless device (wireless device A) with which the base station has performed calibration. In particular, if the wireless device A is placed in the middle between the base station and the terminal, the indirect calibration can be carried out smoothly.

Here, an example of interposing one wireless device A is described. However, the indirect calibration can also be performed by interposing two or more wireless devices. For example, if the calibration is sequentially performed between the wireless device A and the base station, the wireless device B and the wireless device A, and the terminal and the wireless device B, the terminal can achieve the same setting as in the case where the calibration is performed with the base station. In this manner, if many wireless devices perform the indirect calibration, the state in which many wireless devices in the system perform calibration with each other can be obtained. As a result, communications can be established by using channel reciprocity, among various transmitters and receivers that has performed calibration.

Sixteenth Embodiment.

A sixteenth embodiment will now be described. In the present embodiment, in the present invention, a method by which the terminal and the base station both perform calibration among wireless devices in an MIMO channel with a plurality of antennas, while suppressing the number of signals required for calibration smaller than that of the prior art, will be explained.

In the technology disclosed in Non-Patent Document 2, $N \times M$ pieces of channel measurement information need to be notified from one wireless device to another wireless device, so that the base station with N pieces of antennas and the terminal with M pieces of antennas can perform calibration. On the other hand, in the present embodiment, the amount of channel information required to be notified between the two wireless devices is reduced, by performing calibration based on the following procedure.

The present embodiment is explained under the assumption that the terminal k includes a plurality of antennas m (m=1, ..., M), and the base station includes a plurality of antennas n (n=1, ..., N). It is also assumed that a correction coefficient $u_{BS,1}$ at the reference antenna (n=1) of the base station has been determined beforehand (may be any value). In this case, in the calibration according to the present embodiment, a correction coefficient $u_{BS,n}$ (n=1, ..., N) at the antenna n of the base station, and a correction coefficient $u_{k,m}$ (m=1, ..., M) at the antenna m of the terminal k are set by executing the following procedure. Fig. 30 is a schematic of pathways between the antennas of the base station and the terminal in the calibration operation performed in the sixteenth embodiment.

(16-1) The terminal k and the base station execute calibration described in the fourth or the fifth embodiment, on the antenna 1 (reference antenna) of the base station, and determine correction coefficients $u_{k,m}$ (m=1, ..., M). In other words, in this procedure, the correction coefficients used by the terminal k are determined.

(16-2) The terminal k and the base station determine correction coefficients $u_{BS,n}$ (n=1, ..., N) by executing the calibration described in the fourth or the fifth embodiment, on the antenna 1 of the terminal k, by using $u_{k,1}$, which is one of the correction coefficients determined in the procedure (16-1). In other words, in this procedure, the correction coefficients used by the base station are determined.

The "base station" and the "terminal" in the fourth and the fifth embodiments are simplified for descriptive purposes, and by interchanging the words "base station" and "terminal", the same method can be applied to a case where the base station includes a plurality of antennas and the terminal includes a single antenna.

With the above procedures, the calibration will be completed. With the present procedure, the narrowly defined reciprocity can be maintained in the measurement channels of the entire pathways between the antennas of the base station and the antennas of the terminal.

The reason why the narrowly defined reciprocity can be maintained by the present embodiment will be described. In the present embodiment, the antenna n (n=2, ..., N) of the base station and the antenna m (m=2, ..., M) of the terminal do not perform direct calibration. However, in the procedure (16-2), the antenna n (n=2, ..., N) of the base station performs calibration with the antenna 1 of the terminal, and the antenna 1 of the terminal performs calibration with the antenna 1 of the base station. In the procedure (16-1), the antenna 1 of the base station performs calibration with the antenna m (m=2, ..., M) of the terminal. Accordingly, based on the principle of the indirect calibration described in the fifteenth embodiment, in the present embodiment, the antenna n (n=2, ..., N) of the base station and the antenna m (m=2, ..., M) of the terminal are in the same setting state as when the direct calibration is performed.

In this manner, in the present embodiment, when the terminal including a plurality of antennas performs calibration with the base station including a plurality of antennas, the plurality of antennas of the terminal perform calibration on the reference antenna of the base station, and the plurality of antennas of the base station perform calibration on the reference antenna of the terminal. As a result, the same setting as when the calibration is performed on all the measurement channels between the antennas of the base station and the antennas of the terminal can be obtained.

To execute the procedures (16-1) and (16-2), when the method according to the fourth embodiment is used, the channel measurement information required to be notified is N+M pieces. When the method according to the fifth embodiment is used, it is possible to control only by the pilot signal. Given that the $N \times M$ pieces of channel measurement information need to be notified from one wireless device to another wireless device in the technology disclosed in Non-Patent Document 2, the control information amount required in the procedure according to the present embodiment can be reduced, for the MIMO channel of N>=2 and M>=2 (in other words, all envisaged MIMO channels).

Seventeenth Embodiment.

A seventeenth embodiment will now be described. In the present embodiment, the state that can be obtained when the base station individually applies calibration to a plurality of terminals will be explained. Here, the present embodiment is explained under the assumption that the plurality of terminals is terminal k and terminal 1.

When the calibration according to the fourth or the fifth embodiment is individually applied to the terminals k and 1, Equation (28) is satisfied, in which $M_k$ and $M_l$ are the number of antennas included in the terminals k and 1, respectively:

[Expression 21]

$$\frac{u_{k,1} \cdot T_{k,1}}{R_{k,1}} = \ldots = \frac{u_{k,M_k} \cdot T_{k,M_k}}{R_{k,M_k}} = \frac{u_{1,1} \cdot T_{1,1}}{R_{1,1}} = \ldots = \frac{u_{1,M_1} \cdot T_{1,M_1}}{R_{1,M_1}} = \frac{u_{BS} \cdot T_{BS}}{R_{BS}} = 1 \qquad (28)$$

As shown in Equation (28), when the plurality of terminals k and the terminal 1 individually perform calibration that satisfies the narrowly defined reciprocity on the base station, the same state is obtained as that when the calibration that satisfies the narrowly defined reciprocity is performed between the plurality of terminal k and the terminal l. In this manner, the plurality of terminals k and l can set a state in which the narrowly defined reciprocity is alternately satisfied, via the base station. Accordingly, if the plurality of terminals k and the terminal 1 perform direct communications, even if calibration is not performed anew, the transmission and reception of signals using the reciprocity and the transmission control can be performed.

By following the method, the terminals in the cell perform calibration with the base station by referring to the setting value in the base station, thereby establishing a wireless communication system where the terminals in the cell can alternately maintain the channel reciprocity.

Eighteenth Embodiment.

An eighteenth embodiment will now be described. In the present embodiment, a procedure for executing calibration by adaptively selecting and determining the direct calibration performed based on the position of the terminal, or the indirect calibration described in the fifteenth embodiment, will be explained. Fig. 31 is an outline schematic of a signal transmission when a calibration procedure according to the present embodiment is executed.

As described in the fifteenth embodiment, the terminal may perform the direct calibration with the base station or may perform the indirect calibration, based on the propagation loss between the base station and the terminal. To perform such a control, various control methods can be considered.

For example, the base station measures a propagation loss with the terminal, and if the propagation loss with the terminal is large, the base station transmits a signal to recommend the indirect calibration, as shown in Fig. 31. Based on the recommendation signal, the terminal searches another wireless device with which the indirect calibration can be performed, and performs the calibration. In this case, another wireless device (wireless device A) capable of supporting the indirect calibration notifies the neighbors of its capability of supporting the indirect calibration, by using an "indirect calibration support signal." The terminal searches the "indirect calibration support signal", and detects the wireless device A that can perform the indirect calibration. The terminal transmits an "indirect calibration request signal" to the wireless device and if the wireless device A permits the signal, the terminal executes the indirect calibration.

In this case, the calibration is divided into several levels. The levels may be divided into the calibration to achieve the narrowly defined reciprocity, the calibration to achieve the broadly defined reciprocity, and the like. The wireless device that supports the narrowly defined reciprocity by the indirect calibration needs to perform calibration with the base station once. Accordingly, the wireless device that has been calibrated with the base station can notify the neighbors of a signal indicating that it is capable of supporting calibration to achieve the narrowly defined reciprocity. On the other hand, the calibration that satisfies the broadly defined reciprocity can support a wireless device that has not been calibrated with the base station. Accordingly, such a wireless device notifies the neighboring terminals of a signal indicating that it is capable of supporting the broadly defined calibration.

Fig. 32 is a schematic of an example of the "indirect calibration support signal." The present signal includes bits to indicate whether it is possible to support the indirect calibration, and if the bit is "0", it is not possible to support, and if the bit is "1", it is possible to support. In the category of the calibration, the category A indicates a type of calibration, and if the bit is "0", the broadly defined reciprocity is supported, and if the bit is "1", the narrowly defined reciprocity is supported. In the category B, if the bit is "0", calibration in which only a phase is corrected is supported, and if the bit is "1", calibration in which the phase and the amplitude are corrected is supported. In this manner, by classifying them into categories, the terminal can identify the calibration that can be supported by the wireless device A.

The calibration required by the terminal can also be classified into the calibration to provide the narrowly defined reciprocity, the calibration to provide the broadly defined reciprocity, and the terminal that does not require calibration. The terminal, on accessing the base station, notifies the base station of which calibration level is required, and the model type corresponding to which level. Fig. 33 is a schematic of an example of a format of a calibration signal that the base station sends to the terminal. The present format includes bits that indicate whether the model type of the terminal corresponds to the calibration. In the example, if the bit is "0", the model type is not capable of the calibration, and if the bit is "1", the model type is capable of the calibration. The category A and the category B that indicate the types of the calibration have the same contents as those in Fig. 32. Based on the model type of the terminal and the calibration level to be requested, the base station selects and executes an appropriate calibration procedure.

Fig. 34 is a schematic of an example of a format of an indirect calibration request signal transmitted to the wireless device A by the terminal. Based on the type of the calibration requested by the terminal, the wireless device A may support various types of calibrations.

In this manner, in the present embodiment, whether to perform the direct calibration or to perform the indirect calibration is adaptively selected, based on the propagation state between the terminal and the base station. Accordingly, the terminal can select a wireless device that can obtain a good propagation state, and perform highly accurate calibration. In the present embodiment, the type of calibration to be executed is changed, based on the calibration ability of the terminal and the wireless device. Consequently, it is possible to adaptively correspond to an environment mixed with various model types.

Nineteenth Embodiment.

A nineteenth embodiment will now be described. In the present embodiment, a method by which, when the terminal transmits an unmodulated signal (carrier), the phase of the signal (carrier phase) is controlled so as to be a specific value in the base station, will be explained. Here, the control is called a carrier phase transmission control for explanation. The present embodiment provides an environment where the carrier frequencies of the base station and the terminal are the same or very close is achieved, by using a highly accurate frequency oscillator such as a rubidium oscillator, or by performing an ultra high accuracy carrier frequency control, which will be described in the following embodiment. Fig. 35 is a configuration example of a terminal according to the present embodiment and signals transmitted with the base station. Fig. 36 is a flowchart of a phase transfer control according to the present embodiment.

The procedure of the carrier phase transmission control on the single antenna m of the terminal is described below.

(19-1) The base station and the terminal execute calibration to maintain the narrowly defined reciprocity (Step S361). The calibration may be either the direct or indirect calibration described above.

(19-2) The base station transmits a pilot signal $u_{BS}d(q)$ generated by multiplying a pilot signal $d(q)$ by a correction coefficient $u_{BS}$ (Step S362).

(19-3) The terminal measures a complex amplitude $u_{BS}h_{k,m}^{(DL)}$ of the pilot signal received from the base station, in the downlink time slot, at a downlink channel measuring unit (Step S363).

(19-4) The terminal determines a transmission weight $v_{k,m}=1/(u_{BS}h_{k,m}^{(DL)})$ at a weight determining unit, and generates a transmitting signal $s(q)$ at the transmitting signal generating unit. The terminal also transmits a data signal $v_{k,m}s(q)$ generated by multiplying the transmitting signal by a transmission weight $v_{k,m}$ with a weight multiplying unit in the next uplink time slot (Step S364).

In this case, a signal $x_{BS}(q)$ received by the base station is expressed by Equation (29):

[Expression 22]

$$x_{BS}(q) = \frac{u_{k,m} \cdot h_{k,m}^{(UL)}}{u_{BS} \cdot h_{k,m}^{(DL)}} s(q) + z_{BS}(q) \tag{29}$$

If the moving speed of the terminal is slow, and the channel variation between the channel measurement in the downlink and the data transmission in the uplink can be ignored, $x_{BS}(q)=s(q)+z_{BS}(q)$ is satisfied. Accordingly, the base station can receive the signal $s(q)$ by the carrier phase 0.

The carrier phase is a phase when it is assumed that the signal $s(q)$ is an unmodulated signal (however, $s(q)$ need not actually be an unmodulated signal). In the present technique, if the channel variation between the successive downlink and uplink can be ignored even if the terminal moves, the phase of the complex amplitude of the signal in the base station can be controlled so as to be constant. In other words, the carrier phase can be maintained. This is possible because the phase variation of the uplink channel can be compensated by using downlink channel information. The carrier phase control of the present embodiment is made possible, by estimating the absolute phase of the uplink channel from the absolute phase of the downlink channel, by performing calibration to maintain the narrowly defined reciprocity. In the present embodiment, the signal power received by the base station is also constant regardless of the channel. Accordingly, the phase control and the transmission power control are performed at the same time.

In the procedure (19-4), the transmitted signal is multiplied by the weight $v_{k,m}=1/(u_B S h_{k,m}^{(DL)})$. However, the phase does not change even if a weight different by a real scalar multiple is used, thereby controlling the absolute phase. For example, to keep the transmission power of the terminal constant, the weight may be $v_{k,m}=u_{BS}{}^{*}h_{k,m}^{(DL)*}/|u_{BS}h_{k,m}^{(DL)}|$ (where $^{*}$ is a complex conjugate). In this manner, in the present control, the transmission control of the absolute phase may only be performed instead of performing the transmission power control.

In this manner, in the present embodiment, the base station transmits a pilot signal after the calibration is performed between the terminal and the base station, and the terminal performs channel measurement using the pilot signal. The terminal then adjusts the amplitude and phase or the phase of the signal based on the channel measurement, and transmits the signal. Accordingly, the carrier phase or the phase and amplitude of the signal received by the base station is controlled so as to be a specific value.

A method by which the transmitter controls the carrier phase at the receiving side so as to be a specific value has not been performed in conventional mobile communications. This is because the carrier phase transmission control need not necessarily be performed in wireless communications. However, many advantages in performing the carrier phase transmission control can be obtained.

For example, the receiver (base station) can predict the carrier phase of the uplink signal in advance. Accordingly, it is possible to perform phase synchronization, by restricting the existence range of the carrier phase. More specifically, a complex amplitude (including a phase) a of a carrier in the base station can be predicted in advance. By weighting a value $a^{(pre)}$ predicted by the base station and a value $a^{(est)}$ obtained by performing channel estimation using the uplink pilot signal, with two appropriate weights, an amplitude and phase component of the carrier can be estimated at higher accuracy. Fig. 37 is a schematic of a process for improving channel estimation accuracy. In Fig. 37, a complex amplitude a' after being weighted, is expressed by Equation (30):

$$a'=ra^{(pre)}+(1-r)a^{(est)} \tag{30}$$

In Equation (30), r is a weighting coefficient. There are various methods for setting the weighting coefficient. An example is a method of setting a fixed value whose estimation accuracy of a' is statistically improved, upon assuming various mobile environments.

Another example is a method by which variable speed or Doppler frequency of the channel is measured by the base station or measured by the terminal and fed back to the base station, and the base station adaptively determines r, based on the variable speed. For example, if the Doppler frequency is 20 hertz, r=0.8, and if the Doppler frequency is 20 hertz to 100 hertz, r=0.5, and if the Doppler frequency is 100 hertz to 1 kilohertz, r=0.1.

In the present embodiment, with an increase of the moving speed of the channel, a difference occurs between the downlink channel measured by the terminal and the uplink channel to which the terminal transmits a signal. Accordingly, the carrier phase of the uplink signal in the base station differs from the target state. Consequently, if the channel variation is large, dependency on the channel estimation using the uplink pilot signal is increased. In this manner, by adaptively setting r, good channel estimation can always be performed.

With the weighting, the channel estimation accuracy can further be improved, than conventional channel estimation in which only the uplink pilot signal is used. In conventional technologies, such an improvement on the channel estimation accuracy is not performed, and the fact that the channel estimation accuracy can be improved by the carrier phase transmission control is not known. However, as described in the present embodiment, once the calibration is completed, the channel estimation accuracy in the uplink can be improved, by performing carrier phase transmission control, without requiring any other control information. This is because, in conventional technologies, the uplink signal transfer was only focused on at the time of channel estimation. However, the present embodiment is achieved by implementing a new factor by which the terminal can identify the channel in the downlink and use the channel reciprocity. In this manner, in the present process, the channel estimation is performed by utilizing the transmission control information of the carrier phase, thereby improving the channel estimation accuracy in the uplink.

If the carrier phase transmission control according to the present embodiment is performed, the channel estimation accuracy at the base station can be improved. Accordingly, the number of pilot signals included in the uplink signal can be reduced to be less than that of conventional wireless communications. Similarly, the transmission power of the pilot signal can also be reduced. As a result, the data transfer efficiency in the uplink can be improved. If the transmission power of the pilot signal is reduced, the interference power to the surroundings can be reduced.

In the actual wireless device system, depending on a model type of the terminal, an environment where a model type thereof corresponding to the carrier phase transmission control and a model type thereof not corresponding thereto are mixed is conceivable. In this case, the terminal notifies the base station whether the model type corresponds to the carrier phase transmission control. Fig. 38 is a schematic of a signal format used when the terminal notifies the base station whether the model type corresponds to the carrier phase transmission control. In the format shown in Fig. 38, if the bit is "0", the model type is not capable of controlling the carrier phase transmission, and if the bit is "1", the model type is capable of controlling the carrier phase transmission.

The base station may adaptively select a signal format used by the terminal, based on whether the model type corresponds to the carrier phase transmission control. As shown in Fig. 39, the terminal corresponding to the carrier phase transmission control is instructed to transmit a signal by using a signal format with a small number of pilot signals. The terminal not corresponding to the carrier phase transmission control is instructed to transmit a signal by using a signal format with a large number of pilot signals. The instructions are given by the downlink control signals. The terminal may also select a signal format without being instructed, by defining the correspondence between the model type and the signal format as a standard, in advance.

Upon receiving a signal, as shown in Fig. 40, if the carrier phase transmission control is performed on the uplink signal (YES at Step S401), the base station performs highly accurate channel estimation by using target carrier phase and amplitude information (Step S402). If the carrier phase transmission control is not performed (NO at Step S401), a conventional channel estimation using the uplink signal is performed (Step S403). In this manner, by adaptively changing the signal format and the channel estimation method, based on whether the model type of the terminal corresponds to the carrier phase transmission control, the signal transmission and the channel estimation can be efficiently performed in an environment where various model types are present.

As a different example, if the carrier phase transmission control according to the present embodiment is performed, in an environment where the channel variation between the successive downlink and the uplink is small, the base station can identify the carrier phase and the amplitude of the uplink signal. Accordingly, as shown in Fig. 41, the base station can receive a signal even if an uplink signal transmitted from the terminal does not include a pilot signal. More specifically, the base station can receive a signal by using only a carrier amplitude and phase a$^{(pre)}$ predicted by the base station, and use the value as a channel estimation value.

By using the predicted carrier amplitude and phase a$_{(pre)}$, the base station can also determine modulated data or a part of the control symbol included in the uplink signal, and improve the channel estimation accuracy, by performing channel estimation using the determined symbol. Fig. 41 is a control process according to the present process. More specifically, Equation (31) is obtained, by weighting a channel estimation a$^{(blind\_est)}$ of the determined symbol and a predicted carrier amplitude and phase a$^{(pre)}$ with an appropriate weight r.

$$a'=ra^{(pre)}+(1-r)a^{(blind\_est)} \qquad\qquad (31)$$

By using a' in Equation (31) as a channel estimation, the signal can be received at high accuracy. In this case, because the base station identifies the carrier phase of the uplink signal, the determination success rate of the data symbol can be improved, by using the target carrier phase information, when the data symbol is determined. Accordingly, compared with a general blind detection that reproduces a carrier from the data symbol without identifying the carrier phase, determination of data or a control symbol can be performed effectively. As a result, the channel estimation can be improved.

If a part of the modulated data or the control symbol are modulated by BPSK or QPSK, the data or the control symbol can be determined at higher accuracy than when the multi-value modulation (16QAM and 64QAM) is used. This is because the received phase of the uplink unmodulated signal is identified by the carrier phase transmission control, the phase of the BPSK or QPSK signal can be determined with ease. In the carrier phase transmission control according to the present embodiment, the amplitude level of the uplink unmodulated signal can be adjusted at the same time. Accordingly, it is also possible to determine 16QAM and 64QAM. However, compared with when the BPSK and the QPSK are determined, the correct determination in the amplitude direction is required for 16QAM and 64QAM, thereby slightly increasing the error probability. Consequently, it is preferable to use the BPSK and the QPSK as determination symbols for channel estimation.

After the channel estimation value a' of Equation (31) is obtained by making a determination using a part of the symbol of the uplink signal, signals can be received by estimating the channel at high accuracy. Accordingly, as shown in the signal format in Fig. 42, only a part of the symbol used for estimating the channel is the BPSK or the QPSK, and the other symbols not used for estimating the channel is the multi-value modulation such as 16QAM and 64QAM. Consequently, it is possible to improve the data transfer efficiency while performing highly accurate channel estimation.

As shown in Fig. 43, only a part of the symbol used for channel estimation may be a control signal. For example, if a part of the symbol used for determination is formed by a packet serial number, the base station can recognize the packet serial number at the same time when the symbol is determined. If the control signal expresses whether it is a retransmitted packet or an initial transmitted packet, the base station can recognize that it is the retransmitted (or initial transmitted) packet.

An example of performing the carrier phase transmission control in the uplink is described here. However, this is only an example, and the similar control can also be performed in the downlink, by switching the above expressed base station and the terminal. For example, the signal transmitted to the terminal k from the base station in the downlink, controls the carrier phase of the transmitted signal, so as to be a specific phase in the terminal k.

As shown in Fig. 44, among the downlink signals, a symbol used for channel estimation may include a terminal ID that is the destination of the signal. In this case, the terminal determines the symbol including a terminal ID of the downlink signal at first, and if the terminal ID is addressed to the terminal, the terminal improves the channel estimation accuracy by using the determined symbol for the channel estimation, and receives the other signals (packet). If the ID is not addressed to the terminal, the terminal does not receive the other signals. In this manner, whether the downlink signal is received can be determined based on the determination value of the terminal ID. If the symbol to be determined is normal data, the number of processing steps to read the control signal after performing the channel estimation is increased. On the other hand, when the symbol including the control signal is determined, all the processes including the channel estimation can be advantageously and quickly stopped, if the packet is unnecessary.

In the above-described carrier phase transmission control in the downlink, when the base station transmits a signal to the terminals, the base station controls the transmission, so that the carrier phase is specific in the terminal where the signal is received. Accordingly, the carrier phase of the downlink signal is not a specific value in the terminal where the signal is not received. As a result, the terminal where the signal is not received receives a downlink signal with the completely different amplitude and phase from the channel estimation value being predicted. Consequently, the symbol including the terminal ID cannot be determined correctly. As a result, the determined values are meaningless random values, and the terminal does not receive the downlink signal, because it is not the terminal ID of the terminal itself. Accordingly, even if the carrier phase is not identified in the terminal where the signal is not received, the problem will not occur if the symbol is correctly determined by the terminal where the signal is received. From the other side, if the carrier phase transmission control is performed in the downlink, the carrier phase can be identified and the symbol can be determined correctly in the terminal where the signal is received, while in the other terminal where the signal is not received, the correct determination on the data symbol cannot be performed easily. Accordingly, it is also effective in protecting confidentiality.

In this manner, many advantages to perform carrier phase transmission control are conceivable, and so are many other advantages other than the above advantages. Other advantages are sequentially described in the embodiments below.

Twentieth Embodiment.

A twentieth embodiment will now be described. In the present embodiment, on the assumption that the terminal having a plurality of antennas transmits an unmodulated signal (carrier) from each of the antennas, a method of controlling the carrier phases of a plurality of signals transmitted from the antennas of the terminal become the same value in the base station, will be explained. The structure of the terminal is the same as that in the nineteenth embodiment.

The carrier phase transmission control of the terminal having the plurality of antennas is performed by executing the following procedures (20-1) to (20-4).

(20-1) Calibration to maintain the narrowly defined reciprocity is performed between the base station and the plurality of antennas m (m=1, ..., M). The calibration may be either the direct or the indirect calibration (for example, performed by the method described in the fourth or the fifth embodiment).

(20-2) The base station transmits a pilot signal $u_{BS}d(q)$ generated by multiplying a pilot signal d(q) by a correction coefficient $u_{BS}$.

(20-3) Each of the antennas m (m=1, ..., M) of the terminal receives the pilot signal transmitted from the base station in the downlink time slot, and measures a channel $u_{BS}h_{k,m}^{(DL)}$ from the received signal.

(20-4) In the next uplink time slot, a signal $v_{k,m}s(q)$ is simultaneously transmitted from the antenna m (m=1, ..., M) of the terminal, by multiplying a transmission weight $v_{k,m}=1/(u_{BS}h_{k,m}^{(DL)})$.

By executing the above procedure (20-1), both the base station and the antenna m (m=1, ..., M) of the terminal k are in the state in which the reciprocity is satisfied. When the signal is transmitted by the procedure (20-4), the signals transmitted from the antennas of the terminal have the same carrier phase in the base station. Accordingly, the signals are in phase and strengthening each other in the base station. In this manner, the terminal can perform transmit beamforming to strengthen the received signals, by using the phase relationship of the plurality of antennas. The present embodiment is applicable, in general, to an environment in which the carrier frequencies of the base station and the terminal are not the same nor very close. In an environment where the carrier frequencies are different in some degrees, the phase of the signal received by the base station rotates with time, but the relative phases among a plurality of signals transmitted from the plurality of antennas can be maintained.

Alternatively, if an environment where the carrier frequencies of the base station and the terminal are the same or very close is obtained, by using a highly accurate frequency oscillator such as a rubidium oscillator, or by performing an ultra accurate carrier frequency control, which will be described in the embodiment below, not only the transmit beamforming but also the phase of the signal that is an unmodulated signal (carrier) transmitted by using the transmit beam, received by the base station, may be controlled to a specific value. Accordingly, unlike the conventional transmit beam, the transmit beamforming can be performed, while controlling the transmission so that the signal received by the reception station (base station) has a specific phase.

Twenty-First Embodiment.

A twenty-first embodiment will now be described. In the present embodiment, a method of controlling a plurality of signals of a plurality of (at least two) terminals so that the relative carrier phase of the signals becomes a specific value in the base station, on the assumption that each of the terminals each transmits unmodulated signals (carriers) will be explained. The present embodiment provides an environment where the carrier frequencies of the plurality of terminals are the same or very close is achieved, by using a highly accurate frequency oscillator such as a rubidium oscillator, or by performing an ultra accurate carrier frequency control, which will be described in the embodiments below. However, the carrier frequencies between the base station and the terminal may be different to some extent. Fig. 45 is a configuration example of terminals (terminals k and 1) according to the twenty-first embodiment. Fig. 46 is a flowchart of a control procedure.

In the above-described nineteenth embodiment, one terminal is used to control the phase of the signal received by the base station so as to match with a specific phase. However, if it is assumed that two terminals transmit unmodulated signals (carriers), it is possible to control so that the relative phase of the two signals received by the base station become the specific value. The present control is performed by the following procedure.

(21-1) The base station and two terminals k and 1 execute calibration so that the antennas of the terminals and the base station maintain the narrowly defined reciprocity, respectively, and set a correction coefficient (Step S461). The calibration may be either the direct or indirect calibration (for example, performed by the method described in the fourth or the fifth embodiment).

(21-2) The base station transmits a pilot signal $u_{BS}d(q)$ generated by multiplying a pilot signal d(q) a pilot signal d(q) by a correction coefficient $u_{BS}$ (Step S462).

(21-3) The terminal k receives the pilot signal transmitted from the base station in the downlink time slot by each antenna m (m=1, ..., $M_k$), and measures a channel $u_{BS}h_{k,m}^{(DL)}$ from the received signal. Similarly, the terminal l measures a channel $u_{BS}h_{l,m}^{(DL)}$ from the pilot signal received by each antenna m (m-1, ...,$M_l$) (Step S463).

(21-4) In the next uplink time slot, the terminal k transmits a signal $s_k(q)$ generated by multiplying a transmission weight $v_{k,m}=1/(u_{BS}h_{k,m}^{(DL)})$ from the antennas m (m=1, ..., $M_k$) at the same time. Similarly, the terminal l transmits a signal $s_l(q)$ generated by multiplying a transmission weight $v_{l,m}=1/(u_{BS}h_{l,m}^{(DL)})$ from the antennas m (m=1, ..., $M_l$) at the same time (Step S464).

By the calibration performed in the procedure (21-1), the base station and each of the terminals k and l are in the state in which the narrowly defined reciprocity is satisfied. Accordingly, in the procedure (21-4), if a plurality of terminals performs carrier phase transmission control at the antennas, the signals transmitted from the antennas of the plurality of terminals are in phase and strengthen each other in the base station. In this manner, by using the method according to the present embodiment, the signals transmitted from the antennas of the plurality of terminals can be made in phase. The state is maintained even if the channel is varied. This is achieved because the terminals compensate the channel variation in the uplink, based on the channel variation in the downlink.

If the present embodiment is applied to a plurality of antennas of a terminal, all the signals transmitted from the plurality of antennas of the plurality of terminals can be set so as to have the same carrier phase in the base station. Here, the method of making the signals transmitted from the antennas of the plurality of terminals in phase in the base station is described. However, if the phase offset is notified to each of the terminals, the signals transmitted from the antennas of the plurality of terminals may have a specific relative phase in the base station.

In this manner, according to the present embodiment, the plurality of terminals can maintain the same carrier phase or a specific relative phase in the base station. As a result, when the plurality of terminals transmits the same signals while being controlled to be in phase in the base station, the signals transmitted from the plurality of terminals are in phase and strengthen each other in the base station. Even if the signal transmitted from the terminal is a modulated signal, the signals of the plurality of terminals maintain the same phase. Accordingly, the signals transmitted from the two terminals strengthen each other in the base station.

However, in the present embodiment, if each distance between one terminal and the base station is significantly different from the two terminals, a timing control is performed so that the modulated signals arrive at the base station at the same time. The timing control is performed by measuring a symbol start timing of the signals transmitted from the terminals at the base station, and transmitting a control signal to adjust the transmission timing to the terminals from the base station. For example, in the OFDMA, the timing error to receive the signals transmitted from the different terminals at the base station is controlled, so as to be the time difference within the guard interval. The timing control technology is a conventionally used technology, for example, in a literature: 3GPP RAN, 3G TR25.814 V1.2.1, "Physical layer aspects for evolved UTRA (Release 7)", Feb. 2006. If the timing control and the carrier phase transmission control according to the present embodiment are both used, it is preferable to perform the timing control first, so that the signals transmitted from the different terminals are received at the same timing at the base station, and then perform the carrier phase transmission control. This is because even if the carrier phase transmission control is performed at first, if the transmission timing is adjusted by the timing control, the carrier phase is changed at the same time.

Accordingly, as shown in Fig. 47, the base station and the terminals execute the transmission timing control (Step S471), and then execute the carrier phase transmission control (Step S472). By such a procedure, the modulated signals transmitted from the different terminals can be smoothly controlled, so that the base station receives the signals at the same time, and in phase.

As shown in Fig. 48, the signals transmitted from the two terminals strengthen each other in the base station. However, because the mutual phase relationship is not maintained in the other locations, the signal power is not increased as much as that in the base station. In other words, based on the present control, the interference exerted on the other neighboring wireless devices, which are not receivers, can be reduced, while increasing the reception power of the base station, which is a receiver. In other words, this corresponds to the state in which the cooperative transmit beamforming is performed, by using the antennas of the plurality of terminals. In this manner, because the plurality of terminals transmits signals in the coherent state, the phases are made in phase in the receiver, and the reception power can be increased.

In the conventional wireless communications, the carrier phase transmission control has not been performed. Accordingly, it was technically difficult for the plurality of terminals to perform the cooperative transmit beam control as shown in the present embodiment. However, as described in the present embodiment, the cooperative transmit beamforming can be performed, by performing appropriate calibration, and by making the terminals transmit appropriate signals by using the reciprocity.

Twenty-Second Embodiment.

A twenty-second embodiment will now be described. In the present embodiment, a method by which a plurality of relay wireless devices that performs carrier phase transmission control performs cooperative transmit beamforming, will be described. The present embodiment provides an environment where a plurality of relay wireless devices has the same or very close carrier frequencies is achieved, by using a highly accurate frequency oscillator such as a rubidium oscillator, or by performing the ultra accurate carrier frequency control, which will be described in the embodiment below. Fig. 49 is a schematic of the state of signal transmission when the control according to the twenty-second embodiment is executed.

In recent years, high-speed transmission is strongly demanded in wireless communications, and a system configuration that can efficiently provide a high-speed wireless transmission has been desired. With the high-speed transmission, the transmission power from the transmitter is increased, because the transmitter provides notification of a lot of bit information. However, with the transmitter that is not constantly connected to a power source, such as a mobile terminal, the power that can be charged into a battery is limited. Accordingly, a technology to reduce the transmission power has been sought after. Even for the transmitter that is constantly connected to a power source, technology to reduce power is important, because the consumption power can be reduced.

As a solution to meet such demand, a wireless communication system that uses a relay transmission system has been widely studied. In the relay transmission system, a terminal (or base station) sends a signal to a relay wireless device, and the relay wireless device relay-transmits the signal to the base station (or terminal). With such a relay transmission, the sum of the transmission power is expected to be reduced, while satisfying the requested communication quality.

In the present embodiment, cooperative transmit beamforming is performed, while a plurality of relay wireless devices k and l that has received signals from the terminal transmits the signals to the base station. A signal transmission procedure to the base station from the terminal is described below.

(22-1) The base station and two relay wireless devices k and l perform calibration so that the antennas of the terminals each maintain the narrowly defined reciprocity with the base station, and set a correction coefficient.

(22-2) The base station transmits a pilot signal $u_{BS}d(q)$ generated by multiplying a pilot signal a pilot signal $d(q)$ by a correction coefficient $u_{BS}$.

(22-3) The relay wireless device k receives the pilot signal transmitted from the base station in the downlink time slot by each antenna m ($m=1, ..., M_k$), and measures a channel $u_{BS}h_{k,m}^{(DL)}$ from the received signal. Similarly, the relay wireless device l measures a $u_{BS}h_{l,m}^{(DL)}$ from the pilot signal received by each antenna m ($m=1, ..., M_l$).

(22-4) The terminal transmits signals 491 and the relay wireless devices k and l receive the signals 491, and correct the phases so that the carrier phases of the received signals are temporarily 0.

(22-5) In the uplink time slot, the relay wireless device k multiplies the received signal corrected in the procedure (22-4) by a transmission weight $v_{k,m}=f_{k,m}/(u_{BS}h_{k,m}^{(DL)})$, and transmits the signal from each antenna m ($m=1, ...m M_k$) at the same time. Similarly, the relay wireless device l multiplies the received signal corrected in the procedure (22-4) by a transmission weight $v_{l,m}=f_{l,m}/(u_BSh_{l,m}^{(DL)})$, and transmits the signal from each antenna m ($m=1, ...m M_k$) at the same time.

The above-described procedure (22-4) may be performed in the middle of the procedures (22-1), (22-2), and (22-3), and even if the order of the procedures is changed, the present embodiment can be operated.

The values of the carrier phases of the signals received by the relay wireless devices k and 1 in the procedure (22-4) are generally in random between 0 to $2\pi$. This is because the signals pass through various channels before reaching the relay wireless devices k and l from the terminal. Accordingly, in the relay wireless devices k and l, a channel estimation is performed on the received signals 491, and by performing correction for the phase rotation obtained by the channel estimation, the carrier phases of the received signals are set to 0. The correction of the amplitude direction may be made so that the amplitude has a certain value. When the phase and the amplitude are corrected, the corrected signals become substantially the same in the relay wireless devices k and l. Consequently, this state becomes close to the state in which the plurality of wireless devices transmits the same signals and perform the cooperative transmit beamforming, as described in the twenty-first embodiment. In the relay wireless devices k and l, a reproduction relay of establishing the decoded information obtained by decoding the received signal as a transmitted signal, may be performed, or a non-reproduction relay in which information is relay-transmitted without decoding, may be performed.

In the above-described procedures (22-1) to (22-5), $f_{k,m}$ and $f_{l,m}$ is a parameter used to determine a weight at the antenna m of the relay wireless device k, and a parameter used to determine a weight at the antenna m of the relay wireless device l, respectively. The parameters are generally 0 or a positive real number. As is evident by comparing with the procedures (21-1) to (21-4) described in the twenty-first embodiment, the present embodiment is basically an example of applying the twenty-first embodiment to the relay wireless device. However, the parameters $f_{k,m}$ and $f_{l,m}$ are additionally used for the transmission weights. In the following, the meaning thereof is explained by referring to the relay wireless device k.

If the parameters $f_{k,m}$ and $f_{l,m}$ are real numbers, the transmission power of the signals transmitted from each antenna of the terminals (relay wireless devices) change by the setting. However, the fact that the signals are made in phase in the base station does not change, thereby obtaining the advantages of the present invention. In other words, even if various real number parameters $f_{k,m}$ and $f_{l,m}$ are set, the advantages of the present invention in which the phases of the plurality of signals are coherently synthesized, can be obtained.

When appropriate complex numbers $f_{k,m}$ and $f_{l,m}$ are set, the carrier phases of the signals transmitted from the terminals can strengthen each other, as long as the similar phase relationship can be obtained, although they are not exactly in phase at the base station. Accordingly, even if appropriate complex parameters $f_{k,m}$ and $f_{l,m}$ are set, the advantages of the present invention in which the phases of the plurality of signals are coherently synthesized, can be obtained.

In this manner, the base station can receive strong signals, because the plurality of relay wireless devices appropriately sets and transmits transmission weights $v_{k,m}=f_{k,m}/(u_{BS}h_{k,m}^{(DL)})$ and $v_{l,m}=f_{l,m}/(u_{BS}h_{l,m}^{(DL)})$ by using the parameters ($f_{k,m}$ and $f_{l,m}$). In other words, this corresponds to the state in which the plurality of relay wireless devices cooperatively performs the transmit beamforming, and transmits signals to the base station. Accordingly, the transmit beamforming can similarly be performed to a case where all the antennas belong to one wireless device, thereby obtaining a transmit beam gain. As a result, the signals can be received at high power only at the base station by the cooperative transmit beam, thereby reducing interference to neighboring wireless devices.

If any real number parameter $f_{k,m}$ is set for the transmission weight $v_{k,m}=f_{k,m}/(u_{BS}h_{k,m}{}^{(DL)})$, $v_{k,m}$ may be equivalently described in Equations (32) and (33):

$$v_{k,m}=f_{k,m}(u_{BS}h_{k,m}{}^{(DL)})^*/|u_{BS}h_{k,m}{}^{(DL)}|^2 \qquad (32)$$

$$v_{k,m}=f_{k,m}(u_{BS}h_{k,m}{}^{(DL)}) \qquad (33)$$

These are different only by a real scalar multiple. Accordingly, if $f_{k,m}$ is any real number parameter, the transmission weights of Equations (32) and (33) can also be used. The same can be applied to $v_{l,m}$.

In the actual wireless device system, a terminal (relay wireless device) is available that can correspond to the carrier phase synchronization and a terminal that cannot correspond thereto. In such an environment, the terminal notifies the base station whether the model type corresponds to the carrier phase synchronization, based on the format shown in Fig. 38, which is already described. Based on the ability of the model, the base station adaptively changes the transmission control method. More specifically, for the terminal that can correspond to the carrier phase transmission control, the base station performs cooperative transmit beamforming control. On the other hand, for the terminal that cannot correspond to the carrier phase transmission control, the base station performs normal relay transmission control. In this manner, by adaptively switching the relay transmission systems, the signal can be smoothly transmitted in an environment with various model types.

Twenty-Third A Embodiment.

A twenty-third A embodiment will now be described. In the present embodiment, a determination method of a transmission weight, when a plurality of relay wireless devices that performs carrier phase transmission control carries out cooperative transmit beamforming, will be explained. Fig. 50-1 is a schematic of an example of a control procedure according to the twenty-third A embodiment.

As described in the earlier embodiments, the reciprocity including the phase of the measured channel is satisfied among all the wireless devices, by performing the calibration to achieve the narrowly defined reciprocity. To simplify the explanation, in the present embodiment, a method of controlling the transmission weight of the relay wireless device, on a measurement channel $h_{k,m}=u_{BS}h_{k,m}{}^{(DL)}=u_{k,m}h_{k,m}{}^{(UL)}$, after the narrowly defined reciprocity is already satisfied between the transmitter and the receiver by the calibration, will be explained.

A signal $v_{k,m}s(q)(E[|s(q)|^2]=1)$ is transmitted, by setting a transmission weight of the antenna m of the relay wireless device k to $v_{k,m}$. In this case, a signal $x_{BS}(q)$ received by the base station is expressed by Equation (34):

[Expression 23]

$$x_{BS}(q) = \sum_{k=1}^{K}\sum_{m=1}^{M_k} h_{k,m}v_{k,m}s(q)+z_{BS}(q) = (h^Tv)\cdot s(q)+z_{BS}(q)$$

$$v = \left[v_{1,1},\ldots,v_{1,M_1},v_{2,1},\ldots,v_{2,M_2},\ldots,v_{k,1},\ldots,v_{k,M_K}\right]^T \qquad (34)$$

$$h = \left[h_{1,1},\ldots,h_{1,M_1},h_{2,1},\ldots,h_{2,M_2},\ldots,h_{k,1},\ldots,v_{k,M_K}\right]^T$$

In Equation (34), $z_{BS}(q)$ is an interference noise component at the base station, and satisfies $P_{BS,z}=E[|z_{BS}(q)|^2]$. $M_k$ is the number of antennas of the relay wireless device k, and $T$ represents a transpose. A received SINR $\gamma$ of the signal $x_{BS}(q)$ at the base station is expressed by Equation (35):

[Expression 24]

$$\gamma = \frac{\left|h^T v\right|^2}{P_{BS,z}} \qquad (35)$$

If h'=h/||h||, $v_1 = (h,^T v)h'^*$, and $v_2 = v - v_1$, Equation (36) is satisfied:
[Expression 25]

$$\gamma = \frac{\|h\|^2 \|v_1\|^2}{P_{BS,z}} = \frac{\|h\|^2 (\|v\|^2 - \|v_2\|^2)}{P_{BS,z}} = \frac{\|h\|^2 (P_s - \|v_2\|^2)}{P_{BS,z}} \qquad (36)$$

In Equation (36), $P_s = \|v\|^2$ is the total transmission power from all the antennas of all the terminals. Accordingly, while the total transmission power $P_s$ is constant, the received SINR at the base station becomes maximum at $v_2 = 0$ and $v = P_s h^*/\|h\|$, and the maximum received SINR is given by Equation (37):
[Expression 26]

$$\gamma = \frac{P_s \|h\|^2}{P_{BS,z}} \qquad (37)$$

If the received SINR required by the base station is $\gamma_{req}$, $P_S$ and v are given by Equation (38):
[Expression 27]

$$P_S = \frac{P_{BS,z}\gamma_{req}}{\|h\|^2}, v = \frac{\sqrt{P_{BS,z}\gamma_{req}}}{\|h\|^2} h^* \qquad (38)$$

Equation (38) shows the optimal state, and the optimal state discloses that the cooperative transmit beamforming can be performed by the following control.
(23-1) Each of the relay wireless devices transmits a pilot signal in the uplink (Step S501) and the base station measures a propagation vector h (Step S502).
(23-2) The base station notifies all the relay wireless devices of a parameter ξ expressed by Equation (39) in the downlink (Step S503):
[Expression 28]

$$\xi = \sqrt{P_{BS,z}\gamma_{req}} / \|h\|^2 \qquad (39)$$

(23-3) The relay wireless device receives a signal s(q) transmitted from the terminal (Step S504).
(23-4) Each of the relay wireless devices measures a channel $h_{k,m}$ in the downlink and transmits a signal $\xi h_{k,m}{}^* s(q)$ by using a weight $v_{k,m} = \xi h_{k,m}{}^*$ in the uplink (Step S505).
In this manner, in the present embodiment, the plurality of relay wireless devices measures the downlink channel state with the base station, by using the pilot signal transmitted from the base station. The cooperative transmit beamforming is performed, by determining the phase or the phase and the amplitude of the signal transmitted from the relay wireless devices, based on the channel measurement. By the relay transmission, the plurality of relay wireless devices can perform appropriate cooperative transmit beamforming, and the base station can achieve the required received SINR $\gamma_{req}$.

The above control is a control to achieve the optimal state in which the required received SINR $\gamma_{req}$ is obtained by the minimum transmission power, by having the relay wireless devices perform cooperative transmit beamforming. However, the advantages of the cooperative transmit beamforming can be obtained, even if it is not the optimal control.

For example, the parameter $\xi$ may not be notified to the relay wireless devices by the base station. Accordingly, the relay wireless devices k may set a unique real-number parameter $\xi_k$, measure a channel $h_{k,m}$ in the downlink, and transmit a signal $h_{k,m}{}^*s(q)$ by using a weight $v_{k,m}=\xi_k h_{k,m}{}^*$ in the uplink, for example. In this case, the signal received by the base station is expressed by Equation (40-1), and even if the relay wireless devices k set the unique real-number parameter $\xi_k$, the signals transmitted from the relay wireless devices are in phase:

[Expression 29-1]

$$x_{BS}(q) = \sum_{k=1}^{K} \sum_{m=1}^{M_k} \xi_{k,m} \left\| h_{k,m} \right\|^2 s(q) + z_{BS}(q) \qquad (40-1)$$

Accordingly, the signals transmitted from the relay wireless devices strengthen each other at the base station, thereby obtaining the advantages of the cooperative transmit beamforming. Even if the parameter $\xi_k$ of the relay wireless device k is not a real number, as long as it is an appropriate complex number, the signals $x_{BS}(q)$ received by the base station are close to be in phase. Consequently, the advantages of the cooperative transmit beamforming can also be obtained, even if each of the relay wireless devices uses an appropriate complex number parameter $\xi_k$.

Aside from the above-mentioned explanations, the base station may individually notify each of the relay wireless devices k of the parameter $\xi_k$, and the relay wireless devices k may individually set the transmission power. In the above explanation, each of the relay wireless devices k measures the channel $h_{k,m}$ in the downlink, and transmits the signal $h_{k,m}{}^*s(q)$ by using the weight $v_{k,m}=\xi_k h_{k,m}{}^*$ in the uplink. In this manner, the advantages of the cooperative transmit beamforming can be obtained, by determining the transmission weight by using the complex conjugate of the downlink channel measurement.

As described in the above procedure (23-2), when the base station provides notification of the parameter $\xi$, the relay wireless device determines the weight based on the parameter $\xi$. In this case, the weight includes not only the phase but also the amplitude level, and the transmission power of the relay wireless device is determined based on the parameter $\xi$. Accordingly, the present invention is also **characterized in that** the transmission power of the relay wireless device is controlled, by notifying the relay wireless device of one parameter.

The base station can achieve the required received SINR $\gamma_{req}$ and satisfy the required state, by determining the parameter $\xi$ based on the channel measurement h, the required SINR $\gamma_{req}$, the interference noise power $P_{BS,z}$ of the base station, or the required communication quality. In this manner, the present invention is also **characterized in that** the transmission power of the plurality of relay wireless devices is controlled, based on the channel measurement h, the required SINR $\gamma_{req}$, the interference noise power $P_{BS,z}$ of the base station, or the required communication quality.

Twenty-Third B Embodiment.

A twenty-third B embodiment will now be described. In the present embodiment, the relay wireless device k transmits a signal s(q) towards the base station. However, the signal transmitted from the relay wireless device k may include noise. In general, if a received signal is temporarily decoded by the relay wireless device (referred to as reproduction relay) or if a signal is provided by the wired network, the signal transmitted from the relay wireless device does not include noise. If the signal received by the relay wireless device is directly amplified and transmitted (referred to as nonreproduction relay), the signal includes noise. In the present embodiment, an example of a control method when the signal transmitted from the relay wireless device includes a noise component is disclosed. If a signal transmitted from the relay wireless device includes noise, the twenty-third A embodiment is applicable as a control to obtain a sub-optimal state, but in the present embodiment, a further highly accurate transmission control is disclosed.

Similarly to the twenty-third A embodiment, a transmission weight of the antenna m of the relay wireless device k is set to $v_{k,m}$. The signal received by the relay wireless device k transmitted from the terminal is expressed by Equation (40-2). However, $E[|s(q)|^2]=1$.

[Expression 29-2]

$$y_k(q) = \sqrt{P_k^{(s)}}s(q) + z_k(q) \qquad\qquad (40-2)$$

In Equation (40-2), $z_k(q)$ is a noise component when the signal is received by the relay wireless device k. In this case, the signal $x_{BS}(q)$ received by the base station is expressed by Equation (40-3):

[Expression 29-3]

$$x_{BS}(q) = \sum_{k=1}^{K}\sum_{m=1}^{M_k} h_{k,m} v_{k,m} s(q)\frac{y_k(q)}{\sqrt{P_k^{(s)}+P_k^{(z)}}} + z_{BS}(q)$$

$$= \sum_{k=1}^{K}\sum_{m=1}^{M_k} \frac{v_{k,m}}{\|v\|} x_{k,m}(q)$$

$$\qquad\qquad (40-3)$$

$$x_{k,m}(q) = \frac{|v|\sqrt{P_k^{(s)}}h_{k,m}}{\sqrt{P_k^{(s)}+P_k^{(z)}}} s(q) + z_{k,m}(q)$$

$$z_{k,m}(q) = \frac{|v|h_{k,m}}{\sqrt{P_k^{(s)}+P_k^{(z)}}} z_k(q) + \sqrt{P_{BS}^{(z)}}z_{k,m}^{(norm)}(q)$$

In Equation (40-3), $z_{BS}(q)$ is a Gaussian noise of the base station that includes noise power $E[|z_{BS}(q)|^2]=P_{BS}^{(z)}$, and $z_{k,m}^{(norm)}(q)$ is an independent complex Gaussian variable of a dispersion 1 ($E[|z_{k,m}^{(norm)}(q)|^2]=P_{BS}^{(z)}$). In a variation of $x_{BS}(q)$ of Equation (40-3), $z_{BS}(q)$ can be equivalently expressed by Equation (40-4), by using an independent Gaussian variable $z_{k,m}^{(norm)}(q)$ (k=1, .., K, m=1, ..., M):

[Expression 29-4]

$$z_{BS}(q) = \sqrt{P_{BS}^{(z)}}\sum_{k=1}^{K}\sum_{m=1}^{M_k} \frac{v_{k,m}}{\|v\|} x_{k,m}(q)\, z_{k,m}^{(norm)}(q) \qquad\qquad (40-4)$$

The signal $x_{k,m}(q)$ corresponds to a signal received by the base station, when the relay wireless device k relay-transmits a nonreproduction signal at a transmission power $\|v\|$ to the base station, by using only the antenna m. $x_{BS}(q)$ is a weighted sum of the signal $x_{x,m}(q)$, and when a weight $v_{k,m}$ is the maximum ratio combining weight of Equation (40-5), the SNR $\Gamma$ becomes maximum.

[Expression 29-5]

$$\frac{v_{k,m}}{\|v\|} = \mu \frac{\sqrt{\Gamma_{k,m}}}{\sqrt{E\left[\left|z_{k,m}(q)\right|^2\right]}} \frac{h^*_{k,m}}{\left|h_{k,m}\right|}$$

$$= \mu \frac{\sqrt{\gamma^{(1)}_{k,m}\gamma^{(2)}_{k,m}}\sqrt{1+\gamma^{(2)}_{k,m}}}{\gamma^{(1)}_{k,m}+\gamma^{(2)}_{k,m}+1} \frac{h^*_{k,m}}{\left|h_{k,m}\right|}$$

$$\Gamma_{k,m} = \frac{\gamma^{(1)}_{k,m}\gamma^{(2)}_{k,m}}{\gamma^{(1)}_{k,m}+\gamma^{(2)}_{k,m}+1} \qquad (40\text{-}5)$$

$$\gamma^{(1)}_{k,m} = \frac{\|v\|^2\left|h_{k,m}\right|^2}{P^{(z)}_{BS}}$$

$$\gamma^{(2)}_{k,m} = \frac{P^{(s)}_k}{P^{(z)}_k}$$

$$\mu = \left\{\sum_{k=1}^{K}\sum_{m=1}^{M_k} \frac{\gamma^{(1)}_{k,m}\gamma^{(2)}_{k,m}\left(1+\gamma^{(2)}_{k,m}\right)}{\gamma^{(1)}_{k,m}+\gamma^{(2)}_{k,m}+1}\right\}^{-1/2}$$

In Equation (40-5), $\Gamma_{k,m}$ is a SNR of $x_{k,m}(q)$, and $\mu$ is a scalar. $\gamma_{k,m}^{(2)}$ is a received SNR at the pathway from the terminal to the relay wireless device k, and $\gamma_{k,m}^{(1)}$ is a received SNR at a pathway from the antenna m of the relay wireless device k to the base station (when the relay wireless device transmits a signal without noise). In this case, the SNR $\Gamma$ at the base station is the maximum value of Equation (40-6):

[Expression 29-6]

$$\Gamma_{max} = \sum_{k=1}^{K}\sum_{m=1}^{M_k}\Gamma_{k,m} \qquad (40\text{-}6)$$

In other words, if the signal transmitted from the relay wireless device includes a noise component, an optimal state can be achieved, by setting the weight $v_{k,m}$ in Equation (40-5). To achieve this state, the following control method is described in the present embodiment. Fig. 50-2 is a schematic of the present control procedure.

(23B-1) The relay wireless station k (=1, ..., K) independently transmits an uplink pilot signal at a transmission power $\|v\|^2$ from each antenna. At the same time, the relay wireless device k (=1, ..., K) measures an SINR of the signal transmitted from the terminal, and notifies the base station of information $\gamma_{k,m}^{(2)}=p_k^{(s)}/p_k^{(2)}$.

(23B-2) The base station identifies $\gamma_{k,m}^{(1)}$ and $\gamma_{k,m}^{(2)}$, and determines $\mu$ of Equation (40-5).

(23B-3) The base station transmits a parameter $\eta_1=\mu\cdot\|v\|$ and a pilot signal at a transmission power $\|v\|^2/P_{BS}^{(z)}$ to all the relay wireless stations in the downlink.

(23B-4) Each of the relay wireless stations calculates $\gamma_{k,m}^{(1)}=\|v\|^2|hk,m|^2/P_{BS}^{(z)}$ from the pilot reception power. Each of the relay wireless stations also determines a weight $v_{k,m}$ from Equation (40-5), by using $\gamma_{k,m}^{(1)}$, $\gamma_{k,m}^{(2)}$, and $\eta_1$.

In this manner, in the present embodiment, the plurality of relay wireless devices notifies the base station of the reception state or the received SNR $\gamma_{k,m}^{(2)}$ of the signal received (or will be received) from the terminal. As a result, the base station can identify the reception state of the signal at the relay wireless device, and can control the transmission, so that the relay wireless devices can determine a good transmission weight, by taking the state into consideration. In this manner, because the relay wireless device notifies the base station of the state of the received signal, it is possible to obtain the highly accurate transmission control in which the noise included in the signal received by the relay wireless device is taken into consideration.

In the above procedure (23B-4), the relay wireless devices can measure the uplink reception state or an SNR $\gamma_{k,m}^{(1)}=\|v\|^2|h_{k,m}|^2/P_{BS}^{(z)}$ at the base station, by using the downlink pilot signal transmitted from the base station. In this manner, because the base station adjusts the transmission power of the downlink pilot signal based on the noise power $P_{BS}^{(z)}$ at the base station, the relay wireless device can identify the uplink received SINR $\gamma_{k,m}^{(1)}$ at the pathway from the relay wireless device to the base station. The relay wireless device can also determine an appropriate transmission weight, by taking both the SNR $\gamma_{k,m}^{(2)}$ of the signal received from the terminal and the SNR $\gamma_{k,m}^{(1)}$ at the pathway to the base station into consideration.

The control procedures from (23B-1) to (23B-4) described in the present embodiment are exemplary, and various methods to provide notification of the above-described SNR and to determine the weight by using the SNR are conceivable.

Twenty-Third C Embodiment.

A twenty-third C embodiment will now be described. In the present embodiment, cooperative transmit beam control in which the method according to the twenty-third A embodiment is applied to a multi-carrier transmission such as OFDMA/TDD, is described.

The weight determination similar to that of the twenty-third A embodiment can also be performed in the subcarriers or frequencies, in the multi-carrier transmission. In this case, a parameter $\xi_l$ corresponding to each of the subcarriers l is individually notified. Fig. 50-3 is a schematic of the present control procedure.

(23C-1) Each of the relay wireless devices transmits a pilot signal in a subcarrier l (l=1, ..., L) in the uplink, and the base station measures a propagation vector $h_1$ for the subcarrier 1.

(23C-2) The base station notifies all the relay wireless devices of a parameter $\xi_1$ corresponding to the subcarrier l (l=1, ..., L) in the downlink.

(23C-3) The relay wireless device receives a signal $s_1(q)$ from the terminal, for each subcarrier l (l=1, ..., L).

(23C-4) Each of the relay wireless devices measures a channel $h_{k,m,l}$ for each subcarrier l (l=1, ..., L) in the downlink, and transmits a signal $\xi h_{k,m,l}^*/s_1(q)$ by using a weight $v_{k,m,l}=\xi h_{k,m,l}^*$ in the uplink.

In this manner, in the present embodiment, the cooperative transmit beamforming is performed in each of the subcarriers. This is because each of the plurality of relay wireless devices measures the downlink channel state with the base station for each subcarrier, by using a pilot signal transmitted from each of the base station, and determines the phase or the phase and amplitude of the signal transmitted from the relay wireless devices, based on the channel measurement. By the relay transmission, the plurality of relay wireless devices can perform appropriate cooperative transmit beamforming, and the base station can obtain a high received SINR by synthesizing the phases of the signals.

As an alternative structure to the above, the parameter notified from the base station may be commonly used by a plurality of subcarriers. In this case, the base station sets one common parameter $\xi$ so as to be $\xi_1=...=\xi_L=\xi$, and in the procedure (23C-2), the base station notifies all the relay wireless devices of the common parameter $\xi$ in the downlink. According to the present configuration, the number of parameters notified in the downlink may be reduced to be less than the number of subcarriers. Due to the reduced control amount, efficient transmission control is made possible. It is also possible to appropriately set the parameter $\xi$, based on the required quality. In this manner, the present invention is also **characterized, in that** the transmission power of the plurality of relay wireless devices can be controlled, in the multi-carrier transmission such as OFDMA/TDD, based on the required communication quality.

Twenty-Fourth Embodiment.

A twenty-fourth embodiment will now be described. In the present embodiment, a determination method of a transmission weight used when a plurality of relay wireless devices that performs carrier phase transmission control carries out cooperative transmit beamforming will be explained. In particular, an operation when the base station includes a plurality of antennas is described here. Fig. 51 is a schematic of the states of a signal transmission, when the control according to the twenty-fourth embodiment is executed. The structure of the base station is the same as the base station described in the fourteenth embodiment (see Fig. 27).

As described in the earlier embodiments, the reciprocity including the phase of measurement channel is satisfied among all the relay wireless devices and the plurality of base stations, if the calibration to achieve the narrowly defined reciprocity is performed. To simplify the explanation, in the present embodiment, a method of controlling the transmission weight of the relay wireless device for a measurement channel ($h_{BS,n,k,m}=u_{BS,n}h_{BS,n,k,m}^{(DL)}=u_{k,m}h_{BS,n,k,m}^{(UL)}$) between the antenna n (=1, ...,N) of the base station and the antenna m (=1, ..., $M_k$) of the relay wireless device, when the narrowly defined reciprocity has been already satisfied between the transmitter and the receiver by the calibration, will be explained. Here, N is the number of antennas of the base station, and $u_{BS,n}$, $h_{BS,n,k,m}^{(DL)}$, and $h_{BS,n,k,m}^{(UL)}$ are the parameters the same as those defined in the above-described fourteenth embodiment. $N \times M$ matrix $H_{BS,k}$ in which (n,m) element includes $[H_{BS,k}]_{n,m}=h_{BS,n,k,m}$ is defined.

A signal $v_{k,m}s(p)$ $(E[|s(q)|^2]=1)$ is transmitted, by setting a transmission weight of the antenna m of the relay wireless device k to $v_{k,m}$. In this case, $N \times 1$ received signal vector $x_{BS}(q)=[x_{BS,1}(q), ..., x_{BS,N}(q)]^T$ at the N antenna of the base station is expressed by Equation (41):
$$x_{BS}(q) = H \cdot v \cdot s(q) + z_{BS}(q)$$

$$v = [v_{1,1}, \ldots, v_{1,M1}, v_{2,1}, \ldots, v_{2,M2}, v_{k,1}, \ldots, v_{k,Mk}]^T$$

$$H = [H_{BS,1}, \ldots, H_{BS,K}] \tag{41}$$

In Equation (41), $x_{BS,n}(q)$ is a signal received by the antenna n of the base station, $z_{BS}(q)=[x_{BS,1}(q), \ldots, x_{BS,N}(q)]^T$ is an interference noise vector at the base station, and $z_{BS,n}(q)$ is an interference noise component at the antenna n of the base station. The signals are combined by using a reception weight $w_n$ at the antenna n of the base station. In this case, a combined output $y(q)$ at the base station is given by Equation (42):

$$y(q) = w^T x_{BS}(q) = w^T H \cdot v \cdot s(q) + w^T z_{BS}(q) \tag{42}$$

In Equation (42), $w=[w_1, \ldots, w_N]^T$. If the transmission weight v from the relay wireless device and the reception weight w at the base station are appropriately determined, high quality received beam output $y(q)$ can be obtained.

The weights v and w that can obtain such high quality received beam output $y(q)$ have not been studied at all for the relay wireless device. However, the weights have been widely studied for the MIMO channel formed by a pair of a transmitter and a receiver including a plurality of antennas. In the study, it is known that good reception quality can be obtained, by giving the weights v and w as eigenvectors for matrix $H^H H$ or $H^* H^H$. Here, $H$ is a complex conjugate transpose.

In the MIMO transmission using a pair of a transmitter and a receiver, the transmitter can obtain channel information H and generate a transmission weight v, if the channel measurement is performed by using the reciprocity in the TDD. However, if the plurality of relay wireless devices k transmits signals, it is not easy to measure the channel information H, so that the relay wireless devices k can generate weights $v_{k,1}, \ldots, V_{k,Mk}$. The reason being that, the channel information H not only includes the channel information between the base station and the relay wireless devices k, but also the channel information between the base station and another wireless device 1.

As a technology to solve the problem, in the present embodiment, the transmit and receive beamforming is performed, based on the following procedure.

(24-1) Each of the relay wireless devices transmits a pilot signal in the uplink (Step S511), and the base station measures a transfer matrix H (Step S512).

(24-2) The base station transmits a pilot signal d(q), by using an eigenvector corresponding an eigenvalue of $H^* H^H$ as $N \times 1$ transmission weight w (transmit beamforming) (Step S513).

(24-3) The relay wireless device k receives the pilot signal in the downlink by the Mk antenna, and measures $Mkx1$ propagation vector $h_k = H^T_{BS,k} w$ at the Mk antenna (Step S514).

(24-4) The relay wireless device k transmits a signal $\xi \cdot h_{k,m}^* s(q)$ from the Mk antenna, by using $Mk \times 1$ weight vector $\xi \cdot h_k^*$ in the uplink (Step S515). Here, $\xi$ is a parameter determined between the base station and the relay wireless device in advance.

(24-5) The base station receives the signals that the plurality of relay wireless devices has simultaneously transmitted by the receive beam (Step S516).

The control procedure according to the present embodiment has been described above, and the contents thereof are described below.

In the above procedure (24-2), the transmission weight w satisfies the relationship of $H^* H^T w = \rho_n w$, where $\rho_n$ represents the n-th eigenvalue. A transmission weight $w(\|w\|=1)$ is determined as an eigenvector corresponding to the n-th eigenvalue, and in general, the one corresponding to the maximum eigenvalue is used. A transmit beam formed by using the transmission weight w is generally called a fixed transmit beam. In the procedure (24-4), the signal transmitted from the relay wireless devices k is $H_{BS,k} \cdot \xi \cdot h_{k,m}^* s(q) = \xi \cdot (H_{BS,k}^* H_{BS,k}^T w)^* s(q)$, when it is received by the base station. Because the base station receives the signals from all the relay wireless devices k (k=1, ..., K) at the same time, $N \times 1$ received signal vector $x_{BS}(q)$ at the base station is expressed by Equation (43):
[Expression 30]

$$x_{BS}(q) = \sum_{k=1}^{K} \xi \cdot (H_{BS,k}^* \cdot H_{BS,k}^T w)^* s(q) + z_{BS}(q)$$

$$= \xi \cdot (H^* \cdot H_{BS}^T w)^* s(q) + z_{BS}(q) \qquad (43)$$

$$= (\xi \cdot \rho_n w^*) s(q) + z_{BS}(q)$$

When the N antennas receive the signals by the maximum ratio combining, the reception weight is w. In other words, when the base station combine and receive the signals by using the weight w that is the same weight used for pilot transmission in the procedure (24-2), the signals are obtained by maximal ratio combining. In this case, the combined output y(q) is given by Equation (44):

$$y(q) = w^T x_{BS}(q) = (\xi \cdot \rho_n) s(q) + w^T z_{BS}(q) \qquad (44)$$

In Equation (44), $||w||=1$, and if $z_{BS}(q)$ is a white noise, the noise component of the combined output becomes constant.

In Equation (44), the signal level received by the base station is determined in proportion to ($\xi \cdot \rho_n$). Accordingly, the uplink received signal obtains a larger received signal gain, as the signal is transmitted using the weight w corresponding to a large eigenvalue. In this manner, the plurality of relay wireless devices performs uplink signal transmission, based on the channel measurement result of the downlink pilot signal transmitted from the base station, by using the transmit beamforming. As a result, a large gain corresponding to the eigenvalue can be obtained, in the MIMO channel formed by the plurality of antennas of the base station and the plurality of relay wireless devices.

The base station can also notify the relay wireless device of the parameter $\xi$, based on the high reception power or the required received SINR. In this case, the relay wireless device performs uplink signal transmission by using the $\xi$ notified from the base station as a weight. In this manner, by adaptively controlling the parameter $\xi$ based on the demand from the base station, it is possible to efficiently use the various required reception power and the required received SINR.

As the above, in the present embodiment, the base station performs transmit beamforming and transmits a downlink pilot signal. In the relay wireless device, a transmitted signal weight or transmission power in the uplink is determined, based on the response of the pilot signal transmitted from the base station by using the transmit beamforming.

Twenty-Fifth Embodiment.

A twenty-fifth embodiment will now be described. In the present embodiment, a determination method of a transmission weight, when a plurality of relay wireless devices that performs carrier phase transmission control carries out the cooperative transmit beamforming, will be explained. Here, an operation in which, when the base station has a plurality of antennas, the relay wireless device transmits a plurality of signals at the same time, and the base station receives the spatially separated a plurality of signals, will particularly be explained. Fig. 52 is a schematic of the states of a signal transmission, when the control according to the twenty-fifth embodiment is executed. The structures of the base station and the relay wireless device are the same as the structures of the base station and the terminal shown in the above-described fourteenth embodiment (see Fig. 27).

In the twenty-fourth embodiment, the plurality of relay wireless devices has cooperatively transmitted one signal. However, the plurality of signals may be transmitted at the same time. The base station receives a plurality of spatially separated signals by using the plurality of antennas. As a result, the transmission efficiency of the signals can be improved.

The control procedure according to the present embodiment is described below. Because the basic configuration is similar to that of the twenty-fourth embodiment, the portions different from those in the twenty-fourth embodiment will be mainly explained. In the present embodiment, the transmit and receive beamforming is performed based on the following procedures.

(25-1) Each of the relay wireless devices (relay wireless devices k and l) transmits a pilot signal in the uplink (Step S521), and the base station measures a transfer matrix H (Step S522).

(25-2) The base station determines a plurality of (equal to or more than two and equal to or less than N) $N \times 1$ weights $w_1$ and $w_2$ as different eigenvectors that correspond to different eigenvalues of $H^*H^T$. The base station then weights a plurality of pilot signals $d_1(q)$ and $d_2(q)$ by the plurality of weights $w_1$ and $w_2$ (transmit beamforming), and transmits the signals in the downlink (Step S523). The different pilot signals may be transmitted at the same time and frequency, or at different times and frequencies. If the different pilot signals are transmitted at the same time and frequency, it is strongly preferable that the patterns of the plurality of pilot signals are in perpendicular relationship with each other.

(25-3) Each of the relay wireless devices individually receives each of the plurality of pilot signals in the downlink, by the Mk antenna, and measures $Mk \times 1$ propagation vectors $h_k^{(1)} = H_{BS,k}{}^T w_1$ and $h_k^{(2)} = H_{BS,k}{}^T w_2$ corresponding to the Mk antenna (Step S524).

(25-4) Each of the relay wireless devices individually transmits different signals $\xi \cdot h_k^{(1)*} s_1(q)$ and $\xi \cdot h_k^{(2)*} s_2(q)$ from the Mk antenna, corresponding to the plurality of $Mk \times 1$ weight vectors $\xi \cdot h_k^{(1)*}$ and $\xi \cdot h_k^{(2)*}$ in the uplink (Step S525). Here, $\xi$ is a parameter determined in advance.

(25-5) The base station individually receives a plurality of spatially separated signals simultaneously transmitted from the plurality of relay wireless devices, by using the different receive beams (Step S526).

The present embodiment is an embodiment in which a plurality of signals is spatially multiplexed in the structure of the transmitter and the receiver described in the twenty-fourth embodiment. This is achieved because the relay wireless devices use an individual transmission weight for a plurality of transmitted signals. In this case, the plurality of signals transmitted in the uplink is each directed in a different spatial direction. As a result, the base station can smoothly receive the separated signals, by using the different spatial directions.

The detailed state will now be described. In the above procedure (25-2), when the plurality of downlink pilot signals is transmitted without interfering with each other from the base station, substantially the same state as that of the twenty-fourth embodiment is maintained for the uplink signals. Accordingly, two weights $w_1$ and $w_2$ of the base station are assumed as different eigenvectors corresponding to the n-1st and n-2nd eigenvalues of the $H^*H^T$, respectively. In this case, if the signals of which the terminal transmits in the uplink correspondingly to the pilot signals from the plurality of weights $w_1$ and $w_2$, are $s_1(q)$ and $s_2(q)$, $N \times 1$ received signal vector $x_{BS}(q)$ of the base station is expressed as below:

$$x_{BS}(q) = (\xi \cdot \rho_{n1} w_1{}^*) s_1(q) + (\xi \cdot \rho_{n2} w_2{}^*) s_2(q) + z_{BS}(q)$$

Here, the two weights $w_1$ and $w_2$ are different eigenvectors of $H^*H^T$, thereby satisfying $w_1{}^H w_2 = 0$. Accordingly, the response vectors $(\xi \cdot \rho_{n1} w_1{}^*)$ and $(\xi \cdot \rho_{n2} w_2{}^*)$ of the two signals are in perpendicular relationship.

When the base station receives the signals $s_1(q)$ and $s_2(q)$ by using the reception weights $w_1$ and $w_2$, respectively, the combined outputs $y_1(q)$ and $y_2(q)$ corresponding to the signals $s_1(q)$ and $s_2(q)$ are given by Equation.

$$y_1(q) = w_1{}^T x_{BS}(q) = (\xi \cdot \rho_{n1}) s_1(q) + w_1{}^T z_{BS}(q)$$

$$y_2(q) = w_2{}^T x_{BS}(q) = (\xi \cdot \rho_{n2}) s_2(q) + w_2{}^T z_{BS}(q)$$

In other words, the other signal being spatially multiplexed can be eliminated. In this manner, the base station can receive a plurality of spatially separated signals being spatially multiplexed.

The maximum number of signals that can be spatially multiplexed are determined by the number of eigenvalues of $H^*H^T$. In the present embodiment, two uplink signals are transmitted and controlled by using the same parameter $\xi$. However, different parameters $\xi$ may be used for each individual signal, by notifying the relay wireless device from the base station. In this case, the transmission power can also be controlled based on the required reception quality, for each of the signals being spatially multiplexed.

As described above, in the present embodiment, the base station performs transmit beamforming for a plurality of times, and transmits a plurality of downlink pilot signals. The relay wireless device determines a plurality of transmission signal weights or the transmission power in the uplink, and transmits a plurality of signals, based on the response of the plurality of pilot signals transmitted from the base station by using the transmit beamforming. The base station receives the separated signals being spatially multiplexed by using a plurality of antennas. As a result, with the spatial multiplexing effect, efficient wireless device signal transmission is possible, by using the limited wireless resources.

Twenty-Sixth Embodiment.

A twenty-sixth embodiment will now be described. As described in the above twenty-second to the twenty-fifth embodiments, there are various methods to control the relative phase between the two relay wireless devices. Accordingly, the direct calibration with the base station is not necessarily performed. For example, as an example shown in Fig. 49, when the positional relationship between the relay wireless device and the base station is far, and when the propagation loss is large, the relay wireless devices k and l may perform calibration with the terminal that is a transmission source of the signal, instead of the base station. Accordingly, a transmission control on the relative phase can be performed.

In this case, the terminal and the base station may not be calibrated. In this case, because the absolute phase of the terminal and the base station is not corrected, the relay wireless devices k and l that have performed calibration with the terminal cannot control the absolute phase of the base station. However, if the relay wireless devices k and l perform calibration with the same terminal, the relative phase of the relay wireless devices k and l is in a constant relationship. The relationship can be maintained when the signal is transmitted to the base station.

In other words, when a signal is transmitted to the base station after the relay wireless devices k and l have performed calibration with the terminal, the received phase of the two signals at the base station cannot be controlled, but the relative phase between the two signals can be controlled. Even if the absolute phase cannot be controlled, the cooperative transmit beamforming can be performed, if the relative phase between the relay wireless devices can be controlled. Accordingly, it is also possible to smoothly perform cooperative transmit beamforming.

The relay wireless devices k and l are often placed near the terminal, and in an environment where the calibration can be performed with ease. Accordingly, if the relay wireless devices k and l perform calibration with a terminal that is a transmission source of a signal, or a specific terminal placed nearby, the relative phase of the signal in the base station can be controlled to a specific value.

Twenty-Seventh Embodiment.

A twenty-seventh embodiment will now be described. In the present embodiment, a method of correcting a transmission frequency, so that the base station and the terminal can transmit unmodulated signals (carrier) at the same frequency, will be explained.

In the earlier embodiments, the base station and the terminal that transmit signals at the same frequency may have been used. However, in the present embodiment, a control method by which the base station and the terminal accurately adjust the carrier frequencies so as to be the same, without using a highly accurate frequency oscillator, will be described.

For example, an environment where the terminal has a frequency oscillator with poor accuracy, and the terminal performs frequency pull-in for the downlink signal transmitted from the base station, is discussed. In the conventional technology, the terminal temporally drops a downlink signal in a low frequency bandwidth, by using the frequency of the frequency oscillator. The terminal then identifies the carrier frequency included in the signal in the low frequency bandwidth, by the frequency pull-in by performing automatic frequency control (AFC). As a result, even if the accuracy of the frequency oscillator is poor, the downlink frequency can be identified by correcting the frequency. By transmitting an uplink signal based on the identified frequency, the transmission frequency in the uplink can be matched with that in the downlink. However, to accurately identify the frequency in the AFC, the frequency needs to be measured over the long period of time. In general, the measurement resolution of the frequency is given by 1/(measurement time), and to obtain the resolution of a few hertz level, the measurement time equal to or more than one second is required. An environment where the channel does not vary during the measurement time is also required. This is because, if the channel varies during the measurement time, the Doppler frequency is added to the carrier frequency. Accordingly, it is difficult to measure only the carrier frequency.

Unlike the conventional technology, in the present embodiment, a control method of maintaining the same carrier frequency between the base station and the terminal at a high accuracy, in an environment with Doppler frequency, is disclosed. Fig. 53 is a schematic of a transmitter and a receiver (structures of a base station and a terminal) according to the present embodiment. In the present embodiment, the frequency is controlled by using the following procedure.

(27-1) The base station transmits a pilot signal to the terminal, and the terminal performs channel estimation, by using the pilot signal received from the base station. More specifically, at a time t in the downlink, the base station transmits a signal shown in Equation (45), by up-converting the signal by the frequency $f_{BS}$ controlled by an oscillator that includes a baseband signal d(q), or by the conventional technology:

[Expression 31]

$$h_{k,m}^{(DL)}d(q)e^{j2\pi f_{BS}t} \tag{45}$$

The terminal receives a signal shown in Equation (46), by down-converting the signal by the frequency $f_{MT}$

controlled by the oscillator being included or by the conventional technology:
[Expression 32]

$$r(q) = h_{k,m}^{(DL)} \cdot d(q) e^{j2\pi(f_{BS}-f_{MT})t} \qquad (46)$$

The terminal also detects the correlation between the signal d(q) and the received signal, and obtains a channel measurement shown in Equation (47):
[Expression 33]

$$h_{k,m}^{'(DL)} = h_{k,m}^{(DL)} \cdot e^{j2\pi(f_{BS}-f_{MT})t} \qquad (47)$$

Here, an environment where the variation due to the frequency difference $f_{MT}-f_{BT}$ (for example, approximately 0 hertz to a several hundred hertz) in the transmission time (for example, several tens of micrometers to several hundred micrometers) of the signal d(q) is sufficiently slow, and can be regarded as an approximately constant value, is provided.
(27-2) The terminal transmits a pilot signal whose phase or amplitude and phase is/are adjusted, by using the above channel estimation result (channel estimation value) to the base station, and the base station performs the channel estimation by using the pilot signal received from the terminal. More specifically, at time t+Δt in the uplink, the terminal transmits a signal of which a signal $(1/h'_{k,m}{}^{(DL)})s(q)$ is up-converted by the frequency $f_{MT}$. The base station receives the signal shown in Equation (48), after down-converting the signal by the frequency $f_{BS}$.
[Expression 34]

$$\begin{aligned} r_{BS}(q) &= h_{k,m}^{(UL)} \cdot (1/h_{k,m}^{'(DL)}) \, s(q) \cdot e^{j2\pi(f_{MT}-f_{BS})(t+\Delta t)} \\ &= h_{k,m}^{(UL)} / (h_{k,m}^{(DL)}) \, e^{j2\pi(f_{MT}-f_{BS})(2t+\Delta t)} \cdot s(q) \\ &= \frac{T_{k,m}/R_{k,m}}{T_{BS}/R_{BS}} e^{j2\pi(f_{MT}-f_{BS})(2t+\Delta t)} \cdot s(q) \end{aligned} \qquad (48)$$

To perform the modification in Equation (48), the relationship between Equation (1) and the reciprocity of the actual channels in the uplink and the downlink are used. Although there is a small difference between the frequencies $f_{BS}$ and $f_{MT}$ of the base station and the terminal, compared with the coherent bandwidth of the fading (generally, a several tens of kilohertz to several hundred hertz), the frequency difference is sufficiently small, thereby enabling to regard the actual channel as substantially equal. More specifically, the relationship is satisfied, if the frequency difference $|f_{BS}-f_{MT}|$ is equal to or less than 1 kilohertz. The base station detects the correlation between the signal s(q) and the received signal, and obtains the channel measurement result shown in Equation (49):
[Expression 35]

$$\alpha(t) = \frac{T_{k,m}/R_{k,m}}{T_{BS}/R_{BS}} e^{j2\pi(f_{MT}-f_{BS})(2t+\Delta t)} \qquad (49)$$

(27-3) The above procedures (27-1) and (27-2) are repeated at a time t=t'$_1$, t'$_2$, ... for a plurality of times, and the base station maintains the channel measurements $\alpha(t'_1)$ and $\alpha(t'_2)$.

(27-4) The base station calculates the frequency offset (phase rotation speed) $\Delta f = (f_{MT} - f_{BS})$, from the channel measurements (complex number) $\alpha(t'_1)$, $\alpha(t'_2)$, ... observed for a plurality of times. The phase rotation speed is twice of the frequency difference between the base station and the terminal. The base station notifies the terminal of the calculated $\Delta f$. (27-5) The terminal changes the frequency to be down-converted or up-converted to $f_{MT} - \Delta f$ from $f_{MT}$.

With the above processes, the carrier frequency used for down-conversion or up-conversion by the terminal can be matched with the $f_{BS}$ that is the same as that of the base station.

In this case, if the channel variation between the signal d(q) transmitted to the terminal from the base station in the above procedure (27-1) and the signal s(q) transmitted to the base station from the terminal in the above procedure (27-2) is small, the relational expressions (48) and (49) will be held. Under the condition, the channel measurement $\alpha$ (t) is a value that does not depend on the Doppler frequency and the channel, and even if the channel is varied at the time $t = t'_1$, $t'_2$, ... in the procedure (27-3), the frequency offset $\Delta f = (f_{MT} - f_{BS})$ can be measured, without depending on the Doppler frequency and the channel. On the other hand, in the conventional frequency measurement, if the channel varies in all the measurement times $t = t'_1$, $t'_2$, ..., the accuracy is deteriorated, because the influence of the Doppler frequency is included in the frequency measurement.

The channel measurement $\alpha(t)$ in Equation (49) includes the analog characteristics $T_{k,m}$, $R_{k,m}$, $T_{BS}$, and $R_{BS}$. However, the analog characteristics generally change very slowly in time. Accordingly, by measuring the phase rotation speed for a long period of time in the procedure (27-4), the base station can measure the frequency difference between the base station and the terminal at an extremely high accuracy.

In this manner, in the present embodiment, because the base station and the terminal alternately transmit pilot signals, the frequencies of the base station and the terminal can be made the same at high accuracy, without being affected by the Doppler frequency.

The cycle to measure the phase rotation speed, and the cycle to correct the carrier frequency in the procedure (27-5) can be made longer than the Doppler frequency cycle.

The similar frequency correction process may be performed from the terminal, as is described below. The specific procedure will now be described. Fig. 54-1 is a schematic of the structures of the transmitter and the receiver of the present control in this case.

(27B-1) At a time t in the uplink, the terminal up-converts a baseband signal s(q) by the frequency $f_{MT}$, and transmits the signal shown in Equation (50).

[Expression 36]

$$h_{k,m}^{(UL)} \cdot s(q) e^{j2\pi f_{MT} t} \tag{50}$$

The base station down-converts the signal by the frequency $f_{BS}$, and receives the signal shown in Equation (51):

[Expression 37]

$$r_{BS}(q) = h_{k,m}^{(UL)} \cdot s(q) e^{j2\pi(f_{MT} - f_{BS})t} \tag{51}$$

The base station detects the correlation between the signal s(q) and the received signal, and obtains a channel measurement shown in Equation (52):

[Expression 38]

$$h_{k,m}^{'(UL)} = h_{k,m}^{(UL)} \cdot e^{j2\pi(f_{MT} - f_{BS})t} \tag{52}$$

(27B-2) At a time $t + \Delta t$ in the uplink, the terminal transmits a signal of which a signal $(1/h_{k,m}^{'(UL)})d(q)$ is up-converted by the frequency $f_{BS}$. The base station down-converts the signal by the frequency $f_{MT}$, and obtains the received signal shown in Equation (53):

[Expression 39]

$$r(q) = h_{k,m}^{(DL)} \cdot (1/h_{k,m}'^{(UL)}) d(q) \cdot e^{j2\pi(f_{BS}-f_{MT})(t+\Delta t)}$$
$$= (h_{k,m}^{(DL)}/h_{k,m}^{(UL)}) e^{-j2\pi(f_{MT}-f_{BS})(2t+\Delta t)} \cdot d(q) \qquad (53)$$
$$= \left(\frac{T_{k,m}/R_{k,m}}{T_{BS}/R_{BS}}\right)^{-1} e^{-j2\pi(f_{MT}-f_{BS})(2t+\Delta t)} \cdot d(q)$$

The terminal detects the correlation between the signal d(q) and the received signal, and obtains a channel measurement result shown in Equation (54):

[Expression 40]

$$\left(\frac{T_{k,m}/R_{k,m}}{T_{BS}/R_{BS}}\right)^{-1} e^{-j2\pi(f_{MT}-f_{BS})(2t+\Delta t)} \qquad (54)$$

The reciprocal is $\alpha(t)$. The $\alpha(t)$ is expressed by Equation (55), and is the same as Equation (49):

[Expression 41]

$$\alpha(t) = \frac{T_{k,m}/R_{k,m}}{T_{BS}/R_{BS}} e^{j2\pi(f_{MT}-f_{BS})(2t+\Delta t)} \qquad (55)$$

(27B-3) The above procedures (27B-1) and (27B-2) are repeated at a time $t=t'_1, t'_2, ...$ for a plurality of times, and the terminal maintains the channel measurement obtained by executing the process.
(27B-4) The terminal calculates the frequency offset $\Delta f=(f_{MT}-f_{BS})$ from $\alpha(t'_1)$, $\alpha(t'_2)$, .... The phase rotation speed is twice the frequency difference between the base station and the terminal. The base station notifies the terminal of $\Delta f$. The base station also changes the frequency to be down-converted or up-converted to $f_{MT}-\Delta f$ from $f_{MT}$.

With the above-described process, the terminal can also correct frequency. In (27B-1) to (27B-4) in which the transmission of the pilot signal starts from the terminal, the process of notifying the frequency offset $\Delta f=(f_{MT}-f_{BS})$ to the terminal from the base station required in (27-1) to (27-5) can be eliminated. As a result, the more efficient control than the control in (27-1) to (27-5) can be obtained.

In this manner, in the present embodiment, the pilot signal is transmitted to the base station from the terminal, and the base station performs the channel measurement based on the received pilot signal. The base station then adjusts the phase or the amplitude and phase based on the channel measurement result, and transmits the pilot signal to the terminal. In the terminal, the frequency of the transmitted signal is corrected, by using the channel measurement of the pilot signal transmitted from the base station. Accordingly, the carrier frequency of the terminal can be accurately matched with the carrier frequency of the base station.

Twenty-Eighth Embodiment.

A twenty-eighth embodiment will now be described. In the present embodiment, a method of correcting the transmission frequency so that the base station and the terminal can transmit unmodulated signals (carrier) at the same frequency, the method being different from that of the twenty-seventh embodiment, will be described.

The structures of the base station and the terminal according to the present embodiment are the same as those in the twenty-seventh embodiment. A frequency control procedure according to the present embodiment is described below.

(28-1) At a time t in the downlink, the base station transmits a signal of which a baseband signal d(q) is up-converted by the frequency $f_{BS}$, and in Equation (45) shown in the twenty-seventh embodiment. The terminal down-converts the signal by the frequency $f_{MT}$, and receives the signal in Equation (46) shown in the twenty-seventh embodiment. The terminal then detects the correlation between the signal d(q) and the received signal, and obtains a channel measurement in Equation (47) shown in the twenty-seventh embodiment.

(28-2) At a time $t+\Delta t$ in the uplink, the terminal up-converts the signal s(q) in the uplink by the frequency $f_{MT}$, and transmits the signal. The base station down-converts the signal by the frequency $f_{BS}$, and then receives the signal shown in Equation (56):

[Expression 42]

$$r_{BS}(q) = h_{k,m}^{(UL)} \cdot s(q) \cdot e^{j2\pi(f_{MT}-f_{BS})(t+\Delta t)} \qquad (56)$$

The base station also detects the correlation between the signal s(q) and the received signal, and obtains a channel measurement result shown in Equation (57).

[Expression 43]

$$h_{k,m}^{'(UL)} = h_{k,m}^{(UL)} \cdot e^{j2\pi(f_{MT}-f_{BS})(t+\Delta t)} \qquad (57)$$

(28-3) The base station notifies the terminal of the channel measurement result $h_{k,m}^{'(UL)}$, and the terminal obtains $\alpha(t)$ shown in Equation (58):

[Expression 44]

$$\alpha(t) = \frac{h_{k,m}^{'(UL)}}{h_{k,m}^{'(DL)}} = \frac{T_{k,m}/R_{k,m}}{T_{BS}/R_{BS}} e^{j2\pi(f_{MT}-f_{BS})(2t+\Delta t)} \qquad (58)$$

(28-4) The above procedures (28-1), (28-2), and (28-3) are repeated at time a $t=t'_1, t'_2, ...$ for a plurality of times, and the terminal maintains the channel measurement result $\alpha(t)$ notified from the base station.

(28-5) The terminal calculates the phase rotation speed $\Delta f=(f_{MT}-f_{BS})$ from the channel measurements (complex number) $\alpha(t'_1), \alpha(t'_2), ...$, measured for a plurality of times. The terminal also changes the frequency to be down-converted or up-converted to $f_{MT}-\Delta f$ from $f_{MT}$.

With the above process, similarly to the above-described twenty-seventh embodiment, the frequencies of the base station and the terminal can be matched with high accuracy, without being affected by the Doppler frequency. The notification of the channel measurement in the procedure (28-3) may be notified to the terminal in bulk, after the channel measurement is performed at a time $t=t'_1, t'_2, ...$, for a plurality of times, in the procedure (28-4). In this case, the number of notifications to the terminal from the base station can be reduced. The order of the procedure (28-1) and the procedure (28-2) may be reversed.

In this manner, in the present embodiment, the base station notifies the side of terminal of the channel measurement of the pilot signal transmitted from the terminal. Accordingly, the terminal can adjust the frequency at high accuracy.

Twenty-Ninth A Embodiment.

A twenty-ninth A embodiment will now be described. In the present embodiment, in relation to the correction procedure of the transmission frequency described in the twenty-seventh and the twenty-eighth embodiments, the execution time of the channel measurement process included in the procedure will be explained.

As described above, in the twenty-seventh and the twenty-eighth embodiments, as shown in Equation (49), the phase rotation speed $\Delta f=(f_{MT}-f_{BS})$ is calculated from the channel measurement result $\alpha(t)$ at the time $t=t'_1, t'_2, ..., t'_N$

measured for a plurality of times. There are various methods for calculating the phase rotation speed. Here, one effective computing method will be described.

Equation (59) is satisfied by Equation (49). Variables n and N used in the present embodiment are not related to the number of antennas of the base station used in the earlier embodiments, and indicate the time number to measure the channel.

[Expression 45]

$$\frac{\alpha(t'_n)}{\alpha(t'_1)} = e^{j2\cdot 2\pi\Delta f\cdot(t'_n - t'_1)} \quad (n=1, 2 ..., N) \tag{59}$$

Accordingly, the condition of the frequency offset that can be corrected is to satisfy "$|\Delta f|<1/4(t'_2-t'_1)$" for the minimum time width $t'_2-t'_1$ in all measurement times. Accordingly, to correct the frequency offset $\Delta f$ over a wide range, the minimum time width of the time $t=t'_1, t'_2, ..., t'_N$ needs to be reduced, and to measure the frequency offset $\Delta f$ at high accuracy, the maximum time width of the time $t=t'_1, t'_2, ..., t'_N$ needs to be increased.

As a method to satisfy both of the conditions, the channel measurement at the above procedures (27-1) and (27-2) or (28-1) and (28-2) is executed at short time intervals for a first few times, and the channel measurement after that is executed at long time intervals. The time intervals of the channel measurement may also be increased gradually. As a result, by changing the time intervals of measuring the channel, a wide frequency range can be corrected and the high frequency resolution can be achieved, thereby reducing the number of pilot signals required for the channel measurement.

In this manner, in the present embodiment, the pilot signals for channel measurement are transmitted at non-fixed intervals. Accordingly, good frequency correction characteristics can be achieved, while reducing the number of pilot signals.

As a different example, as shown in Equation (60), the base station transmits a pilot signal in the downlink at a time $t'_n$ ms, and the terminal transmits a pilot signal in the uplink at a time $t'_n+1$ ms.

$$t'_n=0 (n=1) \text{ and } 2^{n-1} (n=2, ..., N) \tag{60}$$

Fig. 54-2 is a schematic of uplink and downlink pilot signals in this case. The configuration in which the time interval to transmit a pilot signal is increased with the duration of time shown in the diagram, is a configuration first disclosed by the present invention.

A frequency offset $F_n$ at times $t'_1$ and $t'_n$ is estimated by Equation (61):

[Expression 46]

$$F_n = \frac{1}{2\cdot 2\pi(t'_n - t'_1)} arg\left(\frac{\alpha(t'_n)}{\alpha(t'_1)}\right) \tag{61}$$

In Equation (61), arg(x) is a function to return the phase of the complex number x in a range of $[-\pi, \pi)$. $F_1$ indicates a frequency offset estimation performed in a wide range at a low accuracy, and $F_n$ indicates a frequency offset estimation performed in a narrower range at a higher accuracy with an increase of n.

According to the technical paper "A multiple open-loop frequency estimation based on differential detection for MPSK", H. Kubo, K. Murakami, M. Miyake, and T. Fujino, IEICE Trans. on Commun., Vol. E82-B, No. 1, pp.136-143, Jan. 1999, the frequency offset can be estimated in a wider range at a higher accuracy by Equation (62).

[Expression 47]

$$\Delta f[1] = F_1$$

$$\Delta f[n] = \Delta f[n-1] + \mathrm{mod}\left(F_n - \Delta f[n-1], \frac{1}{2(t_n' - t_1')}\right)_{(n=2,\ldots,N)} \qquad (62)$$

In Equation (62), mod(x1, x2) is a remainder of x1 divided by x2, and a function to return the value within a range of [-x2/2, x2/2). In the present measurement method, the final frequency offset is $\Delta f = \Delta f[N]$.

In the present example, as shown in Equation (60), the frequency offset can be measured in a wide range at a high accuracy, by increasing the transmission time intervals of the pilot signal for frequency calibration. In particular, as shown in Equation (60), the frequency offset can be smoothly measured in a wide range at a high accuracy, by gradually increasing the transmission time intervals of the pilot signal for frequency calibration, in the powered time interval, starting from the time of commencement.

The relationship between n and $t_n$ (seconds) when Equation (60) is used, is shown below.

| n=1 | $t_n$=0.000 second |
|---|---|
| n=2 | $t_n$=0.002 second |
| n=6 | $t_n$=0.032 second |
| n=11 | $t_n$=1.024 seconds |
| n=16 | $t_n$=32.766 seconds |
| n=21 | $t_n$=1048.574 seconds≈17.4 minutes |
| n=26 | $t_n$=33554430 seconds≈559.2 minutes |

In this manner, as the measurement time is increased, the transmission time interval of the pilot signal is increased. With the increase of time, the frequency offset can be measured at higher accuracy. More specifically, if the channel is measured for n=11 times, the resolution of the frequency offset of approximately $1(=1/t_n)$ hertz can be obtained, with a measurement time of one second. If the channel is measured for 21 times, a resolution of the frequency offset of approximately 0.001 $(=1/t_n)$ hertz can be obtained, with a measurement time of approximately 17.4 minutes.

In this manner, in the configuration disclosed in the present invention as shown in Fig. 54-2, in which the transmission frequency of the pilot signal is reduced with time, a number of pilot signals are transmitted in a state in which the carrier frequency error is large, thereby reducing the carrier frequency error and the transmission frequency of the pilot signal. With the present configuration, it is possible to prevent the pilot signals from being transmitted unnecessarily, and it is also possible to increase the wireless resource used to transmit data.

The timing to transmit pilot signals between the base station and the terminal can be identified with each other, by determining the pattern in which the transmission frequency of the pilot signal is reduced with time, in this manner, as a standard for wireless communications, and notifying of the pilot pattern using the control signal. As a particularly preferable structure, the total time to transmit pilots $t_n$-$t_1$, the number of times pilots are transmitted n, or the minimum time interval between the pilot signals (such as $t_2$-$t_1$) can also be controlled, based on the resolution of the required frequency offset. In this manner, the base station selects different pilot patterns based on the resolution of the required frequency error, and notifies the terminal of the control bit corresponding to the pilot pattern. Accordingly, the pilot pattern can be adaptively controlled, depending on the state. A method of determining transmission pattern of the pilot signal, by notifying of a parameter such as the total time $t_n$-$t_1$, the number of times pilots are transmitted n, or the minimum time interval between the pilot signals (such as $t_2$-$t_1$) to the terminal from the base station, as a control signal is also conceivable.

In the conventional technology, if measurement is performed for a long period of time, the accuracy is limited by the influence of the Doppler frequency. On the other hand, if the method described in the present invention is used, the frequency offset can be measured without being affected by the Doppler frequency. Accordingly, it is possible to measure and correct an extremely small frequency offset of approximately 0.001 hertz. As a result, the carrier frequencies of the terminal and the base station can be matched at extremely high accuracy.

For example, an example of evaluating performance by using the method according to the present embodiment in an evaluation environment shown in Fig. 54-3 will be described. As shown in Fig. 54-3, the pilot signal for channel measurement is arranged on a subcarrier of OFDM, and the pilot signal is arranged in 45 symbols surrounded by a region of 3 symbols in the time direction and 15 symbols in the frequency direction. At the receiving side, the time and frequency synchronization is already established by the conventional technology, and more highly accurate carrier frequency control is performed by the present invention, by using the received signal after FFT. Here, the terminal starts transmitting a pilot signal at a time $t_n$ shown in Equation (63), and immediately after this is finished, the base station starts transmitting a pilot signal:

[Expression 48]

$$t_n = \begin{cases} 0 & n = 0 \\ \lfloor \alpha^{n/2} \rfloor & n = 1, 2, \dots, N \end{cases} \tag{63}$$

A Rice fading environment with Rice factor 10 is present between the base station and the terminal, and a direct wave component has a Doppler frequency shift of 50 hertz, and a scattering wave component has a Doppler broadening of 50 hertz.

It is assumed that wireless devices A and B receive one symbol of a pilot signal at the same SNR, and the performance is evaluated by the frequency difference between the base station and the terminal after being controlled. In the conventional technology, it is assumed that the wireless device A ideally receives the frequency of the signal transmitted from the wireless device B.

Fig. 54-4 is a relationship between the carrier frequency error and an SNR [dB], when the carrier frequency is controlled by the method according to the present invention and by the conventional technology, at N=20. The carrier frequency control is performed within $t_{20}$=2.048 seconds. As shown in the diagram, if the method of the present invention is used, compared with the conventional method, the carrier frequency of the wireless device A can be matched with the carrier frequency of the wireless device B at an extremely high accuracy. More specifically, in the conventional method, the carrier frequency error is approximately 50 hertz. However, in the proposed method, the carrier frequency error is equal to or less than 0.01 hertz. This is because, in the conventional method, the error as much as an average Doppler frequency is remained, but in the proposed method, the influence of channel variation can be eliminated by using the reciprocity. Accordingly, the average Doppler frequency will not be an error factor.

Fig. 54-5 is a schematic of a relationship between the carrier frequency error and the control time $t_N$ (N=1, 2, ..., 25) in the proposed method (control method I) at SNR=6[dB]. In the proposed method, even if an error occurs in the estimation to some extent, due to noise or channel variation caused when the pilot signals are transmitted in both directions, the error can be corrected by the accurate estimation value obtained in a longer period of time. As a result, even if the channel is changed in both directions, the frequency offset $\Delta f$ can be estimated at extremely high accuracy. In this manner, in the method of the present invention, it is possible to match the carrier frequencies between two wireless devices at extremely high accuracy, compared with the conventional technology.

Twenty-Ninth B Embodiment.

A twenty-ninth B embodiment will now be described. In the present embodiment, the fact that the method described in the twenty-ninth A embodiment can be broadly applied is shown, and its position according to the conventional technology is further clarified.

Various wireless device systems are in operation at present, but among them, wireless device systems in which the carrier frequencies are exactly matched between the wireless devices are extremely rare, apart from space-related ones. In many wireless device systems, a method of matching the carrier frequencies between the wireless devices by an error of about a few hertz has been carried out, by using the conventional technology. However, it was unable to guarantee the carrier frequency difference at equal to or less than 1 hertz, particularly at equal to or less than 0.01 hertz. The main reason for this is because, an extremely expensive oscillator that has the frequency accuracy equal to or less than 0.01 hertz was required to let the wireless devices have ultra accurate carrier frequencies independently.

Alternatively, with the carrier frequency control according to the present invention, the carrier frequencies of different wireless devices can be matched at a low cost, by a stable frequency oscillation, without using an expensive oscillator. For example, even if the carrier frequencies between two wireless devices are shifted by 1 kilohertz, the frequency offset can be estimated at high accuracy. Because channel estimation in the digital unit and the computation using it are only required for the control, if the embodiment is chipped and mass-manufactured with other digital functions, the embodiment can be established at extremely low cost. As a result, a similar state to that in which an extremely expensive oscillator has been conventionally required can be provided at extremely low cost, thereby enabling to broadly use in the wireless communication system. The present invention is intended to reduce the cost considerably, and is an innovative method that allows new developments in wireless communications.

As one of the specific new developments, as described earlier, the state in which a plurality of wireless devices coherently transmits signals can be established, thereby significantly reducing the transmission power. This state is possible at a low cost, only if the carrier frequency control of the present invention is used. However, the carrier frequency control of the present invention can be broadly applied to the state as described below, in addition to a case where a plurality of wireless devices coherently transmits signals.

(1) The Doppler frequency of the signal transmitted from another wireless device can be accurately measured, and the relative speed between the wireless devices can be measured at high accuracy.

(2) In a ranging method used in the present UWB and the like, in which two wireless devices respond to each other, if the carrier frequencies between the two wireless devices are matched at high accuracy, the distance can be measured at higher accuracy.

(3) In an uplink OFDMA system, when the different wireless devices transmit signals by using the adjacent subcarriers, interference is generated between the signals due to the shift of the carrier frequency. If the highly accurate carrier frequency control is performed on the plurality of wireless devices, by using the carrier frequency control method according to the present invention, the interference between the signals can be relieved. The carrier frequencies between the wireless devices can also be matched, when the base station and the wireless devices perform highly accurate carrier frequency control.

(4) Conventionally, in the plurality of wireless devices, speed difference occurs between the clocks included in the wireless devices. However, if a state in which the wireless devices have extremely highly accurate carrier frequencies is established, by using the carrier frequency control according to the present invention, the speed of the clocks between the wireless devices can be matched at extremely high accuracy. This is enabled by setting one cycle (or minute cycle) of the carrier frequency to a clock timing. As a result, the wireless devices can maintain and synchronize the highly accurate clock speeds. The clock speed is one of the most basic technologies for operating the wireless device, and if the clock speeds are matched at high accuracy, a new technology may be developed in future. In this manner, the technology of the present invention is a basic technology important to develop future new technologies.

(5) In relation to the above (4), many other electronic devices is available that require synchronization of the clock speeds, other than the wireless communication device. For example, when equipments of production line in a factory are synchronized and operated, the equipments may be mutually operated at the correct time, by the highly accurate clock timing. As a result, the line operation can be performed more precisely. Accordingly, the control of the present invention is not limited to the wireless communication devices, but may be broadly applied to the fields other than wireless communications.

As described in the present embodiment, the highly accurate carrier frequency control according to the present invention is not limited to be applied to the coherent signal transmission between the wireless devices, and it can be applied to various usage. In this manner, the present invention is a technology that can improve performance in various fields.

As another conventional technology to match the carrier frequencies or the clocks, there is a method of transmitting frequency to other devices in a wired system. However, in the method, a wired connection is required. Even if a wired system is used, in a wired network including a router and the like in the middle, time dispersion (jitter) occurs based on the traffic state. Accordingly, correct carrier frequencies or clocks are difficult to be obtained. To obtain the correct carrier frequencies or clocks, an exclusive line is required. However, the exclusive line is generally expensive. On the other hand, the present technology can match the carrier frequencies at a low cost and at high accuracy.

Thirtieth Embodiment.

A thirtieth embodiment will now be described. In the present embodiment, in relation to the correcting procedures of the transmission frequency described in the twenty-seventh and the twenty-eight embodiments, a transmission method of a pilot signal used in the procedures will be explained.

Similarly to the calibration to maintain the reciprocity of the measurement channel, it is important to transmit pilot signals in the uplink and the downlink with less channel variation, for transmitting pilot signals (the twenty-seventh and the twenty-eighth embodiments) to measure the channel to correct frequency. In other words, in the above procedures (26-1) and (26-2) or the procedures (27-1) and (27-2), when the pilot signals are transmitted in the uplink and the downlink, the channel variation is desired to be small.

The frequency correction methods described in the twenty-seventh and the twenty-eighth embodiments are applicable, even when the different frequencies are used for each of the measurement times $t=t'_1, t'_2, ..., t'_N$, if the carrier frequency differences $f_{MT}-f_{BS}$ are at least the same. Accordingly, when the base station and the terminal perform the OFDM (or OFDMA) signal transmission, the processes of the procedures (26-1) and (26-2) or (27-1) and (27-2) can be performed, by temporally changing the subcarrier that transmits a pilot signal at each of the times $t=t'_1$, $t'_2$, ..., $t'_N$. Accordingly, similarly to the above-described seventh embodiment, the pilot signal can be transmitted, by selecting the good timing or the frequency of the channel. In this manner, all the pilot signal transmission methods described in the seventh embodiment are also effective for the channel measurement for correcting the frequency.

For example, a pilot signal may be transmitted, by selecting a subcarrier having a good channel state from many subcarriers. It is also possible, while considering the subcarrier used by the other terminal, the base station may provide notification of a usable subcarrier, and the terminal may transmit a pilot signal for correcting the frequency by using the notified subcarrier.

The pilot signal transmission to perform channel measurement for correcting the frequency (the twenty-seventh and the twenty-eighth embodiments) may be performed by a random access signal or a pilot signal included in a communication packet. Accordingly, all the pilot signal transmission methods described in the ninth embodiment are also effective for the pilot signal transmission for channel measurement for correcting the frequency. Consequently, it is possible to reduce the number of pilot signals required to correct the frequency.

To carry out the communications and the frequency correction further smoothly, as shown in Fig. 55, at the start of communications, the base station and the terminal perform frequency pull-in by using the AFC, and perform the communications by conventional frequency correction (Step S551). During the communications, the frequency corrections described in the twenty-seventh and the twenty-eighth embodiments are performed by using the pilot signal of the communication packet described in the ninth embodiment. Accordingly, the transmission frequency of the terminal and the transmission frequency of the base station can be matched (Step S552). After the frequencies of the base station and the terminal are matched, the correction described in the fourth to the sixth embodiments are performed, thereby matching the phase relationship between the base station and the terminal (Step S553). In this manner, a state in which the reciprocity of the measurement channel is satisfied while communications are being carried out can be established, by starting the initial communications with the conventional frequency correction, adjusting the terminal to have the same carrier frequency as the base station during communications, and then correcting the phase.

In this manner, the present invention is also characterized in that the terminal performs communications as well as the frequency correction, the phase and amplitude correction, or the amplitude correction, at the same time. The present invention is also **characterized in that** the phase correction or the phase and amplitude correction is performed, after the frequency is corrected. It is also possible to change the communication mode, between the state in which the frequency is corrected and the state in which the frequency is not corrected. For example, if the frequency is not corrected, an operation is performed in a mode in which the cooperative transmit beamforming and the like cannot be carried out, and moves to a mode in which the cooperative transmit beamforming can be carried out, after the frequency is corrected.

The base station or the terminal that include a plurality of antennas usually uses the same carrier frequency among the plurality of antennas, to perform down-conversion or up-conversion. Accordingly, even if a plurality of antennas is present, the frequency correction method of the twenty-seventh and the twenty-eighth embodiments may be applied to one of the antennas of the base station or the terminal, and use the corrected carrier frequency for all the antennas.

The information format shown in Fig. 56 is defined, and the terminal notifies the base station of the model information of the terminal at the start of communications. Here, the terminal notifies the base station, whether the model type corresponds to the frequency correction according to the present embodiment, of adaptability to the frequency correction performed at high accuracy or low accuracy, adaptability to phase calibration, and adaptability to cooperative transmit beamforming. The base station adaptively selects the control method for the terminal (process to be executed), based on the notified information. By using the information format shown in Fig. 57, the required frequency accuracy information, the frequency measurable time information, the required measurement time pattern information (a pattern at a time t, a fixed interval time pattern, a powered time pattern, and the like) may also be notified from the terminal to the base station. Alternatively, the frequency accuracy information, the frequency measurement time information, and the measurement time pattern information used to correct the frequency, may be notified in a format similar to that in Fig. 57, to the terminal from the base station.

The calibration described in the first to the third embodiments is performed in one wireless device, and the correction coefficient depends only on the analog characteristics. Accordingly, the calibration described in the first to the third embodiments can be performed independently from the frequency correction described in the twenty-seventh and the twenty-eighth embodiments. Consequently, for example, the base station and the terminal may perform the calibration described in the first to the third embodiments, and the base station and the terminal may transmit and receive pilot signals for channel measurement for correcting the frequency, after forming the transmit and the receive beams. In this case, the pilot signals can be transmitted and received by using beam gains of the plurality of antennas, and the frequency can be corrected at the good channel measurement state.

In the fifteenth embodiment, the indirect calibration that maintains the reciprocity of the measurement channel was described. The frequency correction method according to the twenty-seventh and the twenty-eighth embodiments can also be performed indirectly. More specifically, the wireless device that can communicate with the terminal and the base station performs the frequency correction with the base station, and controls the frequency to be matched with the carrier frequency of the base station. The terminal then performs the frequency correction with the wireless device, thereby adjusting the carrier frequency. As a result, even if the terminal does not perform the frequency correction directly with the base station, the carrier frequency is accurately adjusted so as to be the same as that of the base station.

In the eighteenth embodiment, the method of adaptively selecting the wireless device to which the terminal performs calibration was described. Similarly, the frequency correction method according to the twenty-seventh and the twenty-eighth embodiments can also be performed indirectly. More specifically, the base station measures a propagation loss with the terminal, and if the propagation loss of the terminal is large, the base station transmits an indirect frequency correction recommendation signal. Based on the recommendation signal, the terminal searches another wireless device capable of supporting the frequency correction, and corrects the frequency. In this case, another wireless device A capable of supporting the frequency correction notifies the neighbors of its support capability to as a "frequency correction support signal". The terminal searches the "frequency correction support signal" and detects a wireless device capable of correcting the frequency. When the terminal transmits a "frequency correction request signal" to the wireless device and receives permission from the wireless device, the terminal performs indirect frequency correction. Fig. 58 is an example of the "frequency correction support signal". The wireless device may also notify the neighbors of information to support indirect frequency correction, information for correcting accuracy of the frequency (values such as resolution of how much hertz may be included), and information for supporting phase correction, and the terminal can request to correct the frequency based on the information.

The terminal may also be classified into a terminal that requires frequency correction and a terminal that does not require it. While accessing the base station, the terminal notifies whether the frequency needs to be corrected. The base station may also be classified into a base station that requires the frequency correction and a base station that does not require it. The classification may be notified to the terminal in the downlink. The base station may transmit a request signal to a specific terminal to correct the frequency, and the terminal may correct the frequency based on the request from the base station. The signals are notified in the uplink and in the downlink, by using a signal format similar to that shown in Figs. 33 and 34.

In this manner, in the present embodiment, to perform direct frequency correction or to perform indirect frequency correction is adaptively selected, based on the propagation state between the terminal and the base station. As a result, the terminal can select a wireless device that can obtain a good propagation state, thereby correcting the frequency at high accuracy.

In the present embodiment, the frequency correction type (conventional carrier frequency correction, carrier frequency correction according to the present embodiment, and the like) to be executed is changed, based on the frequency correction ability of the terminal and the wireless device. As a result, it is possible to adaptively correspond to an environment where various models are mixed.

If the carrier phase transmission control according to the nineteenth embodiment is performed after the frequency correction according to the twenty-seventh or the twenty-eighth embodiment is performed, the base station can receive a signal s(q) transmitted from the terminal with a specific carrier phase. As described in the nineteenth embodiment, in the carrier phase transmission control, the base station transmits a pilot signal in the downlink, and the terminal measures the channel, and reflects the channel measurement result to the data transmission in the uplink. If the channel variation within the control time can be substantially ignored, the phase received by the base station may be a specific value. In the present wireless communication technology, the channel measurement in the downlink and the data transmission in the uplink can be performed in an extremely short period of time (such as equal to or less than 0.1 millisecond). In this case, even in an environment where the traveling speed of the terminal is fast, and the Doppler frequency is supposedly 500 hertz, the channel variation between the uplink and the downlink is only 0.05 cycle of fading. Accordingly, even if the traveling speed of the terminal is fast, the carrier phase synchronization can be maintained.

In an environment where the terminal moves, if the carrier phase transmission control according to the nineteenth embodiment is applied after the frequency correction according to the twenty-seventh or the twenty-eighth embodiment is performed, the base station can receive the signal at the specific frequency and in the specific phase. This is because the terminal measures a channel $h_{k,m}^{(DL)}$ that varies with a Doppler spread in the downlink, and transmits a signal at a transmission weight $v_{k,m}=1/(u_{BS}h_{k,m}^{(DL)})$ in the uplink. Accordingly, the influence of the Doppler frequency in the downlink is compensated in the uplink. As a result, the base station can receive the signal without being affected by the Doppler frequency. Consequently, the processes of the frequency offset estimation and the automatic frequency control (AFC) at the base station can also be reduced to be less than those of conventional technologies.

Even if the accuracy of the frequency oscillator of the terminal is poor, the cooperative transmit beamforming in the twentieth to the twenty-sixth embodiments can be performed, by applying the carrier phase transmission control after correcting the frequency in the twenty-seventh or the twenty-eighth embodiment.

Thirty-First Embodiment.

A thirty-first embodiment will now be described. The present embodiment relates to a correction procedure of a transmission frequency in the broadband OFDMA/TDD system.

In the twenty-seventh to the twenty-ninth B embodiments, frequency correction during the transmission of a single carrier was described. However, in this case, the accuracy of channel measurement may be deteriorated, due to the channel fading. In the OFDMA/TDD widely used in these days, the broadband carrier frequency is to be controlled in a fading environment. To achieve cooperative transmit beamforming, a technology to match not only the carrier frequencies, but also the phases of the channel measurements in the uplink and the downlink is also required.

In the present embodiment, an ultra high accuracy carrier frequency control in which an error of the carrier frequencies between the base station and the terminal is equal to or less than 0.01 hertz in the OFDMA/TDD system, is disclosed. In the present embodiment, channel measurement is performed in a plurality of sub-bands in OFDMA, and a frequency offset is estimated by using a good channel measurement result. By using the present embodiment, extremely highly accurate carrier frequency can be maintained between the base station and the terminal, in the fading environment. The present embodiment also describes an invention of carrier phase control in which channel measurements between the uplink and the downlink are in phase. By using the present control, the phases of the channel measurements in the uplink and the downlink are matched at high accuracy. Accordingly, this technology is effective in the cooperative transmit beamforming.

Fig. 61 is a schematic of a sub-band that performs channel measurement in the OFDMA/TDD. Here, one sub-band is formed by a subcarrier group at a constant number. The channel measurement is performed in the L sub-band having the same frequency in the uplink and the downlink. A certain frequency interval B is interposed between the sub-bands. If a carrier frequency of the base station that corresponds to a sub-band l=1 for measuring the first channel is $f_{BS,1}$, and a carrier frequency of the terminal is $f_{MT,1}$. the carrier frequencies $f_{BS,1}$ and $f_{MT,1}^{(n)}$ corresponding to the first sub-band satisfy $f_{BS,1}=f_{BS,1}+(1-1) B$ and $f_{MT,1}^{(n)}=f_{MT,1}^{(n)}+(l-1)B$.

Here, the carrier frequency is an equivalent frequency determined by all the frequency conversion processes performed in the analog and digital domains. If the initial phases of the carrier signals (unmodulated signal) in the base station and the terminal are $\phi_{BS}$ and $\phi_{MT}$, respectively, the complex notations of the equivalent carrier signals of the base station and the terminal at the sub-band 1 are $\exp\{j(2\pi f_{BS,1}t+\phi_{BS})\}$ and $\exp\{j(2\pi f_{MT,1}^{(n)}t+ \phi_{MT})\}$.

Generally, the wireless device includes one frequency oscillator, and the frequency is divided into sub-bands by the frequency conversion performed in the digital unit. In this case, it is possible to make setting that the equivalent carrier signals to have the same phase $\phi_{BS}$ in the different sub-bands l at the time t=0.

It is assumed that, at the start of control (n=0), a state in which $f_{BS,1}-f_{MT,1}^{(0)}$ is much smaller than the coherent bandwidth of the fading is already obtained (such as $|f_{BS,1}-f_{MT,1}^{(n)}|<<100$ hertz). This can be achieved by the conventional frequency pull-in technology and the like. A highly accurate carrier frequency control method that makes the carrier frequency errors between the base station and the terminal equal to or less than 1 hertz in this environment, is disclosed.

In the present embodiment, channel measurement is performed in a plurality of sub-bands in the OFDMA, and the highly accurate carrier frequency control is performed by the following procedure.

[Carrier Frequency Control Method for OFDMA]

(31-1) It is set to n=0, $f_{MT,1}^{(0)}=f_{MT}$, and it is determined to be $t=t_0, t_1, ..., t_N$.

(31-2) At a time $t_N$ in the uplink, the terminal up-converts a pilot signal $s_l(p)$ (l=1, ..., L) by a carrier signal $\exp\{j(2\pi f_{MT,1}^{(n)}t+\phi_{MT})\}$ in the L sub-band, and starts the transmission. The base station obtains a channel measurement $a_{UL,1}^{(n)}$ by detecting the correlation between the received signal down-converted by a carrier signal $\exp\{j(2\pi f_{BS,1}t+\phi_{BS})\}$ and the signal $s_l(p)$.

(31-3) At a time $t_N+\Delta t$ in the downlink, the base station up-converts a pilot signal $d_l(p)$ (l=1, ..., L) by a carrier signal $\exp\{j(2\pi f_{Bs,1}t+\phi_{BS})$ in the L sub-band, and starts transmission. The terminal obtains a channel measurement $a_{DL,1}^{(n)}$ by detecting the correlation between the received signal down-converted by a carrier signal $\exp\{j(2\pi f_{MT,l}^{(n)}+\phi_{MT})\}$ and the signal $d_l(p)$.

(31-4) The base station notifies the terminal of $a_{UL,1}^{(n)}$ (l=1, ..., L), and the terminal calculates $r_l^{(n)}=a_{DL,1}^{(n)}/a_{UL,1}^{(n)}$.

(31-5) The terminal calculates an estimation value $\Delta f^{(n)'}$ of the carrier frequency offset $\Delta f^{(n)}=f_{MT,l}^{(n)}-f_{BS,l}$, from $r_l^{(i)}$ (l=1, ..., L, i=0, ..., n), and changes the carrier frequency to $f_{MT,l}^{(n+1)}=f_{MT,l}^{(n)}- \Delta f^{(n)'}$ (l=1, ..., L). The specific calculation method of $\Delta f^{(n)'}$ will be described later.

(31-6) If n<N, add 1 and return to the procedure (31-2), and if n=N, finish the procedure as $f_{MT,l}^{(last)}=f_{MT,l}^{(N+1)}$.

The details of the procedures (31-2) and (31-3) will be described below. In the procedures (31-2) and (31-3), each of the pilot signals of $p_0$ time symbol is transmitted by $q_0$ subcarrier in a sub-band in the OFDMA, and detects the correlation by averaging in the time-frequency domain. In this case, channel measurements $a_{UL,l}^{(n)}$ and $a_{DL,l}^{(n)}$ in the uplink and the downlink are given by Equation (64).

[Expression 49]

$$a_{UL,1}^{(n)} \approx \left\{ \frac{1}{q_0} \sum_{q=1}^{q0} \sqrt{P_s} h_{UL}\left(f_{MT,l}^{(n)} + (q-1)f_{SC}, t_n\right) \right\} \cdot \xi_{UL} \cdot \exp\left\{ j \left(2\pi\Delta f^{(n)} t_n + \Delta\phi\right) \right\} + z'_{BS}$$

$$a_{DL,1}^{(n)} \approx \left\{ \frac{1}{q_0} \sum_{q=1}^{q_0} \sqrt{P_s} h_{DL}\left(f_{MT,l}^{(n)} + (q-1)f_{sc}, t_n\right) \right\} \cdot \xi_{DL} \cdot \exp\left\{ j \left(2\pi\Delta f^{(n)} t_n + \Delta\phi\right) \right\} + z'_{MT} \qquad (64)$$

In Equation (64), $\xi_{UL}$, $\xi_{DL}$, and $\Delta\phi$ are expressed by Equation (65):
[Expression 50]

$$\xi_{UL} = \frac{1}{P_0} \sum_{p=1}^{P_0} \exp\left(j2\pi\Delta f^{(n)} T_s p\right)$$

$$\xi_{DL} = \xi_{UL} \exp\left(-j2\pi\Delta f^{(n)} T_s (p_0 + 1)\right) \qquad (65)$$

$$\Delta\phi = \phi_{MT} - \phi_{BS}$$

$z'_{BS}$ is a noise component at the base station attached to the channel measurement result and $z'_{MT}$ is a noise component at the terminal attached to the channel measurement result. $f_{SC}$ is a frequency interval between the subcarriers, $h_{UL}(f,t)$ and $h_{DL}(f,t)$ are measurement channel gains at the frequency f and the time t in the uplink and the downlink. In an environment where the base station has noise power $P_{BS,z}$ and the terminal has noise power $P_{MT,z}$, it is $E[|z'_{BS}|^2]$ $=P_{BS,z}/(p_0 q_0)$ and $E[|z'_{MT}|^2]=P_{MT,z}/(p_0 q_0)$. Accordingly, in the TDD system in which channel reciprocity is satisfied, $r_l^{(n)}=a_{DL,l}^{(n)}/a_{UL,l}^{(n)}$ is expressed by Equation (66) in the procedure (31-4).
[Expression 51]

$$r_1^{(n)} = \xi_1^{(n)} \left( \frac{T_{MT,1} R_{MT,1}}{T_{BS,1} R_{BS,1}} \right)^{-1} e^{-j\left\{2\pi\Delta f^{(n)}(2t_n + \Delta t + T_s(p_0+1)) + 2\Delta\phi\right\}}$$

$$\xi_1^{(n)} = \frac{1 + z'^{(n)}_{BS} / \sqrt{\Gamma_{UL,1}^{(n)}}}{1 + z'^{(n)}_{MT} / \sqrt{\Gamma_{DL,1}^{(n)}}} \qquad (66)$$

Here, $z'_{BS}{}^{(n)}$ and $z'_{MT}{}^{(n)}$ are both random variables that follow a complex Gaussian distribution of the dispersion 1. $T_{MT,l}$, $R_{MT,l}$, $T_{BS,l}$, and $R_{BS,l}$ express the analog characteristics $T_{MT}$, $R_{MT}$, $T_{BS}$, and $R_{BS}$ in the sub-band l, respectively. $\Gamma_{UL,l}^{(n)}$ and $\Gamma_{DL,l}^{(n)}$ are the ratios between the channel measurement power and the remained noise power included in the channel measurements of the sub-band l in the uplink and the downlink, respectively. Due to the influence of RF path length, the phases of the analog characteristics $T_{MT,1}$, $R_{MT,1}$, $T_{BS,1}$, and $R_{BS,1}$ change substantially linearly, based on the frequency. The temporal variation is extremely slow, and here, it is assumed that $T_{MT,1}$, $R_{MT,1}$, $T_{BS,1}$, and $R_{BS,1}$ are constant within the control time.

In the procedure (31-5), a method of estimating a frequency offset $\Delta f^{(n)}$ ($n \neq 1$) by using $r_1^{(i)}$ (l=1, ..., L, i=0, ..., n) will be explained. If it is n=0, the estimation value is $\Delta f^{(n)}=0$. In the following, it is assumed $n \neq 1$.

At a time $t_i$ (i=0, ..., n), channel measurements $a_{DL,l}^{(i)}$ and $a_{UL,l}^{(i)}$ in the uplink and the downlink are obtained at a variable frequency offset $\Delta f^{(i)}$. Here, a state in which a frequency offset $\Delta f^{(i)}$ is always constant at all the times $t_i$ (i=0, ..., n) is virtually assumed once, and the channel measurements in the uplink and the downlink in the virtual state are defined as $a'_{UL,l}{}^{i|n}$ and $a'_{DL,l}{}^{i|n}$.

In this case, from Equation (64), Equation (67) is satisfied in relation to $r'_l{}^{(i|n)} \equiv a'_{DL,l}{}^{i|n} / a'_{UL,l}{}^{i|n}$:

[Expression 52]

$$
r'_1{}^{(i|n)} = \frac{a_{DL,1}^{(i)} \xi_{UL} \exp\left(-j2\pi(\Delta f^{(n)} - \Delta f^{(i)})(t_i + \Delta t) + T_s(p_0 + 1)\right)}{a_{UL,1}^{(i)} \xi_{UL} \exp\left(j2\pi(\Delta f^{(n)} - \Delta f^{(i)i}) t_i\right)}
$$

$$
= \frac{a_{DL,1}^{(i)}}{a_{UL,1}^{(i)}} \exp\left\{-j2\pi(\Delta f^{(n)} - \Delta f^{(i)})(2t_i + \Delta t + T_s(p_0 + 1))\right\}
$$

(67)

Here, $r'_l{}^{(0|n)}$, $r'_l{}^{(1|n)}$, ..., $r'_l{}^{(n|n)}$ are values that can be obtained at a constant frequency offset $\Delta f^{(n)}$. Accordingly, the relationship of Equation (68) is used to estimate the frequency offset.

[Expression 53]

$$
\frac{r'_1{}^{(i|n)}}{r_1{}^{(0|n)}} = \exp\left(-j2\pi\Delta f^{(n)} \cdot 2(t_i - t_0)\right) \cdot \frac{\xi_1^{(i)}}{\xi_1^{(i0)}}
$$

(68)

Here, $\xi_l{}^{(i)} / \xi_l{}^{(i0)}$ is an error factor generated from the noise, and the dispersion is small when $\Gamma_{UL,l}{}^{(0)}$, $\Gamma_{DL,l}{}^{(0)}$, $\Gamma_{UL,l}{}^{(i)}$, and $\Gamma_{DL,l}{}^{(i)}$ are high.

To estimate the frequency offset $\Delta f^{(i)}$ at high accuracy, $v^{(i)} = \exp(-j4\pi\Delta f^{(n)} \cdot (t_i - t_0))$ or $\angle v^{(i)}$ needs to be estimated at high accuracy. Here, $\angle x$ is a function that returns the phase of the complex number x in the range of $[-\pi, \pi)$. To estimate $\angle v^{(i)}$, the following methods are to be studied.

[Method A1] Estimate the frequency offset $\Delta f^{(i)}$ from $r'_l{}^{(i|n)}$ and $r'_l{}^{(0|n)}$ of the fixed one sub-band (l=1), and Equation (69):

[Expression 54]

$$
\angle v^{(i)} = \angle\left(\frac{r'_1{}^{(i|n)}}{r'_1{}^{(0|n)}}\right)
$$

(69)

[Method A2] Select a sub-band l having a good channel state, and estimate the frequency offset $\Delta f^{(i)}$ from Equation (70):

[Expression 55]

$$
\angle v^{(i)} = \angle\left(\frac{r'_1{}^{(i|n)}}{r'_1{}^{(0|n)}}\right) \quad 1 = \arg\max_1 \left| a_{DL,1}^{(0)} a_{DL,1}^{(i)} \right|
$$

(70)

Here, a sub-band l in which $|a_{DL,l}{}^{(0)} a_{DL,l}{}^{(i)}|$ becomes maximum is selected at each time $t_i$ (i=1, ..., n). In Equation (68), even if the different sub-band l is selected at each time $t_i$(i=1, ..., n), $\angle v^{(i)}$ can be estimated without any problem.

[Method A3] $\angle(r'_l{}^{(i|n)}/r'_l{}^{(0|n)})$ in the L sub-band is weighted and added, by using Equation (71):

[Expression 56]

$$\angle \mathrm{v}'^{(i)} = \frac{1}{L} \sum_{l=1}^{L} \mathrm{w}_l^{(i)} \cdot \angle \left( \frac{\mathrm{r}'_1^{(i|n)}}{\mathrm{r}'_1^{(0|n)}} \right) \qquad (71)$$

$$\mathrm{w}_1^{(i)} = \left| \mathrm{a}_{DL,1}^{(0)} \mathrm{a}_{DL,1}^{(i)} \right|$$

In Equation (68), $\angle v^{(i)}$ can be estimated at high accuracy, if $|a_{DL,l}^{(0)}|$ and $|a_{DL,l}^{(i)}|$ are both good measurements. Accordingly, $|a_{DL,l}^{(0)} a_{DL,l}^{(i)}|$ that gives a high evaluation value when $|a_{DL,l}^{(0)}|$ and $|a_{DL,l}^{(i)}|$ are both large is set as a weighting coefficient $w_l^{(1)}$.

In the above procedure (31-5), when an estimation value $\angle v'^{(i)}$ (i=0, ..., n) is obtained by the above methods A1 to A3, a widely ranged and highly accurate frequency offset estimation value $\Delta f'^{(i)}$ is calculated by Equation (72):

[Expression 57]

$$\Delta \mathrm{f}^{(i)} = \frac{\angle \mathrm{v}^{(1)}}{2\pi \cdot 2 \, (\mathrm{t}_1 - \mathrm{t}_0)}$$

$$\Delta \mathrm{f}^{(i)} = \Delta \mathrm{f}'^{(i)} + \mathrm{mods} \left( \frac{-\angle \mathrm{v}^{(i)}}{2\pi \cdot 2(\mathrm{t}_i - \mathrm{t}_0)} - \Delta \mathrm{f}^{(i-1)}, \frac{1}{2(\mathrm{t}_i - \mathrm{t}_0)} \right) \quad i = 2, \ldots, n \qquad (72)$$

In Equation (72), it is mods(x1,x2)=mod(x1+x2/2, x2)-x2/2, and mod(x1, x2) indicates a remainder of x1 divided by x2.

In the present embodiment, the channel is measured in a plurality of sub-bands, and $\angle v'^{(i)}$ is accurately estimated, by giving high reliability to the measurement obtained at a good channel state. Alternatively, $\angle v'^{(i)}$ is accurately estimated by using the channel measurement of the sub-band having a good channel state. As a result, with an increase of the number of sub-bands L, the existing probability of the sub-band having a good channel state is increased. Accordingly, highly accurate carrier frequency control can be performed, even in the fading environment. Compared with the single carrier transmission described in the twenty-seventh to the twenty-ninth A embodiments, highly accurate carrier frequency control can be performed, in the fading environment.

Thirty-Second Embodiment.

A thirty-second embodiment will now be described. In the present embodiment, a method of performing highly accurate carrier phase control in which the base station and the terminal make the channel measurement results in the uplink and the downlink in phase, after the carrier frequency is corrected in the broad OFDMA/TDD system, is disclosed.

If the channel measurements in the uplink and the downlink are in phase, the terminal can transmit a signal so as to be in a specific phase in the base station in the uplink, by using a downlink channel measurement. If an uplink signal is transmitted so that a plurality of relay terminals is in specific phases in the base station, cooperative transmit beamforming can be performed by coherent signal transmission. In this manner, a transmit beam gain can be obtained by cooperative transmit beamforming, when appropriate carrier phase control is performed. Accordingly, the transmission power can be significantly reduced.

The basic principle of the carrier phase control according to the present embodiment will be described, on the assumption of an environment where carrier frequencies of the base station and the terminal are matched exactly ($f_{MT}=f_{BS}$) by the carrier frequency correction, and the channel measurement can be ideally performed.

In the same way as shown in Fig. 1 and the like, while targeting a certain frequency, in the carrier phase control, the phase is corrected by multiplying a digital transmitting unit of the terminal corresponding to the sub-band l, by a complex constant $u_l$. More specifically, channel measurements $a_{UL,l}$ and $a_{DL,l}$ in the uplink and the downlink are obtained at $u_l=1$, and a correction coefficient is then determined as $u_l = a_{DL,1}/a_{UL,1}$. If the correction coefficient is applied, a channel measurement in the uplink measured at the base station is $u_l a_{UL,l} = a_{DL,l}$, thereby matching with the channel measurement in the downlink. In this case, $u_l a_{UL,l}$ and $a_{DL,l}$ are expressed by Equation (73).

[Expression 58]

$$a_{UL,1} = T_{MT,1} \cdot g_{UL,1}(f,t) \cdot R_{BS,1} \cdot e^{j\Delta\phi}$$
$$a_{DL,1} = T_{BS,1} \cdot g_{DL,1}(f,t) \cdot R_{MT,1} \cdot e^{-j\Delta\phi}$$

(73)

In Equation (73), $g_{UL,l}(f,t)$ and $g_{DL,l}(f,t)$ are actual channel coefficients at the sub-band l in the uplink and the downlink, respectively. Based on the channel reciprocity ($g_{UL,l}(f, t) = g_{DL,l}(f,t)$) in the TDD system, even if the channel is varied after the correction coefficient $u_l$ is once set, the phases of the channel measurements in the uplink and the downlink are always matched ($u_l a_{UL,l} = a_{DL,l}$) including the phases.

The above is the basic principle. However, in the real environment, the influences of fading and noise, and the carrier frequencies between the base station and the terminal are not exactly the same, and the like, need to be considered.

A carrier phase control method that can be used in the real environment will now be disclosed. In the real environment, there are many environments where the carrier frequency $f_{BS}$ of the base station and the carrier frequency $f_{MT}$ of the terminal do not match exactly. However, if $|f_{MT}-f_{BS}|$ is small, the channel measurements in the uplink and the downlink can be made substantially in phase, within a limited time period. For example, if $|f_{MT}-f_{BS}|$ is 0.1 hertz between the base station and the terminal, the relative change of the carrier phase at 100 milliseconds is 3.6°. Accordingly, the measured phases in the uplink and the downlink within the limited time period are substantially in phase.

To achieve such a state, a method by which the terminal performs highly accurate carrier frequency control and carrier phase control at the same time, is disclosed below.

[Carrier Frequency and Phase Control for OFDMA]

(32-1) Execute the procedure (31-1) described in the carrier frequency control method according to the thirty-first embodiment.

(32-1') Set to $u_l^{(0)}=1$ (l=1, ..., L).

(32-2) to (32-5) Execute the procedures (31-2) to (31-5) described in the carrier frequency control method according to the thirty-first embodiment.

(31-5') The terminal determines a correction coefficient $u_l^{(n+1)}$ from $r_l^{(1)}$ (l=1, ... , L, i=1, ..., n), and transmits all the signals (pilot signal, data signal, and the like) by multiplying the digital transmitting unit by $u_l^{(n+1)}$ in the first sub-band.

(32-6) Execute the procedure (31-6) described in the carrier frequency control method according to the thirty-first embodiment.

The phases of the channel measurements in the uplink and the downlink are matched with high accuracy, by executing the control described above. The details of the procedure (32-5') will be described below.

The details of the procedure (32-5') will now be described. In the procedures (32-2) and (32-3), a frequency offset $\Delta f_{MT,l}^{(i)}$ is present at the time $t_i$ (i=0, ..., n), and uplink and downlink channels $a_{DL,l}^{(i)}$ and $a_{UL,l}^{(i)}$ are measured, while the correction coefficient $u_l^{(i)}$ is being applied ($a_{UL,l}^{(i)}$ includes $u_l^{(i)}$) thereto. Here, virtually assume a state in which the frequency offset is $\Delta f^{(n+1)}$ and the correction coefficient is $u_l=1$ at all the times $t_i$ (i=0, ..., n), and if the channel measurements in the uplink and the downlink at the time ti are $a''_{DL,l}^{(i|n+1)}$ and $a''_{UL,l}^{(i|n+1)}$, respectively, Equation (74) is satisfied in relation to $r''_l^{(i|n+1)} \equiv a''_{DL,l}^{(i|n+1)}/a''_{UL,l}^{(i|n+1)}$.

[Expression 59]

$$r''^{(i|n+1)}_1 = \frac{a''^{(i)}_{DL,1}}{a''^{(i)}_{UL,1}} u_1^{(i)} \exp\left\{-j 2\pi(\Delta f^{(n+1)} - \Delta f^{(i)})(2t_u + \Delta t + T_s(p_0+1))\right\}$$

(74)

In the procedure (32-5'), the following calculation method is studied, while setting the correction coefficient $u_l^{(n+1)}$ (l=0, ..., L) at the carrier frequency $f_{MT,l}^{(n+1)}$.

[Method B1] By using the measurement at the time $t_n$, the correction coefficient is determined by using Equation (75):

$$u_1^{(n+1)} = r''^{(n|n+1)}_1 \qquad 1 = 0, ..., L$$

(75)

[Method B2] Select a time in a good channel state among the measurements at times $t_0$, $t_1$, ..., $t_n$, and determine the correction coefficient by using Equation (76):

$$u_1^{(n+1)} = r''_1^{(i|n+1)} \qquad i = \arg\max | a_{DL,1}^{(i)} | \qquad (76)$$

In Equation (76), i is independently selected for the sub-band l=1, ..., L.

In the method B2, highly accurate correction coefficient is expected to be calculated, by selecting the channel measurement at the time in a good fading state. The correction coefficients at all the subcarriers are determined, by the correction coefficient calculated at the sub-band for channel measurement and by interpolation.

In the carrier frequency control according to the thirty-first embodiment, a frequency diversity effect to select a sub-band having a good channel state was used. However, in the carrier phase control according to the present embodiment, a time diversity effect to select a time in a good channel state is used. In the real environment, due to the influence of carrier frequency offset, the phases in the uplink and the downlink differ over the time, even if the phase correction is carried out. Accordingly, the phase correction needs to be updated at an appropriate time $t_{n+1}$. Basically, the carrier frequency offset is reduced, with an increase of the number of processing time n, thereby increasing the time $t_{n+1}-t_n$ that can maintain the in-phase state.

Thirty-Third Embodiment.

A thirty-third embodiment will now be described. In the present embodiment, a configuration in which a plurality of relay wireless devices performs carrier frequency correction, phase correction, and cooperative transmit beamforming, will be described.

The carrier frequency correction, the phase correction, and the cooperative transmit beamforming performed on the plurality of relay wireless devices have been separately described. The plurality of relay wireless devices having different carrier frequencies perform cooperative transmit beamforming, based on the following steps.

(33-1) The plurality of relay wireless devices perform carrier frequency correction (Step S621).

(33-2) The plurality of relay wireless devices perform carrier phase correction (Step S622).

(33-3) The plurality of relay wireless devices perform cooperative transmit beamforming (Step S623).

Fig. 62 is a flowchart of the above steps. The procedure (33-1) is a method described in the twenty-seventh to the twenty-ninth A and the thirty-first embodiments, the procedure (33-2) is a method described in the thirty-second embodiment and the like, and the procedure (33-3) is a method described in the twenty-third A and the twenty-third B embodiments and the like. However, any other methods may be used.

In this manner, the carrier frequencies between the relay wireless devices are synchronized, and the carrier frequency is then corrected so as to have a phase in which the reciprocity can be used. Then, by performing cooperative transmit beamforming using the channel reciprocity, the cooperative transmit beamforming can be smoothly performed. Such a control procedure is not disclosed in the conventional technology, and is the procedure disclosed by the present embodiment.

Thirty-Fourth Embodiment.

A thirty-fourth embodiment will now be described. In the earlier embodiments, words such as the "base station", the "terminal", and the "relay wireless device" are used for descriptive purposes. Naturally, the words are also applied to a case where a plurality of base stations performs carrier frequency correction, phase correction, and cooperative transmit beamforming.

In this case, if the plurality of base stations is connected by a wired network, notification of the channel measurement required to correct the frequency and to correct the carrier phase can be advantageously performed via the wired network. The relationship is shown in Fig. 63. In the diagram, when the base station A and the base station B correct the carrier frequency or the phase, the channel measurement is performed on both pathways from the base station A to the base station B, and from the base station B to the base station A. By notifying the measurements as data via the wired network, consumption of wireless resources can be reduced. As a result, the carrier frequencies and the phases among the plurality of base stations can be advantageously matched, with a small amount of wireless resources.

When the plurality of base stations performs cooperative transmit beamforming on the terminal, the same signals are supplied to the base stations A and B, via the wired network. Accordingly, in the cooperative transmit beamforming control described in the twenty-third A and the twenty-third B embodiments, the cooperative transmit beamforming was performed by two-time wireless transmissions. However, cooperative transmit beamforming may be performed by one-time wireless transmission, after a signal is supplied from the wired network.

In this manner, when a plurality of base stations performs cooperative transmit beamforming, the measurement channel information can be advantageously notified to another base station, via the wired network. Because the same signal is supplied to the plurality of base stations via the wired network, one-time wireless transmission may be made to perform the cooperative transmit beamforming.

Thirty-Fifth A Embodiment.

A thirty-fifth A embodiment will now be described. The present embodiment relates to wireless resources used to perform channel measurement among a plurality of base stations, carrier frequency correction, and phase correction.

The base station A and the base station B can perform carrier frequency correction and phase correction, by performing channel measurement on the pathways from the base station A to the base station B, and form the base station B to the base station A. In this case, pilot signals need to be transmitted alternately. In general, in the TDD system, to reduce the mutual interference among a plurality of base stations, the time synchronization is obtained in the uplink and the downlink, and the plurality of base stations has both the uplink and the downlink at the same time. In the present embodiment, a method of smoothly performing carrier frequency correction and phase control among the plurality of base stations in such an environment, is disclosed.

Fig. 64 is a schematic of a frame used to transmit a pilot signal for channel measurement according to the present embodiment. In the diagram, the base stations A and B have an uplink time slot and a downlink time slot at the same time, and measure pathways from the base station A to the base station B, and from the base station B to the base station A in the downlink time slot. To smoothly perform the channel measurement, the base stations A and B transmit pilot signals to each other at different temporal positions, in the downlink time slot. To perform the channel measurement, the base stations A and B provide a certain period of time not to transmit signals in the downlink.

In an example shown in Fig. 64, the base station B stops transmitting a signal, at the temporal position where the base station A transmits a pilot signal, and the base station B receives the pilot signal transmitted from the base station A and performs the channel measurement. The base station A stops transmitting a signal, at the temporal position where the base station B transmits a pilot signal, and the base station A receives the pilot signal transmitted from the base station B and performs the channel measurement. In this manner, because one base station stops transmitting a downlink signal at a certain temporal position, and the other base station transmits a pilot signal, the channel measurement can be smoothly performed, by alternately using the downlink time slot.

The time when the pilot signal is transmitted from the base station A to B, and from B to A are preferably close to each other, and as shown in Fig. 64, it is more preferable to transmit a pilot signal at one of the successive two time symbols, and then performs channel measurement by stopping the transmission at the other.

Before carrying out the present control, which signal format is used to perform channel measurement is determined in advance, by using the control signal, in the base station A and the base station B. To perform the control, several signal formats are defined in advance, and a suitable format is determined by the control performed between the base stations A and B.

Fig. 65 is a schematic of an example of a signal format and a control signal configuration. The present diagram indicates a control signal used when the main base station notifies the other base station of the present signal format, and the other base station transmit a pilot signal and stops transmitting a signal, based on the notified signal format. The control signal may be notified via the wired network between the base stations A and B, or by the wireless system.

In the frame to perform calibration, the normal downlink time slot has a different frame configuration. Accordingly, the frame configuration is notified to each terminal in the downlink as a control signal. The terminal identifies the downlink frame, and performs an operation according thereto.

As an additional invention, as shown in Fig. 65, if the base stations A and B stop transmitting a signal at a predetermined time symbol, it is preferable to stop at the time symbol in which data symbol is originally present. In this case, by using a simpler format than the original format with a reduced number of time symbols of data in the downlink time slot, a frame format for calibration can be used without affecting a normal control signal unit. In Fig. 64, the OFDMA frame format is shown as an example. However, the similar method can be used not only in the multi-carrier transmission, but also in various transmission methods.

The format for channel measurement between the base stations was mainly described here. However, the channel measurement can be smoothly and alternately performed also among a plurality of wireless devices, by exchanging the control signals related to the format in advance.

Thirty-Fifth B Embodiment.

A thirty-fifth B embodiment will now be described. In the present embodiment, a method of performing carrier frequency correction and phase correction at a plurality of base stations, different from that in the earlier embodiments, is disclosed. The present embodiment is **characterized in that** the carrier frequencies between the base stations are matched at high accuracy, by using a global positioning system (GPS). With the present configuration, coherent signals are transmitted among the plurality of base stations.

Fig. 66 is a schematic of a base station and a terminal according to the present embodiment. Fig. 67 is an example of an operational flowchart. Base stations 100-1 to 100-n shown in Fig. 66 have the same configurations, and include a GPS receiving unit 101, a frequency locking unit 102, an amplitude/phase controlling unit 103, a downlink signal transmitting unit 104, and an uplink pilot signal receiving unit 105. The amplitude/phase controlling unit 103 corresponds to a calibrating unit (a configuration to execute calibration). A terminal 200 includes a downlink signal receiving unit 201 and an uplink pilot signal transmitting unit 202.

Each of the base stations shown in Fig. 66 includes a GPS receiving function, and locks a frequency by using the GPS receiving function. More specifically, the frequency locking unit 102 detects a frequency of a signal from the GPS received by the GPS receiving unit 101 by automatic frequency pull-in and the like, and by multiplying the frequency, the frequency is used as a carrier wave frequency at the time of the signal transmission. If other base stations similarly lock the frequency by using the GPS, the base stations can obtain the frequency the same as that of the signal from the GPS. Accordingly, the frequency synchronization among the base stations can be performed with ease.

Based on the present method, if the carrier phase control described in the thirty-second embodiment and the like is performed, after achieving a state in which the base stations have the same carrier frequency, the state in which the channel reciprocity can be used among the plurality of base stations can be achieved. An environment where the channel reciprocity is used in the plurality of base stations having the same carrier frequency is not technologically different from the calibration performed on a plurality of antennas of the wireless device. Accordingly, based on the same method as the calibration performed between the antennas described in the first embodiment and the like, the bidirectional channel measurement is performed between the base stations, and the phases of the bidirectional channel measurements are corrected so as to be matched. Accordingly, the state in which channel reciprocity can be used between the base stations can be achieved.

In this manner, if the base stations have the same carrier frequency, and if the phases are controlled so that the channel reciprocity can be used, the coherent signal transmission described in the twenty-first, the twenty-second, the twenty-third, the twenty-third B embodiments, and the like can be performed. As a specific example, the terminal transmits an uplink pilot signal to the neighboring base stations. At least two or more base stations in which the same carrier frequencies are maintained and the phases are controlled by the GPS signal, determine a transmission weight in the downlink, based on a channel coefficient using the uplink signal. When each of the at least two base stations transmits the same signal at the transmission weight that has been determined, the signals transmitted from the base stations are in phase in the terminal. Accordingly, it is possible to receive the signals with strong power.

In this manner, the state in which the plurality of base stations has the same carrier frequency can easily be obtained, when the GPS signal is used. By using the state in which the base stations have the same carrier frequency, and the channel reciprocity, the plurality of base stations can transmit coherent signals. In this manner, by using the GPS signal, the coherent communications using the plurality of base stations can be obtained by a simple configuration.

Thirty-Fifth C Embodiment.

A thirty-fifth C embodiment will now be described. In the present embodiment, a method of performing carrier frequency correction and phase correction at a plurality of base stations, and different from that in the thirty-fifth B embodiment, is disclosed.

Fig. 68 is a schematic of a base station and a terminal according to the present embodiment. Fig. 69 is a flowchart of an operational flowchart. Base stations 100a-1 to 100a-n shown in Fig. 68 have the same configurations, and similarly to the above-described base stations 100-1 to 100-n, include the GPS receiving unit 101, the frequency locking unit 102, and the amplitude/phase controlling unit 103. The base stations 100a-1 to 100a-n also include a downlink frame transmitting unit 106 and an uplink control signal receiving unit 107. The amplitude/phase controlling unit 103 and the uplink control signal receiving unit 107 correspond to the calibrating unit (a configuration to execute calibration). A terminal 200a includes a synchronization detecting unit 203, a combining unit 204, a relative phase information measuring unit 205, and an uplink control signal transmitting unit 206.

The base stations shown in Fig. 68, similarly to the base stations according to the above-described thirty-fifth B embodiment, include the GPS receiving function, and lock a frequency by using the GPS receiving function. Because the other base stations also lock the frequency using the GPS, the frequencies among the base stations are in phase.

The terminal 200a detects synchronization by receiving the downlink frame from the base stations. A pilot signal is included in the downlink frame, and by using the pilot signal, the terminal 200a measures the relative phase information. The relative phase information, for example, is a phase rotation amount from the phase reference of the terminal 200a, obtained by the above-described synchronization detection.

The terminal 200a includes the measured relative phase information in an uplink frame, and transmits the information to the base stations as a control signal. The base stations extract the relative phase information included in the uplink frame from the terminal 200a, and control the amplitude and phase of the present transmission frame. The control is performed so that a state in which the phases including those of the other base stations are in phase, can be obtained, when the terminal receives the signal. For example, the phase is controlled so as to be the same as the phase reference of the terminal 200a. The base stations adjust the amplitude and the phase based on the control information received from the terminal 200a, and perform transmission.

In this manner, the coherent communications using a plurality of base stations can be obtained with ease, although the terminal does not have the accurate channel estimating/combining unit.

Thirty-Fifth D Embodiment.

A thirty-fifth D embodiment will now be described. In the thirty-fifth B and the thirty-fifth C embodiments, the method by which a plurality of base stations has the same carrier frequency was described. However, the same phase relationship can be achieved among the plurality of base stations, by tracking the phase of a GPS signal. In general, if the plurality of base stations independently uses an oscillator, independent phase noise is generated. Because the phase noise changes over the time, it will be an error factor for coherent signal transmission. However, if the phase of the signal transmitted from the base station is determined, by tracking the phase of the GPS, and by performing phase addition control and the like based on the phase, all the base stations have a phase noise the same as that of the GPS signal. As a result, even if the GPS signal has a phase noise, the base stations can maintain the state of coherent transmission, because the base stations have the same phase noise. In this manner, the problem of independent phase noise generated when the base station has an independent oscillator can be advantageously solved, by making the base stations track a phase of the GPS signal and use the phase.

Thirty-Fifth E Embodiment.

A thirty-fifth E embodiment will now be described. In the present embodiment, a method of performing carrier frequency correction and phase correction by a plurality of base stations, and different from the method according to the thirty-fifth B and the thirty-fifth C embodiments is disclosed.

Fig. 70 is a schematic of the base station and the terminal according to the present embodiment. Base stations 100b-1 to 100b-n shown in Fig. 70 have the same configurations, and similarly to the above-described base stations 100-1 to 100-n, include the GPS receiving unit 101, the frequency locking unit 102, and the amplitude/phase controlling unit 103. The base stations 100b-1 to 100b-n also include a phase-controlling-frame transmitting unit 108, a data frame transmitting unit 109, an uplink frame receiving unit 110, and a switch 111. The amplitude/phase controlling unit 103 and the uplink frame receiving unit 110 correspond to a calibrating unit (a configuration to execute calibration). A terminal 200b includes the synchronization detecting unit 203 as the above-described terminal 200a, and also includes a combining unit 204b and an uplink frame transmitting unit 207.

The present embodiment is different from the thirty-fifth B and the thirty-fifth C embodiments, in that the base station includes the phase-controlling-frame transmitting unit 108 instead of the downlink frame transmitting unit, the uplink frame receiving unit 110 instead of an uplink control signal receiving unit 1-7, and the data frame transmitting unit 109 and a switch. The terminal 200b and the base stations are operated similarly to those in the thirty-fifth B and the thirty-fifth C embodiments, but different therefrom in transmitting a phase-controlling-frame only for the first frame, and transmitting a data frame after the second and the subsequent frames.

The phase-controlling-frame is, for example, a frame having a frame configuration that includes a lot of pilot signals. The data frame, for example, is a frame having a frame configuration that includes none or an extremely small number of pilot signals. The terminal 200b executes the uplink frame transmissions described in the thirty-fifth B and the thirty-fifth C embodiments, by using the phase-controlling-frame, and the base station that has received the uplink frame executes the amplitude and phase control by using the uplink frame. After this, the base station only transmits a data frame, and the terminal significantly reduces the corresponding uplink frame transmission.

In this manner, the pilot transmission amount in the downlink, and the uplink amount can be largely reduced. Accordingly, the efficiency of the system transmission can be improved.

It was described that the base station transmits the phase-controlling-frame only for the first frame. However, this may be performed periodically (once in 100 frames) or non-periodically.

The expressions "base station" and the "terminal" in the thirty-fifth B, the thirty-fifth C, and the thirty-fifth D embodiments are simplified information for descriptive purposes. Accordingly, the same method can also be used for a plurality of base stations and for a single terminal, by switching the words "base station" and "terminal". The GPS is a simplified expression of a signal from a satellite, and may be a signal from any satellite. With the embodiments that use the above-described GPS signal, the signal is not limited to a signal from a satellite, in principle, but may be substituted by a signal that covers a wide range of signals such as terrestrial broadcast signals. Accordingly, in principle, the thirty-fifth B, the thirty-fifth C, the thirty-fifth D, and the thirty-fifth E embodiments can be executed by a signal that covers a wide range of terrestrial signals, in addition to the signal from the satellite.

Thirty-Fifth F Embodiment.

A thirty-fifth F embodiment will now be described. The present embodiment relates to a method of performing carrier frequency correction by a plurality of base stations, and describes an example of selectively using the thirty-fifth B and the thirty-fifth C embodiments that use the GPS signal, and the twenty-seventh, the twenty-eighth, and the twenty-ninth embodiments and the like that perform carrier frequency control by channel measurement between the base stations.

In the above-described twenty-seventh, the twenty-eighth, and the twenty-ninth embodiments and the like, the method of matching the carrier frequencies between the base stations at high accuracy, by channel measurement between the base stations, was described. In the thirty-fifth B and the thirty-fifth C embodiments, the method of using the GPS signal was described.

As an example of selectively using them, it is effective to use a configuration in which, the base stations set a carrier frequency by using a signal from the GPS at an outside where GPS is available, and control the carrier frequency based on the bi-directional channel measurement between the base stations described in the twenty-seventh, the twenty-eighth, and the twenty-ninth embodiments and the like, at a place where GPS is not available (such as an urban area, inside, and basement). In this case, in the outside base station where the GPS is available, the carrier frequencies can be matched at high accuracy without using the control signal. At the base station where the GPS is not available, the carrier frequencies can be matched at high accuracy, by exchanging control signals with the neighboring base stations.

As a more preferable configuration, the outside base station determines the carrier frequency by the GPS signal, and then the base station that has determined the carrier frequency, performs the carrier frequency control with the base station placed where GPS is not available. In the present method, even the base station placed where GPS is not available can have the same carrier frequency, as the base station placed where the GPS is available. In the carrier frequency controls described in the twenty-seventh, the twenty-eighth, and the twenty-ninth embodiments and the like, only a small number of base stations can have the same carrier frequency. However, it is not guaranteed that the carrier frequencies can be matched with other base stations. On the contrary, when the base station placed where GPS is not available determines the carrier frequency, based on the carrier frequency of the base station placed where the GPS is available, the carrier frequencies of all the base stations placed in a wide range can be made the same. As a result, even the base stations that do not perform the direct carrier frequency control with each other can still have the same carrier frequency. Accordingly, it is possible to obtain an effective system configuration used for the coherent transmission and the like among a number of base stations.

In this manner, the carrier frequencies among the base stations can be efficiently matched with a small number of control signals, by adaptively selecting the carrier frequency control method based on the position of the base station. More preferably, the carrier frequencies of a number of base stations placed in a wide range can be made the same, by making the base stations perform the carrier frequency control, based on the carrier frequency obtained by using the GPS.

In the above-described embodiments, the calibration method to maintain the channel reciprocity, the carrier frequency control method at high accuracy, and when a plurality of wireless devices coherently transmits signals by using the present technology was described. However, it is possible to use any combination of these technologies.

INDUSTRIAL APPLICABILITY

In this manner, the calibration method according to the present invention is advantageously applicable to the wireless communication system using the TDD system. More specifically, the calibration method is suitable to achieve high quality communications, by making the wireless communication device execute a simple and highly accurate calibration.

**Claims**

1. A calibration method used with a communication device that includes a plurality of antennas carrying out communications in a TDD system to perform calibration on the antennas, the calibration method comprising:

   a step of first channel estimating for transmitting a pilot signal from a first antenna that is any one of the plurality of antennas and receiving the pilot signal at a second antenna different from the first antenna to calculate a first channel estimation value;
   a step of second channel estimating for transmitting a plot signal from the second antenna and receiving the pilot signal at the first antenna to calculate a second channel estimation value; and

a step of correction coefficient calculating for calculating, by using the first and second channel estimation values, a correction coefficient to adjust a signal transmitted and received between the first antenna and the second antenna.

**2.** The calibration method according to claim 1, wherein the correction coefficient is calculated for all the antennas except a reference antenna, by executing a series of aforementioned processes in which the first antenna is fixedly used as the reference antenna and all the plurality of antennas except the first antenna is used as the second antenna.

**3.** The calibration method according to claim 1 or 2, wherein at the step of correction coefficient calculating, a correction coefficient to adjust a phase and an amplitude, or a correction coefficient to adjust a phase, of a signal transmitted from the antennas other than a reference antenna is calculated.

**4.** The calibration method according to claim 1, 2, or 3, wherein at the steps of first channel estimating and second channel estimating, transmission power of the pilot signal is determined based on a distance between the first antenna and the second antenna, and an adjusted pilot signal with a transmission power adjusted to determined transmission power is transmitted.

**5.** A calibration method used with first and second communication devices that carry out communications in a TDD system to perform calibration on antennas included in the devices, the calibration method comprising:

a step of first pilot signal transmitting in which the first communication device transmits a pilot signal;
a step of first channel estimating in which the second communication device receives the pilot signal transmitted from the first communication device and calculates a first channel estimation value;
a step of second pilot signal transmitting in which the second communication device transmits a pilot signal;
a step of second channel estimating in which the first communication device receives the pilot signal transmitted from the second communication device and calculates a second channel estimation value; and
a step of correction coefficient calculating in which the first communication device calculates a correction coefficient to adjust a signal transmitted and received to and from the second communication device, based on the second channel estimation value and the first channel estimation value obtained from the second communication device.

**6.** The calibration method according to claim 5, wherein at the step of correction coefficient calculating, a correction coefficient to match phase and amplitude characteristics between the first channel estimation value and the second channel estimation value is calculated.

**7.** The calibration method according to claim 5, wherein at the step of correction coefficient calculating, a correction coefficient to match a phase characteristic between the first channel estimation value and the second channel estimation value is calculated.

**8.** A calibration method used with first and second communication devices that carry out communications in a TDD system to perform calibration on antennas included in the devices, the calibration method comprising:

a step of first pilot signal transmitting in which the first communication device transmits a pilot signal;
a step of first channel estimating in which the second communication device receives the pilot signal transmitted from the first communication device and calculates a first channel estimation value;
a step of second pilot signal transmitting in which the second communication device transmits a pilot signal whose phase is adjusted, or a pilot signal whose phase and amplitude are adjusted, based on the first channel estimation value;
a step of second channel estimating in which the first communication device receives the pilot signal transmitted from the second communication device and calculates a second channel estimation value; and
a step of correction coefficient calculating in which the first communication device calculates a correction coefficient to adjust a signal transmitted and received to and from the second communication device, based on the second channel estimation value.

**9.** The calibration method according to any one of claims 5 to 8, wherein
at the step of first pilot signal transmitting, the pilot signal is transmitted by using a symbol immediately before a first time frame by which the first communication device transmits a signal and a second time frame by which the second communication device transmits a signal are switched, and
at the step of second pilot signal transmitting, the pilot signal is transmitted by using a symbol immediately after the first time frame and the second time frame are switched.

10. The calibration method according to any one of claims 5 to 9, wherein
when the first communication device includes a plurality of antennas,
at the step of first pilot signal transmitting, the pilot signal is transmitted from all the antennas using a plurality of time-frequency domains specified by a time slot and a sub-band in which at least one of time and frequency is different, and
at the step of second pilot signal transmitting, the pilot signal is individually transmitted to all the antennas, by using a time-frequency domain having a single frequency as a time-frequency domain where the second communication device has received a pilot signal at the first channel estimating.

11. The calibration method according to claim 10, wherein at the step of first pilot signal transmitting, the pilot signal is transmitted by selecting at least one of time and frequency having a good propagation state for each of the antennas, and by using a time-frequency domain corresponding to a selected result.

12. The calibration method according to claim 10, wherein at the step of first pilot signal transmitting, the pilot signal is transmitted by selecting an antenna having a good channel state for each of the time-frequency domains.

13. The calibration method according to any one of claims 5 to 12, wherein at the step of first pilot signal transmitting, the pilot signal is transmitted by using a random access channel.

14. The calibration method according to any one of claims 5 to 13, wherein the correction coefficient is updated by periodically executing each process at the steps of first pilot signal transmitting, first channel estimating, second pilot signal transmitting, second channel estimating, and correction coefficient calculating, at a longer cycle than a fading cycle of a system.

15. A calibration method used with a first communication device that includes a plurality of antennas and a second communication device, both devices carrying out communications in a TDD system, to perform calibration on antennas included in the devices, the calibration method comprising:

a step of first calibrating in which the first communication device fixedly uses any one of the plurality of antennas, and executes a calibration process disclosed in any one of claims 5 to 9 with the second communication device; and
a step of second calibrating in which the first communication device executes a calibration process disclosed in any one of claims 1 to 4, by assuming the antenna thus fixedly used as the first antenna.

16. A calibration method used with a first communication device that includes a plurality of antennas and a second communication device, both devices carrying out communications in a TDD system, to perform calibration on antennas included in the devices, the calibration method comprising:

a step of first calibrating in which the first communication device executes a calibration process disclosed in any one of claims 1 to 4, and executes calibration among the antennas included therein;
a step of second calibrating in which the first communication device fixedly uses any one of antennas in the plurality of antennas, and executes a calibration process disclosed in any one of claims 5 to 9 with the second communication device; and
a step of process result updating in which the first communication device updates a process result obtained at the first calibrating, based on a process result obtained at the second calibrating.

17. A calibration method used with a first communication device that includes a plurality of antennas and a second communication device, both devices carrying out communications in a TDD system, to perform calibration on antennas included in the devices, the calibration method comprising:

a step of calibrating in which the first communication device executes a calibration process disclosed in any one of claims 1 to 4, and executes calibration among the antennas included therein;
a step of first pilot signal transmitting in which the first communication device forms a beam by using the plurality of antennas and transmits a pilot signal by using the beam thus formed;

a step of first amplitude measuring in which the second communication device measures an amplitude of the pilot signal transmitted from the first communication device;

a step of second pilot signal transmitting in which the second communication device transmits a pilot signal;

a step of second amplitude measuring in which the first communication device receives the pilot signal transmitted from the second communication device by using the beam, and measures an amplitude of the pilot signal thus received; and

a step of correction coefficient calculating in which the first communication device calculates a correction coefficient to adjust a signal transmitted and received via the plurality of antennas, based on a result of the first amplitude measuring and a result of the second amplitude measuring.

18. The calibration method according to claim 17, wherein
when the second communication device includes a plurality of antennas,
at the step of first amplitude measuring, the second communication device receives the pilot signal from the first communication device by using a beam formed by the plurality of antennas, and
at the step of second amplitude measuring, the second communication device transmits the pilot signal to the first communication device, by using the beam.

19. A calibration method used with a communication device M that includes M (M≥2) antennas and a communication device N that includes N (N≥2) antennas carrying out communications in a TDD system to perform calibration on the antennas included in the devices, the calibration method comprising:

a step of M-antenna calibrating in which the communication device M executes a process disclosed in any one of claims 15 to 18 as the first communication device, and the communication device N executes a process disclosed in any one of claims 15 to 18, corresponding to the process executed by the communication device M, as the second communication device, by fixedly using any one of the N antennas, and calibration is performed between the antenna thus fixedly used and the M antennas; and

a step of N-antenna calibrating in which the communication terminal N executes a process disclosed in any one of claims 15 to 18 as the first communication device, and the communication device M executes a process disclosed in any one of claims 15 to 18, corresponding to the process executed by the communication device N, as the second communication device, by fixedly using any one of the M antennas, and calibration is performed between the antenna thus fixedly used and the N antennas.

20. A calibration method in a communication system that includes a communication device A, a communication device B in a communicative positional relationship with the communication device A, and a communication device C in a communicative positional relationship with the communication device B, and that carries out communications in a TDD system, with the communication device C to perform calibration with the communication device A via the communication device B, the calibration method comprising:

a step of first calibrating in which the communication device B performs an operation as the first communication device, and performs calibration with the communication device A, by executing a calibration process disclosed in any one of claims 5 to 9 with the communication device A; and

a step of second calibrating in which the communication device C performs an operation as the first communication device, and performs calibration with the communication device B, by executing a calibration process disclosed in any one of claims 5 to 9 with the communication device B.

21. A calibration method in a communication system that includes a reference communication device, a third communication device that has completed calibration with the reference communication device, and a fourth communication device that has not completed calibration with the reference communication device, and that carries out communications in a TDD system, with the fourth communication device to perform calibration with the reference communication device, the calibration method comprising:

a step of judging in which the fourth communication device judges whether to perform calibration by using direct communications with the reference communication device, based on a channel state with the reference communication device;

a step of direct calibration executing in which, when it is judged that the calibration using the direct communications is to be performed at the judging, the fourth communication device executes a process disclosed in any one of claims 5 to 9 as the first communication device, and the reference communication device executes a process disclosed in any one of claims 5 to 9, corresponding to the process executed by the fourth communication

77

device, as the second communication device to perform calibration; and

a step of indirect calibration executing in which, when it is judged that the calibration using the direct communications is not to be performed at the judging, the fourth communication device executes a process disclosed in any one of claims 5 to 9 as the first communication device, and the third communication device executes a process disclosed in any one of claims 5 to 9, corresponding to the process executed by the fourth communication device, as the second communication device to perform calibration.

22. A communication system comprising:

a plurality of communication devices that carries out communications in a TDD system, wherein
when a communication device A that is one of the plurality of communication devices performs antenna calibration with a communication device B by using wireless communications,
the communication device A first performs calibration with a communication device C by using wireless communications, and
the communication device C then performs calibration with the communication device B by using wireless communications to enable the communication device A and the communication B to perform indirect calibration.

23. The communication system according to claim 22, wherein the first communication device adaptively selects whether to perform direct calibration with the second communication device, or to perform indirect calibration via the third communication device, based on a channel state with the second communication device and a channel state with the third communication device.

24. A communication system comprising:

a plurality of communication devices that carries out communications in a TDD system, wherein
the communication device determines at least one of whether to execute antenna calibration with another communication device by using wireless communications with the another communication device, and a type of calibration to be executed, based on a model type of the another communication device.

25. A wireless communication system comprising:

a terminal and a base station that carry out communications in a TDD system, wherein
channel reciprocity is mutually maintained by the terminal in a cell managed by a specific base station performing calibration by using wireless communications with the specific base station, based on a setting value in the specific base station.

26. The communication system according to any one of claims 22 to 25, wherein the calibration using wireless communications is executed based on a calibration method disclosed in any one of claims 5 to 9.

27. A communication system comprising:

a plurality of communication devices that carries out communications in a TDD system, wherein
the plurality of communication devices has a function to control a carrier phase so that a carrier phase of a signal received by a reception side communication device is a specific value, before transmitting the signal, and
when two or more communication devices in the plurality of communication devices transmit a signal to a single reception side communication device, the communication devices that transmit the signal control the carrier phase of the signal received by the reception side communication device, so as to be a specific relative phase.

28. The communication system according to claim 27, wherein
the communication devices further include a timing control function to determine a signal transmission timing, to individually perform communications with the reception side communication device, and to let a signal transmitted from the communication devices reach the reception side communication device at a same timing as a signal transmitted from another communication device, and
the communication devices that transmit the signal transmit a signal at the signal transmission timing thus determined, after controlling a carrier phase of the signal received by the reception side communication device to be a specific relative phase.

29. The communication system according to claim 27 or 28, wherein each of the communication devices, on receiving a signal not addressed to the communication device, relay-transmits the signal thus received to an addressed communication device of the received signal, or to any one or a plurality of other communication devices placed between the communication device and the addressed communication device.

30. The communication system according to claim 29, wherein each of the communication devices, when a plurality of candidate communication devices to be a destination of relay transmission exists between the communication device and the addressed communication device, checks a function of the candidate communication devices, and determines a communication device to be a destination of relay transmission and a relay transmission process to be executed, based on a result thus checked.

31. The communication system according to any one of claims 27 to 30, wherein

each of the communication devices executes calibration with another communication device by using wireless communications, and
the communication devices that transmit the signal measure a channel state using a pilot signal transmitted from the reception side communication device, and after determining a phase or a phase and an amplitude of the transmitted signal based on a channel value thus measured, transmit the signal based on a result thus determined and by controlling a carrier phase of the signal received by the reception side communication device to be a specific relative phase.

32. The communication system according to any one of claims 27 to 31, wherein
the reception side communication device individually transmits a control parameter to the communication devices that transmit the signal, and
the communication devices that transmit the signal determine transmission power based on the control parameter received from the reception side communication device, and transmit the signal by the transmission power thus determined.

33. The communication system according to claim 32, wherein the reception side communication system determines a value of the control parameter based on reception power, a received SINR, communication quality, interference noise power, and a channel estimation value requested by the reception side communication device.

34. The communication system according to any one of claims 27 to 33, wherein
when the reception side communication device includes a plurality of antennas,
the reception side communication device transmits a pilot signal by transmit beamforming, and
the communication devices that transmit the signal perform channel estimation based on the pilot signal transmitted from the reception side communication device, determine a phase or a phase and an amplitude of the signal transmitted to the reception side communication device based on a result of the channel estimation, and transmit the signal based on a content thus determined.

35. The communication system according to claim 34, wherein the reception side communication device performs channel estimation with a terminal based on the pilot signal transmitted from the communication devices that transmit the signal, and performs the transmit beamforming based on a result of the channel estimation.

36. The communication system according to claim 34 or 35, wherein
the communication devices that transmit the signal spatially multiplex different signals to the reception side communication device by using the phase or the phase and the amplitude thus determined, and
the reception side communication device individually receives a plurality of spatially separated signals thus spatially multiplexed.

37. A communication system comprising:

a plurality of communication devices that includes functions of the first communication device and functions of the second communication device disclosed in at least one of claims 5 to 14, wherein
the communication devices adaptively select whether to perform calibration with an opposite communication device, based on a model type of the opposite communication device, and when it is judged to perform calibration, a type of calibration to be executed.

38. A communication system comprising:

a plurality of terminals and a base station that carry out communications in a TDD system, wherein channel reciprocity is achieved between the terminals and the base station by the terminals executing a process disclosed in any one of claims 5 to 14 as the first communication device, and the base station executing a process disclosed in any one of claims 5 to 14, corresponding to the process executed by the terminals, as the second communication device.

39. The communication system according to claim 38, wherein the terminals include a phase control function to adjust a phase of a signal transmitted to the base station so as to be a desired phase of the base station, by using a pilot signal received from the base station in a state that channel reciprocity is maintained with the base station.

40. The communication system according to claim 39, wherein the base station, on receiving a signal adjusted to be the desired phase from the terminals, performs a reception process of the signal based on a carrier amplitude and phase predicted by using channel reciprocity.

41. The communication system according to claim 39 or 40, wherein the base station, on receiving the signal adjusted to be the desired phase from the terminals, calculates a channel estimation value, by using the carrier amplitude and phase predicted by using channel reciprocity, and channel measurement information obtained by a signal reception process performed based on the carrier amplitude and phase.

42. The communication system according to claim 41, wherein the base station calculates the channel measurement information by determining data of a received signal by using the carrier amplitude and phase.

43. The communication system according to any one of claims 39 to 42, wherein
when the terminals each include a plurality of antennas and transmit a signal to the base station by using the plurality of antennas,
the terminals adjust phases of all signals transmitted from the plurality of antennas so as to be the desired phase of the base station, and transmit signals whose phases are adjusted.

44. The communication system according to any one of claims 39 to 43, wherein cooperative transmit beamforming is performed by two or more terminals included in the plurality of terminals simultaneously transmitting signals whose phases are adjusted to be the desired phase of the base station.

45. The communication system according to claim 44, wherein
the terminals include a timing control function to determine a signal transmission timing to let a signal transmitted from the terminals reach the base station at a same timing as a signal transmitted from another terminal, by individually performing communications with the base station, and
the terminals transmit a signal whose phase is adjusted to be the desired phase of the base station at the transmission timing thus determined.

46. The communication system according to any one of claims 39 to 45, wherein each of the terminals, on receiving a signal addressed to the base station from another terminal, relay-transmits the signal thus received to the base station, or to one or a plurality of other terminals placed between the terminal and the base station.

47. The communication system according to claim 46, wherein each of the terminals, when a plurality of candidate terminals to be a destination of relay transmission exists between the terminal and the base station, checks a function of the candidate terminals and determines a terminal to be a destination of relay transmission and a relay transmission process to be executed, based on a result thus checked.

48. The communication system according to any one of claims 39 to 47, wherein
the base station individually transmits a control parameter to the plurality of terminals, and
the terminals determine transmission power based on the control parameter received from the base station, and transmit a signal at the transmission power thus determined.

49. The communication system according to claim 48, wherein the base station determines a value of the control parameter based on reception power, a received SINR, communication quality, interference noise power, and a channel estimation value requested by the base station.

50. The communication system according to any one of claims 39 to 49, wherein

when the base station includes a plurality of antennas,
the base station transmits a pilot signal by transmit beamforming, and
the plurality of terminals enables transmit beamforming cooperatively by performing channel estimation based on the pilot signal transmitted from the base station, determining a phase or a phase and an amplitude of the signal transmitted to the base station based on a result of the channel estimation, and transmitting the signal based on a content thus determined.

51. The communication system according to claim 50, wherein the base station performs channel estimation with the terminals based on the pilot signal transmitted from the plurality of terminals, and performs transmit beamforming based on a result of the channel estimation.

52. The communication system according to claim 50 or 51, wherein

the plurality of terminals spatially multiplexes different signals to the base station, by using the phase or the phase and the amplitude thus determined, and
the base station individually receives a plurality of spatially separated signals thus spatially multiplexed.

53. A frequency control method used with a first communication device and a second communication device that carry out communications in a TDD system to compensate a frequency difference of signals transmitted from both devices, the frequency control method comprising:

a step of first pilot signal transmitting in which the first communication device transmits a pilot signal;
a step of first channel estimating in which the second communication device receives the pilot signal transmitted from the first communication device and calculates a first channel estimation value;
a step of second pilot signal transmitting in which the second communication device transmits a pilot signal whose phase is adjusted based on the first channel estimation value;
a step of second channel estimating in which the first communication device receives the pilot signal transmitted from the second communication device and calculates a second channel estimation value; and
a step of adjusting in which the first communication device adjusts a frequency of a transmitted signal based on the second channel estimation value.

54. A frequency control method used with a first communication device and a second communication device that carry out communications in a TDD system to compensate a frequency difference of signals transmitted from both devices, the frequency control method comprising:

a step of first pilot signal transmitting in which the first communication device transmits a pilot signal;
a step of first channel estimating in which the second communication device receives the pilot signal transmitted from the first communication device and calculates a first channel estimation value;
a step of second pilot signal transmitting in which the second communication device transmits a pilot signal whose phase is adjusted based on the first channel estimation value;
a step of second channel estimating in which the first communication device receives the pilot signal transmitted from the second communication device, calculates a second channel estimation value, and notifies the second channel estimation value to the second communication device; and
a step of adjusting in which the second communication device adjusts a frequency of a transmitted signal based on the first channel estimation value and the second channel estimation value.

55. The frequency control method according to claim 53 or 54, wherein a series of processes including the steps of first pilot signal transmitting, first channel estimating, second pilot signal transmitting, second channel estimating, and adjusting is repeatedly executed for a predetermined number of times for a first cycle, and the series of processes is repeatedly executed for a predetermined number of times for a second cycle that is longer than the first cycle.

56. The frequency control method according to claim 53 or 54, wherein a series of processes including the steps of first pilot signal transmitting, first channel estimating, second pilot signal transmitting, second channel estimating, and adjusting is repeatedly executed for a predetermined number of times, while gradually increasing a length of an execution cycle.

57. The frequency control method according to any one of claims 53 to 56, wherein
at the step of first pilot signal transmitting, the pilot signal is transmitted by using a symbol immediately before a first time frame by which the first communication device transmits a signal, and a second time frame by which the second communication device transmits a signal, are switched, and
at the step of second pilot signal transmitting, the pilot signal is transmitted by using a symbol immediately after the first time frame and the second time frame are switched.

58. The frequency control method according to claim 55, 56, or 57, further comprising:

a step of reselecting for reselecting a sub-band used to transmit the pilot signals based on a channel state, after executing a series of processes including the steps of first pilot signal transmitting, first channel estimating, second pilot signal transmitting, second channel estimating, and adjusting once, and
when the step of reselecting is executed, in the steps of first and second pilot signal transmitting to be executed next time, the pilot signals are transmitted by using the sub-band selected at the reselecting.

59. A communication device comprising:

a communication system that carries out communications in a TDD system, wherein
the communication device controls, before transmitting a signal, a carrier phase so that a carrier phase of the signal received by a reception side communication device is a specific value.

60. The communication device according to claim 59, wherein, the communication device controls, when including a plurality of antennas, a carrier phase of a signal transmitted from the antennas, so that the carrier phase of the signal received by the reception side communication device is a specific relative phase.

61. A communication device that performs a calibration method disclosed in any one of claims 1 to 4.

62. A communication device that executes calibration disclosed in any one of claims 5 to 18 by operating as the first communication device.

63. A communication device that executes calibration disclosed in any one of claims 5 to 18 by operating as the second communication device.

# FIG.1

ANTENNA M

$T_{k,M}$  D/A  $U_{k,M}$

$R_{k,M}$  A/D

MEASUREMENT
CHANNEL

$h_{k,m}^{(UL)}$ (UPLINK)

$h_{k,m}^{(DL)}$ (DOWNLINK)

ANTENNA m

$g_{k,m}^{(UL)}$ (UPLINK)

$g_{k,m}^{(DL)}$ (DOWNLINK)

$U_{BS}$  D/A  $T_{BS}$

A/D  $R_{BS}$

BASE STATION

$T_{k,m}$  D/A  $U_{k,m}$

$R_{k,m}$  A/D

ANTENNA 1

$T_{k,1}$  D/A  $U_{k,1}$

$R_{k,1}$  A/D

TERMINAL k

# FIG.2

# FIG.3-1

# FIG.3-2

# FIG.4

START

ANTENNA m (=2, ..., M) TRANSMITS PILOT SIGNAL
MEASURE CHANNEL AT ANTENNA #1 — S41

ANTENNA 1 TRANSMITS PILOT SIGNAL
MEASURE CHANNEL AT ANTENNA m
(=2, ..., M) — S42

CALCULATE CORRECTION COEFFICIENT OF
ANTENNA m (m=1, ..., M) — S43

APPLY CORRECTION COEFFICIENT TO
TRANSMITTING UNITS OF ANTENNAS — S44

END

# FIG.5

TRANSMISSION POWER $P_3$

3

$T_{k,M}$   D/A

$R_{k,M}$   A/D

TRANSMISSION POWER $P_2$

2

$T_{k,m}$   D/A

$R_{k,m}$   A/D

$P_3 > P_2$

1

$T_{k,1}$   D/A

$R_{k,M}$   A/D

TERMINAL k

# FIG.6

CALIBRATION CONTROLLING UNIT — 12

CONTROL INFORMATION RECEIVING UNIT — 18

15-M $T_{k,M}$  14-M D/A  13-M $U_{k,M}$  11 SIGNAL TRANSMITTING /RECEIVING UNIT

16-M $R_{k,M}$  17-M A/D

15-m $T_{k,m}$  14-m D/A  13-m $U_{k,m}$

16-m $R_{k,m}$  17-m A/D

15-1 $T_{k,1}$  14-1 D/A  13-1 $U_{k,M}$

16-1 $R_{k,M}$  17-1 A/D

TERMINAL k

28 CONTROL INFORMATION RECEIVING UNIT

22 CALIBRATION CONTROLLING UNIT

21 SIGNAL TRANSMITTING/ RECEIVING UNIT

23 $U_{BS}$  24 D/A  25 $T_{BS}$

27 A/D  26 $R_{BS}$

20

BASE STATION

# FIG.7

```
                              START

   ┌──────────────────────┐      ┌──────────────────────┐      ┌──────────────────────┐
   │ S71                  │  OR  │                      │  OR  │                      │
   │ TERMINAL TRANSMITS   │      │ TERMINAL TRANSMITS   │      │ BASE STATION         │
   │ PILOT SIGNAL TO      │      │ PILOT SIGNAL TO      │      │ TRANSMITS PILOT      │
   │ BASE STATION         │      │ BASE STATION         │      │ SIGNAL TO TERMINAL   │
   └──────────────────────┘      └──────────────────────┘      └──────────────────────┘

   ┌──────────────────────┐      ┌──────────────────────┐      ┌──────────────────────┐
   │ S72                  │      │ BASE STATION         │      │ TERMINAL TRANSMITS   │
   │ BASE STATION         │      │ TRANSMITS CHANNEL    │      │ PILOT SIGNAL TO      │
   │ TRANSMITS PILOT      │      │ INFORMATION TO       │      │ BASE STATION         │
   │ SIGNAL TO TERMINAL   │      │ TERMINAL             │      │                      │
   └──────────────────────┘      └──────────────────────┘      └──────────────────────┘

   ┌──────────────────────┐      ┌──────────────────────┐      ┌──────────────────────┐
   │ S73                  │      │ BASE STATION         │      │ BASE STATION         │
   │ BASE STATION         │      │ TRANSMITS PILOT      │      │ TRANSMITS CHANNEL    │
   │ TRANSMITS CHANNEL    │      │ SIGNAL TO TERMINAL   │      │ INFORMATION TO       │
   │ INFORMATION TO       │      │                      │      │ TERMINAL             │
   │ TERMINAL             │      └──────────────────────┘      └──────────────────────┘
   └──────────────────────┘

   ┌──────────────────────┐
   │ S74                  │
   │ TERMINAL SETS        │
   │ CORRECTION           │
   │ COEFFICIENT          │
   └──────────────────────┘

                              END
```

# FIG.8

| POWER (dBm) | CONTROL INFORMATION BITS |
|---|---|
| -200 TO -199 | (0, 0, 0, 0, 0, 0, 0, 0) |
| -199 TO -198 | (0, 0, 0, 0, 0, 0, 0, 1) |
| -198 TO -197 | (0, 0, 0, 0, 0, 0, 1, 0) |
| ⋮ | ⋮ |
| 55 TO 56 | (1, 1, 1, 1, 1, 1, 1, 1) |

# FIG.9

| PHASE $\theta$ (°) | CONTROL INFORMATION BITS |
|---|---|
| 0 TO $360/2^8$ | (0, 0, 0, 0, 0, 0, 0, 0) |
| $360/2^8$ TO $2*360/2^8$ | (0, 0, 0, 0, 0, 0, 0, 1) |
| $2*360/2^8$ TO $3*360/2^8$ | (0, 0, 0, 0, 0, 0, 1, 0) |
| ⋮ | ⋮ |
| $(2^8-1)*360/2^8$ TO 360 | (1, 1, 1, 1, 1, 1, 1, 1) |

# FIG.10

START

TERMINAL TRANSMITS PILOT SIGNAL TO BASE STATION — S101

BASE STATION TRANSMITS PILOT SIGNAL TO TERMINAL — S102

TERMINAL SETS CORRECTION COEFFICIENT BASED ON PILOT SIGNAL FROM BASE STATION — S103

END

## FIG.11-1

| IDENTIFICATION NUMBER OF PILOT PATTERN | PHASE INFORMATION |
|---|---|

## FIG.11-2

| IDENTIFICATION NUMBER OF ANTENNA | IDENTIFICATION NUMBER OF PILOT PATTERN | IDENTIFICATION NUMBER OF ANTENNA | IDENTIFICATION NUMBER OF PILOT PATTERN | ... |
|---|---|---|---|---|

## FIG.11-3

| IDENTIFICATION NUMBER OF ANTENNA | PHASE AND AMPLITUDE INFORMATION | IDENTIFICATION NUMBER OF ANTENNA | PHASE AND AMPLITUDE INFORMATION | ... |
|---|---|---|---|---|

# FIG.12-1

SUBCARRIER

TIME FRAME IN UPLINK (OR DOWNLINK) DIRECTION

TIME FRAME IN DOWNLINK (OR UPLINK) DIRECTION

GI DATA

SYMBOL USED TO TRANSMIT PILOT SIGNAL

TIME

# FIG.12-2

SUBCARRIER

TIME FRAME IN UPLINK (OR DOWNLINK) DIRECTION

TIME FRAME IN DOWNLINK (OR UPLINK) DIRECTION

GI DATA

SYMBOL USED TO TRANSMIT PILOT SIGNAL

TIME

# FIG.12-3

TIME FRAME IN UPLINK (OR DOWNLINK) DIRECTION

SUBCARRIER

GI Data

TIME FRAME IN DOWNLINK (OR UPLINK) DIRECTION

GI DATA

SYMBOL USED TO TRANSMIT PILOT SIGNAL

TIME

# FIG.12-4

TIME FRAME IN UPLINK (OR DOWNLINK) DIRECTION

SUBCARRIER

TIME FRAME IN DOWNLINK (OR UPLINK) DIRECTION

GI DATA

SYMBOL USED TO TRANSMIT PILOT SIGNAL

TIME

# FIG.13

ANTENNA 1 TRANSMITS PILOT (S131)

INFORMATION FOR ANTENNA 1 (S132)

ANTENNA 2 TRANSMITS PILOT (S133)

INFORMATION FOR ANTENNA 2 (S134)

ANTENNA m TRANSMITS PILOT

FREQUENCY

| | UPLINK | DOWN LINK | UPLINK | DOWN LINK | UPLINK | DOWN LINK | | UPLINK | DOWN LINK |
|---|---|---|---|---|---|---|---|---|---|
| SUB-BAND | ▨ | ▨ | ▨ | ▨ | | | ... | ▨ | |
| SUB-BAND | | | | | | | | | |
| | | | | | ▨ | ▨ | | | |
| | | | | | | | | | |

TIME

TIME SLOT

ANTENNA 1 TRANSMITS PILOT (S136)

INFORMATION FOR ANTENNA 1 (S137)

# FIG.14

ANTENNA 1
TRANSMITS PILOT
(S141)

INFORMATION
FOR ANTENNA 1
(S142)

ANTENNA 3
TRANSMITS PILOT
(S143)

INFORMATION
FOR ANTENNA 3
(S144)

ANTENNA 2
TRANSMITS PILOT
(S145)

INFORMATION
FOR ANTENNA 2
(S146)

FREQUENCY

UPLINK   DOWN LINK   UPLINK   DOWN LINK   UPLINK   DOWN LINK   ...   UPLINK   DOWN LINK

SUB-BAND

SUB-BAND

TIME

TIME SLOT

CHANNEL GAIN

ANTENNA 1   ANTENNA 3   ANTENNA 2

# FIG.15

EP 2 154 802 A1

# FIG.16

# FIG.17

| USABLE NUMBER OF SUB-BANDS | SUB-BAND ID | SUB-BAND ID | ... |
|---|---|---|---|

## FIG.18-1

| NUMBER OF TRANSMITTED PILOT SIGNALS z |
|---|

## FIG.18-2

| IDENTIFICATION NUMBER OF ANTENNA | SUB-BAND ID | IDENTIFICATION NUMBER OF ANTENNA | SUB-BAND ID | • • • |
|---|---|---|---|---|

# FIG.18-3

# FIG.18-4

SUB-BAND USED TO
TRANSMIT PILOT

$\leftarrow$ B $\rightarrow$    $\longleftarrow$ MB $\longrightarrow$    $\longleftarrow$ MB $\longrightarrow$

$F_0$    FREQUENCY

CAL1    $f_1^{(1)}$    $f_2^{(1)}$    $f_3^{(1)}$    $f_4^{(1)}$    $f_1^{(2)}$    $f_2^{(2)}$    $f_3^{(2)}$    $f_4^{(2)}$    $f_1^{(3)}$

CAL2    $f_4^{(1)}$    $f_1^{(1)}$    $f_3^{(1)}$    $f_2^{(1)}$    $f_3^{(2)}$    $f_2^{(2)}$    $f_1^{(2)}$    $f_4^{(2)}$    $f_1^{(3)}$

# FIG.18-5

$t=t_1$    $t=t_2$    $t=t_T$
FIRST TIME    SECOND TIME    T-TH TIME
DL  UL    DL  UL    DL  UL

• • •    • • • • • • • • •

CALIBRATION    CALIBRATION    CALIBRATION    TIME

CORRECTION
COEFFICIENT FOR    $u_{MT,m|t_1}(f)$    $u_{MT,m|t_2}(f)$    $u_{MT,m|t_T}(f)$
EACH TIME

SYNTHESIZER    ▨ PILOT SIGNAL

HIGH ACCURACY
CORRECTION    $u_{MT,m}(f)$
COEFFICIENT

## FIG.18-6

## FIG.18-7

| 4 | 1 | 3 | 2 | 3 | 2 | 1 | 4 | 1 | · · · · · · |

## FIG.18-8

# FIG.18-9

| SUPPORT REQUEST | $\Gamma_{BS}$ |
|---|---|

# FIG.18-10

| SUPPORT POSSIBLE | TERMINAL ID | $\Gamma_S$ |
|---|---|---|

# FIG.18-11

# FIG.19

| PILOT SIGNAL | ACCESS DATA |
|---|---|

# FIG.20

| PILOT SIGNAL | NOTIFICATION INFORMATION |
|---|---|

## FIG.21

UPDATE CYCLE OF $U_{k,m}$

(UNIT OF EQUAL TO OR MORE THAN 10 SECONDS)

$T_{BS,}\ R_{BS,}\ T_{k,m,}\ R_{k,m}$

GAIN

TIME

MULTIPATH FADING

$g_{k,m}^{(UL)}$   $g_{k,m}^{(DL)}$

PACKET TRANSMISSION
(UNIT OF MILLISECOND)

# FIG.22

```
        START

ANTENNA 1 OF TERMINAL EXECUTES          S221
 CALIBRATION WITH BASE STATION

OTHER ANTENNA m OF TERMINAL EXECUTES    S222
  SELF-CALIBRATION WITH ANTENNA 1

         END
```

# FIG.23

```
        START

 OTHER ANTENNA m AND ANTENNA 1          S231
    EXECUTE SELF-CALIBRATION

 ANTENNA 1 OF TERMINAL EXECUTES         S232
  CALIBRATION WITH BASE STATION

         END
```

# FIG.24

```
            ┌─────────────┐
            │    START    │
            └─────────────┘
                   │
                   ▼
┌──────────────────────────────────────┐
│  OTHER ANTENNA m AND ANTENNA 1 OF     │── S241
│  TERMINAL EXECUTE SELF-CALIBRATION    │
└──────────────────────────────────────┘
                   │
                   ▼
┌──────────────────────────────────────┐
│  TERMINAL FORMS TRANSMIT BEAM AND     │── S242
│  TRANSMITS PILOT SIGNAL TO BASE STATION│
└──────────────────────────────────────┘
                   │
                   ▼
┌──────────────────────────────────────┐
│  BASE STATION NOTIFIES TERMINAL OF    │── S243
│  UPLINK AMPLITUDE MEASUREMENT VALUE   │
└──────────────────────────────────────┘
                   │
                   ▼
┌──────────────────────────────────────┐
│  BASE STATION TRANSMITS DOWNLINK PILOT│
│  SIGNAL, AND TERMINAL RECEIVES        │── S244
│  DOWNLINK PILOT SIGNAL BY RECEIVE BEAM│
└──────────────────────────────────────┘
                   │
                   ▼
┌──────────────────────────────────────┐
│  TERMINAL DETERMINES CORRECTION       │
│  COEFFICIENT FROM DOWNLINK AMPLITUDE  │── S245
│  MEASUREMENT AND FEEDBACK             │
│  INFORMATION                          │
└──────────────────────────────────────┘
                   │
                   ▼
            ┌─────────────┐
            │     END     │
            └─────────────┘
```

FIG.25

# FIG.26

START

OTHER ANTENNA m AND ANTENNA 1 OF TERMINAL EXECUTE SELF-CALIBRATION — S261

OTHER ANTENNA n AND ANTENNA 1 OF BASE STATION EXECUTE SELF-CALIBRATION — S262

TERMINAL FORMS TRANSMIT BEAM AND TRANSMITS PILOT SIGNAL TO BASE STATION — S263

BASE STATION NOTIFIES TERMINAL OF UPLINK AMPLITUDE MEASUREMENT VALUE — S264

BASE STATION TRANSMITS DOWNLINK PILOT SIGNAL BY USING TRANSMIT BEAM — S265

TERMINAL FORMS RECEIVE BEAM, RECEIVES PILOT SIGNAL, AND MEASURES AMPLITUDE — S266

TERMINAL DETERMINES CORRECTION COEFFICIENT FROM DOWNLINK AMPLITUDE MEASUREMENT AND FEEDBACK INFORMATION — S267

END

FIG.27

# FIG.28

CALIBRATION

BASE
STATION

WIRELESS
DEVICE A

CALIBRATION

SETTING EQUIVALENT TO
WHEN CALIBRATION IS
PERFORMED

TERMINAL

# FIG.29

START

WIRELESS DEVICE A AND BASE STATION
PERFORM CALIBRATION — S291

TERMINAL AND WIRELESS DEVICE A
PERFORM CALIBRATION — S292

END

## FIG.30

→ FIRST CALIBRATION
------▶ NEXT CALIBRATION

## FIG.31

# FIG.32

| BITS TO SUPPORT INDIRECT CALIBRATION<br><br>0: NOT CAPABLE OF SUPPORTING<br>1: CAPABLE OF SUPPORTING | CATEGORY A<br><br>0: BROADLY DEFINED RECIPROCITY<br>1: NARROWLY DEFINED RECIPROCITY | CATEGORY B<br><br>0: CORRECT PHASE ONLY<br>1: CORRECT PHASE AND AMPLITUDE |
|---|---|---|

# FIG.33

| MODEL TYPE CORRESPONDING TO CALIBRATION<br><br>0: NOT CAPABLE<br>1: CAPABLE | CATEGORY A<br><br>0: BROADLY DEFINED RECIPROCITY<br>1: NARROWLY DEFINED RECIPROCITY | CATEGORY B<br><br>0: CORRECT PHASE ONLY<br>1: CORRECT PHASE AND AMPLITUDE |
|---|---|---|

# FIG.34

| TERMINAL ID | CATEGORY A<br><br>0: BROADLY DEFINED RECIPROCITY<br>1: NARROWLY DEFINED RECIPROCITY | CATEGORY B<br><br>0: CORRECT PHASE ONLY<br>1: CORRECT PHASE AND AMPLITUDE |
|---|---|---|

# FIG.35

RECEIVED SIGNAL
$s(q)+z_{BS}(q)$

$h_{k,m}^{(UL)}$

TRANSMITTED SIGNAL
$u_{BS}d(q)$

$h_{k,m}^{(DL)}$

BASE STATION

ANTENNA m

$v_{k,m}s(q)$

DOWNLINK CHANNEL MEASURING UNIT
$u_{BS} \cdot h_{k,m}^{(DL)}$

WEIGHT DETERMINING UNIT
$v_{k,m} = 1/\left(u_{BS} \cdot h_{k,m}^{(DL)}\right)$

WEIGHT MULTIPLYING UNIT

$s(q)$

TRANSMITTING SIGNAL GENERATING UNIT

TERMINAL

# FIG.36

START

BASE STATION AND TERMINAL EXECUTE CALIBRATION — S361

BASE STATION TRANSMITS PILOT SIGNAL — S362

TERMINAL MEASURES COMPLEX AMPLITUDE OF DOWNLINK SIGNAL — S363

TERMINAL DETERMINES TRANSMISSION WEIGHT AND TRANSMITS SIGNAL — S364

END

# FIG.37

HIGH ACCURACY CHANNEL ESTIMATION VALUE $a^{(est)}$

$r \otimes$          $\otimes$ 1-r

CARRIER PHASE TARGET INFORMATION $a^{(pre)}$

CHANNEL ESTIMATION VALUE $a^{(est)}$

CARRIER PHASE TRANSMISSION CONTROL

| PILOT SIGNAL | |
|---|---|

# FIG.38

MODEL TYPE CORRESPONDING TO
CARRIER PHASE TRANSMISSION
CONTROL

0: NOT CAPABLE
1: CAPABLE

# FIG.39

SIGNAL TRANSMISSION
FORMAT FOR TERMINAL
CORRESPONDING TO
CARRIER PHASE
TRANSMISSION CONTROL

| PILOT SIGNAL | DATA |
|---|---|

SMALL
NUMBER
OF PILOT
SIGNALS

SIGNAL TRANSMISSION
FORMAT FOR TERMINAL
NOT CORRESPONDING
TO CARRIER PHASE
TRANSMISSION CONTROL

| PILOT SIGNAL | DATA |
|---|---|

LARGE
NUMBER
OF PILOT
SIGNALS

# FIG.40

START

IS CARRIER PHASE TRANSMISSION CONTROL PERFORMED ON SIGNAL? — S401

NO

YES — S402

PERFORM HIGH ACCURACY CHANNEL ESTIMATION USING TARGET CARRIER PHASE INFORMATION

PERFORM CONVENTIONAL CHANNEL ESTIMATION — S403

END

# FIG.41

HIGH ACCURACY CHANNEL ESTIMATION VALUE a'

$r$ ⊗  ⊕  ⊗ $1-r$

CHANNEL ESTIMATION VALUE $a^{(blind\_est)}$

CARRIER PHASE TARGET INFORMATION $a^{(pre)}$ → DATA DETERMINATION USING CARRIER PHASE INFORMATION

CARRIER PHASE TRANSMISSION CONTROL

| DATA SYMBOL 1 | DATA SYMBOL 2 |
|---|---|

# FIG.42

| DATA SYMBOL 1 | DATA SYMBOL 2 |
|---|---|
| QPSK,<br>BPSK | 16QAM,<br>64QAM |

# FIG.43

| DATA SYMBOL 1 | DATA SYMBOL 2 |
|---|---|
| CONTROL DATA | COMMUNICATION<br>DATA |

# FIG.44

DATA SYMBOL 1          DATA SYMBOL 2

| TERMINAL ID | COMMUNICATION DATA |
|-------------|--------------------|

# FIG.45

TRANSMITTED SIGNAL

$u_{BS}d(q)$

$h_{k,m}^{(UL)}$

$h_{k,m}^{(DL)}$

ANTENNA $m_l$

BASE STATION

ANTENNA $m_k$

$v_{l,m}s_l(q)$

$v_{k,m}s_k(q)$

**TERMINAL l**

| DOWNLINK CHANNEL MEASURING UNIT | WEIGHT DETERMINING UNIT | WEIGHT MULTIPLYING UNIT |
|---|---|---|
| $u_{BS} \cdot h_{l,m}^{(DL)}$ | $v_{l,m} = 1/\left(u_{BS} \cdot h_{l,m}^{(DL)}\right)$ | |

$s(q)$

TRANSMITTING SIGNAL GENERATING UNIT

**TERMINAL k**

| DOWNLINK CHANNEL MEASURING UNIT | WEIGHT DETERMINING UNIT | WEIGHT MULTIPLYING UNIT |
|---|---|---|
| $u_{BS} \cdot h_{k,m}^{(DL)}$ | $v_{k,m} = 1/\left(u_{BS} \cdot h_{k,m}^{(DL)}\right)$ | |

$s(q)$

TRANSMITTING SIGNAL GENERATING UNIT

# FIG.46

START

BASE STATION, TERMINAL k, AND TERMINAL l
EXECUTE CALIBRATION — S461

BASE STATION TRANSMITS PILOT SIGNAL — S462

TERMINAL k AND TERMINAL l MEASURE
COMPLEX AMPLITUDE OF DOWNLINK SIGNAL — S463

TERMINAL k AND TERMINAL l DETERMINE
TRANSMISSION WEIGHT AND TRANSMIT
SIGNAL — S464

END

# FIG.47

START

BASE STATION AND TERMINAL k EXECUTE
TIMING CONTROL — S471

BASE STATION AND TERMINAL k EXECUTE
CARRIER PHASE TRANSMISSION CONTROL — S472

END

# FIG.48

RECEPTION POWER
TO BE OBSERVED

LARGE

SMALL

SIGNAL
TRANSMISSION

TERMINAL l

BASE
STATION

TERMINAL k

# FIG.49

TRANSMISSION
OF RELAY SIGNAL

TRANSMISSION
OF RELAY SIGNAL

BASE
STATION

RELAY
WIRELESS
DEVICE l

RELAY
WIRELESS
DEVICE k

S491
SIGNAL TRANSMISSION
FROM TERMINAL

S491
SIGNAL TRANSMISSION
FROM TERMINAL

TERMINAL

# FIG.50-1

```
         ┌─────────────┐
         │    START    │
         └─────────────┘
                │
                ▼
┌─────────────────────────────────────┐
│ RELAY WIRELESS DEVICE TRANSMITS PILOT│──── S501
│              SIGNAL                  │
└─────────────────────────────────────┘
                │
                ▼
┌─────────────────────────────────────┐
│  BASE STATION MEASURES CHANNEL       │──── S502
└─────────────────────────────────────┘
                │
                ▼
┌─────────────────────────────────────┐
│  BASE STATION NOTIFIES PARAMETER ξ   │──── S503
└─────────────────────────────────────┘
                │
                ▼
┌─────────────────────────────────────┐
│ RELAY WIRELESS DEVICE RECEIVES SIGNAL│──── S504
│       FOR RELAY TRANSMISSION         │
└─────────────────────────────────────┘
                │
                ▼
┌─────────────────────────────────────┐
│  RELAY WIRELESS DEVICE MEASURES      │
│  DOWNLINK CHANNEL AND CREATES A      │──── S505
│     SIGNAL FOR TRANSMISSION          │
└─────────────────────────────────────┘
                │
                ▼
         ┌─────────────┐
         │     END     │
         └─────────────┘
```

# FIG.50-2

(32B-2)

(32B-4)

(32B-3)

(32B-1)

RECEIVED SNR $\gamma_{k,m}^{(2)}$

BASE STATION

RELAY WIRELESS DEVICE

RELAY WIRELESS DEVICE k

# FIG.50-3

TRANSMISSION POWER

$l=1\ 2\ 3$      L

SUB-CARRIER

BASE STATION

RELAY WIRELESS DEVICE

TERMINAL

DETERMINE WEIGHT $v_{k,m,l}$ FOR EACH SUBCARRIER AND TRANSMIT SIGNAL THEREWITH

RECEIVED LEVEL

$l=1\ 2\ 3$      L

SUB-CARRIER

RELAY WIRELESS DEVICE k

# FIG.51

(2) MEASURE CHANNEL
(S512)

(1) TRANSMIT
UPLINK PILOT
SIGNAL
(S511)

(1) TRANSMIT
UPLINK PILOT
SIGNAL
(S511)

BASE
STATION

RELAY
WIRELESS
DEVICE l

RELAY
WIRELESS
DEVICE k

(3) TRANSMIT
DOWNLINK PILOT
SIGNAL (S513)

TRANSMIT
BEAM

BASE
STATION

(4) MEASURE
CHANNEL
(S514)

RELAY
WIRELESS
DEVICE l

RELAY
WIRELESS
DEVICE k

(6) RECEIVE
SIGNALS BY USING
RECEIVE BEAM
(S516)

(5) TRANSMIT
UPLINK DATA
SIGNAL (S515)

RECEIVE
BEAM

BASE
STATION

RELAY WIRELESS
DEVICE l

RELAY WIRELESS
DEVICE k

# FIG.52

(2) MEASURE
CHANNEL(S522)

(3) TRANSMIT
DOWNLINK PILOT
SIGNAL (S523)

(1) TRANSMIT
UPLINK PILOT
SIGNAL
(S521)

(1) TRANSMIT
UPLINK PILOT
SIGNAL
(S521)

TRANSMIT
BEAM

BASE
STATION

BASE
STATION

(4) MEASURE
CHANNEL
(S524)

RELAY
WIRELESS
DEVICE l

RELAY
WIRELESS
DEVICE k

RELAY
WIRELESS
DEVICE l

RELAY
WIRELESS
DEVICE k

(6) RECEIVE
SIGNALS BY
USING RECEIVE
BEAM (S526)

(5) TRANSMIT UPLINK
DATA SIGNAL (S525)

RECEIVE
BEAM

BASE
STATION

RELAY WIRELESS
DEVICE l

RELAY WIRELESS
DEVICE k

EP 2 154 802 A1

FIG.53

# FIG.54-1

TERMINAL k

FREQUENCY CORRECTING UNIT

CONTROL INFORMATION RECEIVING UNIT

FREQUENCY CONTROLLING UNIT

11

SIGNAL TRANSMITTING/ RECEIVING UNIT

UP-CONVERSION

DOWN-CONVERSION

$T_{k,M}$ 15-M

$R_{k,M}$ 16-M

$T_{k,m}$ 15-m

$R_{k,m}$ 16-m

$T_{k,1}$ 15-1

$R_{k,M}$ 16-1

M

m

1

PILOT SIGNAL (FREQUENCY f1)

PILOT SIGNAL (FREQUENCY f0)

20

$T_{BS}$

$R_{BS}$

CHANNEL MEASUREMENT/ FREQUENCY CORRECTING UNIT

CONTROL INFORMATION GENERATION/SIGNAL TRANSMITTING/ RECEIVING UNIT

BASE STATION

TRANSMIT CHANNEL MEASUREMENT/ DETERMINE PHASE AND AMPLITUDE

# FIG.54-2

Subcarrier  Uplink                Downlink

Pilot Signal        Dt        Time

# FIG.54-3

PILOT SIGNAL

SUB-CARRIER

$q_0=15$

83.33 $\mu$s

GI | Data

CHANNEL
(RICE FACTOR K=10)
DIRECT WAVE
(DOPPLER 50 Hz)

POWER

SCATTERING WAVE
(DOPPLER
BROADENING 50 Hz)

DELAY

TERMINAL

BASE
STATION

CHANNEL
INFORMATION

CHANNEL
MEASUREMENT

TERMINAL

BASE
STATION

EP 2 154 802 A1

# FIG.54-4

# FIG.54-5

# FIG.55

START

PERFORM CONVENTIONAL LOW ACCURACY FREQUENCY CORRECTION — S551

PERFORM HIGH ACCURACY FREQUENCY CORRECTION OF TWENTY-SEVENTH OR TWENTY-EIGHTH EMBODIMENT — S552

PERFORM PHASE CALIBRATION — S553

END

# FIG.56

| MODEL TYPE CORRESPONDING TO FREQENCY CORRECTION

0 : NOT CAPABLE
1 : CAPABLE | CATEGORY A

0 : LOW ACCURACY CORRECTION
1 : HIGH ACCURACY CORRECTION | CATEGORY B

0 : SIMULTANEOUSLY SUPPORT PHASE CORRECTION
1 : DO NOT SUPPORT PHASE OR AMPLITUDE | CATEGORY C

0 : CAPABLE OF SUPPORTING COOPERATIVE TRANSMIT BEAMFORMING
1 : NOT CAPABLE |
|---|---|---|---|

# FIG.57

| REQUIRED FREQUENCY ACCURACY INFORMATION | MEASURABLE TIME INFORMATION | MEASUREMENT TIME PATTERN INFORMATION |
|---|---|---|
| 00: EQUAL TO OR LESS THAN 10 Hz<br>01: EQUAL TO OR LESS THAN 1 Hz<br>10: EQUAL TO OR LESS THAN 0.01 Hz<br>11: EQUAL TO OR LESS THAN 0.00001 Hz | 00: EQUAL TO OR LESS THAN 0.1 SECOND<br>01: EQUAL TO OR LESS THAN 1 SECOND<br>10: EQUAL TO OR LESS THAN 1 MINUTE<br>11: EQUAL TO OR LESS THAN 1 HOUR | 0: FIXED TIME PATTERN<br>1: POWERED TIME PATTERN |

# FIG.58

| INDIRECT FREQUENCY CORRECTION SUPPORT BITS | CATEGORY A | CATEGORY B |
|---|---|---|
| 0: NOT CAPABLE OF SUPPORTING<br>1: CAPABLE OF SUPPORTING | 0: LOW ACCURACY CORRECTION<br>1: HIGH ACCURACY CORRECTION | 0: SIMULTANEOUSLY SUPPORT PHASE CORRECTION<br>1: DO NOT SUPPORT PHASE OR AMPLITUDE |

# FIG.59

ANTENNA #1       ANTENNA #2

PATHWAY B

SWITCHING FUNCTION

$R_1$   $T_1$   $R_2$   $T_2$

PATHWAY A

# FIG.60

$d_1$

$d_2$

ANTENNA #1              ANTENNA #2       ANTENNA #0

$R_1$   $T_1$   $R_2$   $T_2$

WIRELESS
TRANSMITTING/
RECEIVING UNIT

CALIBRATION
SIGNAL
GENERATING/
DETECTING UNIT

# FIG.61

SUBCARRIER FOR
TRANSMITTING PILOT
SIGNAL

← B →

$l=$  1  2  3  L-1  L

FREQUENCY

# FIG.62

START

| RELAY WIRELESS STATIONS PERFORM CARRIER FREQUENCY CORRECTION | S621 |

| RELAY WIRELESS STATIONS CORRECT PERFORM CARRIER PHASE CORRECTION | S622 |

| RELAY WIRELESS STATIONS PERFORM COOPERATIVE TRANSMIT BEAM CONTROL | S623 |

END

# FIG.63

CHANNEL
MEASUREMENT

CHANNEL
MEASUREMENT

BASE
STATION A

BASE
STATION  B

DATA

NOTIFY CHANNEL
MEASUREMENT
(WIRED NETWORK)

TERMINAL

# FIG.64

| UPLINK TIME SLOT | DOWNLINK TIME SLOT | UPLINK TIME SLOT |
|---|---|---|

Subcarrier  DOWNLINK

Subcarrier  DOWNLINK

Time

Time

CHANNEL
MEASUREMENT

CHANNEL
MEASUREMENT

BASE STATION A

BASE STATION B

POSITION TO TRANSMIT
PILOT SIGNAL
POSITION NOT TO
TRANSMIT SIGNAL

POSITION TO TRANSMIT
PILOT SIGNAL
POSITION NOT TO
TRANSMIT SIGNAL

TERMINAL

# FIG.65

# FIG.66

ANTENNA
FOR GPS

BASE STATION 100-1

GPS RECEIVING UNIT 101

FREQUENCY LOCKING UNIT 102

AMPLITUDE/ PHASE CONTROLLING UNIT 103

DOWNLINK SIGNAL TRANSMITTING UNIT 104

CALIBRATING UNIT

UPLINK PILOT SIGNAL RECEIVING UNIT 105

TERMINAL 200

DOWNLINK SIGNAL TRANSMITTING UNIT 201 — DATA

UPLINK PILOT SIGNAL TRANSMITTING UNIT 202 ← PILOT

ANTENNA FOR GPS

BASE STATION 100-2

ANTENNA FOR GPS

BASE STATION 100-n

EP 2 154 802 A1

138

# FIG.67

```
┌─────────────────┐
│      START      │
└─────────────────┘
         │
         ▼
┌───────────────────────────────────────┐
│ BASE STATION LOCKS FREQUENCY BY USING  │
│            GPS INFORMATION             │
└───────────────────────────────────────┘
         │
         ▼
┌───────────────────────────────────────┐
│    PHASE CONTROL IS PERFORMED AMONG    │
│             BASE STATIONS              │
└───────────────────────────────────────┘
         │
         ▼
┌───────────────────────────────────────┐
│    TERMINAL TRANSMITS PILOT SIGNAL IN  │
│                UPLINK                  │
└───────────────────────────────────────┘
         │
         ▼
┌───────────────────────────────────────┐
│  BASE STATIONS MEASURE AMPLITUDE AND   │
│  PHASE USING RECEIVED UPLINK FRAME     │
└───────────────────────────────────────┘
         │
         ▼
┌───────────────────────────────────────┐
│ BASE STATIONS DETERMINE TRANSMISSION   │
│ WEIGHT FROM MEASURED AMPLITUDE AND     │
│ PHASE, WHEN DOWN LINK SIGNAL IS        │
│            TRANSMITTED                  │
└───────────────────────────────────────┘
         │
         ▼
┌───────────────────────────────────────┐
│   BASE STATIONS TRANSMIT SIGNALS IN    │
│  DOWNLINK USING DETERMINED WEIGHTS     │
└───────────────────────────────────────┘
         │
         ▼
┌───────────────────────────────────────┐
│  SIGNALS FROM BASE STATIONS ARE IN     │
│  PHASE IN TERMINAL, AND SIGNALS ARE    │
│   RECEIVED WITH STRONG POWER           │
└───────────────────────────────────────┘
         │
         ▼
┌─────────────────┐
│       END       │
└─────────────────┘
```

# FIG.68

ANTENNA
FOR GPS

BASE STATION 100a-1

GPS
RECEIVING
UNIT 101

FREQUENCY
LOCKING
UNIT 102

AMPLITUDE/
PHASE
CONTROLLING
UNIT 103

DOWNLINK FRAME
TRANSMITTING
UNIT 106

UPLINK CONTROL
SIGNAL
RECEIVING UNIT 107

CALIBRATING UNIT

ANTENNA
FOR GPS

BASE STATION 100a-2

ANTENNA
FOR GPS

BASE STATION 100a-n

TERMINAL 200a

SYNCHRONIZATION
DETECTING UNIT 203

COMBINING
UNIT 204

DATA

RELATIVE PHASE
INFORMATION
MEASURING UNIT 205

UPLINK CONTROL
SIGNAL
TRANSMITTING UNIT 206

EP 2 154 802 A1

140

# FIG.69

```
START
```

BASE STATION LOCKS FREQUENCY BY USING
GPS INFORMATION

BASE STATION TRANSMITS DOWNLINK FRAME
TO TERMINAL

TERMINAL DETECTS SYNCHRONIZATION IN
DOWNLINK FRAME

TERMINAL MEASURES RELATIVE PHASE
INFORMATION, AND TRANSMITS RELATIVE
PHASE INFORMATION IN UPLINK AS CONTROL
SIGNAL

BASE STATION CONTROLS AMPLITUDE AND
PHASE OF PRESENT TRANSMISSION FRAME,
BASED ON RECEIVED RELATIVE PHASE
INFORMATION

TERMINAL RECEIVES COHERENT DOWNLINK
SIGNAL

```
END
```

# FIG.70

ANTENNA FOR GPS

BASE STATION 100b-1

101 GPS RECEIVING UNIT

102 FREQUENCY LOCKING UNIT

TRANSMIT ONLY FOR FIRST FRAME TRANSMIT AFTER SECOND AND SUBSEQUENT FRAMES

108 PHASE-CONTROLLING-FRAME TRANSMITTING UNIT

103 AMPLITUDE/ PHASE CONTROLLING UNIT

109 DATA FRAME TRANSMITTING UNIT

111 SWITCH

110 UPLINK FRAME RECEIVING UNIT

CALIBRATING UNIT

TERMINAL 200b

203 SYNCHRONIZATION DETECTING UNIT

204b COMBINING UNIT

DATA

207 UPLINK FRAME TRANSMITTING UNIT

DATA

PILOT

ANTENNA FOR GPS

BASE STATION 100b-2

ANTENNA FOR GPS

BASE STATION 100b-n

EP 2 154 802 A1

142

# EP 2 154 802 A1

## INTERNATIONAL SEARCH REPORT

| | International application No. |
|---|---|
| | PCT/JP2008/050207 |

### A. CLASSIFICATION OF SUBJECT MATTER
*H04J15/00(2006.01)i, H04B7/04(2006.01)i*

According to International Patent Classification (IPC) or to both national classification and IPC

### B. FIELDS SEARCHED

Minimum documentation searched (classification system followed by classification symbols)
H04J15/00, H04B7/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | JP 2003-264492 A  (Sony Corp.),<br>19 September, 2003 (19.09.03),<br>Par. Nos. [0050] to [0122]; Figs. 1 to 8<br>(Family: none) | 1-3,25,26,61<br>14-19,55,57,<br>58<br>4-13,20-24,<br>27-54,56,59,<br>60,62,63 |
| X<br><br><br><br><br>Y | JP 2006-504336 A  (Qualcomm Inc.),<br>02 February, 2006 (02.02.06),<br>Par. Nos. [0102] to [0116]<br>& BR 315538 A         & CN 1751484 A<br>& EP 1557017 A2        & KR 5065628 A<br>& US 2004/0085939 A1     & US 2005/0128953 A1<br>& WO 2004/039022 A2 | 5-7,25,26,<br>38-43,48-50,<br>52<br>59,60,62,63<br>9-19,53,<br>55-58 |

☒ Further documents are listed in the continuation of Box C.  ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 09 April, 2008 (09.04.08) | 22 April, 2008 (22.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/050207 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2006-504335 A (Qualcomm Inc.),<br>02 February, 2006 (02.02.06),<br>Par. Nos. [0629] to [0717] | 8,38-43,<br>48-52,59,60,<br>62,63 |
| Y | & EP 1619817 A2        & EP 1615384 A1<br>& CN 1717900 A         & EP 1582032 A2<br>& BR 315677 A          & KR 5053787 A<br>& WO 2004/039011 A2    & US 2004/0082356 A1 | 9-19,54-58 |
| Y | JP 2003-60604 A (Nippon Telegraph And<br>Telephone Corp.),<br>28 February, 2003 (28.02.03),<br>Fig. 11<br>& CA 2380977 A1        & CN 1380778 A<br>& EP 1249980 A2        & JP 2002-374224 A<br>& JP 2003-124907 A     & JP 3590008 B2<br>& JP 3631698 B2        & JP 3676281 B2<br>& KR 2079489 A         & KR 5053034 A<br>& US 2002/0191535 A1   & US 7242720 B2 | 10-12 |
| Y | WO 2004/075451 A1 (Mitsubishi Electric Corp.),<br>02 September, 2004 (02.09.04),<br>Full text; all drawings<br>& EP 1589684 A1        & US 2007/0021130 A1 | 53-58 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006279668 A

### Non-patent literature cited in the description

- **K. Nishimori ; K. Cho ; Y. Takatori ; T. Hori.** A novel configuration for realizing automatic calibration of adaptive array using dispersed SPDT switches for TDD systems. *IEICE Trans. on Commun.,* September 2001, vol. E84-B (9), 2516-2522
- Draft standard for information technology telecommunications and information exchange between systems-local and metropolitan area networks-specific requirements-Part 11: Wireless LAN medium access control (MAC) and physical layer (PHY) specifications. *IEEE P802.11n/D2.00,* February 2007
- Physical layer aspects for evolved UTRA (Release 7). *3GPP RAN, 3G TR25.814 V1.2.1,* February 2006
- **H. Kubo ; K. Murakami ; M. Miyake ; T. Fujino.** A multiple open-loop frequency estimation based on differential detection for MPSK. *IEICE Trans. on Commun.,* January 1999, vol. E82-B (1), 136-143